(19) Europäisches Patentamt
European Patent Office
Office européen des brevets

(11) EP 4 380 266 A1

(12) EUROPEAN PATENT APPLICATION
published in accordance with Art. 153(4) EPC

(43) Date of publication:
05.06.2024 Bulletin 2024/23

(51) International Patent Classification (IPC):
H04W 72/00 (2023.01)

(21) Application number: 22852088.8

(52) Cooperative Patent Classification (CPC):
H04L 1/00; H04L 5/00; H04W 28/26; H04W 72/04; H04W 72/541; H04W 72/542

(22) Date of filing: 29.07.2022

(86) International application number:
PCT/CN2022/109251

(87) International publication number:
WO 2023/011375 (09.02.2023 Gazette 2023/06)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 06.08.2021 CN 202110904552

(71) Applicant: Huawei Technologies Co., Ltd.
Shenzhen, Guangdong 518129 (CN)

(72) Inventors:
• ZHANG, Tianhong
  Shenzhen, Guangdong 518129 (CN)
• LI, Chao
  Shenzhen, Guangdong 518129 (CN)
• HUANG, Haining
  Shenzhen, Guangdong 518129 (CN)
• YANG, Fan
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **SIDELINK TRANSMISSION METHOD, DEVICE, AND STORAGE MEDIUM**

(57) This application provides a sidelink transmission method, a device, and a storage medium. The method includes: A first terminal device determines a first resource conflict degree between a first resource and a second resource based on a first parameter, where the first parameter includes resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1. The first terminal device sends resource conflict information to the second terminal device and/or the third terminal device, where the resource conflict information indicates the first resource conflict degree, to relieve a resource conflict, thereby improving transmission reliability of a communication system.

200

| First terminal device | | Second terminal device/ Third terminal device |
|---|---|---|

S210: Determine a first resource conflict degree between a first resource and a second resource based on a first parameter, where the first resource is a resource used by the second terminal device for transmission, the second resource is a resource used by the third terminal device for transmission, the first resource conflict degree is one of M resource conflict degrees, and M is a positive integer greater than 1

S220: Send resource conflict information, where the resource conflict information indicates the first resource conflict degree

S230: Reselect, retransmit, or continue to use the first resource based on the first resource conflict degree

FIG. 6

**Description**

This application claims priority to Chinese Patent Application No. 202110904552.5, filed with the China National Intellectual Property Administration on August 6, 2021 and entitled "SIDELINK TRANSMISSION METHOD, DEVICE, AND STORAGE MEDIUM", which is incorporated herein by reference in its entirety.

**TECHNICAL FIELD**

This application relates to the field of communication technologies, and in particular, to a sidelink transmission method, a device, and a storage medium.

**BACKGROUND**

In some communication systems, signaling and data transmission may be performed between terminal devices on a sidelink (sidelink). This manner of performing transmission on the sidelink may be referred to as sidelink transmission. The terminal device senses and selects a resource from a resource pool preconfigured by a network device, to obtain a candidate resource set, and selects a resource from the candidate resource set for sidelink transmission.

However, when the terminal device cannot sense that a resource has been reserved by another terminal device, the terminal device adds the resource to the candidate resource set. If the resource is used during subsequent signaling and/or data sending, the resource overlaps a resource reserved by the another terminal device. As a result, a terminal device at a receive end cannot successfully decode signaling and/or data from a transmit end, thereby reducing transmission reliability of the entire communication system.

**SUMMARY**

Embodiments of this application provide a sidelink transmission method, a device, and a storage medium, to relieve a resource conflict, thereby improving transmission reliability of a communication system.

According to a first aspect, an embodiment of this application provides a sidelink transmission method, including: A first terminal device determines a first resource conflict degree between a first resource and a second resource based on a first parameter, where the first parameter includes resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1; and the first terminal device sends resource conflict information to the second terminal device and/or the third terminal device, where the resource conflict information indicates the first resource conflict degree.

According to the sidelink transmission method provided in the first aspect, the first terminal device sends resource conflict indication information to the second terminal device to indicate the first resource conflict degree, and the second terminal device may determine, based on the first resource conflict degree, whether there is a resource conflict between resources for transmission and whether the resource conflict is serious. This can avoid a transmission failure caused by the resource conflict, and improve transmission reliability of a communication system.

Further, the first resource conflict degree indicated by the resource conflict indication information in this embodiment of this application is one of at least two resource conflict degrees, so that a fine-grained indication is performed on the conflict degree between the first resource and the second resource. This not only indicates that the first resource conflicts/does not conflict with the second resource, and implements an accurate indication of the conflict degree. In addition, the second terminal device can estimate, based on the first conflict degree, whether data can be correctly transmitted, to avoid transmission resource reselection or data retransmission performed when the resource conflict degree is low and the data can be correctly transmitted. This avoids unnecessary resource reselection, or avoids a waste of resources, and improves performance of the communication system.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

According to the communication method provided in this implementation, when the first resource includes the first sending resource and the second resource includes the second sending resource, the first terminal device may indicate, in an after-collision scenario, whether there is a conflict between the first resource and the second resource, and indicate a degree of the conflict. When the first resource includes the first reserved resource and the second resource includes the second reserved resource, the first terminal device may indicate, in a before-collision scenario, whether there is a conflict between the first resource and the second resource, and indicate a degree of the conflict. When the first resource includes the first sending resource and the second sending resource, and the second resource includes the second sending resource and the second reserved resource, the first terminal device may indicate, in a before-collision scenario and an after-collision scenario, whether there is a conflict between the first resource and the second resource, and indicate a degree of the conflict. Therefore, the first terminal device can perform a conflict indication in a plurality of collision scenarios.

In a possible implementation, the method further includes: The first terminal device determines, based on a strength of a signal transmitted on the first sending resource, a strength of a signal transmitted on the first resource, where the first sending resource is a resource on which the second terminal device sends the first control information; the first terminal device determines, based on a strength of a signal transmitted on the second sending resource, a strength of a signal transmitted on the second resource, where the second sending resource is a resource on which the second terminal device sends the second control information; and/or the first terminal device determines resource overlapping information of the first resource and the second resource based on the first reserved resource and the second reserved resource.

According to the communication method provided in this implementation, the first terminal device measures a strength of a channel transmitted on the first sending resource, to obtain the strength of the signal transmitted on the first resource, namely, a first signal strength. Similarly, the first terminal device measures the strength of the signal transmitted on the second sending resource, to obtain the strength of the signal transmitted on the second resource, namely, a second signal strength. This improves measurement convenience. The first terminal device determines the resource overlapping information based on the first reserved resource and the second reserved resource in the before-collision scenario, to accurately measure the resource overlapping information.

Optionally, the resource overlapping information includes:

a first overlapping ratio,
a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, where
the first overlapping ratio is a ratio of an overlapping part of the first resource and the second resource to the first resource, and the second overlapping ratio is a ratio of the overlapping part of the first resource and the second resource to the second resource.

Optionally, the signal strength includes:

a first signal strength,
a second signal strength,
a ratio of a first signal strength to a second signal strength,
a ratio of a second signal strength to a first signal strength,
a ratio of a first signal strength to a sum of the first signal strength and a second signal strength, or
a ratio of a second signal strength to a sum of a first signal strength and the second signal strength, where
the first signal strength is the strength of the signal transmitted on the first resource, and the second signal strength is the strength of the signal transmitted on the second resource.

Optionally, the first parameter includes:

the first signal strength and/or the second signal strength,
the first overlapping ratio and/or the second overlapping ratio,
a converted value, calculated based on the first overlapping ratio or the second overlapping ratio, of the first signal strength,
a converted value, calculated based on the first overlapping ratio or the second overlapping ratio, of the second signal strength,
a subchannel location and/or a number of subchannels of the first frequency domain information,
a subchannel location and/or a number of subchannels of the second frequency domain information,
a subchannel location and/or a number of subchannels of the third frequency domain information, and/or
a combination value of the resource overlapping information and the signal strength, where
the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

In a possible implementation, that a first terminal device determines a first resource conflict degree between a first resource and a second resource based on a first parameter includes: The first terminal device determines the first resource conflict degree based on the first parameter and M conflict threshold ranges.

According to the communication method provided in this implementation, the M conflict threshold ranges are associated with the M resource conflict degrees. The first terminal device compares the first parameter with the M conflict threshold ranges, to determine the conflict threshold range within which the first parameter falls, so as to determine the corresponding first resource conflict degree. This can avoid setting the corresponding resource conflict degree for each first parameter, improves convenience of determining the resource conflict degree, and improves performance of the communication system.

In a possible implementation, that the first terminal device determines the first resource conflict degree based on the first parameter and M conflict threshold ranges includes: The first terminal device determines that the first parameter falls within a $k^{th}$ conflict threshold range, where the $k^{th}$ conflict threshold range is a conflict threshold range that is in the M conflict threshold ranges and that corresponds to the first resource conflict degree.

According to the communication method provided in this implementation, the first terminal device can determine the corresponding first resource conflict degree by determining the $k^{th}$ conflict threshold range within which the first parameter falls. Compared with a manner of presetting a corresponding conflict threshold range for each first parameter or each group of first parameters, this implementation has higher processing efficiency and saves storage space.

Optionally,

the conflict threshold range is an overlapping information threshold range, and the overlapping information threshold range is associated with one of the M resource conflict degrees;

the conflict threshold range is a signal strength threshold range, and the signal strength threshold range is associated with one of the M resource conflict degrees;

the conflict threshold range is the signal strength threshold range, the signal strength threshold range is determined based on the resource overlapping information, and the signal strength threshold range is associated with the M resource conflict degrees;

the conflict threshold range is the overlapping information threshold range, the resource overlapping information threshold range is determined based on the signal strength, and the overlapping information threshold range is associated with the M resource conflict degrees; and/or

the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.

According to the communication method provided in this implementation, the conflict threshold range may be the overlapping information threshold range and/or the signal strength threshold range, to determine the conflict degrees for different first parameters.

In a possible implementation, at least one of a time domain resource, a frequency domain resource, or a code domain resource that is used by the first terminal device to send the resource conflict information indicates the first resource conflict degree.

According to the communication method provided in this implementation, the first terminal device sends, on different frequency domain resources, resource conflict information indicating different resource conflict degrees, and/or indicates the first resource conflict degree based on different CS sequences, thereby reducing transmission resources occupied by the resource conflict information.

In a possible implementation, at least one of the time domain resource, the frequency domain resource, or the code domain resource that is used by the first terminal device to send the resource conflict information indicates at least one of the following:

a signal strength threshold range and a resource overlapping information threshold range that correspond to the first resource conflict degree, and a combination of the resource overlapping information threshold range and the signal strength threshold range.

The first resource conflict degree corresponds to the foregoing conflict threshold range, and there are threshold ranges corresponding to a plurality of measured parameters, to perform fine-grained division on conflict degrees under different measured parameters.

In a possible implementation, the M resource conflict degrees include:

M recommendation levels of different recommendation degrees,

M disrecommendation levels of different disrecommendation degrees, or

P recommendation levels of different recommendation degrees and Q disrecommendation levels of different disrecommendation degrees, where P+Q=M.

According to the communication method provided in this implementation, the first resource conflict degree indicated by the resource conflict information may be a recommendation level or may be a disrecommendation level. A higher recommendation level indicates higher reliability of transmission of the first resource or the second resource. A higher disrecommendation level indicates lower reliability of transmission of the first resource or the second resource. Therefore, the resource conflict information provides a plurality of fine-grained conflict degrees, to indicate a resource conflict degree to the second terminal device and/or the third terminal device, or indicate reliability of transmission of the resource.

In a possible implementation, the method further includes: The first terminal device determines a first transmission parameter difference and/or a second transmission parameter difference, where the first transmission parameter difference is a transmission parameter difference between the first reserved resource and the first sending resource, and the second transmission parameter difference is a transmission parameter difference between the second reserved resource and the second sending resource; and when the first transmission parameter difference or the second transmission parameter difference is greater than a first preset value, the first terminal device determines that the first resource conflict degree is a second resource conflict degree with a low recommendation degree or a high disrecommendation degree.

According to the communication method provided in this implementation, the first resource conflict degree is further adjusted in time based on a transmission parameter difference between a reserved resource and a sending resource, so that the resource conflict information can indicate a more accurate resource conflict degree, and the second terminal device accurately determines whether to perform retransmission or reselection.

According to a second aspect, an embodiment of this application provides a sidelink transmission method, including: A first terminal device determines a first resource conflict degree between a first resource and a second resource based on a first parameter, where the first parameter is resource overlapping information and/or a signal strength, or the first parameter is determined based on resource overlapping information and/or a signal strength, the first resource is a resource used by a second terminal device for transmission, the second resource is a resource used by the first terminal device for transmission, the first resource conflict degree is one of M resource conflict degrees, and M is a positive integer greater than 1; the first terminal device sends resource conflict information to the second terminal device, where the resource conflict information indicates the first resource conflict degree; and/or the first terminal device reselects, retransmits, or continues to use the second resource based on the first resource conflict degree.

Compared with the communication method provided in the first aspect, in the communication method provided in the second aspect, the first terminal device can perform a conflict indication on the second terminal device that has a resource conflict with the first terminal device, or the first terminal device can be controlled to retransmit, reselect, or continue to use the second resource.

In a possible implementation, the first resource includes a first sending resource on which the second terminal device sends first control information, and/or a first reserved resource indicated by the first control information; and/or the second resource includes a third sending resource that is determined by the first terminal device and that is used for transmission.

According to the communication method provided in this implementation, in a before-collision scenario, the first terminal device indicates whether there is a conflict between the first sending resource and the third sending resource, and in an after-collision scenario, the first terminal device indicates whether there is a conflict between the first reserved resource and the third sending resource.

In a possible implementation, the method further includes: The first terminal device determines, based on a strength of a signal transmitted on the first sending resource, a strength of a signal transmitted on the first resource, where the first sending resource is a resource on which the second terminal device sends the first control information; the first terminal device determines a strength of a signal transmitted on the second resource; and/or the first terminal device determines resource overlapping information of the first resource and the second resource based on the first reserved resource and a second reserved resource.

According to the communication method provided in this implementation, the first terminal device measures a strength of a channel transmitted on the first sending resource, to obtain the strength of the signal transmitted on the first resource, namely, a first signal strength. Similarly, the first terminal device measures the strength of the signal transmitted on the second sending resource, to obtain the strength of the signal transmitted on the second resource, namely, a second signal strength. This improves measurement convenience. The first terminal device determines the resource overlapping information based on the first reserved resource and the second reserved resource in the before-collision scenario, to accurately measure the resource overlapping information.

Optionally, the resource overlapping information includes:

a first overlapping ratio,

a second overlapping ratio,

a larger value of a first overlapping ratio and a second overlapping ratio,

first frequency domain information of an overlapping resource of the first resource and the second resource,

second frequency domain information of a non-overlapping resource in the first resource, or

third frequency domain information of a non-overlapping resource in the second resource, where

the first overlapping ratio is a ratio of an overlapping part of the first resource and the second resource to the first resource, and the second overlapping ratio is a ratio of the overlapping part of the first resource and the second resource to the second resource.

Optionally, the signal strength includes:

a first signal strength,

a second signal strength,

a ratio of a first signal strength to a second signal strength,

a ratio of a second signal strength to a first signal strength,

a ratio of a first signal strength to a sum of the first signal strength and a second signal strength, or

a ratio of a second signal strength to a sum of a first signal strength and the second signal strength, where

the first signal strength is the strength of the signal transmitted on the first resource, and the second signal strength is the strength of the signal transmitted on the second resource.

Optionally, the first parameter includes:

the first signal strength and/or the second signal strength,

the first overlapping ratio and/or the second overlapping ratio,

a converted value, calculated based on the first overlapping ratio or the second overlapping ratio, of the first signal strength,

a converted value, calculated based on the first overlapping ratio or the second overlapping ratio, of the second signal strength,

a subchannel location and/or a number of subchannels of the first frequency domain information,

a subchannel location and/or a number of subchannels of the second frequency domain information,

a subchannel location and/or a number of subchannels of the third frequency domain information, and/or

a combination value of the resource overlapping information and the signal strength, where

the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

In a possible implementation, that a first terminal device determines a first resource conflict degree between a first resource and a second resource based on a first parameter includes: The first terminal device determines the first resource conflict degree based on the first parameter and M conflict threshold ranges.

According to the communication method provided in this implementation, the M conflict threshold ranges are associated with the M resource conflict degrees. The first terminal device compares the first parameter with the M conflict threshold ranges, to determine the conflict threshold range within which the first parameter falls, so as to determine the corresponding first resource conflict degree. This can avoid setting the corresponding resource conflict degree for each first parameter, improves convenience of determining the resource conflict degree, and improves performance of a communication system.

In a possible implementation, that the first terminal device determines the first resource conflict degree based on the first parameter and M conflict threshold ranges includes: The first terminal device determines that the first parameter falls within a $k^{th}$ conflict threshold range, where the $k^{th}$ conflict threshold range is a conflict threshold range that is in the M conflict threshold ranges and that corresponds to the first resource conflict degree.

According to the communication method provided in this implementation, the first terminal device can determine the corresponding first resource conflict degree by determining the $k^{th}$ conflict threshold range within which the first parameter falls. Compared with a manner of presetting a corresponding conflict threshold range for each first parameter or each group of first parameters, this implementation has higher processing efficiency and saves storage space.

Optionally,

the conflict threshold range is an overlapping information threshold range, and the overlapping information threshold range is associated with one of the M resource conflict degrees;

the conflict threshold range is a signal strength threshold range, and the signal strength threshold range is associated with one of the M resource conflict degrees;

the conflict threshold range is the signal strength threshold range, the signal strength threshold range is determined based on the resource overlapping information, and the signal strength threshold range is associated with the M resource conflict degrees;

the conflict threshold range is the overlapping information threshold range, the resource overlapping information threshold range is determined based on the signal strength, and the overlapping information threshold range is associated with the M resource conflict degrees; and/or

the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.

According to the communication method provided in this implementation, the conflict threshold range may be the overlapping information threshold range and/or the signal strength threshold range, to determine the conflict degrees for different first parameters.

In a possible implementation, at least one of a time domain resource, a frequency domain resource, or a code domain resource that is used by the first terminal device to send the resource conflict information indicates the first resource conflict degree.

According to the communication method provided in this implementation, the first terminal device sends, on different frequency domain resources, resource conflict information indicating different resource conflict degrees, and/or indicates the first resource conflict degree based on different CS sequences, thereby reducing transmission resources occupied by the resource conflict information.

In a possible implementation, at least one of the time domain resource, the frequency domain resource, or the code domain resource that is used by the first terminal device to send the resource conflict information indicates at least one of the following:

a signal strength threshold range and a resource overlapping information threshold range that correspond to the first resource conflict degree, and a combination of the resource overlapping information threshold range and the signal strength threshold range.

The first resource conflict degree corresponds to the foregoing conflict threshold range, and there are threshold ranges corresponding to a plurality of measured parameters, to perform fine-grained division on conflict degrees under different measured parameters.

In a possible implementation, that a first terminal device determines a first resource conflict degree between a first resource and a second resource based on a first parameter includes: The first terminal device obtains first configuration information, where the first configuration information indicates a resource conflict threshold, the resource conflict threshold is associated with a second parameter, the second parameter is channel busy information and/or priority information, and the resource conflict threshold includes the signal strength threshold and/or the resource overlapping information threshold.

Therefore, the resource conflict threshold is obtained based on the second parameter, and flexible scheduling of the resource conflict threshold is implemented.

In a possible implementation, the M resource conflict degrees include:

M recommendation levels of different recommendation degrees,

M disrecommendation levels of different disrecommendation degrees, or

P recommendation levels of different recommendation degrees and Q disrecommendation levels of different disrecommendation degrees, where P+Q=M.

According to the communication method provided in this implementation, the first resource conflict degree indicated by the resource conflict information may be a recommendation level or may be a disrecommendation level. A higher recommendation level indicates higher reliability of transmission of the first resource or the second resource. A higher disrecommendation level indicates lower reliability of transmission of the first resource or the second resource. Therefore, the resource conflict information provides a plurality of fine-grained conflict degrees, to indicate a resource conflict degree to the second terminal device and/or the third terminal device, or indicate reliability of transmission of the resource.

In a possible implementation, the method further includes: The first terminal device determines a first transmission parameter difference and/or a second transmission parameter difference, where the first transmission parameter difference is a transmission parameter difference between the first reserved resource and the first sending resource, and the second transmission parameter difference is a transmission parameter difference between the second reserved resource and the second sending resource; and when the first transmission parameter difference or the second transmission parameter difference is greater than a first preset value, the first terminal device determines that the first resource conflict degree is a second resource conflict degree with a low recommendation degree or a high disrecommendation degree.

According to the communication method provided in this implementation, the first resource conflict degree is further adjusted in time based on a transmission parameter difference between a reserved resource and a sending resource, so that the resource conflict information can indicate a more accurate resource conflict degree, and the second terminal device accurately determines whether to perform retransmission or reselection.

According to a third aspect, an embodiment of this application provides a sidelink transmission method, including: A second terminal device receives first resource conflict information, where the first resource conflict information indicates a first resource conflict degree between a first resource and a second resource, the first resource is a resource used by the second terminal device for transmission, the second resource is a resource used by a first terminal device or a third terminal device for transmission, the first resource conflict degree is one of M resource conflict degrees, M is an integer greater than 1, and the resource conflict degree is associated with resource overlapping information and/or a signal strength; and the second terminal device reselects, retransmits, or continues to use the first resource based on the first resource conflict degree.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

Optionally, the resource overlapping information includes:

a first overlapping ratio,
a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, where
the first overlapping ratio is a ratio of an overlapping part of the first resource and the second resource to the first resource, and the second overlapping ratio is a ratio of the overlapping part of the first resource and the second resource to the second resource.

Optionally, the signal strength includes:

a first signal strength,
a second signal strength,
a ratio of a first signal strength to a second signal strength,
a ratio of a second signal strength to a first signal strength,
a ratio of a first signal strength to a sum of the first signal strength and a second signal strength, or
a ratio of a second signal strength to a sum of a first signal strength and the second signal strength, where
the first signal strength is the strength of the signal transmitted on the first resource, and the second signal strength is the strength of the signal transmitted on the second resource.

Optionally, the first parameter includes:

the first signal strength and/or the second signal strength,
the first overlapping ratio and/or the second overlapping ratio,
a converted value, calculated based on the first overlapping ratio or the second overlapping ratio, of the first signal strength,
a converted value, calculated based on the first overlapping ratio or the second overlapping ratio, of the second signal strength,
a subchannel location and/or a number of subchannels of the first frequency domain information,
a subchannel location and/or a number of subchannels of the second frequency domain information,
a subchannel location and/or a number of subchannels of the third frequency domain information, and/or
a combination value of the resource overlapping information and the signal strength, where
the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

Optionally,

the conflict threshold range is an overlapping information threshold range, and the overlapping information threshold range is associated with one of the M resource conflict degrees;
the conflict threshold range is a signal strength threshold range, and the signal strength threshold range is associated with one of the M resource conflict degrees;
the conflict threshold range is the signal strength threshold range, the signal strength threshold range is determined based on the resource overlapping information, and the signal strength threshold range is associated with the M resource conflict degrees;
the conflict threshold range is the overlapping information threshold range, the resource overlapping information threshold range is determined based on the signal strength, and the overlapping information threshold range is associated with the M resource conflict degrees; and/or
the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.
In a possible implementation, the M resource conflict degrees include:

M recommendation levels of different recommendation degrees,
M disrecommendation levels of different disrecommendation degrees, or
P recommendation levels of different recommendation degrees and Q disrecommendation levels of different disrecommendation degrees, where P+Q=M.

For beneficial effect of the communication method provided in the third aspect and the possible implementations of the third aspect, refer to the beneficial effect brought by the first aspect, the second aspect, and the possible implementations of the first aspect and the second aspect. Details are not described herein again.
According to the third aspect, in a possible implementation, the second terminal device receives N pieces of first resource conflict information, and N is a positive integer.
When a number of $i^{th}$ disrecommendation levels in resource conflict degrees indicated by the N pieces of first resource conflict information is the largest, the second terminal device determines that the first resource is at the $i^{th}$ disrecommendation level, or
when a number of $i^{th}$ recommendation levels in resource conflict degrees indicated by the N pieces of first resource conflict information is the largest, the second terminal device determines that the first resource is at the $i^{th}$ recommendation level.
According to the communication method provided in this implementation, for different scenarios, when receiving the N pieces of resource conflict information, the second terminal device determines a first resource conflict degree based on a number of conflict degrees of a same type indicated in the N pieces of resource conflict information, to accurately determine whether to perform data retransmission or transmission resource reselection, or continue to use the first resource.
In a possible implementation, the method further includes:
When a number of $i^{th}$ disrecommendation levels in resource conflict degrees indicated by N pieces of first resource conflict information is the largest, and a ratio of the number N1 of $i^{th}$ disrecommendation levels to N is greater than or equal to a second preset value, the second terminal device determines that the first resource is at the $i^{th}$ disrecommendation level; or
when a number of $i^{th}$ recommendation levels in resource conflict degrees indicated by N pieces of first resource conflict information is the largest, and a ratio of the number N1 of $i^{th}$ recommendation levels to N is greater than or equal to a third preset value, the second terminal device determines that the first resource is at the $i^{th}$ recommendation level.
In a possible implementation, that the second terminal device reselects, retransmits or continues to use the first resource based on the first resource conflict degree includes:
The second terminal device reselects or retransmits the first resource based on the first resource conflict degree and a first preset condition.
The first preset condition includes at least one of the following:

a number of candidate resources in a candidate resource set of the second terminal device is less than a fourth preset value;

a number of remaining resources of a sidelink grant (SL grant) is less than a fifth preset value;

a number of transmissions of signaling and/or data transmitted on the first resource is greater than a sixth preset value;

a CBR is greater than a seventh preset value; and

a number of first reserved resources is less than or equal to an eighth preset value, and the first reserved resource is a reserved resource indicated by the first control information sent by the second terminal device.

According to the communication method provided in this implementation, when conflict indication information indicates a specific first resource conflict degree, the second terminal device determines, based on at least one of resource usage of a resource pool, a channel busy degree, or a number of data transmissions, to retransmit, reselect, or continue to use the first resource. This ensures that retransmission or reselection can improve transmission reliability for data transmission. In addition, this avoids large overheads of a communication system caused by frequent retransmission or reselection.

In a possible implementation, the method further includes:

The second terminal device determines the first preset condition and/or a preset value in the first preset condition based on the first resource conflict degree.

According to the communication method provided in this implementation, the second terminal device can make the first preset condition more applicable to a current scenario, thereby improving accuracy of evaluating whether retransmission or reselection is required.

In a possible implementation, the method further includes:

The second terminal device determines, based on the first resource conflict degree, a reselection probability corresponding to the first resource conflict degree; and

the second terminal device reselects, retransmits, or continues to use the first resource based on the reselection probability.

According to the communication method provided in this implementation, the second terminal device can quickly determine whether to perform reselection or retransmission, thereby improving processing efficiency.

According to a fourth aspect, an embodiment of this application provides a sidelink transmission method, including: A first terminal device determines M conflict threshold ranges based on channel busy information and/or priority information, where the M conflict threshold ranges are in a one-to-one correspondence with M conflict degrees; the first terminal device determines a first resource conflict degree between a first resource and a second resource based on a first parameter, where the first parameter is resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of the M resource conflict degrees, and M is a positive integer; and the first terminal device sends resource conflict information to the second terminal device and/or the third terminal device, where the resource conflict information indicates the first resource conflict degree.

According to the sidelink transmission method provided in the fourth aspect, the first terminal device and the second terminal device each may determine a corresponding first conflict threshold range based on the channel busy information and/or the priority information, and then determine the first resource conflict degree. In this case, the resource conflict information only needs to indicate whether there is a resource conflict between the first resource and the second resource. This reduces resources occupied by the resource conflict information.

In a possible implementation, the method further includes: The first terminal device obtains second configuration information, where the second configuration information indicates a resource conflict threshold, the resource conflict threshold is associated with the channel busy information and/or the priority information, and the resource conflict threshold includes a signal strength threshold and/or a resource overlapping information threshold.

Therefore, the resource conflict threshold is obtained based on a second parameter, and flexible scheduling of the resource conflict threshold is implemented.

In a possible implementation, the first terminal device determines a first resource conflict threshold or a first resource conflict threshold set based on the channel busy information and/or the priority information.

After the first terminal device determines the first resource conflict threshold based on the channel busy information and/or the priority information, when the resource overlapping information and/or the signal strength are/is greater than the first resource conflict threshold, the first terminal device indicates the resource conflict, or when the resource overlapping information and/or the signal strength are/is less than or equal to the first resource conflict threshold, the first terminal does not indicate the resource conflict.

After the first terminal device determines the first resource conflict threshold set based on the channel busy information and/or the priority information, the first terminal device determines the M conflict threshold ranges based on the first resource conflict threshold set.

The second terminal device determines a first resource conflict threshold range set based on the channel busy information and/or the priority information that are/is obtained through measurement, and further determines the first resource conflict degree, thereby reducing signaling overheads.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

According to the communication method provided in this implementation, when the first resource includes the first sending resource and the second resource includes the second sending resource, the first terminal device may indicate, in an after-collision scenario, whether there is a conflict between the first resource and the second resource, and indicate a degree of the conflict. When the first resource includes the first reserved resource and the second resource includes the second reserved resource, the first terminal device may indicate, in a before-collision scenario, whether there is a conflict between the first resource and the second resource, and indicate a degree of the conflict. When the first resource includes the first sending resource and the second sending resource, and the second resource includes the second sending resource and the second reserved resource, the first terminal device may indicate, in a before-collision scenario and an after-collision scenario, whether there is a conflict between the first resource and the second resource, and indicate a degree of the conflict. Therefore, the first terminal device can perform a conflict indication in a plurality of collision scenarios.

In a possible implementation, the method further includes: The first terminal device determines, based on a strength of a signal transmitted on the first sending resource, a strength of a signal transmitted on the first resource, where the first sending resource is a resource on which the second terminal device sends the first control information; the first terminal device determines, based on a strength of a signal transmitted on the second sending resource, a strength of a signal transmitted on the second resource, where the second sending resource is a resource on which the second terminal device sends the second control information; and/or the first terminal device determines resource overlapping information of the first resource and the second resource based on the first reserved resource and the second reserved resource.

According to the communication method provided in this implementation, the first terminal device measures a strength of a channel transmitted on the first sending resource, to obtain the strength of the signal transmitted on the first resource, namely, a first signal strength. Similarly, the first terminal device measures the strength of the signal transmitted on the second sending resource, to obtain the strength of the signal transmitted on the second resource, namely, a second signal strength. This improves measurement convenience. The first terminal device determines the resource overlapping information based on the first reserved resource and the second reserved resource in the before-collision scenario, to accurately measure the resource overlapping information.

Optionally, the resource overlapping information includes:

a first overlapping ratio,
a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, where
the first overlapping ratio is a ratio of an overlapping part of the first resource and the second resource to the first resource, and the second overlapping ratio is a ratio of the overlapping part of the first resource and the second resource to the second resource.

Optionally, the signal strength includes:

a first signal strength,
a second signal strength,
a ratio of a first signal strength to a second signal strength,
a ratio of a second signal strength to a first signal strength,
a ratio of a first signal strength to a sum of the first signal strength and a second signal strength, or
a ratio of a second signal strength to a sum of a first signal strength and the second signal strength, where
the first signal strength is the strength of the signal transmitted on the first resource, and the second signal strength is the strength of the signal transmitted on the second resource.

Optionally, the first parameter includes:

the first signal strength and/or the second signal strength,
the first overlapping ratio and/or the second overlapping ratio,
a converted value, calculated based on the first overlapping ratio or the second overlapping ratio, of the first signal strength,
a converted value, calculated based on the first overlapping ratio or the second overlapping ratio, of the second signal strength,
a subchannel location and/or a number of subchannels of the first frequency domain information,
a subchannel location and/or a number of subchannels of the second frequency domain information,
a subchannel location and/or a number of subchannels of the third frequency domain information, and/or
a combination value of the resource overlapping information and the signal strength, where
the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

In a possible implementation, that the first terminal device determines a first resource conflict degree between a first resource and a second resource based on a first parameter includes: The first terminal device determines the first resource conflict degree based on the first parameter and the M conflict threshold ranges.

According to the communication method provided in this implementation, the M conflict threshold ranges are associated with the M resource conflict degrees. The first terminal device compares the first parameter with the M conflict threshold ranges, to determine the conflict threshold range within which the first parameter falls, so as to determine the corresponding first resource conflict degree. This can avoid setting the corresponding resource conflict degree for each first parameter, improves convenience of determining the resource conflict degree, and improves performance of a communication system.

In a possible implementation, that the first terminal device determines the first resource conflict degree based on the first parameter and M conflict threshold ranges includes: The first terminal device determines that the first parameter falls within a $k^{th}$ conflict threshold range, where the $k^{th}$ conflict threshold range is a conflict threshold range that is in the M conflict threshold ranges and that corresponds to the first resource conflict degree.

According to the communication method provided in this implementation, the first terminal device can determine the corresponding first resource conflict degree by determining the $k^{th}$ conflict threshold range within which the first parameter falls. Compared with a manner of presetting a corresponding conflict threshold range for each first parameter or each group of first parameters, this implementation has higher processing efficiency and saves storage space.

Optionally,

the conflict threshold range is an overlapping information threshold range, and the overlapping information threshold range is associated with one of the M resource conflict degrees;
the conflict threshold range is a signal strength threshold range, and the signal strength threshold range is associated with one of the M resource conflict degrees;
the conflict threshold range is the signal strength threshold range, the signal strength threshold range is determined based on the resource overlapping information, and the signal strength threshold range is associated with the M resource conflict degrees;
the conflict threshold range is the overlapping information threshold range, the resource overlapping information threshold range is determined based on the signal strength, and the overlapping information threshold range is associated with the M resource conflict degrees; and/or
the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.

According to the communication method provided in this implementation, the conflict threshold range may be the overlapping information threshold range and/or the signal strength threshold range, to determine conflict degrees for different first parameters.

In a possible implementation, at least one of a time domain resource, a frequency domain resource, or a code domain resource that is used by the first terminal device to send the resource conflict information indicates the first resource conflict degree.

According to the communication method provided in this implementation, the first terminal device sends, on different frequency domain resources, resource conflict information indicating different resource conflict degrees, and/or indicates the first resource conflict degree based on different CS sequences, thereby reducing transmission resources occupied by the resource conflict information.

In a possible implementation, at least one of the time domain resource, the frequency domain resource, or the code domain resource that is used by the first terminal device to send the resource conflict information indicates at least one of the following:

a signal strength threshold range and a resource overlapping information threshold range that correspond to the first resource conflict degree, and a combination of the resource overlapping information threshold range and the signal strength threshold range.

The first resource conflict degree corresponds to the foregoing conflict threshold range, and there are threshold ranges corresponding to a plurality of measured parameters, to perform fine-grained division on conflict degrees under different measured parameters.

In a possible implementation, the M resource conflict degrees include:

M recommendation levels of different recommendation degrees,
M disrecommendation levels of different disrecommendation degrees, or
P recommendation levels of different recommendation degrees and Q disrecommendation levels of different disrecommendation degrees, where P+Q=M.

According to the communication method provided in this implementation, the first resource conflict degree indicated by the resource conflict information may be a recommendation level or may be a disrecommendation level. A higher recommendation level indicates higher reliability of transmission of the first resource or the second resource. A higher disrecommendation level indicates lower reliability of transmission of the first resource or the second resource. Therefore, the resource conflict information provides a plurality of fine-grained conflict degrees, to indicate a resource conflict degree to the second terminal device and/or the third terminal device, or indicate reliability of transmission of the resource.

In a possible implementation, the method further includes: The first terminal device determines a first transmission parameter difference and/or a second transmission parameter difference, where the first transmission parameter difference is a transmission parameter difference between the first reserved resource and the first sending resource, and the second transmission parameter difference is a transmission parameter difference between the second reserved resource and the second sending resource; and when the first transmission parameter difference or the second transmission parameter difference is greater than a first preset value, the first terminal device determines that the first resource conflict degree is a second resource conflict degree with a low recommendation degree or a high disrecommendation degree.

According to the communication method provided in this implementation, the first resource conflict degree is further adjusted in time based on a transmission parameter difference between a reserved resource and a sending resource, so that the resource conflict information can indicate a more accurate resource conflict degree, and the second terminal device accurately determines whether to perform retransmission or reselection.

According to a fifth aspect, an embodiment of this application provides a sidelink transmission method, including: A first terminal device determines M conflict threshold ranges based on channel busy information and/or priority information, where the M conflict threshold ranges are in a one-to-one correspondence with M conflict degrees; the first terminal device determines a first resource conflict degree between a first resource and a second resource based on a first parameter, where the first parameter is resource overlapping information and/or a signal strength, or the first parameter is determined based on resource overlapping information and/or a signal strength, the first resource is a resource used by a second terminal device for transmission, the second resource is a resource used by a first terminal device for transmission, the first resource conflict degree is one of the M resource conflict degrees, and M is a positive integer; the first terminal device sends resource conflict information to the second terminal device and/or a third terminal device, where the resource conflict information indicates the first resource conflict degree; and/or the first terminal device determines resource overlapping information of the first resource and the second resource based on a first reserved resource and a second reserved resource.

According to the sidelink transmission method provided in the fourth aspect, the first terminal device and the second terminal device each may determine a corresponding first conflict threshold range based on the channel busy information and/or the priority information, and then determine the first resource conflict degree. In this case, the resource conflict information only needs to indicate whether there is a resource conflict between the first resource and the second resource. This reduces resources occupied by the resource conflict information.

In a possible implementation, the method further includes: The first terminal device obtains second configuration information, where the second configuration information indicates a resource conflict threshold, the resource conflict threshold is associated with the channel busy information and/or the priority information, and the resource conflict threshold includes a signal strength threshold and/or a resource overlapping information threshold.

Therefore, the resource conflict threshold is obtained based on a second parameter, and flexible scheduling of the resource conflict threshold is implemented.

In a possible implementation, the first terminal device determines a first resource conflict threshold or a first resource conflict threshold set based on the channel busy information and/or the priority information.

After the first terminal device determines the first resource conflict threshold based on the channel busy information and/or the priority information, when the resource overlapping information and/or the signal strength are/is greater than the first resource conflict threshold, the first terminal device indicates the resource conflict, or when the resource overlapping information and/or the signal strength are/is less than or equal to the first resource conflict threshold, the first terminal does not indicate the resource conflict.

After the first terminal device determines the first resource conflict threshold set based on the channel busy information and/or the priority information, the first terminal device determines the M conflict threshold ranges based on the first resource conflict threshold set.

The first terminal device may indicate an index of the first resource conflict threshold to the second terminal device by using 1 bit; and then the second terminal device determines, based on the channel busy information and/or the priority information that are/is obtained through measurement, a specific threshold, corresponding to the index, of a first resource conflict threshold range, and further determines the first resource conflict degree. This reduces signaling overheads.

According to a fifth aspect, an embodiment of this application provides a sidelink transmission method, including: A terminal device obtains second configuration information, where the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and the terminal device receives or sends the resource conflict information based on the second configuration information.

According to the sidelink transmission method provided in the fifth aspect, a network device configures the first time domain resource set and the feedback time domain resource set for the terminal device, and separately configures a first time domain resource and a feedback time domain resource. This reduces system overheads, and avoids a receiving and sending conflict, a sending and sending conflict, and a receiving and receiving conflict of the feedback information and a plurality of resource conflict degrees.

In a possible implementation,

a period of a feedback time domain resource is an integer multiple of a period of a first time domain resource,
a period of a feedback time domain resource is greater than or equal to a period of a first time domain resource,
a period of a first time domain resource is an integer multiple of a period of a feedback time domain resource, or
a period of a first time domain resource is greater than or equal to a period of a feedback time domain resource; and
the feedback time domain resource belongs to the feedback time domain resource set, and the first time domain resource belongs to the first time domain resource set.

In a possible implementation, the second configuration information includes/indicates period information and/or offset information of the first time domain resource; the terminal device determines, based on the period information and/or the offset information of the first time domain resource, a time domain location for sending the resource conflict information; and the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the first time domain resource belongs to a first time unit set, and the first time unit set includes at least one of the following types of time units:

a first time unit in which the first time domain resource and the feedback time domain resource are configured;
a second time unit in which the first time domain resource is configured;
a third time unit in which the feedback time domain resource is configured; and
a fourth time unit in which the first time domain resource or the feedback time domain resource is not configured.

In a possible implementation, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit.

The reception and transmission parameter includes at least two of the following:

H1 pieces of to-be-sent feedback information,

H2 pieces of to-be-received feedback information,

R1 pieces of to-be-sent resource conflict information,

R2 pieces of to-be-received resource conflict information,

a maximum number C1 of pieces of resource conflict information and/or feedback information that can be sent; and

a maximum number C2 of pieces of resource conflict information and/or feedback information that can be received.

In a possible implementation, that the terminal device determines, based on a type of the time unit and a reception and transmission parameter, to receive the resource conflict information and/or the feedback information in the time unit, or to send the resource conflict information and/or the feedback information in the time unit includes at least one of the following methods:

When the type of the time unit is the first time unit, the terminal device determines, based on priority values of the H1 pieces of to-be-sent feedback information and priority values of the R1 pieces of to-be-sent resource conflict information, to send C1 pieces of feedback information and/or resource conflict information with a smallest priority value;

when the type of the time unit is the first time unit, the terminal device determines, based on priority values of the H2 pieces of to-be-received feedback information and priority values of the R2 pieces of to-be-received resource conflict information, to receive C2 pieces of feedback information and/or resource conflict information with a smallest priority value;

when the type of the time unit is the second time unit, the terminal device determines, based on priority values of the R1 pieces of to-be-sent resource conflict information, to send $\max\{0, C1-H1\}$ or $\max\{0, \min\{C1-H1, R1\}\}$ pieces of resource conflict information with a smallest priority value;

when the type of the time unit is the second time unit, the terminal device determines, based on priority values of the R2 pieces of to-be-received resource conflict information, to receive $\max\{0, C2-H2\}$ or $\max\{0, \min\{C2-H2, R2\}\}$ pieces of resource conflict information with a smallest priority value;

when the type of the time unit is the third time unit, the terminal device determines, based on priority values of the R1 pieces of to-be-sent resource conflict information, to send $\min\{R1, C1\}$ pieces of resource conflict information with a smallest priority value; and/or

when the type of the time unit is the third time unit, the terminal device determines, based on priority values of the R2 pieces of to-be-received resource conflict information, to receive $\min\{R2, C2\}$ pieces of resource conflict information with a smallest priority value.

In a possible implementation, the first time domain resource is a channel for transmitting the resource conflict information or a resource for transmitting the resource conflict information; and the feedback time domain resource is a channel for transmitting the feedback information or a resource for transmitting the feedback information.

According to the sidelink transmission method provided in this implementation, the terminal device may determine a receiving and sending mechanism based on types of different time units, to avoid a resource conflict occurring when the resource conflict information (for example, including the first resource conflict information) is transmitted.

In a possible implementation, the method further includes:

The terminal device determines a transport block size and/or rate matching based on the type of the time unit and a symbol occupied by the resource conflict information.

According to the sidelink transmission method provided in this embodiment, when the first time domain resource is different from the feedback time domain resource, rate matching is performed on symbols occupied by the first time domain resource and the feedback time domain resource in a slot, or the transport block size is accurately determined, to facilitate subsequent data transmission.

In a possible implementation, the first time domain resource further includes a frequency domain resource and/or a code domain resource, and a frequency domain resource and/or a code domain resource for sending the resource conflict information are/is different from a frequency domain resource and/or a code domain resource for sending the feedback information.

This avoids collision between the resource conflict information and the feedback information.

According to a sixth aspect, an embodiment of this application provides a sidelink transmission method, including: A network device sends second configuration information to a terminal device, where the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and the terminal device receives or sends the resource conflict information based on the second configuration information.

In a possible implementation,

a period of a feedback time domain resource is an integer multiple of a period of a first time domain resource,

a period of a feedback time domain resource is greater than or equal to a period of a first time domain resource,

a period of a first time domain resource is an integer multiple of a period of a feedback time domain resource, or

a period of a first time domain resource is greater than or equal to a period of a feedback time domain resource; and

the feedback time domain resource belongs to the feedback time domain resource set, and the first time domain resource belongs to the first time domain resource set.

In a possible implementation, the second configuration information includes/indicates period information and/or offset information of the first time domain resource; the terminal device determines, based on the period information and/or the offset information of the first time domain resource, a time domain location for sending the resource conflict information; and the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the first time domain resource belongs to a first time unit set, and the first time unit set includes at least one of the following types of time units:

a first time unit in which the first time domain resource and the feedback time domain resource are configured;

a second time unit in which the first time domain resource is configured;

a third time unit in which the feedback time domain resource is configured; and

a fourth time unit in which the first time domain resource or the feedback time domain resource is not configured.

In a possible implementation, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit.

The reception and transmission parameter includes at least two of the following:

H1 pieces of to-be-sent feedback information,

H2 pieces of to-be-received feedback information,

R1 pieces of to-be-sent resource conflict information,

R2 pieces of to-be-received resource conflict information,

a maximum number C1 of pieces of resource conflict information and/or feedback information that can be sent; and

a maximum number C2 of pieces of resource conflict information and/or feedback information that can be received.

According to a fifth aspect, an embodiment of this application provides a sidelink transmission method, including: A terminal device obtains second configuration information, where the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and the terminal device receives or sends the resource conflict information based on the second configuration information.

According to the sidelink transmission method provided in the fifth aspect, a network device configures the first time domain resource set and the feedback time domain resource set for the terminal device, and separately configures a first time domain resource and a feedback time domain resource. This reduces system overheads, and avoids a receiving and sending conflict, a sending and sending conflict, and a receiving and receiving conflict of the feedback information and a plurality of resource conflict degrees.

In a possible implementation,

a period of a feedback time domain resource is an integer multiple of a period of a first time domain resource,

a period of a feedback time domain resource is greater than or equal to a period of a first time domain resource,

a period of a first time domain resource is an integer multiple of a period of a feedback time domain resource, or

a period of a first time domain resource is greater than or equal to a period of a feedback time domain resource; and

the feedback time domain resource belongs to the feedback time domain resource set, and the first time domain resource belongs to the first time domain resource set.

In a possible implementation, the second configuration information includes/indicates period information and/or offset information of the first time domain resource; the terminal device determines, based on the period information and/or the offset information of the first time domain resource, a time domain location for sending the resource conflict information; and the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the first time domain resource belongs to a first time unit set, and the first time unit set includes at least one of the following types of time units:

a first time unit in which the first time domain resource and the feedback time domain resource are configured;
a second time unit in which the first time domain resource is configured;
a third time unit in which the feedback time domain resource is configured; and
a fourth time unit in which the first time domain resource or the feedback time domain resource is not configured.

In a possible implementation, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit.

The reception and transmission parameter includes at least two of the following:

H1 pieces of to-be-sent feedback information,
H2 pieces of to-be-received feedback information,
R1 pieces of to-be-sent resource conflict information,
R2 pieces of to-be-received resource conflict information,
a maximum number C1 of pieces of resource conflict information and/or feedback information that can be sent; and
a maximum number C2 of pieces of resource conflict information and/or feedback information that can be received.

In a possible implementation, that the terminal device determines, based on a type of the time unit and a reception and transmission parameter, to receive the resource conflict information and/or the feedback information in the time unit, or to send the resource conflict information and/or the feedback information in the time unit includes at least one of the following methods:

When the type of the time unit is the first time unit, the terminal device determines, based on priority values of the $H1$ pieces of to-be-sent feedback information and priority values of the $R1$ pieces of to-be-sent resource conflict information, to send $C1$ pieces of feedback information and/or resource conflict information with a smallest priority value;

when the type of the time unit is the first time unit, the terminal device determines, based on priority values of the $H2$ pieces of to-be-received feedback information and priority values of the $R2$ pieces of to-be-received resource conflict information, to receive $C2$ pieces of feedback information and/or resource conflict information with a smallest priority value;

when the type of the time unit is the second time unit, the terminal device determines, based on priority values of the $R1$ pieces of to-be-sent resource conflict information, to send $\max\{0, C1-H1\}$ or $\max\{0, \min\{C1-H1, R1\}\}$ pieces of resource conflict information with a smallest priority value;

when the type of the time unit is the second time unit, the terminal device determines, based on priority values of the $R2$ pieces of to-be-received resource conflict information, to receive $\max\{0, C2-H2\}$ or $\max\{0, \min\{C2-H2, R2\}\}$ pieces of resource conflict information with a smallest priority value;

when the type of the time unit is the third time unit, the terminal device determines, based on priority values of the $R1$ pieces of to-be-sent resource conflict information, to send $\min\{R1, C1\}$ pieces of resource conflict information with a smallest priority value; and/or

when the type of the time unit is the third time unit, the terminal device determines, based on priority values of the $R2$ pieces of to-be-received resource conflict information, to receive $\min\{R2, C2\}$ pieces of resource conflict information with a smallest priority value.

In a possible implementation, the first time domain resource is a channel for transmitting the resource conflict information or a resource for transmitting the resource conflict information; and the feedback time domain resource is a channel for transmitting the feedback information or a resource for transmitting the feedback information.

According to the sidelink transmission method provided in this implementation, the terminal device may determine a receiving and sending mechanism based on types of different time units, to avoid a resource conflict occurring when the resource conflict information (for example, including the first resource conflict information) is transmitted.

In a possible implementation, the method further includes:
The terminal device determines a transport block size and/or rate matching based on the type of the time unit and a symbol occupied by the resource conflict information.

According to the sidelink transmission method provided in this embodiment, when the first time domain resource is different from the feedback time domain resource, rate matching is performed on symbols occupied by the first time domain resource and the feedback time domain resource in a slot, or the transport block size is accurately determined, to facilitate subsequent data transmission.

In a possible implementation, the first time domain resource further includes a frequency domain resource and/or a code domain resource, and a frequency domain resource and/or a code domain resource for sending the resource conflict information are/is different from a frequency domain resource and/or a code domain resource for sending the feedback information.

This avoids collision between the resource conflict information and the feedback information.

According to a sixth aspect, an embodiment of this application provides a sidelink transmission method, including: A network device sends second configuration information to a terminal device, where the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and the terminal device receives or sends the resource conflict information based on the second configuration information.

In a possible implementation,

a period of a feedback time domain resource is an integer multiple of a period of a first time domain resource,
a period of a feedback time domain resource is greater than or equal to a period of a first time domain resource,
a period of a first time domain resource is an integer multiple of a period of a feedback time domain resource, or
a period of a first time domain resource is greater than or equal to a period of a feedback time domain resource; and
the feedback time domain resource belongs to the feedback time domain resource set, and the first time domain resource belongs to the first time domain resource set.

In a possible implementation, the second configuration information includes/indicates period information and/or offset information of the first time domain resource; the terminal device determines, based on the period information and/or the offset information of the first time domain resource, a time domain location for sending the resource conflict information; and the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the first time domain resource belongs to a first time unit set, and the first time unit set includes at least one of the following types of time units:

a first time unit in which the first time domain resource and the feedback time domain resource are configured;
a second time unit in which the first time domain resource is configured;
a third time unit in which the feedback time domain resource is configured; and
a fourth time unit in which the first time domain resource or the feedback time domain resource is not configured.

In a possible implementation, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit.

The reception and transmission parameter includes at least two of the following:

H1 pieces of to-be-sent feedback information,
H2 pieces of to-be-received feedback information,
R1 pieces of to-be-sent resource conflict information,
R2 pieces of to-be-received resource conflict information,
a maximum number C1 of pieces of resource conflict information and/or feedback information that can be sent; and
a maximum number C2 of pieces of resource conflict information and/or feedback information that can be received.

For beneficial effect of the communication method provided in the fifth aspect and the possible implementations of the fifth aspect, refer to the beneficial effect brought by the fourth aspect and the possible implementations of the fourth aspect. Details are not described herein again.

According to a sixth aspect, an embodiment of this application provides a sidelink transmission method, including: A first terminal device determines a first resource pool based on at least two of a first resource, first resource pool information sent by a network device, and second resource pool information sent by a second terminal device, where the first resource is a resource used by the second terminal device for transmission, the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other; and the first terminal device sends sidelink information in the first resource pool.

According to the sidelink transmission method provided in the seventh aspect, the first terminal device determines the first resource pool that is consistent with the second terminal device, and sends resource conflict information to the second terminal device by using a resource in the first resource pool, to ensure that the second terminal device can correctly receive and decode the resource conflict information.

In a possible implementation, that a first terminal device determines a first resource pool based on a first resource and first resource pool information includes: When the first resource pool information indicates the resource pool set, the first terminal device determines the first resource pool based on a resource pool index, where the resource pool index is an index of a resource pool in which the first resource is located.

In this possible implementation, the second terminal device does not need to send the second resource pool information, thereby further reducing signaling overheads of the second terminal device.

In a possible implementation, that a first terminal device determines a first resource pool based on a first resource, first resource pool information, and second resource pool information includes:

When the first resource pool information indicates the resource pool subset set, the first resource pool subsets in the resource pool subset set do not overlap each other, and the second resource pool information indicates a resource pool index in the resource pool subset, the first terminal device determines the first resource pool based on the resource pool index in the resource pool subset and a resource pool subset index corresponding to the first resource.

In this possible implementation, the network device does not need to send the first resource pool information, thereby reducing signaling overheads of the network device.

In a possible implementation, that a first terminal device determines a first resource pool based on a first resource, first resource pool information, and second resource pool information includes:

When the first resource pool information indicates the resource pool subset set, the resource pool subset set includes the second resource pool subset, the resource pools in the second resource pool subset do not overlap each other, and

the second resource pool information indicates a resource pool subset index,
the first terminal device determines the first resource pool based on the resource pool subset index and a first index corresponding to the first resource.

In this possible implementation, the network device does not need to send the first resource pool information, thereby reducing signaling overheads of the network device.

In a possible implementation, that a first terminal device determines a first resource pool based on first resource pool information and second resource pool information includes:

When the first resource pool information indicates the resource pool subset, and
the second resource pool information indicates a resource pool index in the resource pool subset,
the first terminal device determines the first resource pool based on the resource pool subset and the resource pool index in the resource pool subset.

In this possible implementation, the network device configures the resource pool subset, and the second terminal device indicates the resource pool index in the resource pool subset. This reduces signaling overheads of the second terminal device, and reduces signaling overheads of the second resource pool information.

In a possible implementation, that a first terminal device determines a first resource pool based on a first resource and second resource pool information includes: When the second resource pool information indicates a resource pool index in a third resource pool subset, the third resource pool subset belongs to the preconfigured resource pool subset set, and resource pool subsets in the resource pool subset set do not overlap each other, the first terminal device determines the first resource pool based on the resource pool index in the third resource pool subset and a resource pool subset index corresponding to the first resource.

In a possible implementation, that a first terminal device determines a first resource pool based on a first resource and second resource pool information includes:

When the second resource pool information indicates a resource pool subset index in the resource pool subset set, the resource pool subset set includes the fourth resource pool subset, and the resource pools in the fourth resource pool subset do not overlap each other, the first terminal device determines the first resource pool based on the resource pool subset index and a first index corresponding to the first resource.

According to an eighth aspect, an embodiment of this application provides a sidelink transmission method, including:

A second terminal device sends second resource pool information to a first terminal device on a first resource, where the second resource pool information indicates a resource pool index or a resource pool subset index in a resource pool subset, and the first resource belongs to a first resource pool.

For beneficial effect of the sidelink transmission method provided in the eighth aspect, refer to the beneficial effect of the seventh aspect and the possible implementations of the seventh aspect. Details are not described herein again.

According to a ninth aspect, an embodiment of this application provides a sidelink transmission method, including:

A network device sends first resource pool information to a first terminal device, where the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other.

For beneficial effect of the sidelink transmission method provided in the ninth aspect, refer to the beneficial effect of the seventh aspect and the possible implementations of the seventh aspect. Details are not described herein again.

According to a tenth aspect, an embodiment of this application provides a terminal device, including:

a processing unit, configured to determine a first resource conflict degree between a first resource and a second resource based on a first parameter, where the first parameter includes resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1; and

a transceiver unit, configured to send resource conflict information to the second terminal device and/or the third terminal device, where the resource conflict information indicates the first resource conflict degree.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

In a possible implementation, the processing unit is further configured to:

determine, based on a strength of a signal transmitted on the first sending resource, a strength of a signal transmitted on the first resource, where the first sending resource is a resource on which the second terminal device sends the first control information;

determine, based on a strength of a signal transmitted on the second sending resource, a strength of a signal transmitted on the second resource, where the second sending resource is a resource on which the second terminal device sends the second control information; and/or

determine resource overlapping information of the first resource and the second resource based on the first reserved resource and the second reserved resource.

In a possible implementation, the resource overlapping information includes:

a first overlapping ratio,
a second overlapping ratio,
a larger value of a first overlapping ratio and a second overlapping ratio,
first frequency domain information of an overlapping resource of the first resource and the second resource,

second frequency domain information of a non-overlapping resource in the first resource, or

third frequency domain information of a non-overlapping resource in the second resource, where the first overlapping ratio is a ratio of an overlapping part of the first resource and the second resource to the first resource, and the second overlapping ratio is a ratio of the overlapping part of the first resource and the second resource to the second resource.

In a possible implementation, the signal strength includes:

a first signal strength,

a second signal strength,

a ratio of a first signal strength to a second signal strength,

a ratio of a second signal strength to a first signal strength,

a ratio of a first signal strength to a sum of the first signal strength and a second signal strength, or

a ratio of a second signal strength to a sum of a first signal strength and the second signal strength, where the first signal strength is the strength of the signal transmitted on the first resource, and the second signal strength is the strength of the signal transmitted on the second resource.

In a possible implementation, the first parameter includes:

the first signal strength and/or the second signal strength,

the first overlapping ratio and/or the second overlapping ratio,

a converted value, calculated based on the first overlapping ratio or the second overlapping ratio, of the first signal strength,

a converted value, calculated based on the first overlapping ratio or the second overlapping ratio, of the second signal strength,

a subchannel location and/or a number of subchannels of the first frequency domain information,

a subchannel location and/or a number of subchannels of the second frequency domain information,

a subchannel location and/or a number of subchannels of the third frequency domain information, and/or

a combination value of the resource overlapping information and the signal strength, where the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

In a possible implementation, the processing unit is specifically configured to:
determine, by using the first terminal device, the first resource conflict degree based on the first parameter and M conflict threshold ranges.

In a possible implementation,

the conflict threshold range is an overlapping information threshold range, and the overlapping information threshold range is associated with one of the M resource conflict degrees;

the conflict threshold range is a signal strength threshold range, and the signal strength threshold range is associated with one of the M resource conflict degrees;

the conflict threshold range is the signal strength threshold range, the signal strength threshold range is determined based on the resource overlapping information, and the signal strength threshold range is associated with the M resource conflict degrees;

the conflict threshold range is the overlapping information threshold range, the resource overlapping information threshold range is determined based on the signal strength, and the overlapping information threshold range is associated with the M resource conflict degrees; and/or

the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.

In a possible implementation, at least one of a time domain resource, a frequency domain resource, or a code domain resource that is used by the transceiver unit to send the resource conflict information indicates the first resource conflict degree.

In a possible implementation, the M resource conflict degrees include:

M recommendation levels of different recommendation degrees,
M disrecommendation levels of different disrecommendation degrees, or
P recommendation levels of different recommendation degrees and Q disrecommendation levels of different disrecommendation degrees, where P+Q=M.

In a possible implementation, the processing unit is further configured to:

determine a first transmission parameter difference and/or a second transmission parameter difference, where the first transmission parameter difference is a transmission parameter difference between the first reserved resource and the first sending resource, and the second transmission parameter difference is a transmission parameter difference between the second reserved resource and the second sending resource; and
when the first transmission parameter difference or the second transmission parameter difference is greater than a first preset value, determine, by using the first terminal device, that the first resource conflict degree is a second resource conflict degree with a low recommendation degree or a high disrecommendation degree.

In a possible implementation,

the processing unit is further configured to determine a first resource conflict degree between a first resource and a second resource based on a first parameter, where the first parameter is resource overlapping information and/or a signal strength, or the first parameter is determined based on resource overlapping information and/or a signal strength, the first resource is a resource used by the second terminal device for transmission, the second resource is a resource used by the first terminal device for transmission, the first resource conflict degree is one of M resource conflict degrees, and M is a positive integer greater than 1; and
the transceiver unit is further configured to: send resource conflict information to the second terminal device, where the resource conflict information indicates the first resource conflict degree; and/or reselect, retransmit, or continue to use the second resource based on the first resource conflict degree.

In a possible implementation,

the first resource includes a first sending resource on which the second terminal device sends first control information, and/or a first reserved resource indicated by the first control information; and/or
the second resource includes a third sending resource that is determined by the first terminal device and that is used for transmission.

In a possible implementation, the processing unit is further configured to determine M conflict threshold ranges based on channel busy information and/or priority information, where the M conflict threshold ranges are in a one-to-one correspondence with M conflict degrees;

the processing unit is further configured to determine a first resource conflict degree between a first resource and a second resource based on a first parameter, where the first parameter is resource overlapping information and/or a signal strength, or the first parameter is determined based on resource overlapping information and/or a signal strength, the first resource is a resource used by the second terminal device for transmission, the second resource is a resource used by the third terminal device for transmission, the first resource conflict degree is one of M resource conflict degrees, and M is a positive integer; and
the transceiver unit is further configured to send resource conflict information to the second terminal device and/or the third terminal device, where the resource conflict information indicates the first resource conflict degree.

In a possible implementation,
the transceiver unit is further configured to obtain first configuration information, where the first configuration information indicates a resource conflict threshold, the resource conflict threshold is associated with the channel busy information and/or the priority information, and the resource conflict threshold includes a signal strength threshold and/or a resource overlapping information threshold.
In a possible implementation, the transceiver unit is further configured to obtain second configuration information, where

the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and
the terminal device receives or sends the resource conflict information based on the second configuration information.

In a possible implementation,

a period of a feedback time domain resource is an integer multiple of a period of a first time domain resource,
a period of a feedback time domain resource is greater than or equal to a period of a first time domain resource,
a period of a first time domain resource is an integer multiple of a period of a feedback time domain resource, or
a period of a first time domain resource is greater than or equal to a period of a feedback time domain resource; and
the feedback time domain resource belongs to the feedback time domain resource set, and the first time domain resource belongs to the first time domain resource set.

In a possible implementation, the second configuration information includes/indicates period information and/or offset information of the first time domain resource; and

the processing unit is further configured to determine, based on the period information and/or the offset information of the first time domain resource, a time domain location for sending the resource conflict information, where
the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the method further includes:
the processing unit is further configured to determine a transport block size and/or rate matching based on a type of the time unit and a symbol occupied by the resource conflict information.

In a possible implementation,

the processing unit is further configured to determine a first resource pool based on at least two of a first resource, first resource pool information sent by a network device, and second resource pool information sent by a second terminal device, where the first resource is a resource used by the second terminal device for transmission, the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other; and
the transceiver unit is further configured to send sidelink information in the first resource pool.

In a possible implementation, when the first resource pool information indicates the resource pool set,
the processing unit is specifically configured to determine the first resource pool based on a resource pool index, where the resource pool index is an index of a resource pool in which the first resource is located.

In a possible implementation, when the first resource pool information indicates the resource pool subset set, the first resource pool subsets in the resource pool subset set do not overlap each other, and the second resource pool information indicates a resource pool index in the resource pool subset,
the processing unit is specifically configured to determine the first resource pool based on the resource pool index in the resource pool subset and a resource pool subset index corresponding to the first resource.

In a possible implementation, when the first resource pool information indicates the resource pool subset set, the resource pool subset set includes the second resource pool subset, the resource pools in the second resource pool subset do not overlap each other, and the second resource pool information indicates a resource pool subset index,
the processing unit is specifically configured to determine the first resource pool based on the resource pool subset index and a first index corresponding to the first resource.

In a possible implementation, when the first resource pool information indicates the resource pool subset, and the second resource pool information indicates a resource pool index in the resource pool subset,
the processing unit is specifically configured to determine the first resource pool based on the resource pool subset and the resource pool index in the resource pool subset.

According to an eleventh aspect, an embodiment of this application provides a terminal device, including:

a transceiver unit, configured to receive first resource conflict information, where the first resource conflict information indicates a first resource conflict degree between a first resource and a second resource, the first resource is a resource used by a second terminal device for transmission, the second resource is a resource used by a first terminal device or a third terminal device for transmission, the first resource conflict degree is one of M resource conflict degrees, M is an integer greater than 1, and the resource conflict degree is associated with resource overlapping information and/or a signal strength; and

a processing unit, configured to reselect, retransmit, or continue to use the first resource based on the first resource conflict degree.

In a possible implementation, the transceiver unit receives N pieces of first resource conflict information, and N is a positive integer.

When a number of $i^{th}$ disrecommendation levels in resource conflict degrees indicated by the N pieces of first resource conflict information is the largest, the second terminal device determines that the first resource is at the $i^{th}$ disrecommendation level, or

when a number of $i^{th}$ recommendation levels in resource conflict degrees indicated by the N pieces of first resource conflict information is the largest, the second terminal device determines that the first resource is at the $i^{th}$ recommendation level.

In a possible implementation,

when a number of $i^{th}$ disrecommendation levels in resource conflict degrees indicated by N pieces of first resource conflict information is the largest, and a ratio of the number N1 of $i^{th}$ disrecommendation levels to N is greater than or equal to a second preset value, the processing unit determines that the first resource is at the $i^{th}$ disrecommendation level; or

when a number of $i^{th}$ recommendation levels in resource conflict degrees indicated by N pieces of first resource conflict information is the largest, and a ratio of the number N1 of $i^{th}$ recommendation levels to N is greater than or equal to a third preset value, the processing unit determines that the first resource is at the $i^{th}$ recommendation level.

According to a twelfth aspect, an embodiment of this application provides a network device, including a transceiver unit, configured to send first resource pool information to a first terminal device, where the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other.

According to a thirteenth aspect, an embodiment of this application provides a terminal device, including a processor and a memory. The memory is configured to store a computer program, and the processor is configured to invoke and run the computer program stored in the memory, to perform the method in the first aspect, the second aspect, the fourth aspect, the fifth aspect, the seventh aspect, or each possible implementation of the first aspect, the second aspect, the fourth aspect, the fifth aspect, and the seventh aspect.

According to a fourteenth aspect, an embodiment of this application provides a terminal device, including a processor and a memory. The memory is configured to store a computer program, and the processor is configured to invoke and run the computer program stored in the memory, to perform the method in the third aspect, the eighth aspect, or each possible implementation of the third aspect and the eighth aspect.

According to a fifteenth aspect, an embodiment of this application provides a network device, including a processor and a memory. The memory is configured to store a computer program, and the processor is configured to invoke and run the computer program stored in the memory, to perform the method in the sixth aspect, the ninth aspect, or each possible implementation of the sixth aspect and the ninth aspect.

According to a sixteenth aspect, an embodiment of this application provides a chip, including a processor, configured to invoke computer instructions from a memory and run the computer instructions, so that a device in which the chip is installed performs the method in the first aspect, the second aspect, the fourth aspect, the fifth aspect, the seventh aspect, or each possible implementation of the first aspect, the second aspect, the fourth aspect, the fifth aspect, and the seventh aspect.

According to a seventeenth aspect, an embodiment of this application provides a chip, including a processor, configured to invoke computer instructions from a memory and run the computer instructions, so that a device in which the chip is installed performs the method in the third aspect, the eighth aspect, or each possible implementation of the third aspect and the eighth aspect.

According to an eighteenth aspect, an embodiment of this application provides a chip, including a processor, configured to invoke computer instructions from a memory and run the computer instructions, so that a device in which the chip is installed performs the method in the sixth aspect, the ninth aspect, or each possible implementation of the sixth aspect and the ninth aspect.

According to a nineteenth aspect, an embodiment of this application provides a computer-readable storage medium, configured to store computer program instructions. The computer program enables a computer to perform the method in the first aspect, the second aspect, the fourth aspect, the fifth aspect, the seventh aspect, or each possible implementation of the first aspect, the second aspect, the fourth aspect, the fifth aspect, and the seventh aspect.

According to a twentieth aspect, an embodiment of this application provides a computer-readable storage medium, configured to store computer program instructions. The computer program enables a computer to perform the method in the third aspect, the eighth aspect, or each possible implementation of the third aspect and the eighth aspect.

According to a twenty-first aspect, an embodiment of this application provides a computer-readable storage medium, configured to store computer program instructions. The computer program enables a computer to perform the method in the sixth aspect, the ninth aspect, or each possible implementation of the sixth aspect and the ninth aspect.

According to a twenty-second aspect, an embodiment of this application provides a computer program product, including computer program instructions. The computer program instructions enable a computer to perform the method in the first aspect, the second aspect, the fourth aspect, the fifth aspect, the seventh aspect, or each possible implementation of the first aspect, the second aspect, the fourth aspect, the fifth aspect, and the seventh aspect.

According to a twenty-third aspect, an embodiment of this application provides a computer program product, including computer program instructions. The computer program instructions enable a computer to perform the method in the third aspect, the eighth aspect, or each possible implementation of the third aspect and the eighth aspect.

According to a twenty-fourth aspect, an embodiment of this application provides a computer program product, including computer program instructions. The computer program instructions enable a computer to perform the method in the sixth aspect, the ninth aspect, or each possible implementation of the sixth aspect and the ninth aspect.

**BRIEF DESCRIPTION OF DRAWINGS**

FIG. 1 is a schematic diagram of a communication system 100 applicable to a sidelink transmission method according to an embodiment of this application;
FIG. 2a is a schematic diagram of a resource pool according to this application;
FIG. 2b is a schematic diagram of another resource pool according to this application;
FIG. 3 is a schematic diagram of a hidden node according to this application;
FIG. 4 is a schematic diagram of a reserved resource according to this application;
FIG. 5a is a schematic diagram of a resource conflict in a before-collision scenario according to this application;
FIG. 5b is a schematic diagram of a resource conflict in an after-collision scenario according to this application;
FIG. 5c is a schematic diagram of a resource conflict in a half-duplex scenario according to this application;
FIG. 6 is a schematic flowchart of a sidelink transmission method 200 according to an embodiment of this application;
FIG. 7 is a schematic flowchart of another sidelink transmission method according to an embodiment of this application;
FIG. 8 is a schematic diagram of resource overlapping according to an embodiment of this application;
FIG. 9 is a schematic flowchart of another sidelink transmission method according to an embodiment of this application;
FIG. 10 is a schematic flowchart of another sidelink transmission method according to an embodiment of this application;
FIG. 11 is a schematic flowchart of a sidelink transmission method 300 according to an embodiment of this application;
FIG. 12 is a schematic flowchart of a sidelink transmission method 400 according to an embodiment of this application;
FIG. 13a to FIG. 13e each are a schematic diagram of a resource configuration mode according to an embodiment of this application;
FIG. 14a and FIG. 14b each are a schematic diagram of a time unit set according to an embodiment of this application;
FIG. 15a to FIG. 15c each are a schematic diagram of a time unit according to an embodiment of this application;
FIG. 16 is a schematic diagram of misalignment between a sending resource pool and a receiving resource pool according to an embodiment of this application;
FIG. 17 is another schematic diagram of misalignment between a sending resource pool and a receiving resource pool according to an embodiment of this application;
FIG. 18 is a schematic flowchart of a sidelink transmission method 500 according to an embodiment of this application;
FIG. 19a to FIG. 19c each are a schematic diagram of resource pool indexes according to an embodiment of this application;
FIG. 20 is a schematic diagram of a structure of a communication apparatus 600 according to an embodiment of this application;
FIG. 21 is a schematic diagram of a structure of a communication apparatus 700 according to an embodiment of this application;

FIG. 22 is a schematic diagram of a structure of a communication apparatus 800 according to an embodiment of this application; and

FIG. 23 is a schematic block diagram of a communication apparatus 900 according to an embodiment of this application.

## DESCRIPTION OF EMBODIMENTS

The following describes technical solutions of this application with reference to accompanying drawings.

A communication method provided this application may be applied to various communication systems, such as a long term evolution (Long Term Evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th Generation, 5G) mobile communication system, or a new radio access technology (new radio access technology, NR) system. The 5G mobile communication system may include a non-standalone (non-standalone, NSA) communication system and/or a standalone (standalone, SA) communication system.

This application provides a communication method and apparatus, to improve rationality of resource selection in a sidelink communication coordination scheme.

In V2X communication, a vehicle may encounter many unexpected traffic conditions in a driving process. For example, if a vehicle stops on a fast lane due to engine damage on a highway, the vehicle, namely, a transmit end terminal device sends parking information to another vehicle around the vehicle in a first slot. Then, the transmit end terminal device does not arrange a warning sign according to regulations, and consequently a vehicle driving behind the transmit end terminal device collides with the vehicle. The transmit end terminal device needs to send collision information to another vehicle around the vehicle. A vehicle around the transmit end terminal device or a roadside unit (roadside unit, RSU) deployed at a specific distance along the highway, namely, an auxiliary terminal device may detect a radio resource to determine whether a group of resources are available or unavailable, and indicate a detection result to the transmit end terminal device, so that the transmit end terminal device determines a resource for sending the parking information or the collision information.

When determining, based on a resource indicated by the auxiliary terminal device, a resource for sidelink information transmission, the transmit end terminal device uses a signal strength of the resource indicated by the auxiliary terminal device, resource overlapping information, or the like as a reference factor. This improves rationality of resource selection.

A first terminal apparatus includes a first terminal device or a component in a first terminal device. The first terminal device may be a data transmit end in V2X communication. For example, the first terminal device may be a transmit end vehicle that needs to send related information of an unexpected traffic accident to another vehicle when the unexpected traffic accident is detected in the driving process, or may be a road side unit that detects the unexpected traffic accident. The component in the first terminal device may be, for example, a processor, a vehicle-mounted communication module, a chip, or a chip system that is mounted in the transmit end vehicle. The first terminal apparatus supports direct communication (PC5) interface communication. The communication method provided in this application may be further applied to a machine type communication (machine type communication, MTC) network, a long term evolution-machine technology (Long Term Evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X, where X may represent anything). For example, V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The communication method provided in this application may be further applied to a future communication system, for example, a 6th generation mobile communication system. This is not limited in this application.

In embodiments of this application, a network device may be any device having a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU implements some functions of the gNB, and the DU implements some other functions of the gNB. For example, the CU is responsible for processing a non-real-time protocol and a service, for example, may implement functions of a radio resource control (radio resource control, RRC) layer, a service data adaptation protocol (service data adaptation protocol, SDAP) layer, and/or a packet data convergence protocol (packet data convergence protocol, PDCP) layer. The DU is responsible for processing a physical layer protocol and a real-time service. For example, the DU may implement functions of a radio link control (radio link control, RLC) layer, a media access control (media access control, MAC) layer, and a physical (physical, PHY) layer. One DU may be connected to only one CU or a plurality of CUs, and one CU may be connected to a plurality of DUs. The CU and the DU may communicate with each other through an FI interface. The AAU may implement some physical layer processing functions, radio frequency processing, and functions related to an active antenna. Information at the RRC layer is eventually submitted to the PHY layer and is converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. Each of these small cells has characteristics of small coverage and a low transmit power, and is applicable to providing a high-rate data transmission service.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some terminals may be, for example, a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for human-machine interconnection and thing-thing interconnection. IoT technologies can implement massive connections, intensive coverage, and power saving for terminals by using, for example, a narrow band (narrow band, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

It should be understood that specific forms of the network device and the terminal device are not limited in this application.

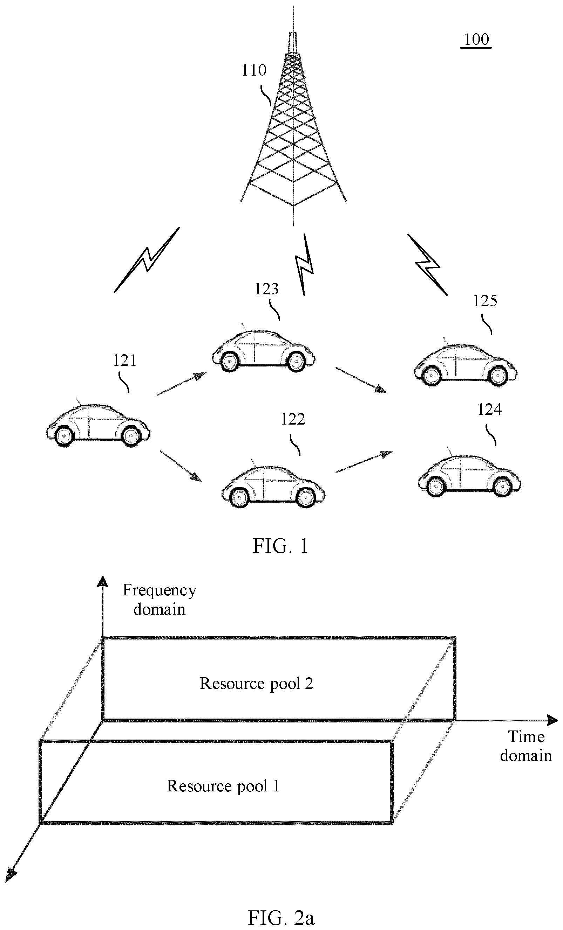

For ease of understanding embodiments of this application, a communication system applicable to embodiments of this application is first described in detail with reference to FIG. 1. FIG. 1 is a schematic diagram of a communication system 100 applicable to a sidelink transmission method according to an embodiment of this application. As shown in FIG. 1, the communication system 100 may include at least one network device and a plurality of terminal devices (for example, a network device 110, and terminal devices 121 to 125 shown in FIG. 1). The network device 110 and the terminal devices 121 to 125 may separately communicate through a wireless air interface, and the terminal devices may communicate with each other by using a vehicle wireless communication technology. For example, the terminal device 121, the terminal device 122, and the terminal device 123 shown in FIG. 1 may communicate with each another, the terminal device 122 and the terminal device 124 may communicate with each other, and the terminal device 123 and the terminal device 125 may also communicate with each other.

It should be understood that FIG. 1 is merely an example, and shows a scenario in which the terminal device 121 separately sends signaling and/or data to the terminal device 122 and the terminal device 123, the terminal device 122 sends signaling and/or data to the terminal device 124, and the terminal device 123 sends signaling and/or data to the terminal device 125. However, this should not constitute any limitation on this application. The terminal device 124 or the terminal device 125 may alternatively exchange signaling and/or data with the terminal device 121, the terminal device 124 may alternatively exchange signaling and/or data with the terminal device 125. The terminal device 122 and/or the terminal device 123 may alternatively send signaling and/or data to the terminal device 121. This is not limited in embodiments of this application.

It should be further understood that FIG. 1 is merely an example, and shows one network device and four terminal devices. However, this should not constitute any limitation on this application. The communication system 100 may further include more network devices, or may include more or fewer terminal devices. This is not limited in embodiments of this application.

In the communication system shown in FIG. 1, data and signaling may be transmitted between the terminal devices on a sidelink. A resource used by the terminal device for sidelink communication may be allocated by the network device. In other words, the network device allocates the resource for sidelink transmission. For example, the terminal device 121 in FIG. 1 may send signaling and/or data to the terminal device 122 or the terminal device 123 by using a resource allocated by the network device, the terminal device 122 may send signaling and/or data to the terminal device 124 by using a resource allocated by the network device, and the terminal device 123 may send signaling and/or data to the terminal device 125 by using a resource allocated by the network device.

For example, the network device may allocate a resource to the sidelink in the following two modes:

Mode (mode) 1: The network device may schedule a resource for the terminal device to perform sidelink transmission. For example, the network device 110 in FIG. 1 may separately schedule resources for the terminal device 121, the terminal device 122, and the terminal device 123 to perform sidelink transmission.

Mode 2: The terminal device may select a resource from a resource pool preconfigured by the network device to perform sidelink transmission. For example, the terminal device 121, the terminal device 122, and the terminal device 123 shown in FIG. 1 may respectively select resources from resources preconfigured by the network device to perform sidelink transmission.

In the mode 2, the terminal device senses a used resource in a resource sensing window, periodically eliminates a reserved resource in a resource selection window based on sidelink control information (Sidelink Control Information, SCI) of the used resource, and uses a remaining resource in the resource selection window as a candidate resource set. When the terminal device fails to sense a reserved resource of another terminal device, adding the resource to the candidate resource set of the terminal device may cause a resource conflict.

For the foregoing problem, resource conflict indication information is introduced in embodiments of this application, and a fine-grained indication is performed on, based on the resource conflict indication information, a conflict level of a reserved resource and/or a resource used by a transmit end device, so that the transmit end device determines, based on the resource conflict indication information, whether to perform resource reselection (or referred to as transmission location change) on the reserved resource with a resource conflict or whether to retransmit signaling and/or data transmitted on the used resource with a resource conflict. This can avoid the resource conflict to some extent, and further relieve low transmission reliability of the communication system caused by the resource conflict.

To facilitate understanding of embodiments of this application, the following first briefly describes terms used in this application.

1. A resource is a time domain resource and/or a frequency domain resource in a resource pool, and a transmit end device may send signaling and/or data on the resource.

The resource in embodiments of this application may be understood as a sidelink transmission resource, and the transmit end device may send sidelink signaling and/or data on the sidelink transmission resource. One sidelink transmission resource may carry a physical sidelink control channel (Physical Sidelink Control Channel, PSCCH), a physical sidelink shared channel (Physical Sidelink Shared Channel, PSSCH), a physical sidelink feedback channel (Physical Sidelink Feedback Channel, PSFCH), and signals such as a demodulation reference signal (Demodulation Reference Signal, DMRS). The PSCCH carries first-order SCI, the PSSCH carries second-order SCI and/or data, and the PSFCH carries feedback information.

2. A resource conflict (conflict) occurs when resources used by at least two terminal devices to send signaling and/or data overlap or partially overlap.

In embodiments of this application, a "resource" in the "resource conflict" indicates a time-frequency resource on which a PSCCH and/or a PSSCH are/is located. The resource conflict may also be referred to as resource overlapping (overlapping), resource collision (collision), or the like. Information indicating a resource conflict/resource overlapping/resource collision may be referred to as resource conflict indication information/resource overlapping indication information/resource collision indication information or conflict indication information/overlapping indication information/collision indication information. A resource that carries a conflict indication/overlapping indication/collision indication may be referred to as a resource conflict indication resource/resource overlapping indication resource/resource collision indication resource or a conflict indication resource/an overlapping indication resource/collision indication resource. For ease of description, the following describe a method provided in embodiments of this application by using the resource conflict indication information and the resource conflict indication resource as an example.

The resource conflict may include, for example, the following three cases:

(1) Time-frequency resources all overlap (or partially overlap).
(2) Time domain resources overlap (or partially overlap), and frequency domain resources do not overlap.
For example, in a half-duplex scenario, due to a limitation that an antenna cannot receive data in a sending slot and cannot send data in a receiving slot, the transmit end device cannot monitor each slot in a resource sensing window. For example, if UE B1 and UE B2 respectively send data 1 and data 2 in a slot 1, the UE B2 cannot receive the data 1 sent by the UE B1.
(3) Frequency domain resources overlap (or partially overlap), and time domain resources do not overlap.

For example, in a frequency division duplex (Frequency Division Duplex, FDD) receiving and sending scenario, due to a limitation that an antenna cannot receive data on a transmit frequency band and cannot send data on a receive frequency band, the transmit end device cannot monitor each frequency band in a resource sensing window. For example, if both UE B1 and UE B2 send data 1 and data 2 on a frequency band 1, the UE B2 cannot receive the data 1 sent by the UE B1.

Optionally, time domain resource overlapping means that there is any one of a same slot index, a same logical slot index, a same frame index, a same subframe index, and a same symbol index. Frequency domain resource overlapping means that there is any one of a same RE index, a same RB index, a same subchannel index, and a same carrier index.

It should be noted that resource overlapping in the following includes overlapping and/or partial overlapping of the resources.

The method provided in embodiments of this application may be applied to any resource conflict scenario listed above.

3. A resource pool (resource pool) is a set of resources pre-allocated by a network device to a terminal device for use. The resource pool may be configured for one or more terminal devices, and the one or more terminal devices may select, based on resource sensing, a resource from the resource pool for sidelink transmission.

In a possible design, frequency domain resources included in the resource pool are consecutive, and time domain resources included in the resource pool may be consecutive or inconsecutive.

In a possible design, a minimum granularity of frequency domain resource allocation in the resource pool is a subchannel (subchannel).

In a possible design, the time domain resource in the resource pool may indicate, by using 10 to 160 slots as a period, a slot that belongs to the resource pool and that is in every 1024 radio frames. The slot in the resource pool is referred to as a logical slot.

The resource pool may include a receiving resource pool and a sending resource pool. Different resource pools may have different parameter configurations, such as a logical slot and a demodulation reference signal (Demodulation Reference Signal, DMRS) mode. The terminal device may receive at least one of signaling, data, a feedback, and a collision indication on a resource in the receiving resource pool, and send at least one of signaling, data, a feedback, and a collision indication on a resource in the sending resource pool.

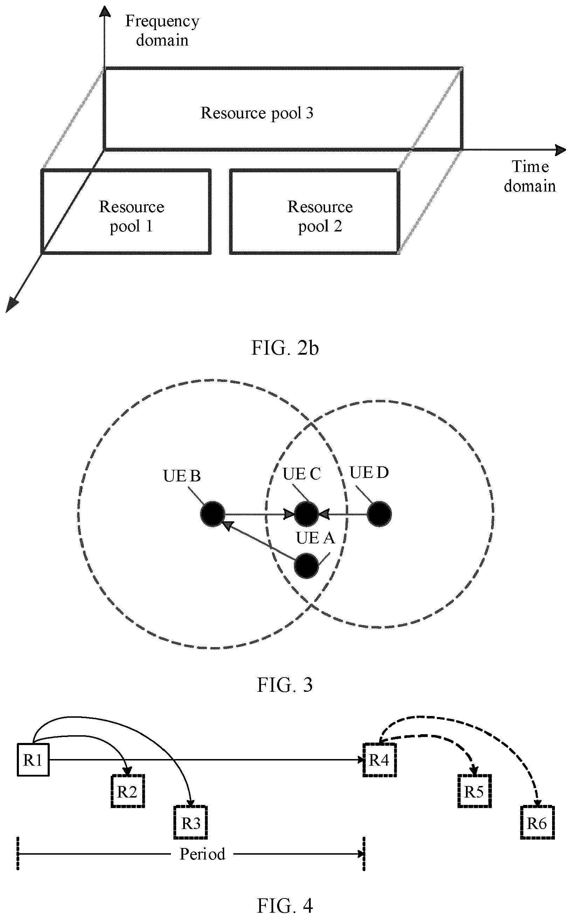

Generally, a time domain range of the sending resource pool is the same as that of the receiving resource pool, to ensure that a receive end device can normally receive signaling and/or data sent by a transmit end device. A time domain relationship between the sending resource pool and the receiving resource pool may include at least two of the following manners: 1. A time domain range of one sending resource pool is the same as that of one receiving resource pool. For example, in FIG. 2a, a resource pool 1 is a sending resource pool, and a resource pool 2 is a receiving resource pool. 2. Time domain ranges of a plurality of sending resource pools are the same as that of one receiving resource pool. For example, in FIG. 2b, a resource pool 1 and a resource pool 2 are sending resource pools, and a resource pool 3 is a receiving resource pool.

Different resource pools are distinguished by resource pool identifier IDs. If resource pools have a same ID, it may be considered that time-frequency resources of the resource pools totally overlap. The resource pool identifier may be understood as any symbol that can distinguish a resource pool. In some embodiments, the resource pool identifier may be a resource pool index.

4. Hidden node: Anode outside a resource sensing range of a terminal device is a hidden node of the terminal device.

For example, as shown in FIG. 3, a dotted circle with UE B as a center is a resource sensing range of the UE B, in other words, the UE B can sense resource usage within the range, and select a resource based on the resource usage. Similarly, a dotted circle with UE D as a center is a resource sensing range of the UE D. When the UE B sends sidelink data to UE C by using a resource 1, the UE D outside the resource sensing range of the UE B also sends sidelink data to the UE C by using the resource 1. Because both the UE B and the UE D are outside the sensing range of each other, neither of them can sense that both of them send the sidelink data to the UE C by using the resource 1. As a result, a resource conflict occurs, and the UE C cannot successfully decode the data from the UE B and the UE D. Further, when the UE B sends the sidelink data to the UE C by using the resource 1, the UE D outside the resource sensing range of the UE B sends the sidelink data to the UE C by using a resource 2. The resource 1 and the resource 2 partially overlap. As a result, a resource conflict also occurs, and the UE C cannot successfully decode the data from the UE B and the UE D. In this case, the UE D is a hidden node of the UE B, and the UE B is also a hidden node of the UE D. More specifically, the UE D is referred to as a hidden node of a communication link between the UE B and the UE C.

In embodiments of this application, the UE B and the UE D may reserve a same resource for sidelink transmission. To avoid the resource conflict, UE A in FIG. 3 may indicate the UE B or the UE D to change a transmission resource. The UE A may be the UE C or may not be the UE C. Alternatively, the UE A may be one of the UE B or the UE D. That is, the UE A may be one of transmit end devices, may be a receive end device, or may be a third-party terminal device independent of the transmit end device and the receive end device.

The UE B and the UE D may be the terminal device 122 and the terminal device 123 in FIG. 1, the UE C may be the terminal device 124 and the terminal device 125 in FIG. 1, and the UE A may be the terminal device 121 in FIG. 1.

5. Control information, data information and feedback information

The control information may be, for example, signaling in the foregoing content, and may include, for example, SCI, a media access control control element (Media Access Control Control Element, MAC CE), radio resource control (Radio Resource Control, RRC), direct communication PC5 interface-RRC, and the like. The SCI mentioned in embodiments of this application may be first-order SCI and/or second-order SCI. The first-order SCI is also referred to as first-level control information, SCI-1, and the like, and the second-order SCI is also referred to as second-level control information, SCI-2, and the like.

In a possible design, the first-order SCI is carried on a PSCCH, and the second-order SCI and the MAC CE are carried on a PSSCH.

The data information may be, for example, data in the foregoing content, and is also referred to as a MAC protocol data unit (Protocol Data Unit, PDU). In a possible design, the data information is carried on a PSSCH.

The feedback information is used by a receive end device to feed back, to a transmit end device in a sidelink transmission process, whether data sent by the transmit end device is successfully decoded. The data may be, for example, a MAC PDU or a transport block (transport block, TB).

In a possible design, the feedback information is carried on a PSFCH.

The feedback information may be, for example, a hybrid automatic repeat request (hybrid automatic repeat request, HARQ) feedback. The HARQ feedback may include but is not limited to a NACK-only mechanism and an ACK-NACK mechanism. In the NACK-only mechanism, if the receive end device fails to decode the data from the transmit end device, the receive end device feeds back a NACK message. No feedback is sent in other cases. In the ACK-NACK mechanism, if the receive end device fails to decode the data from the transmit end device, the receive end device feeds back a NACK message. If the data from the transmit end device is successfully decoded, the receive end device feeds back an ACK message. The transmit end device performs retransmission after receiving the NACK message, but does not perform retransmission after receiving the ACK message.

In embodiments of this application, a HARQ feedback message is a possible example of a feedback message, the NACK message is a possible example of a negative acknowledgment feedback message, and the ACK message is a possible example of an acknowledgment feedback message. Specific forms of the feedback message, the negative acknowledgment feedback message, and the acknowledgment feedback message are not limited in embodiments of this application.

6. Resource reservation: The resource reservation may be indicated by at least one of three fields: a frequency domain indication, a time domain indication, and a resource reservation period in control information. The resource reservation may include reservation for retransmission and/or periodic reservation based on a purpose of a reserved resource. A reserved resource for retransmission is a resource reserved for retransmission, and a periodic reserved resource is a resource reserved for periodic transmission.

For example, with reference to FIG. 4, a resource R1 is a resource at a location at which a transmit end device sends a PSCCH and/or a PSSCH, and resources R2 and R3 are reserved resources, for transmission, of the R1. Resources R4, R5, and R6 are respectively periodic reserved resources of the resources R1, R2, and R3.

For example, the terminal device UE A detects, on the resource R1, SCI sent by the terminal device UE B, and determines the resources R2 and R3 that are reserved by the UE B and that are to be used for resource transmission. For example, SCI indicates Nmax=3 resources. Two fields: the time domain indication and the frequency domain indication in the SCI indicate three resources R1, R2, and R3, where R2 and R3 are reserved resources for retransmission. A resource reservation period (or reservation interval) field in the SCI indicates a resource R4, where R4 is a periodic reserved resource of R1. Further, the resource reservation period (or reservation interval) field may further indicate a subsequent periodic reserved resource. Because periodic reserved frequency domain resources are the same, a time domain resource interval is an integer multiple of a period, which is equivalent to that R5 is reserved for R2 in the period and R6 is reserved for R3 in the period. That is, although R4 is not used for sidelink transmission when the SCI on R1 is detected, it may also be considered that R5 and R6 are reserved for R4. The preceding process is referred to as chain reservation.

7. Priority: The service priority of a terminal device may be referred to as a layer-1 (layer 1, L1) priority or a physical layer priority. The service priority may be, for example, a priority carried in SCI, a priority of a PSSCH carried in the SCI, a priority of sending the PSSCH, a priority of a logical channel, a highest priority of a logical channel, or a priority of a MAC PDU. It should be understood that the service priority may alternatively be indicated in other signaling, for example, a MAC CE or an RRC message.

A service priority level may correspond to a priority value. For example, a higher service priority level corresponds to a lower priority value, or a lower service priority level corresponds to a lower priority value.

For example, a higher service priority level corresponds to a lower priority value. If the priority value may be an integer from 1 to 8, when the priority value is 1, it indicates a highest service priority.

It should be understood that, for ease of understanding, the foregoing shows a priority value that ranges from 1 to 8. However, this should not constitute any limitation on this application. A specific value range of the priority value is not limited in this application. For example, the value may also be an integer from 0 to 7.

It should be understood that the service priority may also be represented by the priority level. This is not limited in embodiments of this application.

8. Time unit and frequency domain unit:

For example, the time unit may be a slot (slot), a frame (frame), a subframe (subframe), a symbol (symbol), or another future-defined time unit.

The frequency domain unit may be, for example, a resource element (resource element, RE), a resource block (resource block, RB), a subchannel (subchannel), a resource pool (resource pool), a bandwidth part (bandwidth part, BWP), a carrier (carrier), or another future-defined frequency domain unit.

It should be noted that both the time unit and the frequency domain unit are measurement units and are not necessarily minimum unit division.

In NR, a slot is a scheduling unit. In the following, a resource for transmitting a PSCCH or a PSSCH in embodiments of this application is described below by using an example in which a slot is used as a time unit and a subchannel is used as a frequency domain unit, and a resource for transmitting feedback information or resource conflict indication information in embodiments of this application is described by using an example in which a symbol is used as a time unit and a physical resource block (physical resource block, PRB) is used as a frequency domain unit. It may be understood that the resource for transmitting the PSCCH, the PSSCH, or the resource conflict indication information may alternatively be another time domain resource, another frequency domain resource, or any combination of a time domain resource and a frequency domain resource. This is not limited in embodiments of this application.

9. Before-collision indication, after-collision indication, and half-duplex indication:

Resource conflict indication information in embodiments of this application can indicate a resource conflict that occurs in any resource conflict scenario in a before-collision scenario, an after-collision scenario, or a half-duplex scenario.

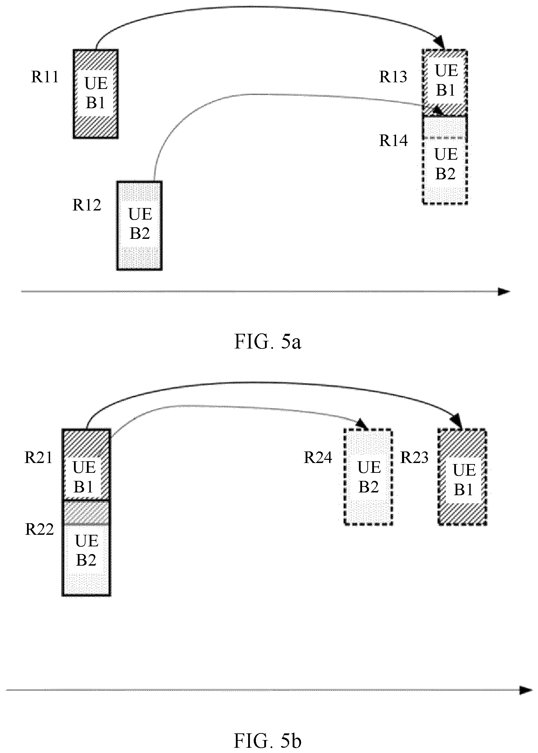

The before-collision indication predicts that there is a conflict between reserved resources of two transmit end devices. For example, with reference to FIG. 5a, the transmit end device UE B1 sends SCI 1 on a resource R11, and the SCI 1 indicates that a reserved resource is R13; the transmit end device UE B2 sends SCI 2 on R12, and indicates that a reserved resource is a resource R14; and there is a resource conflict between the resources R13 and R14. The before-collision indication may indicate that the resource conflict is about to occur between the transmit end device UE B1 and the transmit end device UE B2. Optionally, the UE B1 sends a PSCCH 1/PSSCH 1 on the resource R11, where the PSCCH 1 carries the SCI 1. The UE B2 sends a PSCCH 2/PSSCH 2 on the resource R12, where the PSCCH 2 carries the SCI 2.

After-collision indication indicates that there is a conflict between resources used by two transmit end devices to send SCI. For example, with reference to FIG. 5b, the transmit end device UE B1 sends SCI 1 on a resource R21, the transmit end device UE B2 sends SCI 2 on a resource R22, and there is a resource conflict between the resources R21 and the resource R22. The after-collision indication may indicate that the resource conflict occurs between the transmit end device UE B1 and the transmit end device UE B2. Optionally, the UE B1 sends a PSCCH 1/PSSCH 1 on the resource R21, where the PSCCH 1 carries the SCI 1. TheUEB2 sends a PSCCH 2/PSSCH 2 on the resource R22, where the PSCCH 2 carries the SCI 2.

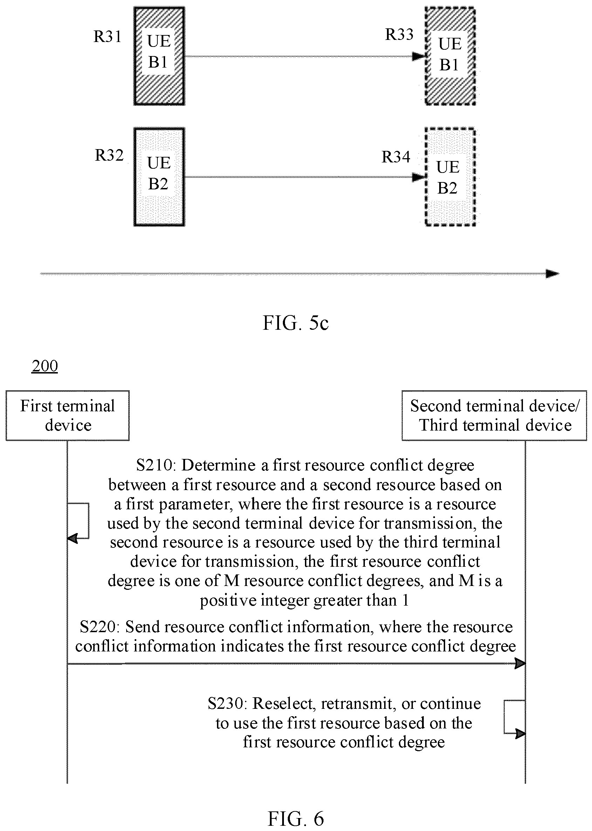

The half-duplex conflict indication indicates that resources used by two transmit end devices to send SCI conflict in time domain locations, and reserved resources of the two transmit end devices conflict in time domain locations. For example, with reference to FIG. 5c, the transmit end device UE B1 sends SCI 1 on a resource R31, and the SCI 1 indicates that R33 is reserved as a reserved resource; the transmit end device UE B2 sends SCI 2 on a resource R32, and the SCI 2 indicates that R34 is reserved as a reserved resource. The resources R31 and R32 are in a same slot and/or the resources R33 and R34 are in a same slot, which may be indicated by the half-duplex conflict indication. Optionally, the UE B1 sends aPSCCH 1/PSSCH 1 on the resource R31, where the PSCCH 1 carries the SCI 1. The UE B2 sends a PSCCH 2/PSSCH 2 on the resource R32, where the PSCCH 2 carries the SCI 2.

A number of reserved resources is not limited in embodiments of this application. In FIG. 5a to FIG. 5c, description is provided by using an example in which the number of reserved resources is 1, but the number of reserved resources is not limited to 1.

A number of terminals corresponding to a conflict resource is not limited in embodiments of this application. In FIG. 5a to FIG. 5c, the UE B1 and the UE B2 are used as examples for description, but it is not limited to that only two UEs reserve a same resource.

In addition, the resource conflict indication information in embodiments of this application can further indicate a resource conflict in a before-to-after-collision scenario. In the before-to-after-collision scenario, there is a conflict between resources used by two transmit ends to send SCI, and there is also a conflict between reserved resources indicated by the SCI.

It may be understood that, in the before-collision scenario, the after-collision scenario, or the before-to-after-collision scenario, conflict resources 1 and 2 overlap in time domain, and overlap or partially overlap in frequency domain. In the half-duplex scenario, conflict resources 1 and 2 overlap in time domain, and may not overlap in frequency domain.

The conflict resource mentioned in embodiments of this application may be any one of the resource 1, the resource 2, a union of the resource 1 and the resource 2, and an intersection of the resource 1 and the resource 2. In the half-duplex scenario, the conflict resource may alternatively be all resources in a slot in which the resource 1 or the resource 2 is located.

10. Source identifier and destination identifier

A layer-2 source identifier (Source Layer-2 ID or source L2 ID) is 24 bits. The least significant 8 bits (LSB part (8 bits)) of the layer-2 source identifier are referred to as a layer-1 source identifier, namely, a source ID (source ID) indicated in SCI, and the most significant 16 bits (MSB part (16 bits)) are referred to as SRC, and are indicated in a MAC header of a MAC CE. The source identifier in the control information may be the source ID indicated in the SCI, the SRC in the MAC header, or the layer-2 source identifier.

Alayer-2 destination identifier (Destination Layer-2 ID or Destination L2 ID) is 24 bits. The least significant 16 bits (LSB part (16 bits)) of the layer-2 destination identifier are referred to as a layer-1 destination identifier, namely, a destination ID (destination ID) indicated in the SCI. The most significant 8 bits (MSB part (8 bits)) are referred to as a DST, and are indicated in the MAC header of the MAC CE. The destination identifier in the control information may be the destination ID indicated in the SCI, the DST in the MAC header, or the layer-2 destination identifier.

In addition, a destination may also be a general term in a protocol. Specifically, for unicast, the destination indicates a layer-2 source identifier and layer-2 destination identifier pair. For broadcast and multicast, the destination indicates the layer-2 destination identifier.

For ease of understanding of embodiments of this application, the following descriptions are provided.

First, a subchannel in embodiments of this application may be specifically a logical subchannel. For example, $L_{subCH}$ consecutive subchannels may be specifically $L_{subCH}$ consecutive logical subchannels.

Second, a PSSCH, a PSCCH, and a PSFCH in embodiments of this application may be understood as physical resources, or may be understood as data, signaling, and the like transmitted by using these resources. For example, that the terminal device sends data on the PSSCH may also be expressed as that the terminal device sends the PSSCH. That the terminal device sends control information such as first-order SCI on the PSCCH may also be expressed as that the terminal device sends the PSCCH. That the terminal device sends a feedback message such as HARQ information on a PSFCH may also be expressed as that the terminal device sends the PSFCH. Persons skilled in the art can understand the meaning.

Third, terms "first", "second", and various numbers in the following embodiments are merely used for distinguishing for ease of description, but are not intended to limit the scope of embodiments of this application. For example, the various numbers are used for distinguishing between different indication information or different time intervals.

Fourth, "predefinition" may be implemented by prestoring corresponding code or a corresponding table in a device (for example, including a terminal device and a network device), or may be implemented in another manner that may be used to indicate related information. A specific implementation thereof is not limited in this application.

"Preconfiguration" may be implemented by prestoring corresponding code or a corresponding table in a device (for example, including a terminal device and a network device), may be implemented in another manner that may be used to indicate related information, or may be pre-configured by using signaling, for example, pre-configured by the network device by using signaling. A specific implementation thereof is not limited in this application.

"Storage" may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists. A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, and c may represent: a, b, or c, a and b, a and c, b and c, or a, b, and c, where a, b, and c each may be singular or plural.

Seventh, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation, and do not mean any other limitation.

The following describes the sidelink transmission method provided in embodiments of this application in detail with reference to accompanying drawings.

It should be understood that, merely for ease of understanding and description, the following describes in detail the method provided in embodiments of this application by using interaction between a first terminal device and a second terminal device or interaction between a network device and the first terminal device or the second terminal device as an example.

The first terminal device is an assisting device of a transmit end device in a communication system, and is referred to as UE A in some embodiments. The first terminal device can obtain a PSCCH or a PSSCH sent by one or more transmit end devices. The transmit end device is an assisted device or UE B. Any transmit end device can receive resource conflict indication information from the first terminal device, and perform resource reselection (also referred to as changing a sending location) or data retransmission based on the resource conflict indication information.

It should be noted that the first terminal device, as the assisting device of the transmit end device, may be one or more of a plurality of transmit end devices, may be a receive end device (also referred to as UE C, for example, a fourth terminal device or a fifth terminal device below) that receives signaling and/or data sent by the second terminal device, or may be a terminal device that does not participate in signaling and/or data reception and transmission and that provides only the conflict indication information.

In this embodiment of this application, the first terminal device needs to assist the second terminal device in performing resource sensing. In other words, the first terminal device senses a resource on a channel through full sensing (full sensing) or partial sensing (partial sensing). The second terminal device may not perform resource sensing (or may perform resource sensing), for example, select a resource through full sensing (full sensing), partial sensing (partial sensing), or random selection (random selection).

When there are a plurality of second terminal devices, the first terminal device assists each second terminal device in performing resource sensing, and sends corresponding resource conflict indication information to each second terminal device. Specifically, when sensing a resource conflict between UE B1 and UE B2, the UE A may indicate that the resource conflict occurs on the UE B1 and/or the UE B2. When sensing a resource conflict between UE B1, UE B2, UE B3..., the UE A may indicate that the resource conflict occurs on one or more of UEs B. In addition, the resource conflict may occur in time domain before the resource conflict indication information is sent, or may occur in time domain after the resource conflict indication information is sent.

The second terminal device UE B, namely, transmit end UE, or assisted UE, monitors RCI of the first terminal device UE A. This scenario is not limited to that there are only two UEs B. Actually, a plurality of UEs may be reserved on a same resource. In addition, if assisting UE is one of transmit end UEs, for example, the UE B2, resource conflict information may be sent to indicate other transmit end UE, for example, the UE B1, to change a transmission resource, or a transmission resource of the first terminal device may be changed. For ease of description, when the UE B1 and the UE B2 are not distinguished, assisted UEs are collectively referred to as UE B.

The UE C, namely, receive end UE, receives the PSCCH/PSSCH from the second terminal device or a third terminal device. This scenario is not limited to unicast, to be specific, a link between the second terminal device or the third terminal device and the UE C may be unicast, multicast, or broadcast. If the assisting UE is one of receive end UEs, for example, UE C1, the assisting UE may indicate transmitting UE (for example, the UE B1) of the assisting UE to change a transmission resource or perform retransmission, or may indicate the third terminal device that interferes with the transmitting UE to change a transmission resource or perform retransmission. For ease of description, when the UE C1 and the UE C2 are not distinguished, receiving UEs of assisted UEs are collectively referred to as UE C.

The network device, for example, a base station (gNB/eNB), in SL mode 2 communication, mainly performs signaling configuration and does not schedule a resource.

It should be noted that the first terminal device may be one of a plurality of second terminal devices.

When the first terminal device is a receive end device of the second terminal device, the first terminal device may provide auxiliary information such as the resource conflict indication information to a second terminal device or another transmit end device (for example, a third terminal device below) in a multicast group. It should be understood that the multicast group may further include another receive end device, for example, a fourth terminal device or a fifth terminal device below. The fourth terminal device and/or the first terminal device may receive signaling and/or data sent by the second terminal device. The fifth terminal device may receive signaling and/or data sent by the third terminal device.

Solution 1: When the first terminal device is transmit end UE, for example, receiving UE of a second terminal device, the first terminal device detects a resource conflict related to the second terminal device.

The first terminal device detects whether there is a resource conflict between a resource indicated by SCI 1 of the second terminal device and a resource indicated by SCI of other UE B in a resource pool or the first terminal device (the first terminal device).

For example, in a before-collision scenario in FIG. 5a, the first terminal device detects, for the second terminal device, whether a resource overlaps R13; in an after-collision scenario in FIG. 5b, the first terminal device detects, for the second terminal device, whether a resource overlaps R21; and in a half-duplex scenario, the first terminal device detects, for the second terminal device, whether a resource overlaps R31 and R33 in time domain.

Solution 2: When the first terminal device is receiving UE of the second terminal device, the first terminal device detects a resource conflict related to the second terminal device in the group.

The first terminal device, the second terminal device, the third terminal device, and the like are a group of UEs, for example, a group of multicast UEs. The first terminal device detects whether there is a resource conflict between a resource indicated by SCI 1 of the second terminal device and a resource indicated by SCI of other UE B in the group or the first terminal device (the first terminal device). The "a group" may be identified by an ID identifier indicated in the SCI. The ID identifier may be at least one of a source ID (source ID), a destination ID (destination ID), a member ID (member ID), a UE ID, or a geographical location ID (zone ID). The source identifier may be any one of a source ID indicated in the SCI, SRC in a MAC header, or a layer-2 source identifier. The destination identifier may be any one of a destination ID indicated in the SCI, a DST in the MAC header, or a layer-2 destination identifier.

For example, in a before-collision scenario, the first terminal device detects whether a resource indicated in SCI of the UE in the group overlaps R13; in an after-collision scenario, the first terminal device detects whether a resource indicated in the SCI of the UE in the group overlaps R21; and in a half-duplex scenario, the first terminal device detects whether a resource indicated in the SCI of the UE in the group separately overlaps R31 and R33 in time domain.

Solution 3: When the first terminal device is receiving UE of the second terminal device, the first terminal device detects a resource conflict between any second terminal device and third terminal device in the group.

The first terminal device, the second terminal device, the third terminal device, and the like are a group of UEs, for example, a group of multicast UEs. For details about an identification method of "a group", refer to the solution 2. The first terminal device detects resources indicated by SCI of all UEs (which may include the first terminal device (the first terminal device)) in the group, and determines, through pairwise comparison, whether there is a resource conflict, for example, a resource conflict between a resource indicated by SCI 1 of the second terminal device and a resource indicated by SCI 2 of the third terminal device, a resource conflict between a resource indicated by SCI 1 of the second terminal device and a resource indicated by SCI of the first terminal device, or a resource conflict between a resource indicated by SCI 2 of the third terminal device and a resource indicated by SCI of the first terminal device.

It should be noted that the multicast has a corresponding identifier ID, and the identifier may be at least one of the source ID (source ID), the destination ID (destination ID), the member ID (member ID), the UE ID, or the geographical location ID (zone ID). The source ID may be any one of the source ID indicated in the SCI, the signaling route control (signaling route control, SRC) in the MAC header, and the layer-2 source identifier. The destination identifier may be any one of the destination ID indicated in the SCI, the destination (Destination, DST) in the MAC header, or the layer-2 destination identifier.

When the first terminal device is any terminal device (for example, one of a plurality of transmit end devices, one of receive end devices, or a third-party terminal device independent of the receive end device or the transmit end device), the first terminal device determines whether there is a resource conflict between resources indicated by SCI of every two second terminal devices in the resource pool, and sends the resource conflict indication information to each second terminal device based on a comparison result.

Solution 4: When the first terminal device is any UE, the first terminal device detects a resource conflict between any transmit end UE in a resource pool, for example, the second terminal device and the third terminal device. A difference between this solution and the solution 3 lies in that in the solution 4, a resource overlapping status is not detected based on a group, but is detected based on a resource pool. Alternatively, UEs in the resource pool may be understood as a large group.

The first terminal device, the second terminal device, and the third terminal device are all UEs in the resource pool. The first terminal device detects resources indicated by SCI of all UEs (which may include the first terminal device (the first terminal device)) in the group, and determines, through pairwise comparison, whether there is a resource conflict, for example, a resource conflict between a resource indicated by SCI 1 of the second terminal device and a resource indicated by SCI 2 of the third terminal device, a resource conflict between a resource indicated by SCI 1 of the second terminal device and a resource indicated by SCI of the first terminal device, or a resource conflict between a resource indicated by SCI 2 of the third terminal device and a resource indicated by SCI of the first terminal device.

It should be noted that in the foregoing four solutions, only the first terminal device, the second terminal device, and the third terminal device are used as examples for description. Actually, there may be more UEs, or there may be more resources indicated by the SCI. The first terminal device also needs to detect more resource conflict cases.

In the foregoing mode 1 scenario, the network device may serve as an assisting end to send the resource conflict indication information to at least one second terminal device on which the resource conflict occurs, to indicate to change the transmission resource or perform retransmission.

It should be noted that numbers of first terminal devices and second terminal devices are not limited in embodiments of this application.

The first terminal device, the second terminal device, the third terminal device, and the network device may be, for example, devices in the communication system shown in FIG. 1.

For example, the first terminal device may be a third-party terminal device independent of the second terminal device or the third terminal device. For example, the first terminal device may be the terminal device 121 in FIG. 1, the second terminal device and the third terminal device may be respectively the terminal device 122 and the terminal device 123 in FIG. 1, and the fourth terminal device and the fifth terminal device may be respectively the terminal device 124 and/or the terminal device 125 in FIG. 1.

In some embodiments, the first terminal device may be at least one of a plurality of second terminal devices. For example, the first terminal device may be the terminal device 122 in FIG. 1, the second terminal device is the terminal device 123 in FIG. 1, and the fourth terminal device is the terminal device 124 or 125 in FIG. 1. In this case, the terminal device 122 may send the resource conflict indication information to the terminal device 123.

In some embodiments, the first terminal device may be a receive end device. For example, the first terminal device is the terminal device 124 in FIG. 1, the second terminal device is the terminal device 122 in FIG. 1, and the third terminal device may be the terminal device 123 in FIG. 1. The terminal device 122 sends signaling and/or data to the terminal device 124, the terminal device 123 sends signaling and/or data to the terminal device 125, and the terminal device 124 sends the resource conflict indication information to the terminal device 122 and/or the terminal device 123.

The network device may be, for example, the network device 110 in FIG. 1.

However, it should be understood that this should not constitute any limitation on an execution body of the method provided in this application. The method provided in embodiments of this application may be performed by running a program that records code of the method provided in embodiments of this application, to perform the method provided in embodiments of this application. For example, the first terminal device shown in the following embodiments may alternatively be replaced with a component in the first terminal device, for example, a chip, a chip system, or another functional module that can invoke and execute a program. The second terminal device may alternatively be replaced with a component in the second terminal device, for example, a chip, a chip system, or another functional module that can invoke and execute a program. The network device may alternatively be replaced with a component in the network device, for example, a chip, a chip system, or another functional module that can invoke and execute a program.

FIG. 6 is a schematic flowchart of a sidelink transmission method 200 according to an embodiment of this application.

In the embodiment shown in FIG. 6, there is a resource conflict between resources that are respectively used by a second terminal device and a third terminal device for transmission.

As shown in FIG. 6, the method 200 may include at least a part of content in step 210 to step 230. The following describes the steps in the method 200 in detail.

S210: A first terminal device determines a first resource conflict degree between a first resource and a second resource based on a first parameter, where the first parameter is resource overlapping information and/or a signal strength, or the first parameter is determined based on resource overlapping information and/or a signal strength, the first resource is the resource used by the second terminal device for transmission, the second resource is the resource used by the third terminal device for transmission, the first resource conflict degree is one of M resource conflict degrees, and M is a positive integer greater than 1.

S220: The first terminal device sends resource conflict information to the second terminal device and/or the third terminal device, where the resource conflict information indicates the first resource conflict degree.

Correspondingly, the second terminal device receives the resource conflict information.

S230: The second terminal device reselects, retransmits, or continues to use the first resource based on the first resource conflict degree.

In this embodiment of this application, the first resource may be a resource that is pre-determined by the second terminal device and that can be used for sidelink transmission. For example, the first resource may be a first sending resource on which the second terminal device sends first control information, or may be a first reserved resource indicated in the first control information. In an implementation, the first resource may include a PSCCH and/or a PSSCH. In other words, the second terminal device may send data and/or control information to a fourth terminal device on a PSCCH and/or a PSSCH, which may also be expressed as that the second terminal device sends the PSSCH and/or the PSCCH to the fourth terminal device. The fourth terminal device may be any one or more receive end devices including the first terminal device and the third terminal device.

In this embodiment of this application, the second resource may be a resource that is pre-determined by the third terminal device and that can be used for sidelink transmission. For example, the second resource may be a second sending resource on which the third terminal device sends second control information, or may be a second reserved resource indicated in the second control information. In an implementation, the first resource may include a PSCCH and/or a PSSCH. In other words, the third terminal device may send data and/or control information to a fifth terminal device on the PSCCH and/or the PSSCH, which may also be expressed as that the third terminal device sends the PSSCH and/or the PSCCH to the fifth terminal device. The fifth terminal device may be any one or more receive end devices including the first terminal device and the second terminal device, for example, may also be the foregoing fourth terminal device.

In a before-collision scenario, the first resource may be, for example, the resource R13 in FIG. 5a, and the second resource may be, for example, the resource R14 in FIG. 5a. In an after-collision scenario, the first resource may be, for example, the resource R21 in FIG. 5b, and the second resource may be, for example, the resource R22 in FIG. 5b. In a half-duplex scenario, the first resource may be, for example, the resources R31 and R33 in FIG. 5c, and the second resource may be, for example, the resources R33 and R34 in FIG. 5c.

It should be noted that, in sidelink transmission, the PSSCH and the PSCCH are usually sent together, for example, both may be carried on the first resource. In other words, the second terminal device may send the data and the control information (for example, SCI, a MAC CE, and an RRC message) by using the first resource.

The second terminal device and/or the third terminal device may send the data in a unicast (unicast), multicast (groupcast), or broadcast (broadcast) manner. In other words, a link between the second terminal device and the receive end device may be a unicast link, a multicast link, or a broadcast link.

It should be noted that when the second terminal device transmits the data by using the first resource, if there is a resource conflict between the first resource and the second resource used by the third terminal device to transmit the data, interference is caused to the data transmitted on the first resource. When the interference is large, a receive end device of the second terminal device fails to receive the data transmitted on the first resource. Correspondingly, due to the resource conflict between the first resource and the second resource, a receive end device of the third terminal device fails to receive the data transmitted on the second resource.

The first terminal device may obtain SCI sent by the second terminal device, and determine at least one first resource based on the SCI. The at least one first resource may be a resource occupied by the SCI and/or a reserved resource indicated by the SCI. The first terminal device determines whether there is a resource conflict between a sidelink transmission resource of another transmit end device in a multicast group and a first sidelink transmission resource.

The first terminal device may obtain SCI separately sent by every two transmit end devices in a resource pool to a same receive end device or different receive end devices, and determine, based on the SCI, whether there is a resource conflict between the first resource of one transmit end device and a sidelink transmission resource of another transmit end device.

When determining that there is resource conflict between sidelink transmission resources of two transmit end devices (for example, the second terminal device and the third terminal device), the first terminal device generates resource conflict indication information, and sends the resource conflict indication information to the second terminal device and/or the third terminal device. When there are a plurality of transmit end devices, the first terminal device generates resource conflict indication information for at least one transmit end device.

One piece of resource conflict indication information may indicate a conflict on one resource of the second terminal device or the third terminal device, or may indicate a conflict on a plurality of resources of the second terminal device and/or the third terminal device.

It should be noted that the foregoing method for determining, by the first terminal device, whether there is a resource conflict between the first resource and the second resource is merely an example, and is not intended to limit embodiments of this application.

When there is the resource conflict between the first resource and the second resource, the first terminal device may determine the first resource conflict degree, to perform fine-grained division on the conflict degree between the first resource and the second resource. The second terminal device estimates, based on the first resource conflict degree between the first resource and the second resource, whether the data transmitted on the first resource can be successfully decoded, and further determines whether to perform resource reselection or data retransmission.

It should be noted that in this embodiment of this application, the third terminal device and the second terminal device have a same or similar execution process. In other words, all methods on a side of the second terminal device in this embodiment of this application may be applied to the third terminal device. In this embodiment of this application, the second terminal device is merely used as an example for description.

In this embodiment of this application, a parameter value of the first parameter is associated with a resource conflict degree, and the first terminal device may determine the corresponding first resource conflict degree based on the parameter value of the first parameter. For example, when the resource overlapping information is 80%, it is determined that the first resource conflict degree is a disrecommendation degree; when the resource overlapping information is 100%, it is determined that the first resource conflict degree is a strong disrecommendation degree; or when the resource overlapping information is 60%, it is determined that the first resource conflict degree is a slight disrecommendation degree.

Then, the first terminal device sends the determined first resource conflict degree to the second terminal device and/or the third terminal device based on the resource conflict information, so that the second terminal device and/or the third terminal device determine/determines, based on the first resource conflict degree, whether to reselect, retransmit, or continue to use the first resource.

On a side of the first terminal device, the first parameter (namely, the parameter value obtained by the first terminal device through measurement) is used to determine the first resource conflict degree between the first resource and the second resource, and the resource conflict information indicates the first resource conflict degree. On the side of the second terminal device, the resource conflict information indicates the first resource conflict degree between the first resource and the second resource, and the first resource conflict degree is used to determine a range of the first parameter.

It should be noted that reselection means that the first reserved resource and/or the second reserved resource are/is not used, and another resource is reselected for sending. Retransmission means to resend the data information carried on the first sending resource. Specifically, the second terminal device may resend the data information by using the first reserved resource, and/or resend data information carried on the second sending resource. Further, the third terminal device may resend the data information by using the second reserved resource. Optionally, reselection combined with the before-collision indication scenario is more appropriate, and retransmission combined with the after-collision indication scenario is more appropriate. Continuing to use the first resource means that when the resource conflict degree is low, the second terminal device uses the first reserved resource and/or the second reserved resource for sending.

Reselecting another resource for sending further includes sending by using another first reserved resource. The first reserved resource includes a first reserved resource a and/or a first reserved resource b. The first terminal device indicates a resource conflict on the first reserved resource a, and the second terminal device may use the first reserved resource b for sending. It should be noted that in this embodiment of this application, the M resource conflict degrees are used to perform fine-grained division on the conflict degree between the first resource and the second resource. A large value of M indicates a finer conflict degree division granularity and a more accurate indication of the conflict degree between the first resource and the second resource.

For example, the M resource conflict degrees include one of the following:

M recommendation levels of different recommendation degrees,
M disrecommendation levels of different disrecommendation degrees, or

P recommendation levels of different recommendation degrees and Q disrecommendation levels of different disrecommendation degrees, where P+Q=M.

When the M resource conflict degrees include the M recommendation levels of different recommendation degrees, for example, when M is 2, a recommendation degree and a slight recommendation degree may be included; when M is 3, a strong recommendation degree, a recommendation degree, and a slight recommendation degree may be included; or when M is greater than 3, a first recommendation level to an M* recommendation level may be included in descending order of recommendation degrees.

When the M resource conflict degrees include the M disrecommendation levels of different disrecommendation degrees, for example, when M is 2, a disrecommendation degree and a slight disrecommendation degree may be included; when M is 3, a strong disrecommendation degree, a disrecommendation degree, and a slight disrecommendation degree may be included; or when M is greater than 3, a first disrecommendation level to an $M^{th}$ disrecommendation level may be included in descending order of disrecommendation degrees.

When the M resource conflict degrees include the P recommendation levels of different recommendation degrees and the Q disrecommendation levels of different disrecommendation degrees, for example, when P is 1 and Q is 2, a recommendation degree, a disrecommendation degree, and a slight disrecommendation degree may be included; or when P is 3 and Q is 3, a strong disrecommendation degree, a disrecommendation degree, a slight disrecommendation degree, a strong recommendation degree, a recommendation degree, and a slight recommendation degree may be included, or a first recommendation level to a $P^{th}$ recommendation level may be included in descending order of recommendation degrees and a $(P+1)^{th}$ disrecommendation level to an M* disrecommendation level may be included in ascending order of disrecommendation degrees.

In another expression manner, the M resource conflict degrees may be expressed as only a first resource conflict degree to an $M^{th}$ resource conflict degree, and the first resource conflict degree to the $M^{th}$ resource conflict degree may be arranged in descending order or ascending order of conflict degrees. This is not limited in this application.

In this embodiment of this application, the first terminal device sends the resource conflict indication information to the second terminal device to indicate the first resource conflict degree, and the second terminal device may determine, based on the first resource conflict degree, whether there is a resource conflict between resources for transmission and whether the resource conflict is serious. This can avoid a transmission failure caused by the resource conflict, and improve transmission reliability of a communication system.

Further, the first resource conflict degree indicated by the resource conflict indication information in this embodiment of this application is one of at least two resource conflict degrees, so that a fine-grained indication is performed on the conflict degree between the first resource and the second resource. This not only indicates that the first resource conflicts/does not conflict with the second resource, and implements an accurate indication of the conflict degree. In addition, the second terminal device can estimate, based on the first conflict degree, whether the data can be correctly transmitted, to avoid transmission resource reselection or data retransmission performed when the resource conflict degree is low and the data can be correctly transmitted. This avoids unnecessary resource reselection, or avoids a waste of resources, and improves performance of the communication system.

In some embodiments, the first parameter may be resource overlapping information.

The resource overlapping information is resource overlapping information of the first resource and the second resource. For example, the resource overlapping information may include:
a first overlapping ratio: a ratio of an overlapping part of the first resource and the second resource to the first resource, a second overlapping ratio: a ratio of an overlapping part of the first resource and the second resource to the second resource, a larger value of a first overlapping ratio and a second overlapping ratio, first frequency domain information of an overlapping resource of the first resource and the second resource, second frequency domain information of a non-overlapping resource in the first resource, or third frequency domain information of a non-overlapping resource in the second resource.

The overlapping part may include a frequency domain overlapping part and/or a time domain overlapping part.

In some embodiments, the first parameter may be a signal strength. The signal strength may be, for example, a reference signal received power (Reference Signal Received Power, RSRP). For example, the signal strength includes one of the following:
a first signal strength, a second signal strength, a ratio of a first signal strength to a second signal strength, a ratio of a second signal strength to a first signal strength, a ratio of a first signal strength to a sum of the first signal strength and a second signal strength, or a ratio of a second signal strength to a sum of a first signal strength and the second signal strength.

The first signal strength is a strength of a signal transmitted on the first resource, and the second signal strength is a strength of a signal transmitted on the second resource.

In some embodiments, the first parameter may be resource overlapping information and a signal strength. For example, at least two of a first signal strength, a second signal strength, a first overlapping ratio, and a second overlapping ratio may be included.

In some embodiments, the first parameter may be determined based on resource overlapping information and/or a signal strength. For example, the first parameter may be a converted value, calculated based on a first overlapping ratio or a second overlapping ratio, of a first signal strength, and/or a converted value, calculated based on the first overlapping ratio or the second overlapping ratio, of a second signal strength.

In some embodiments, the first parameter may be at least two of a first signal strength, a second signal strength, a first overlapping ratio, a second overlapping ratio, a converted value, calculated based on the first overlapping ratio or the second overlapping ratio, of the first signal strength, and a converted value, calculated based on the first overlapping ratio or the second overlapping ratio, of the second signal strength.

In some embodiments, the first parameter may be a subchannel location and/or a number of subchannels of the first frequency domain information, a subchannel location and/or a number of subchannels of the second frequency domain information, and/or a subchannel location and/or a number of subchannels of the third frequency domain information. The first frequency domain information is a subchannel location and/or a number of subchannels of the overlapping resource of the first resource and the second resource. The second frequency domain information is a subchannel location and/or a number of subchannels of a resource that is in the first resource and that does not overlap the second resource. The third frequency domain information is a subchannel location and/or a number of subchannels of a resource that is in the second resource and that does not overlap the first resource. Optionally, the first frequency domain information, the second frequency domain information, and/or the third frequency domain information include a start location and a subchannel length. A granularity of the subchannel length may be $N_{sub}$ subchannels, and $N_{sub}$ is an integer. Optionally, $N_{sub}$=at least one of {1, 2, 3, 4, 5}. The start location is a subchannel index of the subchannel.

Optionally, the first frequency domain information, the second frequency domain information, and/or the third frequency domain information include/includes a range of a frequency domain location of the resource pool. Optionally, the frequency domain resource on which the resource pool is located is divided into $N_{RP}$ frequency domain ranges, and the first frequency domain information, the second frequency domain information, and/or the third frequency domain information indicate/indicates that the second resource falls within a first frequency domain range. The first frequency domain range is at least one of the $N_{RP}$ frequency domain ranges.

The first frequency domain information, the second frequency domain information, or the third frequency domain information indicates that the number of subchannels is in direct proportion to the resource conflict degree. The first terminal device indicates that the resource conflict degree is implicitly associated with the number of subchannels. An indication granularity of the number of subchannels is $N_{sub}$ subchannels, and $N_{sub}$ is an integer. Optionally, $N_{sub}$=at least one of {1, 2, 3, 4, 5}.

The first frequency domain information, the second frequency domain information, or the third frequency domain information indicates that the subchannel location and/or the number of subchannels are/is in direct proportion to the resource conflict degree. The first terminal device indicates that the resource conflict degree is implicitly associated with the subchannel location and/or the number of subchannels. There are M combinations of subchannel locations and/or numbers of subchannels, the M combinations are in a one-to-one correspondence with the M conflict degrees. An indication granularity of the number of subchannels is $N_{sub}$ subchannels, and $N_{sub}$ is an integer. Optionally, $N_{sub}$=at least one of {1, 2, 3, 4, 5}. A granularity of the subchannel location is at least one of the $N_{RP}$ frequency domain ranges.

The sidelink transmission method provided in this embodiment may further include at least one of determining the signal strength and the resource overlapping information as follows.

1. The first terminal device determines, based on a strength of a signal transmitted on the first sending resource, the strength of the signal transmitted on the first resource. For example, the first terminal device may measure an RSRP of the first sending resource, and use the measured RSRP of the first sending resource as the RSRP of the first resource, that is, the first signal strength. For example, in FIG. 5a, the first terminal device may measure an RSRP of the first sending resource R11, and use the measured RSRP of the first sending resource R11 as the RSRP of the first resource, that is, the first signal strength.

2. The first terminal device determines, based on a strength of a signal transmitted on the second sending resource, the strength of the signal transmitted on the second resource. For example, the first terminal device may measure an RSRP of the second sending resource, and use the measured RSRP of the second sending resource as the RSRP of the second resource, that is, the second signal strength. For example, in FIG. 5a, the first terminal device may measure an RSRP of the second sending resource R12, and use the measured RSRP of the second sending resource R12 as the RSRP of the second resource, that is, the second signal strength.

3. The first terminal device determines the resource overlapping information of the first resource and the second resource based on the first reserved resource and the second reserved resource. For example, the first terminal device may use a ratio of an overlapping part of the first reserved resource and the second reserved resource to the first reserved resource (namely, the first overlapping ratio) as the resource overlapping information of the first resource and the second resource; the first terminal device may use a ratio of an overlapping part of the first reserved resource and the second reserved resource to the second reserved resource (namely, the second overlapping proportion) as the resource overlapping information of the first resource and the second resource; or the first terminal device determines the first overlapping ratio and the second overlapping ratio based on the first reserved resource and the second reserved resource, and uses a larger value of the first overlapping ratio and the second overlapping ratio as the resource overlapping information of the first resource and the second resource. For example, the first terminal device may use an overlapping resource of the first reserved resource and the second reserved resource as the resource overlapping information of the first resource and the second resource; the first terminal device may use a resource that is in the second reserved resource and that does not overlap the first reserved resource as the resource overlapping information of the first resource and the second resource; or the first terminal device may use a resource that is in the first reserved resource and that does not overlap the second reserved resource as the resource overlapping information of the first resource and the second resource.

In this embodiment, both the resource overlapping information and the signal strength may reflect the resource conflict degree to some extent. When the first terminal device determines the corresponding first resource conflict degree from the M resource conflict degrees based on the first parameter, the conflict degree between the first resource and the second resource can be accurately reflected, and therefore, the conflict degree can be accurately identified.

In some embodiments of S230, that the second terminal device reselects, retransmits, or continues to use the first resource based on the first resource conflict degree may specifically include the following process: The second terminal device reselects or retransmits the first resource based on the first resource conflict degree and a first preset condition. The first preset condition includes at least one of the following:

a number of candidate resources in a candidate resource set of the second terminal device is less than a fourth preset value;

a number of remaining resources of a sidelink grant (SL grant) is less than a fifth preset value;

a number of transmissions of signaling and/or data transmitted on the first resource is greater than a sixth preset value;

the CBR is greater than a seventh preset value; and

a number of first reserved resources is less than or equal to an eighth preset value, and the first reserved resource is a reserved resource indicated by the first control information sent by the second terminal device.

For example, the second terminal device may reselect or retransmit the first resource when the first preset condition is not met. When the first preset condition is met, the second terminal device continues to use the first resource for transmission.

Further, preset values in the first preset condition should be different for different resource conflict degrees, to enable the second terminal device to accurately determine whether to reselect or retransmit the first resource or continue to use the first resource. For example, when the disrecommendation degree indicated by the first resource conflict degree is high, the fourth, fifth, and eighth preset values in the first preset condition should be small, and the sixth and seventh preset values should be large; or when the disrecommendation degree indicated by the first resource conflict degree is low, the fourth, fifth, and eighth preset values in the first preset condition should be large, and the sixth and seventh preset values should be small.

In other words, the second terminal device may determine the first preset condition based on the first resource conflict degree, for example, the second terminal device selects, based on the first resource conflict degree, which one or more of the foregoing preset conditions as the first preset condition; and/or the second terminal device may determine the preset value in the first preset condition based on the first resource conflict degree.

In some implementations, the second terminal device may determine, based on the first resource conflict degree, a reselection probability corresponding to the first resource conflict degree, and reselect, retransmit, or continue to use the first resource based on the reselection probability. For example, when the first resource conflict degree is the first disrecommendation level in the first disrecommendation level to the $M^{th}$ disrecommendation level in descending order of disrecommendation degrees, the second terminal device determines that the reselection probability corresponding to the first resource conflict degree is 100%; when the first resource conflict degree is the second disrecommendation level, the second terminal device determines that the reselection probability corresponding to the first resource conflict degree is 90%; or when the first resource conflict degree is the M* disrecommendation level, the second terminal device determines that the reselection probability corresponding to the first resource conflict degree is 0%. The first disrecommendation level is associated with a highest resource conflict degree, and the $M^{th}$ disrecommendation level is associated with a lowest resource conflict degree.

A higher reselection probability indicates a higher reselection or retransmission probability of the second terminal device, and a lower reselection probability indicates a higher probability that the second terminal device continues to use the first resource. For example, when the reselection probability is 60%, there is a 60% probability that the second terminal device reselects or retransmits the first resource, or there is a 40% probability that the second terminal device continues to use the first resource. For example, the second terminal device may perform retransmission or reselection when the reselection probability is greater than 60%, and continue to use the first resource when the reselection probability is less than or equal to 60%.

In some embodiments, the second terminal device may determine, based on the reselection probability and the foregoing first preset condition, to retransmit, reselect, or continue to use the first resource. For example, when the reselection probability is greater than 80%, the second terminal device performs retransmission or reselection; when the reselection probability is less than or equal to 80% and greater than 20%, the second terminal device determines, based on the first preset condition, whether to perform retransmission or reselection; or when the reselection probability is less than 20%, the second terminal device continues to use the first resource.

When the conflict indication information indicates a specific first resource conflict degree, the second terminal device determines, based on at least one of resource usage of the resource pool, a channel busy degree, and a number of data transmissions, to retransmit, reselect, or continue to use the first resource. This ensures that retransmission or reselection can improve transmission reliability for data transmission. In addition, this avoids large overheads of the communication system caused by frequent retransmission or reselection.

In some embodiments, a network device may send related configuration information to any terminal device, to complete a corresponding configuration. For example, at least one of a number M of the resource conflict degrees, a signal strength threshold, resource conflict degree activation information, and a resource of the resource conflict information is configured.

In the following possible implementations, the configuration information sent by the network device to any terminal device may be applied to any embodiment shown in FIG. 6 to FIG. 11, to configure a related parameter for at least one of the first terminal device, the second terminal device, and the third terminal device. In other words, parameter configuration in any embodiment in FIG. 6 to FIG. 11 may be performed according to any one or a combination of the following possible implementations 1 to 12.

In a possible implementation 1, the network device configures a number M of indicated resource conflict degrees.

Example 1: A number M of recommendation levels configured by the network device may be any one of 1 to 5. RCI-prefer {1, 2, 3, 4, 5}

Example 2: A number M of disrecommendation levels configured by the network device may be any one of 1 to 5. RCI-notprefer {1, 2, 3, 4, 5}

Example 3: A number M of recommendation levels configured by the network device may be any one of 1 to 5, and a number M of disrecommendation levels may be any one of 1 to 5.

```
RCI {
RCI-prefer {1, 2, 3, 4, 5}
RCI-notprefer {1, 2, 3, 4, 5}
}
```

In a possible implementation 2, the network device configures a number M of indicated resource conflict degrees, and the number of degrees may be associated with the CBR.

A larger CBR indicates a larger number of degrees.

The value M associated with the CBR has beneficial effect: When the CBR is small, fewer resource conflicts occur, or fewer serious resource conflicts occur, and there is no need to indicate a large number of resource conflict degrees; or when the CBR is large, more resource conflicts occur, or more resource conflicts of different degrees occur, and a larger number M of indicated resource conflict degrees can reflect a channel condition more accurately, so that the second terminal device determines to reselect, retransmit, or continue to use the first resource.

Example 1: The network device configures one to five recommendation levels, and each degree is associated with four different CBR values or five CBR ranges.

```
RCI {
RCI-prefer {1, 2, 3, 4, 5}
CBR {CBR 1, CBR 2, CBR 3, CBR 4}
}
```

When a CBR measurement value is less than the CBR 1, only M=1 resource recommendation degree is indicated. When a CBR measurement value falls within [CBR 1, CBR 2), M=2 resource recommendation degrees are indicated. When a CBR measurement value falls within [CBR 2, CBR 3), M=3 resource recommendation degrees are indicated. When a CBR measurement value falls within [CBR 3, CBR 4), only M=4 resource recommendation degrees are indicated. When a CBR measurement value is greater than or equal to the CBR 4, only M=5 resource recommendation degrees are indicated.

Example 2: The network device configures one to five disrecommendation levels, and each conflict degree is associated with four different CBR values or five CBR ranges.

```
RCI {
RCI-notprefer {1, 2, 3, 4, 5}
CBR {CBR 1, CBR 2, CBR 3, CBR 4}
}
```

When a CBR measurement value is less than the CBR 1, only M=1 resource disrecommendation degree is indicated. When a CBR measurement value falls within [CBR 1, CBR 2), M=2 resource disrecommendation degrees are indicated. When a CBR measurement value falls within [CBR 2, CBR 3), M=3 resource disrecommendation degrees are indicated. When a CBR measurement value falls within [CBR 3, CBR 4), only M=4 resource disrecommendation degrees are indicated. When a CBR measurement value is greater than or equal to the CBR 4, only M=5 resource disrecommendation degrees are indicated.

Example 3: The network device configures one to five recommendation levels and one to five disrecommendation levels, and each conflict degree is associated with four different CBR values or five CBR ranges.

```
RCI {
RCI-prefer {1, 2, 3, 4, 5}
CBR-prefer {CBR 1, CBR 2, CBR 3, CBR 4}
RCI-notprefer {1, 2, 3, 4, 5}
CBR-notprefer {CBR 1, CBR 2, CBR 3, CBR 4}
}
```

When a CBR measurement value is less than the CBR 1, only M=1 resource recommendation degree is indicated. When a CBR measurement value falls within [CBR 1, CBR 2), M=2 resource recommendation degrees are indicated. When a CBR measurement value falls within [CBR 2, CBR 3), M=3 resource recommendation degrees are indicated. When a CBR measurement value falls within [CBR 3, CBR 4), only M=4 resource recommendation degrees are indicated. When a CBR measurement value is greater than or equal to the CBR 4, only M=5 resource recommendation degrees are indicated.

When a CBR measurement value is less than the CBR 1, only M=1 resource disrecommendation degree is indicated. When a CBR measurement value falls within [CBR 1, CBR 2), M=2 resource disrecommendation degrees are indicated. When the CBR measurement value falls within [CBR 2, CBR 3), M=3 resource disrecommendation degrees are indicated. When the CBR measurement value falls within [CBR 3, CBR 4), only M=4 resource disrecommendation degrees are indicated. When the CBR measurement value is greater than or equal to the CBR 4, only M=5 resource disrecommendation degrees are indicated.

In a possible implementation 3, the network device configures a number M of indicated resource conflict degrees, and the number of degrees may be associated with a priority.

A higher service priority level (a smaller priority value) indicates a larger number of degrees.

Association with the priority has beneficial effect: A more accurate resource indication granularity can reflect a channel condition more accurately, to preferentially ensure a service with a high priority level or a service with a small priority value, so that the second terminal device determines to reselect, retransmit, or continue to use the first resource. That is, more resource conflict degrees or a larger number M of resource conflict degrees can be indicated for the service with the high priority level.

Example 1: The network device configures one to five recommendation levels, and each conflict degree is associated with eight different priorities.

```
RCI {
RCI-prefer {1, 2, 3, 4, 5}
Priority {1, 2, 3, 4, 5, 6, 7, 8}
}
```

When a service priority value of the second terminal device is 1, the first terminal device indicates M=5 resource recommendation degrees. When a service priority value of the second terminal device is 2, the first terminal device indicates M=5 resource recommendation degrees. When a service priority value of the second terminal device is 3, the first terminal device indicates M=4 resource recommendation degrees. When a service priority value of the second terminal device is 4, the first terminal device indicates M=4 resource recommendation degrees. When a service priority value of the second terminal device is 5, the first terminal device indicates M=3 resource recommendation degrees. When a service priority value of the second terminal device is 6, the first terminal device indicates M=3 resource recommendation degrees. When a service priority value of the second terminal device is 7, the first terminal device indicates M=2 resource recommendation degrees. When a service priority value of the second terminal device is 8, the first terminal device indicates M=1 resource recommendation degree.

Example 2: The network device configures one to five disrecommendation levels, and each conflict degree is associated with eight different priorities.

```
RCI {
RCI-notprefer {1, 2, 3, 4, 5}
Priority {1, 2, 3, 4, 5, 6, 7, 8}
}
```

When a service priority value of the second terminal device is 1, the first terminal device indicates M=5 resource disrecommendation degrees. When a service priority value of the second terminal device is 2, the first terminal device indicates M=5 resource disrecommendation degrees. When a service priority value of the second terminal device is 3, the first terminal device indicates M=4 resource disrecommendation degrees. When a service priority value of the second terminal device is 4, the first terminal device indicates M=4 resource disrecommendation degrees. When a service priority value of the second terminal device is 5, the first terminal device indicates M=3 resource disrecommendation degrees. When a service priority value of the second terminal device is 6, the first terminal device indicates M=3 resource disrecommendation degrees. When a service priority value of the second terminal device is 7, the first terminal device indicates M=2 resource disrecommendation degrees. When a service priority value of the second terminal device is 8, the first terminal device indicates M=1 resource disrecommendation degree.

Example 3: The network device configures one to five recommendation levels and one to five disrecommendation levels, and each conflict degree is associated with eight different priorities.

```
RCI {
RCI-prefer {1, 2, 3, 4, 5}
Priority-prefer {1, 2, 3, 4, 5, 6, 7, 8}
RCI-notprefer {1, 2, 3, 4, 5}
Priority-notprefer {1, 2, 3, 4, 5, 6, 7, 8}
}
```

When a service priority value of the second terminal device is 1, the first terminal device indicates M1=5 resource recommendation degrees, and the first terminal device indicates M2=5 resource disrecommendation degrees. When a service priority value of the second terminal device is 2, the first terminal device indicates M1=5 resource recommendation degrees, and the first terminal device indicates M2=5 resource disrecommendation degrees. When a service priority value of the second terminal device is 3, the first terminal device indicates M1=4 resource recommendation degrees, and the first terminal device indicates M2=4 resource disrecommendation degrees. When a service priority value of the second terminal device is 4, the first terminal device indicates M1=4 resource recommendation degrees, and the first terminal device indicates M2=3 resource disrecommendation degrees. When a service priority value of the second terminal device is 5, the first terminal device indicates M1=3 resource recommendation degrees, and the first terminal device indicates M2=2 resource disrecommendation degrees. When a service priority value of the second terminal device is 6, the first terminal device indicates M1=3 resource recommendation degrees, and the first terminal device indicates M2=1 resource disrecommendation degree. When a service priority value of the second terminal device is 7, the first terminal device indicates M1=2 resource recommendation degrees, and the first terminal device indicates M2=1 resource disrecommendation degree. When a service priority value of the second terminal device is 8, the first terminal device indicates M1=1 resource recommendation degree, and the first terminal device indicates M2=1 resource disrecommendation degree.

Optionally, values of M1 and M2 may be separately configured.

In a possible implementation 4, the network device configures a number M of indicated resource conflict degrees, and the number of degrees may be associated with a CBR and a priority.

Example 1: The network device configures one to five recommendation levels, each conflict degree is associated with four different CBR values or five CBR ranges, and each conflict degree is associated with eight different priorities.

```
RCI {
RCI-prefer {1, 2, 3, 4, 5}
CBR {CBR 1, CBR 2, CBR 3, CBR 4}
Priority {1, 2, 3, 4, 5, 6, 7, 8}
}
```

For example, if a service priority value of the second terminal device is 1, when a CBR measurement value is less than the CBR 1, the first terminal device indicates M=3 resource recommendation degrees. If a service priority value of the second terminal device is 1, when a CBR measurement value falls within [CBR 1, CBR 2), M=4 resource recommendation degrees are indicated. If a service priority value of the second terminal device is 2, when a CBR measurement value falls within [CBR 1, CBR 2), M=3 resource recommendation degrees are indicated.

Example 2: The network device configures one to five disrecommendation levels, each conflict degree is associated with four different CBR values or five CBR ranges, and each conflict degree is associated with eight different priorities.

```
RCI {
RCI-notprefer {1, 2, 3, 4, 5}
CBR {CBR 1, CBR 2, CBR 3, CBR 4}
Priority {1, 2, 3, 4, 5, 6, 7, 8}
}
```

For example, if a service priority value of the second terminal device is 1, when a CBR measurement value is less than the CBR 1, the first terminal device indicates M=3 resource disrecommendation degrees. If a service priority value of the second terminal device is 1, when a CBR measurement value falls within [CBR 1, CBR 2), M=4 resource disrecommendation degrees are indicated. If a service priority value of the second terminal device is 2, when a CBR measurement value falls within [CBR 1, CBR 2), M=3 resource disrecommendation degrees are indicated.

Example 3: The network device configures one to five recommendation levels and one to five disrecommendation levels, each conflict degree is associated with four different CBR values or five CBR ranges, and each conflict degree is associated with eight different priorities.

```
RCI {
RCI-prefer {1, 2, 3, 4, 5}
CBR-prefer {CBR 1, CBR 2, CBR 3, CBR 4}
Priority-prefer {1, 2, 3, 4, 5, 6, 7, 8}
RCI-notprefer {1, 2, 3, 4, 5}
CBR-prefer {CBR 1, CBR 2, CBR 3, CBR 4}
Priority-notprefer {1, 2, 3, 4, 5, 6, 7, 8}
}
```

For example, if a service priority value of the second terminal device is 1, when a CBR measurement value is less than the CBR 1, the first terminal device indicates M1=3 resource recommendation degrees, and indicates M2=3 resource disrecommendation degrees. If a service priority value of the second terminal device is 1, when a CBR measurement value falls within [CBR 1, CBR 2), M1=5 resource recommendation degrees are indicated, and M2=4 resource disrecommendation degrees are indicated. If a service priority value of the second terminal device is 2, when a CBR measurement value falls within [CBR 1, CBR 2), M1=3 resource recommendation degrees are indicated, and M2=2 resource disrecommendation degrees are indicated.

In a possible implementation 5, the network device configures a number M of indicated resource conflict degrees, and the number of degrees may be associated with at least one of a CBR, a priority, an MCS, or a QoS requirement.

In a possible implementation 6, the first parameter is resource overlapping information and/or a signal strength, and the network device configures a resource overlapping threshold and/or an RSRP threshold.

Optionally, the network may configure a value of the number M of indicated resource conflict degrees.

Optionally, the network may be implicitly associated with a value of the number M of resource conflict degrees by configuring the first parameter, and may indicate a value of the number M of resource conflict degrees by configuring M first parameters, or may indicate a value of the number M of resource conflict degrees by configuring ranges of M first parameters.

Example 1: The network device configures RSRP thresholds of five recommendation levels, and the RSRP thresholds correspond to six recommendation degrees.

RCI-prefer-RSRP {RSRP 1, RSRP 2, RSRP 3, RSRP 4, RSRP 5}

For example, the signal strength is less than the RSRP 1, which corresponds to a first recommendation level; the signal strength falls within [RSRP 1, RSRP 2), which corresponds to a second recommendation level; the signal strength falls within [RSRP 2, RSRP 3), which corresponds to a third recommendation level; the signal strength falls within [RSRP 3, RSRP 4), which corresponds to a fourth recommendation level; the signal strength falls within [RSRP 4, RSRP 5), which corresponds to a fifth recommendation level; or the signal strength is greater than or equal to the RSRP 5, which corresponds to a sixth recommendation level. The first recommendation level indicates a lowest resource conflict degree, and the sixth recommendation level indicates a highest resource conflict degree.

Example 2: The network device configures RSRP thresholds of five disrecommendation levels, and the RSRP thresholds correspond to six disrecommendation degrees.
RCI-notprefer-RSRP {RSRP 6, RSRP 7, RSRP 8, RSRP 9, RSRP 10}

For example, the signal strength is greater than or equal to the RSRP 10, which corresponds to a first disrecommendation level; the signal strength falls within [RSRP 9, RSRP 10), which corresponds to a second disrecommendation level; the signal strength falls within [RSRP 8, RSRP 9), which corresponds to a third disrecommendation level; the signal strength falls within [RSRP 7, RSRP 8), which corresponds to a fourth disrecommendation level; the signal strength falls within [RSRP 6, RSRP 7), which corresponds to a fifth disrecommendation level; or the signal strength is less than the RSRP 6, which corresponds to a sixth disrecommendation level. The first disrecommendation level indicates a highest resource conflict degree, and the sixth disrecommendation level indicates a lowest resource conflict degree.

Example 3: The network device configures RSRP thresholds of five recommendation levels and RSRP thresholds of five disrecommendation levels, and the RSRP thresholds correspond to 11 conflict degrees.

```
RCI {
RCI-prefer-RSRP {RSRP 1, RSRP 2, RSRP 3, RSRP 4, RSRP 5}
RCI-notprefer-RSRP {RSRP 6, RSRP 7, RSRP 8, RSRP 9, RSRP 10}
}
```

For example, the signal strength is less than the RSRP 1, which corresponds to a first recommendation level; the signal strength falls within [RSRP 1, RSRP 2), which corresponds to a second recommendation level; the signal strength falls within [RSRP 2, RSRP 3), which corresponds to a third recommendation level; the signal strength falls within [RSRP 3, RSRP 4), which corresponds to a fourth recommendation level; the signal strength falls within [RSRP 4, RSRP 5), which corresponds to a fifth recommendation level; or the signal strength is greater than or equal to the RSRP 5, which corresponds to a sixth recommendation level. The first recommendation level indicates a lowest resource conflict degree, and the sixth recommendation level indicates a highest resource conflict degree.

The signal strength is greater than or equal to the RSRP 10, which corresponds to a first disrecommendation level; the signal strength falls within [RSRP 9, RSRP 10), which corresponds to a second disrecommendation level; the signal strength falls within [RSRP 8, RSRP 9), which corresponds to a third disrecommendation level; the signal strength falls within [RSRP 7, RSRP 8), which corresponds to a fourth disrecommendation level; the signal strength falls within [RSRP 6, RSRP 7), which corresponds to a fifth disrecommendation level; or the signal strength is less than the RSRP 6, which corresponds to a sixth disrecommendation level. The first disrecommendation level indicates a highest resource conflict degree, and the sixth disrecommendation level indicates a lowest resource conflict degree.

Example 4: The network device configures two RSRP thresholds: a first signal strength threshold RSRP 1 and a second signal strength threshold RSRP 2.

```
RCI {
RCI-notprefer-RSRP {RSRP 1, RSRP 2}
}
```

The first terminal device determines the first signal strength and the second signal strength. When the first signal strength is less than the RSRP 1, and the second signal strength is greater than the RSRP 2, the first terminal device indicates a resource conflict to the second terminal device.

The first terminal device determines the first signal strength and the second signal strength. When the first signal strength is greater than or equal to the RSRP 1, or the second signal strength is less than or equal to the RSRP 2, the first terminal device does not indicate a resource conflict to the second terminal device.

Beneficial effect is that when the second signal strength is low, the receiving terminal device of the second terminal device can successfully decode data. Therefore, the first terminal device indicates the resource conflict only when the second signal strength exceeds a specific threshold. This avoids unnecessary resource reselection. When the first signal strength is high, the receiving terminal device of the second terminal device can successfully decode data. Therefore, the first terminal device indicates the resource conflict only when the first signal strength is less than a specific threshold. This avoids unnecessary resource reselection.

Example 5: The network device configures Y thresholds of five recommendation levels, and the Y thresholds correspond to six recommendation degrees.
RCI-prefer-Y {Y1, Y2, Y3, Y4, Y5}

For example, the resource overlapping information is less than Y1, which corresponds to a first recommendation level; the resource overlapping information falls within [Y1, Y2), which corresponds to a second recommendation level; the resource overlapping information falls within [Y2, Y3), which corresponds to a third recommendation level; the resource overlapping information falls within [Y3, Y4), which corresponds to a fourth recommendation level; the resource overlapping information falls within [Y4, Y5), which corresponds to a fifth recommendation level; or the resource overlapping information is greater than or equal to Y5, which corresponds to a sixth recommendation level. The first recommendation level indicates a lowest resource conflict degree, and the sixth recommendation level indicates a highest resource conflict degree.

Example 6: The network device configures Y thresholds of five disrecommendation levels, and the Y thresholds correspond to six disrecommendation degrees.
RCI-notprefer-Y {Y6, Y7, Y8, Y9, Y10}

For example, the resource overlapping information is greater than or equal to Y10, which corresponds to a first disrecommendation level; the resource overlapping information falls within [Y9, Y10], which corresponds to a second disrecommendation level; the resource overlapping information falls within [Y8, Y9), which corresponds to a third disrecommendation level; the resource overlapping information falls within [Y7, Y8], which corresponds to a fourth disrecommendation level; the resource overlapping information falls within [Y6, Y7), which corresponds to a fifth disrecommendation level; or the resource overlapping information is less than Y6, which corresponds to a sixth disrecommendation level. The first disrecommendation level indicates a highest resource conflict degree, and the sixth disrecommendation level indicates a lowest resource conflict degree.

Example 7: The network device configures Y thresholds of five recommendation levels and Y thresholds of five disrecommendation levels, and the Y thresholds correspond to 11 conflict degrees.

```
RCI {
RCI-prefer-Y {Y1, Y2, Y3, Y4, Y5}
RCI-notprefer-Y {Y6, Y7, Y8, Y9, Y10}
}
```

For example, the resource overlapping information is less than Y1, which corresponds to a first recommendation level; the resource overlapping information falls within [Y1, Y2), which corresponds to a second recommendation level; the resource overlapping information falls within [Y2, Y3), which corresponds to a third recommendation level; the resource overlapping information falls within [Y3, Y4), which corresponds to a fourth recommendation level; the resource overlapping information falls within [Y4, Y5), which corresponds to a fifth recommendation level; or the resource overlapping information is greater than or equal to Y5, which corresponds to a sixth recommendation level. The first recommendation level indicates a lowest resource conflict degree, and the sixth recommendation level indicates a highest resource conflict degree.

The resource overlapping information is greater than or equal to Y10, which corresponds to a first disrecommendation level; the resource overlapping information falls within [Y9, Y10], which corresponds to a second disrecommendation level; the resource overlapping information falls within [Y8, Y9), which corresponds to a third disrecommendation level; the resource overlapping information falls within [Y7, Y8], which corresponds to a fourth disrecommendation level; the resource overlapping information falls within [Y6, Y7), which corresponds to a fifth disrecommendation level; or the resource overlapping information is less than Y6, which corresponds to a sixth disrecommendation level. The first disrecommendation level indicates a highest resource conflict degree, and the sixth disrecommendation level indicates a lowest resource conflict degree.

Example 8: The network device configures two Y thresholds: a threshold Y1 of the first resource overlapping information and a threshold Y2 of the second resource overlapping information.

```
RCI {
RCI-notprefer-Y {Y1, Y2}
}
```

The first terminal device determines the first resource overlapping information and the second resource overlapping information. When the first resource overlapping information is less than Y1 and the second resource overlapping information is greater than Y2, the first terminal device indicates a resource conflict to the second terminal device.

The first terminal device determines the first resource overlapping information and the second resource overlapping information. When the first resource overlapping information is greater than or equal to Y1 or the second resource overlapping information is less than or equal to Y2, the first terminal device does not indicate a resource conflict to the second terminal device.

Beneficial effect is that when the second resource overlapping information is small, the receiving terminal device of the second terminal device can successfully decode data. Therefore, the first terminal device indicates the resource conflict only when the second resource overlapping information exceeds a specific threshold. This avoids unnecessary resource reselection. When the first resource overlapping information is large, the receiving terminal device of the second terminal device can successfully decode data. Therefore, the first terminal device indicates the resource conflict only when the first resource overlapping information is less than a specific threshold. This avoids unnecessary resource reselection.

In a possible implementation 7, the network device configures an indicated RSRP threshold, and the RSRP threshold may be associated with a CBR. Alternatively, the network device configures an indicated resource overlapping information threshold, and the resource overlapping information threshold may be associated with a CBR.

A larger CBR indicates a larger RSRP threshold. Beneficial effect is that the larger CBR indicates that a channel is congested, and therefore, there are fewer available resources of the second terminal device. Even if resource reselection is performed, a resource facing a resource conflict may be selected. Therefore, when there is small interference, the conflict resource may not be reselected. The resource conflict is indicated only when interference is large and exceeds the RSRP threshold.

Alternatively, a larger CBR indicates a larger number of RSRP thresholds. Beneficial effect is that the larger CBR indicates that a channel is congested, and the larger number of RSRP thresholds can reflect a channel condition at a more accurate resource indication granularity, so that the second terminal device determines to reselect, retransmit, or continue to use the first resource. That is, more resource conflict degrees or a larger number M of resource conflict degrees can be indicated for the service with the high priority level.

Example 1: The network device configures RSRP thresholds of four recommendation levels, and each conflict degree is associated with different CBR values or four CBR ranges.

```
RCI {
RCI-prefer-RSRP {RSRP 1, RSRP 2, RSRP 3, RSRP 4}
CBR {CBR 1, CBR 2, CBR 3}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the channel busy information, and the resource conflict threshold is the signal strength threshold.

When the CBR measured by the first terminal device is less than or equal to the CBR 1, the resource conflict threshold is determined as the RSRP 1. If the signal strength is less than the RSRP 1, the first terminal device indicates that the first resource is a recommended resource. When the CBR measured by the first terminal device falls within [CBR 1, CBR 2), the resource conflict threshold is determined as the RSRP 2. If the signal strength is less than the RSRP 2, the first terminal device indicates that the first resource is a recommended resource. When the CBR measured by the first terminal device falls within [CBR 2, CBR 3), the resource conflict threshold is determined as the RSRP 3. If the signal strength is less than the RSRP 3, the first terminal device indicates that the first resource is a recommended resource. When the CBR measured by the first terminal device is greater than the CBR 3, the resource conflict threshold is determined as the RSRP 4. If the signal strength is less than the RSRP 4, the first terminal device indicates that the first resource is a recommended resource.

Example 2: The network device configures RSRP thresholds of one to four disrecommendation levels, and each conflict degree is associated with four different CBR values or five CBR ranges.

```
RCI {
RCI-notprefer-RSRP {RSRP 5, RSRP 6, RSRP 7, RSRP 8}
CBR {CBR 1, CBR 2, CBR 3, CBR 4}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the channel busy information, and the resource conflict threshold is the signal strength threshold.

When the CBR measured by the first terminal device is less than or equal to the CBR 1, the resource conflict threshold is determined as the RSRP 1. If the signal strength is greater than the RSRP 1, the first terminal device indicates that the first resource is a disrecommended resource. When the CBR measured by the first terminal device falls within [CBR 1, CBR 2), the resource conflict threshold is determined as the RSRP 2. If the signal strength is greater than the RSRP 2, the first terminal device indicates that the first resource is a disrecommended resource. When the CBR measured by the first terminal device falls within [CBR 2, CBR 3), the resource conflict threshold is determined as the RSRP 3. If the signal strength is greater than the RSRP 3, the first terminal device indicates that the first resource is a disrecommended resource. When the CBR measured by the first terminal device is greater than the CBR 3, the resource conflict threshold is determined as the RSRP 4. If the signal strength is greater than the RSRP 4, the first terminal device indicates that the first resource is a disrecommended resource.

Example 3: The network device configures RSRP thresholds of one to four recommendation levels and RSRP thresholds of one to four disrecommendation levels, and each conflict degree is associated with four different CBR values or five CBR ranges.

```
RCI {
RCI-prefer-RSRP {RSRP 1, RSRP 2, RSRP 3, RSRP 4}
CBR-prefer {CBR 1, CBR 2, CBR 3, CBR 4}
RCI-notprefer-RSRP {RSRP 5, RSRP 6, RSRP 7, RSRP 8}
CBR-notprefer {CBR 5, CBR 6, CBR 7, CBR 8}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the channel busy information, and the resource conflict threshold is the signal strength threshold.

When the CBR measured by the first terminal device is less than or equal to the CBR 1, the resource conflict threshold is determined as the RSRP 1. If the signal strength is greater than the RSRP 1, the first terminal device indicates a resource conflict. When the CBR measured by the first terminal device falls within [CBR 1, CBR 2), the resource conflict threshold is determined as the RSRP 2. If the signal strength is greater than the RSRP 2, the first terminal device indicates a resource conflict. When the CBR measured by the first terminal device falls within [CBR 2, CBR 3), the resource conflict threshold is determined as the RSRP 3. If the signal strength is greater than the RSRP 3, the first terminal device indicates a resource conflict. When the CBR measured by the first terminal device is greater than the CBR 3, the resource conflict threshold is determined as the RSRP 4. If the signal strength is greater than the RSRP 4, the first terminal device indicates a resource conflict.

A larger CBR indicates a larger Y threshold. Beneficial effect is that the larger CBR indicates that a channel is congested, and therefore, there are fewer available resources of the second terminal device. Even if resource reselection is performed, a resource facing a resource conflict may be selected. Therefore, when there is small interference, the conflict resource may not be reselected. The resource conflict is indicated only when interference is large and exceeds the Y threshold.

Alternatively, a larger CBR indicates a larger number of Y thresholds. Beneficial effect is that the larger CBR indicates that a channel is congested, and the larger number of Y thresholds can reflect a channel condition at a more accurate resource indication granularity, so that the second terminal device determines to reselect, retransmit, or continue to use the first resource. That is, more resource conflict degrees or a larger number M of resource conflict degrees can be indicated for the service with the high priority level.

Example 1: The network device configures Y thresholds of four recommendation levels, and each conflict degree is associated with different CBR values or four CBR ranges.

```
RCI {
RCI-prefer-Y f Y1, Y2, Y3, Y4}
CBR {CBR 1, CBR 2, CBR 3}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the channel busy information, and the resource conflict threshold is the resource overlapping information threshold.

When the CBR measured by the first terminal device is less than or equal to the CBR 1, the resource conflict threshold is determined as Y1. If the resource overlapping information is less than Y1, the first terminal device indicates that the first resource is a recommended resource. When the CBR measured by the first terminal device falls within [CBR 1, CBR 2), the resource conflict threshold is determined as Y2. If the resource overlapping information is less than Y2, the first terminal device indicates that the first resource is a recommended resource. When the CBR measured by the first terminal device falls within [CBR 2, CBR 3), the resource conflict threshold is determined as Y3. If the resource overlapping information is less than Y3, the first terminal device indicates that the first resource is a recommended resource. When the CBR measured by the first terminal device is greater than the CBR 3, the resource conflict threshold is determined as Y4. If the resource overlapping information is less than Y4, the first terminal device indicates that the first resource is a recommended resource.

Example 2: The network device configures Y thresholds of one to four disrecommendation levels, and each conflict degree is associated with four different CBR values or five CBR ranges.

```
RCI {
RCI-notprefer-Y {Y5, Y6, Y7, Y8}
CBR {CBR 1, CBR 2, CBR 3, CBR 4}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the channel busy information, and the resource conflict threshold is the resource overlapping information threshold.

When the CBR measured by the first terminal device is less than or equal to the CBR 1, the resource conflict threshold is determined as Y1. If the resource overlapping information is greater than Y1, the first terminal device indicates that the first resource is a disrecommended resource. When the CBR measured by the first terminal device falls within [CBR 1, CBR 2), the resource conflict threshold is determined as Y2. If the resource overlapping information is greater than Y2, the first terminal device indicates that the first resource is a disrecommended resource. When the CBR measured by the first terminal device falls within [CBR 2, CBR 3), the resource conflict threshold is determined as Y3. If the resource overlapping information is greater than Y3, the first terminal device indicates that the first resource is a disrecommended resource. When the CBR measured by the first terminal device is greater than the CBR 3, the resource conflict threshold is determined as Y4. If the resource overlapping information is greater than Y4, the first terminal device indicates that the first resource is a disrecommended resource.

Example 3: The network device configures Y thresholds of one to four recommendation levels and Y thresholds of one to four disrecommendation levels, and each conflict degree is associated with four different CBR values or five CBR ranges.

```
RCI {
RCI-prefer-Y f Y1, Y2, Y3, Y4}
CBR-prefer {CBR 1, CBR 2, CBR 3, CBR 4}
RCI-notprefer-Y {Y5, Y6, Y7, Y8}
CBR-notprefer {CBR 5, CBR 6, CBR 7, CBR 8}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the channel busy information, and the resource conflict threshold is the resource overlapping information threshold.

When the CBR measured by the first terminal device is less than or equal to the CBR 1, the resource conflict threshold is determined as Y1. If the resource overlapping information is greater than Y1, the first terminal device indicates a resource conflict. When the CBR measured by the first terminal device falls within [CBR 1, CBR 2), the resource conflict threshold is determined as Y2. If the resource overlapping information is greater than Y2, the first terminal device indicates a resource conflict. When the CBR measured by the first terminal device falls within [CBR 2, CBR 3), the resource conflict threshold is determined as Y3. If the resource overlapping information is greater than Y3, the first terminal device indicates a resource conflict. When the CBR measured by the first terminal device is greater than the CBR 3, the resource conflict threshold is determined as Y4. If the resource overlapping information is greater than Y4, the first terminal device indicates a resource conflict.

In a possible implementation 8, the network device configures an indicated RSRP threshold, and the number of degrees may be associated with a priority. Alternatively, the network device configures an indicated resource overlapping information threshold, and the number of degrees may be associated with a priority.

A higher service priority level (a smaller priority value) indicates a larger number of degrees.

Beneficial effect is that a higher priority level indicates a lower RSRP threshold. For a high-priority service, impact of the second resource should be avoided as much as possible. Therefore, when the RSRP threshold is low, if the signal strength is greater than the RSRP threshold, a resource conflict is indicated. For the high-priority service, it is determined that a resource conflict condition is more likely to be met. This ensures reliability of the high-priority service.

Example 1: The network device configures RSRP thresholds of eight recommendation levels, and each RSRP threshold is associated with one priority.

```
RCI {
RCI-prefer-RSRP {RSRP 1, RSRP 2, RSRP 3, RSRP 4, RSRP 5, RSRP 6, RSRP 7,
RSRP 8}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the priority information, and the resource conflict threshold is the signal strength threshold. The priority information is a service priority of the second terminal device, and the service priority is indicated by SCI carried on the first resource.

When a priority value measured by the second terminal device is 1, the resource conflict threshold is determined as the RSRP 1. If the signal strength is less than the RSRP 1, the first terminal device indicates that the first resource is a recommended resource. When a priority value measured by the second terminal device is 2, the resource conflict threshold is determined as the RSRP 2. If the signal strength is less than the RSRP 2, the first terminal device indicates that the first resource is a recommended resource.

Example 2: The network device configures RSRP thresholds of one to five disrecommendation levels, and each conflict degree is associated with eight different priorities.

```
RCI {
RCI-notprefer-RSRP {RSRP 6, RSRP 7, RSRP 8, RSRP 9, RSRP 10}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the priority information, and the resource conflict threshold is the signal strength threshold. The priority information is a service priority of the second terminal device, and the service priority is indicated by SCI carried on the first resource.

When a priority value measured by the second terminal device is 1, the resource conflict threshold is determined as the RSRP 6. If the signal strength is less than the RSRP 6, the first terminal device indicates that the first resource is a recommended resource. When a priority value measured by the second terminal device is 2, the resource conflict threshold is determined as the RSRP 7. If the signal strength is less than the RSRP 7, the first terminal device indicates that the first resource is a recommended resource.

Example 3: The network device configures RSRP thresholds of one to five recommendation levels and RSRP thresholds of one to five disrecommendation levels, and each conflict degree is associated with eight different priorities.

```
RCI {
        RCI-prefer-RSRP {RSRP 1, RSRP 2, RSRP 3, RSRP 4, RSRP 5}
        Priority-prefer {1, 2, 3, 4, 5, 6, 7, 8}
        RCI-notprefer-RSRP {RSRP 6, RSRP 7, RSRP 8, RSRP 9, RSRP 10}
        Priority-notprefer {1, 2, 3, 4, 5, 6, 7, 8}
        }
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the priority information, and the resource conflict threshold is the signal strength threshold. The priority information is a service priority of the second terminal device, and the service priority is indicated by SCI carried on the first resource.

When a priority value measured by the second terminal device is 1, the resource conflict threshold is determined as the RSRP 1 or the RSRP 6. If the signal strength is less than the RSRP 6, the first terminal device indicates that the first resource is a recommended resource, or if the signal strength is greater than the RSRP 1, the first terminal device indicates that the first resource is a disrecommended resource. When a priority value measured by the second terminal device is 2, the resource conflict threshold is determined as the RSRP 2 or the RSRP 7. If the signal strength is less than the RSRP 7, the first terminal device indicates that the first resource is a recommended resource, or if the signal strength is greater than the RSRP 2, the first terminal device indicates that the first resource is a disrecommended resource.

In a possible implementation 9, the network device configures an indicated RSRP threshold, and the number of degrees may be associated with a CBR and a priority. Alternatively, the network device configures an indicated resource overlapping information threshold, and the number of degrees may be associated with a CBR and a priority.

Example 1: The network device configures RSRP thresholds of one to five recommendation levels, each conflict degree is associated with four different CBR values or five CBR ranges, and each conflict degree is associated with eight different priorities.

```
RCI {
RCI-prefer-RSRP {RSRP 1, RSRP 2, RSRP 3, RSRP 4, RSRP 5}
CBR {CBR 1, CBR 2, CBR 3, CBR 4}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the priority information, and the resource conflict threshold is the signal strength threshold or an overlapping ratio threshold. The priority information is a service priority of the second terminal device, and the service priority is indicated by SCI carried on the first resource.

When a priority value measured by the second terminal device is 1, the resource conflict threshold is determined as the RSRP 1 or the CBR 1. If the signal strength is less than the RSRP 1, the first terminal device indicates that the first resource is a recommended resource, or if the resource overlapping ratio is less than the CBR 1, the first terminal device indicates that the first resource is a recommended resource. When a priority value measured by the second terminal device is 2, the resource conflict threshold is determined as the RSRP 2 or the CBR 2. If the signal strength is less than the RSRP 2, the first terminal device indicates that the first resource is a recommended resource, or if the resource overlapping ratio is less than the CBR 2, the first terminal device indicates that the first resource is a recommended resource.

Example 2: The network device configures RSRP thresholds of one to five disrecommendation levels, each conflict degree is associated with four different CBR values or five CBR ranges, and each conflict degree is associated with eight different priorities.

```
RCI {
RCI-notprefer-RSRP {RSRP 6, RSRP 7, RSRP 8, RSRP 9, RSRP 10}
CBR {CBR 1, CBR 2, CBR 3, CBR 4}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a signal strength threshold.

For example, M=1, the resource conflict threshold is associated with the priority information and the CBR, and the resource conflict threshold is the signal strength threshold. The priority information is a service priority of the second terminal device, and the service priority is indicated by SCI carried on the first resource.

When a priority value measured by the second terminal device is 1 and the CBR is the CBR 1, the resource conflict threshold is determined as the RSRP 6. If the signal strength is greater than the RSRP 1, the first terminal device indicates that the first resource is a disrecommended resource. When a priority value measured by the second terminal device is 2 and the CBR is 3, the resource conflict threshold is determined as the RSRP 8. If the signal strength is greater than the RSRP 8, the first terminal device indicates that the first resource is a recommended resource.

Example 3: The network device configures RSRP thresholds of one to five recommendation levels and RSRP thresholds of one to five disrecommendation levels, each conflict degree is associated with four different CBR values or five CBR ranges, and each conflict degree is associated with eight different priorities.

```
RCI {
RCI-prefer-RSRP {RSRP 1, RSRP 2, RSRP 3, RSRP 4, RSRP 5}
```

```
CBR-prefer {CBR 1, CBR 2, CBR 3, CBR 4}
Priority-prefer {1, 2, 3, 4, 5, 6, 7, 8}
RCI-notprefer-RSRP {RSRP 6, RSRP 7, RSRP 8, RSRP 9, RSRP 10}
CBR-prefer {CBR 1, CBR 2, CBR 3, CBR 4}
Priority-notprefer {1, 2, 3, 4, 5, 6, 7, 8}
}
```

Beneficial effect is that a higher priority level indicates a lower Y threshold. For a high-priority service, impact of the second resource should be avoided as much as possible. Therefore, when the Y threshold is low, if the resource overlapping information is greater than the Y threshold, a resource conflict is indicated. For the high-priority service, it is determined that a resource conflict condition is more likely to be met. This ensures reliability of the high-priority service.

Example 1: The network device configures Y thresholds of eight recommendation levels, and each Y threshold is associated with one priority.

```
RCI {
RCI-prefer-Y f Y1, Y2, Y3, Y4, Y5, Y6, Y7, Y8}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the priority information, and the resource conflict threshold is the resource overlapping information threshold. The priority information is a service priority of the second terminal device, and the service priority is indicated by SCI carried on the first resource.

When a priority value measured by the second terminal device is 1, the resource conflict threshold is determined as Y1. If the resource overlapping information is less than Y1, the first terminal device indicates that the first resource is a recommended resource. When a priority value measured by the second terminal device is 2, the resource conflict threshold is determined as Y2. If the resource overlapping information is less than Y2, the first terminal device indicates that the first resource is a recommended resource.

Example 2: The network device configures Y thresholds of one to five disrecommendation levels, and each conflict degree is associated with eight different priorities.

```
RCI {
RCI-notprefer-Y {Y6, Y7, Y8, Y9, Y10}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the priority information, and the resource conflict threshold is the resource overlapping information threshold. The priority information is a service priority of the second terminal device, and the service priority is indicated by SCI carried on the first resource.

When a priority value measured by the second terminal device is 1, the resource conflict threshold is determined as Y6. If the resource overlapping information is less than Y6, the first terminal device indicates that the first resource is a recommended resource. When a priority value measured by the second terminal device is 2, the resource conflict threshold is determined as Y7. If the resource overlapping information is less than Y7, the first terminal device indicates that the first resource is a recommended resource.

Example 3: The network device configures Y thresholds of one to five recommendation levels and Y thresholds of one to five disrecommendation levels, and each conflict degree is associated with eight different priorities.

```
RCI {
RCI-prefer-Y {Y1, Y2, Y3, Y4, Y5}
Priority-prefer {1, 2, 3, 4, 5, 6, 7, 8}
RCI-notprefer-Y {Y6, Y7, Y8, Y9, Y10}
Priority-notprefer {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the priority information, and the resource conflict threshold is the resource overlapping information threshold. The priority information is a service priority of the second terminal device, and the service priority is indicated by SCI carried on the first resource.

When a priority value measured by the second terminal device is 1, the resource conflict threshold is determined as Y1 or Y6. If the resource overlapping information is less than Y6, the first terminal device indicates that the first resource is a recommended resource, or if the resource overlapping information is greater than Y1, the first terminal device indicates that the first resource is a disrecommended resource. When a priority value measured by the second terminal device is 2, the resource conflict threshold is determined as Y2 or Y7. If the resource overlapping information is less than Y7, the first terminal device indicates that the first resource is a recommended resource, or if the resource overlapping information is greater than Y2, the first terminal device indicates that the first resource is a disrecommended resource.

In a possible implementation 9, the network device configures an indicated Y threshold, and the number of degrees may be associated with a CBR and a priority. Alternatively, the network device configures an indicated resource overlapping information threshold, and the number of degrees may be associated with a CBR and a priority.

Example 1: The network device configures Y thresholds of one to five recommendation levels, each conflict degree is associated with four different CBR values or five CBR ranges, and each conflict degree is associated with eight different priorities.

```
RCI {
RCI-prefer-Y {Y1, Y2, Y3, Y4, Y5}
CBR {CBR 1, CBR 2, CBR 3, CBR 4}
Priority {1, 2, 3, 4, 5, 6, 7, 8}
}
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the priority information, and the resource conflict threshold is the resource overlapping information threshold or an overlapping ratio threshold. The priority information is a service priority of the second terminal device, and the service priority is indicated by SCI carried on the first resource.

When a priority value measured by the second terminal device is 1, the resource conflict threshold is determined as Y1 or the CBR 1. If the resource overlapping information is less than Y1, the first terminal device indicates that the first resource is a recommended resource, or if the resource overlapping ratio is less than the CBR 1, the first terminal device indicates that the first resource is a recommended resource. When a priority value measured by the second terminal device is 2, the resource conflict threshold is determined as Y2 or the CBR 2. If the resource overlapping information is less than Y2, the first terminal device indicates that the first resource is a recommended resource, or if the resource overlapping ratio is less than the CBR 2, the first terminal device indicates that the first resource is a recommended resource.

Example 2: The network device configures Y thresholds of one to five disrecommendation levels, each conflict degree is associated with four different CBR values or five CBR ranges, and each conflict degree is associated with eight different priorities.

```
RCI {
        RCI-notprefer-Y {Y6, Y7, Y8, Y9, Y10}
        CBR {CBR 1, CBR 2, CBR 3, CBR 4}
        Priority {1, 2, 3, 4, 5, 6, 7, 8}
        }
```

First configuration information indicates a resource conflict threshold, and the resource conflict threshold is associated with channel busy information and/or priority information. The resource conflict threshold is a resource overlapping information threshold and/or a resource overlapping information threshold.

For example, M=1, the resource conflict threshold is associated with the priority information and a CBR, and the resource conflict threshold is the resource overlapping information threshold. The priority information is a service priority of the second terminal device, and the service priority is indicated by SCI carried on the first resource.

When a priority value measured by the second terminal device is 1 and the CBR is the CBR 1, the resource conflict threshold is determined as Y6. If the resource overlapping information is greater than Y1, the first terminal device indicates that the first resource is a disrecommended resource. When a priority value measured by the second terminal device is 2 and the CBR is 3, the resource conflict threshold is determined as Y8. If the resource overlapping information is greater than Y8, the first terminal device indicates that the first resource is a recommended resource.

Example 3: The network device configures Y thresholds of one to five recommendation levels and Y thresholds of one to five disrecommendation levels, each conflict degree is associated with four different CBR values or five CBR ranges, and each conflict degree is associated with eight different priorities.

```
RCI {
RCI-prefer-Y {Y1, Y2, Y3, Y4, Y5}
CBR-prefer {CBR 1, CBR 2, CBR 3, CBR 4}
Priority-prefer {1, 2, 3, 4, 5, 6, 7, 8}
RCI-notprefer-Y {Y6, Y7, Y8, Y9, Y10}
CBR-prefer {CBR 1, CBR 2, CBR 3, CBR 4}
Priority-notprefer {1, 2, 3, 4, 5, 6, 7, 8}
1
```

In a possible implementation 10, the network device configures an indicated RSRP threshold, and the number of degrees may be associated with at least one of a CBR, a priority, an MCS, or a QoS requirement. Alternatively, the network device configures an indicated resource overlapping information threshold, and the number of degrees may be associated with at least one of a CBR, a priority, an MCS, or a QoS requirement.

When the conflict threshold is the overlapping information threshold, the possible implementation has a same or similar implementation and same or similar technical effect as the foregoing possible implementations 4 to 8, and a difference lies only in that the configured RSRP threshold is replaced with the configured overlapping information threshold. Details are not described herein again.

In a possible implementation 11, whether to activate a multi-bit indication is configured by the network device by using signaling.

Method 1: The network device configures enable/disable.

Indications of a plurality of states may be enabled or disabled. Indications of a plurality of states of disrecommendation may be separately enabled or disabled. Indications of a plurality of states of recommendation may be separately enabled or disabled.

RCI {disable-RCI, enable-RCI, disable-RCI-prefer, enable-RCI-prefer, disable-RCI-notprefer, enable-RCI-notprefer}

Method 2: The network device configures an enable priority.

RCI {disable, 1, 2, 3, 4, 5, 6, 7, 8},
RCI-prefer {disable, 1, 2, 3, 4, 5, 6, 7, 8}, or
RCI-notprefer {disable, 1, 2, 3, 4, 5, 6, 7, 8}.

Method 3: method 1+method 2

RCI {disable, 1, 2, 3, 4, 5, 6, 7, 8}
RCI-prefer {disable, 1, 2, 3, 4, 5, 6, 7, 8}
RCI-notprefer {disable, 1, 2, 3, 4, 5, 6, 7, 8}

In a possible implementation 12, a resource used for a plurality of resource conflict degrees is configured by the network device by using signaling.

Method 1: A PSFCH or SCI is used by the signaling.

RCI {PSFCH, SCI}

As a comparison scheme, the configuration may also be preconfigured.

Method 2: Frequency domain and code domain resources on a PSFCH are used by the signaling.

```
RCI {
PRB set        BIT STRING (SIZE (10…275))
PRB            index {1, 2, 3, 4, 5}
CS             ENUMERATED {n1, n2, n3, n6, n12}
}
```

It should be noted that the information configured by the network device in any one of the foregoing possible implementations may also be preconfigured.

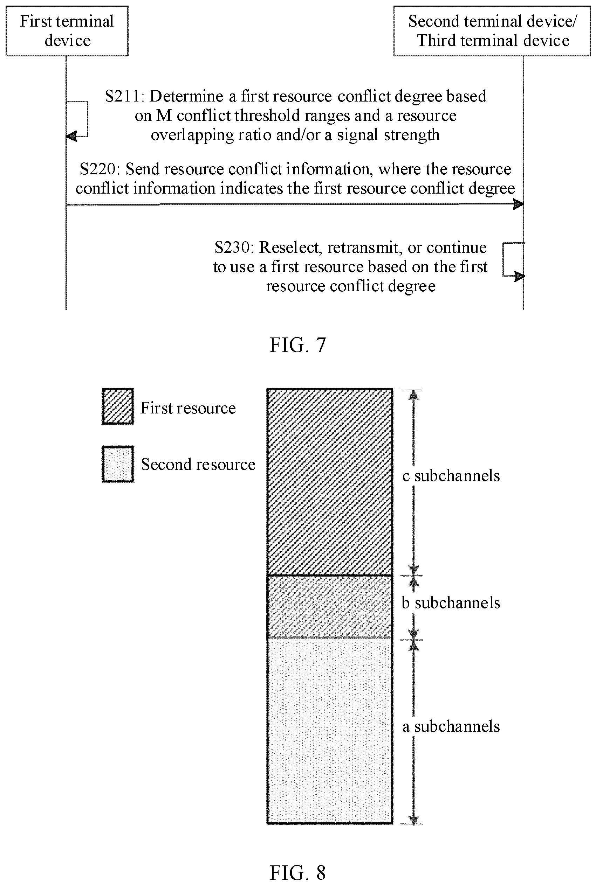

FIG. 7 is a schematic flowchart of a sidelink transmission method according to an embodiment of this application. As shown in FIG. 7, S210 specifically includes the following steps.

S211: The first terminal device determines the first resource conflict degree based on the first parameter and M conflict threshold ranges.

The conflict threshold area is associated with the resource conflict degree. The M conflict threshold ranges may be in a one-to-one correspondence with the M resource conflict degrees.

The conflict threshold range may be a range configured by configuring a largest value within the threshold range, or may be a range configured based on M-1 thresholds. Alternatively, the M conflict threshold ranges may be M=(N1+1)*(N2+1) ranges configured based on N1+N2 thresholds.

The conflict threshold range may be a range configured by configuring a largest value within an overlapping information threshold range and/or a signal strength threshold range, or may be a range configured based on M-1 overlapping information thresholds and/or M-1 signal strength thresholds. Alternatively, the M conflict threshold ranges may be M=(N1+1)*(N2+1) ranges configured based on N1 resource overlapping information thresholds and N2 signal strength thresholds.

For example, the first terminal device determines that the first parameter falls within a $k^{th}$ conflict threshold range, where the $k^{th}$ conflict threshold range is one of the M conflict threshold ranges. It should be noted that a number of first parameters is the same as a number of $k^{th}$ conflict threshold ranges. For example, when the number of first parameters is 2, the first parameters include the first signal strength and the second signal strength. The $k^{th}$ conflict threshold ranges include a threshold range corresponding to the first signal strength and a threshold range corresponding to the second signal strength.

Alternatively, the first terminal device may determine that the first parameter is greater than an $i^{th}$ threshold and/or less than a $j^{th}$ threshold, and then determine that the first parameter is greater than the $i^{th}$ threshold and/or less than the $j^{th}$ threshold and corresponds to one of the M conflict threshold ranges.

It should be understood that, corresponding to a case in which the first parameter includes different parameters, the conflict threshold range also includes at least one of the following threshold ranges:

the conflict threshold range is an overlapping information threshold range, and the overlapping information threshold range is associated with one of the M resource conflict degrees;
the conflict threshold range is a signal strength threshold range, and the signal strength threshold range is associated with one of the M resource conflict degrees;
the conflict threshold range is a signal strength threshold range, the signal strength threshold range is determined based on the resource overlapping information, and the signal strength threshold range is associated with the M resource conflict degrees;
the conflict threshold range is an overlapping information threshold range, the resource overlapping information threshold range is determined based on the signal strength, and the overlapping information threshold range is associated with the M resource conflict degrees; and
the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold, and the at least one resource conflict threshold is configured by the network device.

It should be noted that the at least one resource conflict threshold is configured by the network device or is preconfigured.

The following describes S211 in several implementations by using a before-collision indication scenario as an example in a case in which the first parameters are several different parameters.

Implementation 1: The first parameter is a signal strength A.

The signal strength may be, for example, any one of the first signal strength A1, the second signal strength A2, a ratio A1/A2 of the first signal strength to the second signal strength, a ratio A2/A1 of the second signal strength to the first signal strength, a ratio A1/(A1+A2) of the first signal strength to a sum of the first signal strength and the second signal strength, or a ratio A2/(A1+A2) of the second signal strength to a sum of the first signal strength and the second signal strength.

Correspondingly, the conflict threshold range may be the signal strength threshold range, namely, a threshold range obtained through division based on the signal strength threshold. When the first parameter is a ratio, for example, when the first parameter is any one of the ratio A1/A2 of the first signal strength to the second signal strength, the ratio A2/A1 of the second signal strength to the first signal strength, the ratio A1/(A1+A2) of the first signal strength to the sum of the first signal strength and the second signal strength, or the ratio A2/(A1+A2) of the second signal strength to the sum of the first signal strength and the second signal strength, the signal strength threshold for dividing the signal strength threshold range is also a corresponding ratio, and the threshold range is a range of the corresponding ratio.

In the implementation 1, it is assumed that two signal strength thresholds Th1 and Th2 are configured and Th1>Th2. Conflict threshold ranges (Th2, Th1] and (Th1, +∞) may be obtained through division based on Th1 and Th2, where (Th2, Th1] corresponds to the slight disrecommendation degree, and (Th1, +∞) corresponds to the disrecommendation degree. (-∞, Th2] corresponds to a resource on which no resource conflict occurs. Therefore, all resources may be recommended resources or may not be classified into a consideration scope of this implementation.

The first terminal device determines a conflict threshold range within which the first parameter falls, for example, may obtain the conflict threshold range by comparing the first parameter with each signal strength threshold. It may be understood that the conflict threshold range is in a one-to-one correspondence with the conflict degree. That is, the first terminal device may obtain the corresponding conflict degree based on a result of comparing the first parameter and each signal strength threshold.

For example, when the first parameter falls within (Th2, Th1], the first terminal device determines that the first resource conflict degree is the slight disrecommendation degree; when the first parameter falls within (Th1, +∞), the first terminal device determines that the first resource conflict degree is the disrecommendation degree; or when the first parameter falls within (-∞, Th2], the first terminal device determines that the first resource conflict degree is the recommendation degree or no indication of the resource conflict information is performed for this case.

The second terminal device determines, based on the first resource conflict degree indicated by the resource conflict information, to retransmit, reselect, or continue to use the first resource. For example, when the first resource conflict degree is the disrecommendation degree, the second terminal device performs retransmission or reselection. When the first resource conflict degree is the slight disrecommendation degree, the second terminal device determines, based on the first preset condition, to retransmit, reselect, or continue to use the first resource. For example, when a number of candidate resources in a candidate resource set of the second terminal device is less than a fourth preset value, the second terminal device continues to use the first resource, or when a number of candidate resources in a candidate resource set of the second terminal device is greater than or equal to a fourth preset value, the second terminal device performs retransmission or reselection.

In another example of the implementation 1, it is assumed that a plurality of signal strength thresholds Th1, Th2,..., and Thn are configured, and Th1>Th2...>Thn. Conflict threshold ranges (Th1, +∞), (Th2, Th1],..., and (Thn, Th(n-1)] may be obtained through division, where (Th1, +∞) corresponds to the first disrecommendation level, (Th2, Th1] corresponds to the second disrecommendation level, and (Thn, Th(n-1)] corresponds to the $M^{th}$ disrecommendation level. The first disrecommendation level to the M* disrecommendation level gradually decrease in disrecommendation degree. (-∞, Thn] corresponds to a resource on which no resource conflict occurs, and therefore corresponds to the recommendation level or no indication of the resource conflict information is performed for this case.

When the first resource conflict degree is the first disrecommendation level, the second terminal device performs retransmission or reselection. When the first resource conflict degree is not the first disrecommendation level, the second terminal device determines, based on the first preset condition, to retransmit, reselect, or continue to use the first resource. Alternatively, the first resource conflict degree is associated with a reselection probability, and the second terminal device determines, based on the reselection probability, to retransmit, reselect, or continue to use the first resource.

In some embodiments, when determining to retransmit, reselect, or continue to use the first resource, the second terminal device may measure the first resource, on which a resource conflict occurs and that is indicated by the resource conflict information, for example, determine a strength of a signal transmitted on the first resource. The second terminal device uses the strength, obtained through measurement, of the signal transmitted on the first resource as a third signal strength, and compares the third signal strength with the conflict threshold range corresponding to the first resource conflict degree, or compares the third signal strength with the signal strength determined by the first terminal device. If the second terminal device determines that the first resource is a low-interference resource, and the third signal strength is less than the signal strength determined by the first terminal device, it indicates that the third terminal device that uses the second resource for transmission is a hidden node of the second terminal device, and the second terminal device performs retransmission or reselection. If the second terminal device determines that the first resource is a high-interference resource, and the third signal strength is greater than the signal strength determined by the first terminal device, it indicates that the third terminal device that uses the second resource for transmission is an exposed node of the second terminal device. In other words, if a distance between the third terminal device and the second terminal device is less than a distance between the first terminal device and the third terminal device, the second terminal device continues to use the first resource. If the second terminal device determines that the first resource is a low-interference resource, and the third signal strength is greater than the signal strength determined by the first terminal device, the second terminal device continues to use the first resource. If the second terminal device determines that the first resource is a high-interference resource, and the third signal strength is less than the signal strength determined by the first terminal device, the second terminal device performs retransmission or reselection.

For example, if the first resource belongs to the candidate resource set of the second terminal device, the second terminal device determines that the first resource is the low-interference resource; or if a third signal strength corresponding to the first resource is less than a first threshold, the second terminal device determines that the first resource is the low-interference resource. Correspondingly, if the third signal strength corresponding to the first resource is greater than the first threshold, the second terminal device determines that the first resource is the high-interference resource.

Optionally, the first threshold may be the overlapping information threshold and/or the signal strength threshold. The first threshold is the same as a threshold corresponding to the first resource conflict degree.

In another example of the implementation 1, it is assumed that two signal strength thresholds Th1 and Th2 are configured and Th1<Th2. Conflict threshold ranges $(-\infty, Th1)$ and $[Th1, Th2)$ may be obtained through division based on Th1 and Th2, where $(-\infty, Th1)$ corresponds to the recommendation degree, and $[Th1, Th2)$ corresponds to the slight recommendation degree. $[Th2, +\infty)$ corresponds to a disrecommended resource. Therefore, the M conflict threshold ranges in this embodiment may not include the range.

When the first resource conflict degree is the recommendation degree, the second terminal device may continue to use the first resource. When the first resource conflict degree is the slight recommendation degree, the second terminal device may determine, based on the first preset condition, to retransmit, reselect, or continue to use the first resource. For example, when determining that a number of transmissions of signaling and/or data transmitted on the first resource is greater than a sixth preset value, the second terminal device continues to use the first resource, or when determining that a number of transmissions of signaling and/or data transmitted on the first resource is less than or equal to a sixth preset value, the second terminal device performs retransmission or reselection.

In another example of the implementation 1, it is assumed that a plurality of signal strength thresholds Th1, Th2,..., and Thn are configured, and Th1<Th2...<Thn. Conflict threshold ranges $(-\infty, Th1)$, $[Th1, Th2)$,..., and $[Th(n-1), Thn)$ may be obtained through division, where $(-\infty, Th1)$ corresponds to the first recommendation level, $[Th1, Th2)$ corresponds to the second recommendation level,..., and $[Th(n-1), Thn)$ corresponds to the M* recommendation level. The first recommendation level to the M$^{th}$ recommendation level gradually decrease in recommendation degree. $[Thn, +\infty)$ corresponds to a disrecommended resource. Therefore, the M conflict threshold ranges in this embodiment may not include the range.

When the first resource conflict degree is the first recommendation level, the second terminal device may continue to use the first resource. When the first resource conflict degree is not the first recommendation level, the second terminal device may determine, based on the first preset condition, to retransmit, reselect, or continue to use the first resource.

In some embodiments, when determining to retransmit, reselect, or continue to use the first resource, the second terminal device may measure the first resource on which a resource conflict occurs and that is indicated by the resource conflict information, for example, determine a strength of a signal transmitted on the first resource. The second terminal device uses the strength, obtained through measurement, of the signal transmitted on the first resource as a third signal strength, and compares the third signal strength with the conflict threshold range corresponding to the first resource conflict degree, or compares the third signal strength with the signal strength determined by the first terminal device. If the second terminal device determines that the first resource is a low-interference resource, and the third signal strength is less than the signal strength determined by the first terminal device, it indicates that the third terminal device that uses the second resource for transmission is a hidden node of the second terminal device, and the second terminal device performs retransmission or reselection. If the second terminal device determines that the first resource is a high-interference resource, and the third signal strength is greater than the signal strength determined by the first terminal device, it indicates that the third terminal device that uses the second resource for transmission is an exposed node of the second terminal device. In other words, if a distance between the third terminal device and the second terminal device is less than a distance between the first terminal device and the third terminal device, the second terminal device continues to use the first resource. If the second terminal device determines that the first resource is a low-interference resource, and the third signal strength is greater than the signal strength determined by the first terminal device, the second terminal device continues to use the first resource. If the second terminal device determines that the first resource is a high-interference resource, and the third signal strength is less than the signal strength determined by the first terminal device, the second terminal device performs retransmission or reselection.

For example, if the first resource belongs to the candidate resource set of the second terminal device, the second terminal device determines that the first resource is the low-interference resource; or if a third signal strength corresponding to the first resource is less than a first threshold, the second terminal device determines that the first resource is the low-interference resource. Correspondingly, if the third signal strength corresponding to the first resource is greater than the first threshold, the second terminal device determines that the first resource is the high-interference resource.

Optionally, the first threshold may be the overlapping information threshold and/or the signal strength threshold. The first threshold is the same as a threshold corresponding to the first resource conflict degree.

It should be noted that the signal strength threshold in the implementation 1 may be a value in an RSRP threshold table, for example, an RSRP threshold Th(pi, pj) in Table 1.

The RSRP threshold may be determined from the preconfigured RSRP threshold table based on a parameter delivered by a higher layer. The following provides description with reference to Table 1.

**Table 1**

| Th($p_i$, $p_j$) | | $p_i$ | | | | | | | |
|---|---|---|---|---|---|---|---|---|---|
| $p_j$ | | 1 | 2 | 3 | 4 | 5 | 6 | 7 | 8 |
| | 1 | $Th_{11}$ | $Th_{12}$ | $Th_{13}$ | $Th_{14}$ | $Th_{15}$ | $Th_{16}$ | $Th_{17}$ | $Th_{18}$ |
| | 2 | $Th_{21}$ | $Th_{22}$ | $Th_{23}$ | $Th_{24}$ | $Th_{25}$ | $Th_{26}$ | $Th_{27}$ | $Th_{28}$ |
| | 3 | $Th_{31}$ | $Th_{32}$ | $Th_{33}$ | $Th_{34}$ | $Th_{35}$ | $Th_{36}$ | $Th_{37}$ | $Th_{38}$ |
| | 4 | $Th_{41}$ | $Th_{42}$ | $Th_{43}$ | $Th_{44}$ | $Th_{45}$ | $Th_{46}$ | $Th_{47}$ | $Th_{48}$ |
| | 5 | $Th_{51}$ | $Th_{52}$ | $Th_{53}$ | $Th_{54}$ | $Th_{55}$ | $Th_{56}$ | $Th_{57}$ | $Th_{58}$ |
| | 6 | $Th_{61}$ | $Th_{62}$ | $Th_{63}$ | $Th_{64}$ | $Th_{65}$ | $Th_{66}$ | $Th_{67}$ | $Th_{68}$ |
| | 7 | $Th_{71}$ | $Th_{72}$ | $Th_{73}$ | $Th_{74}$ | $Th_{75}$ | $Th_{76}$ | $Th_{77}$ | $Th_{78}$ |
| | 8 | $Th_{81}$ | $Th_{82}$ | $Th_{83}$ | $Th_{84}$ | $Th_{85}$ | $Th_{86}$ | $Th_{87}$ | $Th_{88}$ |

When a physical layer is triggered to select a resource, the higher layer delivers several parameters. The network device configures the RSRP threshold table for resource selection, for example, Th($p_i$, $p_j$) in Table 1. $i = p_i + (p_j - 1) * 8$. $p_i$ is a service priority of the third terminal device, and $p_j$ is a service priority of the second terminal device, that is, $p_j = prio_{TX}$. The unit of Th($p_i$, $p_j$) may be dBm.

It should be noted that an RSRP is merely an example of the signal strength, and should not constitute any limitation on this application. In some embodiments, the signal strength may further include, for example, an RSRP, RSRQ (Reference Signal Received Quality, reference signal received quality), a channel quality indicator (Channel Quality Indicator, CQI), and the like.

In some embodiments, the first parameter includes at least two of the first signal strength A1, the second signal strength A2, the ratio A1/A2 of the first signal strength to the second signal strength, the ratio A2/A1 of the second signal strength to the first signal strength, the ratio A1/(A1+A2) of the first signal strength to the sum of the first signal strength and the second signal strength, or the ratio A2/(A1+A2) of the second signal strength to the sum of the first signal strength and the second signal strength. Correspondingly, the conflict threshold range should include a threshold range for each parameter in the first parameter.

Implementation 2: The first parameter is resource overlapping information.

The resource overlapping information may be the first overlapping ratio, the second overlapping ratio, the larger value of the first overlapping ratio and the first overlapping ratio, the first frequency domain information of the overlapping resource of the first resource and the second resource, the second frequency domain information of the non-overlapping resource in the first resource, or the third frequency domain information of the non-overlapping resource in the second resource.

As shown in FIG. 8, a number of subchannels of the first resource is a+b, and a number of subchannels of the second resource is b+c. The first resource and the second resource have b overlapping subchannels.

The first overlapping ratio is a/(a+b), the second overlapping ratio is b/(b+c), the larger value of the first overlapping ratio and the first overlapping ratio is max{ a/(a+b), b/(b+c)}, the first frequency domain information of the overlapping resource of the first resource and the second resource is b subchannels, the second frequency domain information of the non-overlapping resource in the first resource is a subchannels, or the third frequency domain information of the non-overlapping resource in the second resource is c subchannels.

Optionally, the first frequency domain information of the overlapping resource of the first resource and the second resource is b subchannels and frequency domain locations of the b subchannels. The second frequency domain information of the non-overlapping resource in the first resource is a subchannels and frequency domain locations of the a subchannels, or the third frequency domain information of the non-overlapping resource in the second resource is c subchannels and frequency domain locations of the c subchannels.

Correspondingly, the conflict threshold range may be the overlapping information threshold range, namely, a threshold range obtained through division based on the overlapping ratio threshold.

In the implementation 2, it is assumed that one overlapping information threshold Y is configured. Overlapping information threshold ranges (0, Y) and [Y, +∞) are obtained through division based on Y, where (0, Y) corresponds to the slight recommendation degree, and [Y, +∞) or [Y, 1] corresponds to the disrecommendation degree.

When the first parameter falls within (0, Y), the first terminal device determines that the first resource conflict degree is the slight recommendation degree. When the first parameter falls within [Y, +∞) or [Y, 1], the first terminal device determines that the first resource conflict degree is the disrecommendation degree.

Optionally, the first terminal device obtains one overlapping information threshold Y. The first terminal device determines the resource overlapping information of the first resource and the second resource. The resource overlapping information is the first overlapping ratio, namely, b/(a+b). When b/(a+b) falls within [0, Y), the first terminal device indicates that the first resource is a slightly disrecommended resource. The second terminal device may continue to use the first resource for the resource, or reselect, retransmit, or continue to use the first resource based on the first preset condition. When b/(a+b) falls within [Y, +∞), the first terminal device indicates that the first resource is a disrecommended resource. The second terminal device retransmits or reselects the first resource.

Optionally, the first terminal device obtains one overlapping information threshold Y The first terminal device determines the resource overlapping information of the first resource and the second resource. The resource overlapping information is the third frequency domain information of the non-overlapping resource in the second resource, that is, c subchannels. When c falls within [0, Y), the first terminal device indicates that the first resource is a slightly disrecommended resource. The second terminal device excludes the first resource from the candidate resource set during resource reselection. When c falls within [Y, +∞), the first terminal device indicates that the first resource is a disrecommended resource. The second terminal device excludes all candidate resources in a slot of the first resource from the candidate resource set during resource reselection.

Optionally, the first terminal device obtains M overlapping information threshold ranges. The first terminal device determines the resource overlapping information of the first resource and the second resource. The resource overlapping information is the first overlapping ratio, namely, b/(a+b). b/(a+b) falls within a first overlapping information threshold range, and the first overlapping information threshold range is one of the M overlapping information threshold ranges. The first parameter is the first frequency domain information, the second frequency domain information, and/or the third frequency domain information. The first resource conflict degree is associated with the first overlapping information threshold range. The first resource conflict degree is one of the M resource conflict degrees.

The second terminal device determines the range of the first parameter based on the first resource conflict degree, where the first parameter is the subchannel location and/or the number of subchannels of the first frequency domain information, the subchannel location and/or the number of subchannels of the second frequency domain information, and/or the subchannel location and/or the number of subchannels of the third frequency domain information. During reselection, the second terminal device excludes, from the candidate resource set, a resource associated with the first resource conflict degree; or during reselection, the second terminal device excludes, from the candidate resource set, a resource associated with the range of the first parameter.

When the first resource conflict degree indicated by the resource conflict information is the recommendation degree, the second terminal device continues to use the first resource. When the first resource conflict degree is the slight recommendation degree, the second terminal device determines, based on the first preset condition, to retransmit, reselect, or continue to use the first resource. For example, when the number of remaining resources of the SL grant is less than the seventh preset value, the second terminal device continues to use the first resource, or when the number of remaining resources of the SL grant is greater than or equal to the seventh preset value, the second terminal device performs retransmission or reselection.

In another example of the implementation 2, it is assumed that a plurality of overlapping ratio thresholds Y1, Y2,..., and Yn are configured, and Y1>Y2...>Yn. Conflict threshold ranges [Y1, +∞), [Y2, Y1),..., [Yn, 0) may be obtained through division, where [Y1, +∞) corresponds to the first disrecommendation level, [Y2, Y1) corresponds to the second disrecommendation level, and [Yn, 0) corresponds to the M* disrecommendation level. The first disrecommendation level to the M$^{th}$ disrecommendation level gradually decrease in disrecommendation degree.

When the first resource conflict degree is the first disrecommendation level, the second terminal device performs retransmission or reselection. When the first resource conflict degree is not the first disrecommendation level, the second terminal device determines, based on the first preset condition, to retransmit, reselect, or continue to use the first resource.

In some embodiments, when determining to retransmit, reselect, or continue to use the first resource, the second terminal device may determine the resource overlapping information, indicated by the resource conflict information, of the first resource and the second resource between which there is a resource conflict. The second terminal device uses the resource overlapping information of the first resource and the second resource determined by the second terminal device as the first overlapping ratio, and compares the first overlapping ratio with a conflict threshold range corresponding to the first resource conflict degree, or compares the first overlapping ratio with resource overlapping information determined by the first terminal device. If the second terminal device determines that the first overlapping ratio is less than the resource overlapping information determined by the first terminal device, the second terminal device performs retransmission or reselection; or if the second terminal device determines that the first overlapping ratio is greater than the resource overlapping information determined by the first terminal device, the second terminal device continues to use the first resource.

In another example of the implementation 2, it is assumed that one piece of resource overlapping information Y is configured. Conflict threshold ranges (0, Y) and [Y, +∞) may be obtained through division, where (0, Y) corresponds to the recommendation degree, and [Y, +∞) corresponds to the slight recommendation degree.

When the first parameter falls within (0, Y), the first terminal device determines that the first resource conflict degree is the recommendation degree. When the first parameter falls within [Y, +∞), the first terminal device determines that the first resource conflict degree is the slight recommendation degree.

When the first resource conflict degree is the recommendation degree, the second terminal device may continue to use the first resource. When the first resource conflict degree is the slight recommendation degree, the second terminal device may determine, based on the first preset condition, to retransmit, reselect, or continue to use the first resource. For example, when determining that a number of transmissions of signaling and/or data transmitted on the first resource is greater than a sixth preset value, the second terminal device continues to use the first resource, or when determining that a number of transmissions of signaling and/or data transmitted on the first resource is less than or equal to a sixth preset value, the second terminal device performs retransmission or reselection.

In another example of the implementation 2, it is assumed that two pieces of resource overlapping information Y1 and Y2 are configured, and Y1>Y2. Conflict threshold ranges (0, Y2) and [Y2, Y1) may be obtained through division, where (0, Y2) corresponds to the recommendation degree, [Y2, Y1) corresponds to the slight recommendation degree, [Y1, +∞) corresponds to the disrecommendation degree, and the M conflict threshold ranges in this embodiment may not include the range.

When the first parameter falls within (0, Y2), the first terminal device determines that the first resource conflict degree is the recommendation degree. When the first parameter falls within [Y2, Y1), the first terminal device determines that the first resource conflict degree is the slight recommendation degree.

When the first resource conflict degree is the recommendation degree, the second terminal device may continue to use the first resource. When the first resource conflict degree is the slight recommendation degree, the second terminal device may determine, based on the first preset condition, to retransmit, reselect, or continue to use the first resource.

In another example of the implementation 2, it is assumed that a plurality of overlapping ratio thresholds Y1, Y2,..., and Yn are configured, and Y1<Y2...<Yn. Conflict threshold ranges (0, Y1), [Y1, Y2),..., and [Y(n-1), Yn) may be obtained through division, where (0, Y1) corresponds to the first recommendation level, [Y1, Y2) corresponds to the second recommendation level,..., and [Y(n-1), Yn) corresponds to the $M^{th}$ recommendation level. The first recommendation level to the $M^{th}$ recommendation level gradually decrease in recommendation degree. [Thn, +∞) corresponds to a disrecommended resource.

When the first resource conflict degree is the first recommendation level, the second terminal device may continue to use the first resource. When the first resource conflict degree is not the first recommendation level, the second terminal device may determine, based on the first preset condition, to retransmit, reselect, or continue to use the first resource.

In some embodiments, when determining to retransmit, reselect, or continue to use the first resource, the second terminal device may determine the resource overlapping information, indicated by the resource conflict information, of the first resource and the second resource between which there is a resource conflict. The second terminal device uses the resource overlapping information of the first resource and the second resource determined by the second terminal device as the first overlapping ratio, and compares the first overlapping ratio with a conflict threshold range corresponding to the first resource conflict degree, or compares the first overlapping ratio with resource overlapping information determined by the first terminal device. If the second terminal device determines that the first overlapping ratio is less than the resource overlapping information determined by the first terminal device, the second terminal device performs retransmission or reselection; or if the second terminal device determines that the first overlapping ratio is greater than the resource overlapping information determined by the first terminal device, the second terminal device continues to use the first resource.

In this embodiment, the M conflict threshold ranges are associated with the M resource conflict degrees. The first terminal device compares the first parameter with the M conflict threshold ranges, to determine the conflict threshold range within which the first parameter falls, so as to determine the corresponding first resource conflict degree. This can avoid setting the corresponding resource conflict degree for each first parameter, improves convenience of determining the resource conflict degree, and improves performance of a communication system.

In some embodiments, the resource overlapping information in the first parameter includes at least two of the first overlapping ratio, the second overlapping ratio, the larger value of the first overlapping ratio and the first overlapping ratio, the first frequency domain information of the overlapping resource of the first resource and the second resource, the second frequency domain information of the non-overlapping resource in the first resource, or the third frequency domain information of the non-overlapping resource in the second resource. Correspondingly, the conflict threshold range should include a threshold range for each piece of resource overlapping information in the first parameter.

In some embodiments, the first parameter includes any one or more of the foregoing signal strengths or signal strength ratios, and any one or more pieces of the foregoing resource overlapping information. Correspondingly, the conflict threshold range should include a conflict threshold range for each signal strength or each signal strength ratio and the resource overlapping information in the first parameter.

Optionally, the first terminal device may further determine, based on a modulation and coding scheme (Modulation and Coding Scheme, MCS) and a quality of service (Quality of Service, QoS) requirement of the second terminal device, whether to send the resource conflict information. Optionally, the second terminal device may further determine, based on an MCS and a QoS requirement of the second terminal device, whether to trigger reselection and retransmission.

In some embodiments, at least one of a time domain resource, a frequency domain resource, or a code domain resource that is used by the first terminal device to send the resource conflict information indicates the first resource conflict degree.

For example, at least one of the time domain resource, the frequency domain resource, or the code domain resource that is used by the first terminal device to send the resource conflict information indicates at least one of the following:

a signal strength threshold range and an overlapping information threshold range that correspond to the first resource conflict degree, and a combination of the overlapping information threshold range and the signal strength threshold range.

In an example, the first terminal device may carry the resource conflict information on the PSFCH. At least four implementations may be included as follows.

Manner 1: M different resource conflict PRB sets are used to respectively carry resource conflict information corresponding to the M resource conflict degrees.

For example, the M PRB sets respectively correspond to the M resource conflict degrees. The first terminal device uses a resource in a PRB set 1 to carry the resource conflict information, which indicates that the first resource conflict degree of the resource conflict information is a first conflict degree; the first terminal device uses a resource in a PRB set 2 to carry the resource conflict information, which indicates that the first resource conflict degree of the resource conflict information is a second conflict degree;...; and the first terminal device uses a resource in a PRB set M to carry the resource conflict information, which indicates that the first resource conflict degree of the resource conflict information is an M* conflict degree. Correspondingly, the second terminal device may determine, based on the PRB set in which the resource conflict information is received, the first resource conflict degree indicated by the resource conflict information. For example, if the second terminal device receives the resource conflict information in the PRB set 1, the second terminal device determines that the first resource conflict degree indicated by the resource conflict information is the first conflict degree.

Example 1: The M PRB sets respectively correspond to the M recommendation levels. The first terminal device uses the resource in the PRB set 1 to carry the resource conflict information, which indicates that the first resource conflict degree of the resource conflict information is the first recommendation level; the first terminal device uses the resource in the PRB set 2 to carry the resource conflict information, which indicates that the first resource conflict degree of the resource conflict information is the second recommendation level;...; and the first terminal device uses the resource in the PRB set M to carry the resource conflict information, which indicates that the first resource conflict degree of the resource conflict information is the M* recommendation level.

Example 2: The M PRB sets respectively correspond to the M disrecommendation levels. The first terminal device uses the resource in the PRB set 1 to carry the resource conflict information, which indicates that the first resource conflict degree of the resource conflict information is the first disrecommendation level; the first terminal device uses the resource in the PRB set 2 to carry the resource conflict information, which indicates that the first resource conflict degree of the resource conflict information is the second disrecommendation level;...; and the first terminal device uses the resource in the PRB set M to carry the resource conflict information, which indicates that the first resource conflict degree of the resource conflict information is the M* disrecommendation level.

Manner 2: M PRBs in a resource conflict PRB set are used to respectively carry resource conflict information corresponding to the M resource conflict degrees.

For example, the M PRBs respectively correspond to the M resource conflict degrees. The first terminal device uses a resource with a PRB index 1 to carry the resource conflict information, which indicates that the first resource conflict degree indicated by the resource conflict information is a first conflict degree; the first terminal device uses a resource with a PRB index 2 to carry the resource conflict information, which indicates that the first resource conflict degree of the resource conflict information is a second conflict degree;...; and the first terminal device uses a resource with a PRB index M to carry the resource conflict information, which indicates that the first resource conflict degree of the resource conflict information is an M* conflict degree. Correspondingly, the second terminal device may determine, based on the PRB index in which the resource conflict information is received, the first resource conflict degree indicated by the resource conflict information. For example, if the second terminal device receives the resource conflict information in the PRB index 1, the second terminal device determines that the first resource conflict degree indicated by the resource conflict information is the first conflict degree.

Example 1: The M PRBs respectively correspond to the M recommendation levels. The first terminal device uses the resource with the PRB index 1 to carry the resource conflict information, which indicates that the first resource conflict degree indicated by the resource conflict information is the first recommendation level; the first terminal device uses the resource with the PRB index 2 to carry the resource conflict information, which indicates that the first resource conflict degree of the resource conflict information is the second recommendation level;...; and the first terminal device uses the resource with the PRB index M to carry the resource conflict information, which indicates that the first resource conflict degree of the resource conflict information is the M* recommendation level.

Example 2: The M PRBs respectively correspond to the M disrecommendation levels. The first terminal device uses the resource with the PRB index 1 to carry the resource conflict information, which indicates that the first resource conflict degree indicated by the resource conflict information is the first disrecommendation level; the first terminal uses the resource with the PRB index 2 to carry the resource conflict information, which indicates that the first resource conflict degree of the resource conflict information is the second disrecommendation level;...; and the first terminal device uses the resource with the PRB index M to carry the resource conflict information, which indicates that the first resource conflict degree of the resource conflict information is the M* disrecommendation level.

Manner 3: The first resource conflict degree is indicated by different cyclic shift (Cyclic Shift Code, CS) sequences on the PSFCH.

In other words, the resource conflict information includes the CS sequence, and the first resource conflict degree is indicated by the CS sequence.

In this manner 3, the M resource conflict degrees correspond to M CS sequences. The M CS sequences may be carried in one or more PRB sets, or may be carried in a same PRB or different PRBs. Different resource conflict degrees are implicitly indicated by different CS sequences.

For example, two CS sequences {0, 6} are used to distinguish two resource conflict degrees. Three CS sequences {0, 4, 8} are used to distinguish three resource conflict degrees. Four CS sequences {0, 3, 6, 9} are used to distinguish four resource conflict degrees. Six CS sequences {0, 2, 4, 6, 8, 10} are used to distinguish six resource conflict degrees. Twelve CS sequences {0, 1, 2, 3, 4, 5, 6, 7, 8, 9, 10, 11} are used to distinguish twelve resource conflict degrees.

For example, the M CS sequences respectively correspond to the M resource conflict degrees. A first resource conflict degree is indicated by a CS sequence 1; a second resource conflict degree is indicated by a CS sequence 2;...; and an M* resource conflict degree is indicated by a CS sequence M. The CS sequence 1 indicates that an index of the CS sequence is 1, that is, corresponds to the CS sequence 0 in the foregoing two CS sequences {0, 6}, or corresponds to 0 in the foregoing three CS sequences {0, 4, 8}. It should be noted that a value of the index of the CS sequence is not limited in this embodiment of this application. For example, the index of the CS sequence may alternatively start from 0.

Example 1: The M CS sequences respectively correspond to the M recommendation levels. The CS sequence 1 indicates the first recommendation level; the CS sequence 2 indicates the second recommendation level;...; and the CS sequence M indicates the M* recommendation level.

Example 2: The M CS sequences respectively correspond to the M disrecommendation levels. The CS sequence 1 indicates the first disrecommendation level; the CS sequence 2 indicates the second disrecommendation level;...; and the CS sequence M indicates the M* disrecommendation level.

Optionally, the CS sequence may alternatively be another sequence, for example, a root sequence. A form or a generation manner of the sequence is not limited in the present invention.

Manner 4: At least two of the manner 1, the manner 2, and the manner 3 may be combined to indicate the M resource conflict degrees.

For example, there are A1 PRB sets, one PRB set includes A2 PRBs, and A3 CS sequences are used.

1. A combination of the manner 1 and the manner 2 may implicitly indicate at least A1*A2 different resource conflict degrees (that is, 0<M<=A1*A2).

2. A combination of the manner 1 and the manner 3 may implicitly indicate at least A1*A3 different resource conflict degrees (that is, 0<M<=A1*A3).

3. A combination of the manner 2 and the manner 3 may implicitly indicate at least A2*A3 different resource conflict degrees (that is, 0<M<=A2*A3).

4. A combination of the manner 1, the manner 2, and the manner 3 may implicitly indicate at least A1*A2*A3 different resource conflict degrees (that is, 0<M<=A1*A2*A3).

In another example, the first terminal device may indicate the first resource conflict degree based on the SCI. In other words, the SCI may include the resource conflict information.

The SCI may be first-level control information. For example, the first resource conflict degree is indicated by a field of remaining 2 to 4 bits in the first-level control information. The SCI indicates A resources, where a first resource is a resource on which the SCI is sent, and remaining A-1 resources are reserved resources. The first terminal device indicates the first resource based on the SCI, and the first resource is indicated by a corresponding field indicating a reserved resource. In the before-collision scenario, because the first resource in the A resources is the resource on which the SCI is sent, only a plurality of states of the remaining A-1 resources may be indicated, for example, A-1 bits indicate whether the A-1 resources are recommended or disrecommended, or 2*A bits may indicate four resource conflict degrees of the A resources: the recommendation degree, the slight recommendation degree, the slight disrecommendation degree, and the disrecommendation degree; or only a plurality of resource conflict degrees of the remaining A-1 resources may be indicated, for example, 2*A-2 bits indicate four recommendation degrees of the A-1 resources: the recommendation degree, the slight recommendation degree, the slight disrecommendation degree, and the disrecommendation degree.

The SCI may alternatively be second-level control information. The second-level control information may be existing second-level control information indicated by first-level control information, or may be new second-level control information indicated by first-level control information.

The SCI may alternatively be third-level control information. The third-level control information may be indicated by first-level control information or second-level control information.

It should be understood that, when the SCI is the new second-level control information or the third-level control information, a field that is in the SCI and that is used to carry the resource conflict information is not limited by a number of bits, and may carry a plurality of resources and corresponding resource conflict degrees. In addition, a larger number of degrees indicated by the SCI indicates higher bit overheads.

For example, $\lceil \log_2 M \rceil$ bits are needed to indicate M states of one resource. If P bits are needed to indicate one resource, $P + \lceil \log_2 M \rceil$ bits are needed to indicate the resource and a resource conflict degree of the resource.

For another example, $N + \lceil log_2 M \rceil$, $M + \lceil log_2 N \rceil$, or $\lceil \log_2 M \cdot N \rceil$ bits are needed to indicate M states of the N resources. If Q bits are needed to indicate the N resources, $Q + M + \lceil log_2 N \rceil$, $Q + M + \lceil log_2 N \rceil$, or $Q + \lceil \log_2 M \cdot N \rceil$ bits are needed to indicate the resources and resource conflict degrees of the resources.

In this embodiment, at least one of a time domain resource, a frequency domain resource, or a code domain resource that is used by the first terminal device to send the resource conflict information indicates the first resource conflict degree. The first terminal device sends, on different frequency domain resources, resource conflict information indicating different resource conflict degrees, and/or indicates the first resource conflict degree based on different CS sequences, thereby reducing transmission resources occupied by the resource conflict information.

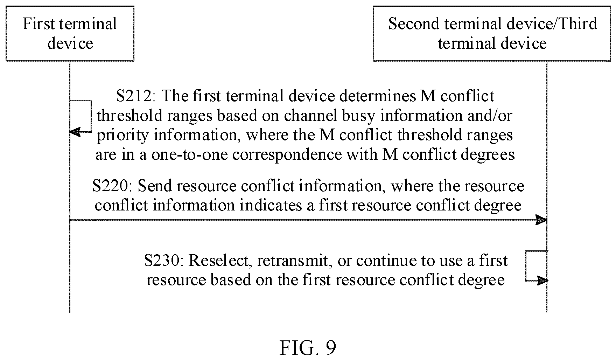

FIG. 9 is a schematic flowchart of a sidelink transmission method according to an embodiment of this application.

In some embodiments, S210 in FIG. 6 may specifically include S212 shown in FIG. 9.

S212: The first terminal device determines M conflict threshold ranges based on channel busy information and/or priority information, where the M conflict threshold ranges are in a one-to-one correspondence with M conflict degrees.

It should be noted that the first terminal device may obtain the channel busy information, for example, obtain a CBR through measurement; and/or the first terminal device may obtain the priority information, for example, determine a service priority of the second terminal device.

The channel busy information is a CBR measured by the first terminal and/or a CBR measured by the second terminal device. The priority information is the service priority of the second terminal device and/or a service priority of the third terminal device.

Different channel busy information and/or priority information are/is separately associated with the M conflict threshold ranges. The first terminal device determines a corresponding first conflict threshold range based on a determined value of the channel busy information and/or a determined value of the priority information, and then determines a resource conflict degree corresponding to the first conflict threshold range as the first resource conflict degree.

For example, resource conflict information sent by the first terminal device to the second terminal device and/or the third terminal device may indicate only whether there is a resource conflict between a first resource and a second resource. For example, a 1-bit field is used for indication. When there is a resource conflict, the field is 1, or when there is no resource conflict, the field is 0. Alternatively, when there is a resource conflict, the field is 0, or when there is no resource conflict, the field is 1. Alternatively, when there is no resource conflict, the resource conflict information is not sent.

When receiving the resource conflict information indicating that there is a resource conflict between the first resource and the second resource, the second terminal device obtains the channel busy information and/or the priority information. For example, the second terminal device may obtain the CBR through measurement, and determine service priority information of the second terminal device. Further, the second terminal device determines the corresponding first conflict threshold range, that is, the first resource conflict degree based on the channel busy information and/or the priority information. In other words, the second terminal device further determines the first resource conflict degree based on the first conflict threshold range.

For example, the CBR measured by the first terminal device is a CBR 1, and the CBR 1 corresponds to an RSRP 1. If an RSRP measurement value of the first resource is greater than or equal to the RSRP 1, that is, the RSRP measurement value falls within a conflict threshold range [RSRP 1, +∞), the first terminal device uses 1 bit to indicate that there is a conflict on the first resource. The second terminal device determines, based on a CBR measurement value, that a signal strength threshold is the RSRP 1. The second terminal device determines that there is the conflict on the first resource, and the RSRP measurement value of the conflict resource is greater than or equal to the RSRP 1.

For example, the CBR measured by the first terminal device is a CBR 1, and the CBR 1 corresponds to an RSRP 1. If an RSRP measurement value of the first resource is greater than or equal to the RSRP 1, that is, the RSRP measurement value falls within a conflict threshold range [RSRP 1, +∞), the first terminal device indicates that a resource conflict degree of the first resource is the first resource conflict degree. The second terminal device determines, based on a CBR measurement value, that a signal strength threshold is the RSRP 1. The second terminal device determines that the first resource corresponds to the first resource conflict degree, and the RSRP measurement value of the conflict resource is greater than or equal to the RSRP 1.

For example, the first terminal device determines that the service priority of the second terminal device is a priority P1, and the priority P1 corresponds to an RSRP 1. If an RSRP measurement value of the first resource is greater than or equal to the RSRP 1, that is, the RSRP measurement value falls within a conflict threshold range [RSRP 1, +∞), the first terminal device uses 1 bit to indicate that there is a conflict on the first resource. The second terminal device determines, based on the service priority of the second terminal device being the priority P1, that a signal strength threshold is the RSRP 1. The second terminal device determines that there is the conflict on the first resource, and the RSRP measurement value of the conflict resource is greater than or equal to the RSRP 1.

For example, the first terminal device determines that the service priority of the second terminal device is a priority P1, and the priority P1 corresponds to an RSRP 1. If an RSRP measurement value of the first resource is greater than or equal to the RSRP 1, that is, the RSRP measurement value falls within a conflict threshold range [RSRP 1, +∞), the first terminal device indicates that a resource conflict degree of the first resource is the first resource conflict degree. The second terminal device determines, based on the service priority of the second terminal device being the priority P1, that a signal strength threshold is the RSRP 1. The second terminal device determines that the first resource corresponds to the first resource conflict degree, and the RSRP measurement value of the conflict resource is greater than or equal to the RSRP 1.

For example, the CBR measured by the first terminal device is a CBR 1, and the CBR 1 corresponds to resource overlapping information 1. If a resource overlapping information measurement value of the first resource is greater than or equal to the resource overlapping information 1, that is, the resource overlapping information measurement value falls within a conflict threshold range [resource overlapping information 1, +∞), the first terminal device uses 1 bit to indicate that there is a conflict on the first resource. The second terminal device determines, based on a CBR measurement value, that a signal strength threshold is the resource overlapping information 1. The second terminal device determines that there is the conflict on the first resource, and the resource overlapping information measurement value of the conflict resource is greater than or equal to the resource overlapping information 1.

For example, the CBR measured by the first terminal device is a CBR 1, and the CBR 1 corresponds to resource overlapping information 1. If a resource overlapping information measurement value of the first resource is greater than or equal to the resource overlapping information 1, that is, the resource overlapping information measurement value falls within a conflict threshold range [resource overlapping information 1, +∞), the first terminal device indicates that a resource conflict degree of the first resource is the first resource conflict degree. The second terminal device determines, based on a CBR measurement value, that a signal strength threshold is the resource overlapping information 1. The second terminal device determines that the first resource corresponds to the first resource conflict degree, and the resource overlapping information measurement value of the conflict resource is greater than or equal to the resource overlapping information 1.

For example, the first terminal device determines that the service priority of the second terminal device is a priority P1, and the priority P1 corresponds to resource overlapping information 1. If a resource overlapping information measurement value of the first resource is greater than or equal to the resource overlapping information 1, that is, the resource overlapping information measurement value falls within a conflict threshold range [resource overlapping information 1, +∞), the first terminal device uses 1 bit to indicate that there is a conflict on the first resource. The second terminal device determines, based on the service priority of the second terminal device being the priority P1, that a signal strength threshold is the resource overlapping information 1. The second terminal device determines that there is the conflict on the first resource, and the resource overlapping information measurement value of the conflict resource is greater than or equal to the resource overlapping information 1.

For example, the first terminal device determines that the service priority of the second terminal device is a priority P1, and the priority P1 corresponds to resource overlapping information 1. If a resource overlapping information measurement value of the first resource is greater than or equal to the resource overlapping information 1, that is, the resource overlapping information measurement value falls within a conflict threshold range [resource overlapping information 1, +∞), the first terminal device indicates that a resource conflict degree of the first resource is the first resource conflict degree. The second terminal device determines, based on the service priority of the second terminal device being the priority P1, that a signal strength threshold is the resource overlapping information 1. The second terminal device determines that the first resource corresponds to the first resource conflict degree, and the resource overlapping information measurement value of the conflict resource is greater than or equal to the resource overlapping information 1.

Optionally, a correspondence between the channel busy information and/or the priority information and the conflict threshold range may be preset in the first terminal device and the second terminal device, for example, may be configured by a network device.

Optionally, in this embodiment, the second resource may be a resource used by the third terminal device for transmission, or may be a resource used by the first terminal device for transmission.

In some embodiments, the first terminal device determines the first resource conflict threshold or a first resource conflict threshold set based on the channel busy information and/or the priority information.

In some embodiments, that the first terminal device, a first resource conflict threshold based on the channel busy information and/or the priority information includes: When the resource overlapping information and/or the signal strength are/is greater than the first resource conflict threshold, the first terminal device indicates the resource conflict; or when the resource overlapping information and/or the signal strength are/is less than or equal to the first resource conflict threshold, the first terminal device does not indicate the resource conflict.

For example, when M=1, that the first terminal device determines the first conflict threshold range based on the CBR and/or the priority information may also be understood as determining a first conflict threshold, and then the first terminal device determines whether a first parameter falls within the first conflict threshold range or whether a first parameter is greater than the first conflict threshold. When the first parameter is greater than the first conflict threshold or the first parameter falls within the first conflict threshold range, the first terminal device sends the resource conflict information, to indicate that there is a resource conflict between the first resource and the second resource, that is, indicate that the first resource conflict degree is a disrecommendation degree. When the first parameter is less than the first conflict threshold or the first parameter does not fall within the first conflict threshold range, the resource conflict information sent by the first terminal device indicates that there is no resource conflict between the first resource and the second resource, that is, indicates that the first resource conflict degree is a recommendation degree or the resource conflict information is not sent.

One CBR/priority is associated with one conflict threshold range or one conflict threshold.

In some embodiments, that the first terminal device determines the first resource conflict threshold set based on the channel busy information and/or the priority information includes: The first terminal device determines the M conflict threshold ranges based on the first resource conflict threshold set.

In some embodiments, that the first terminal device determines the first resource conflict threshold based on the channel busy information and/or the priority information includes: When the resource overlapping information and/or the signal strength fall/falls within the first resource conflict threshold, the first terminal device indicates the first resource conflict degree; or when the resource overlapping information and/or the signal strength fall/falls within an M* resource conflict threshold range, the first terminal device indicates an M* resource conflict degree.

For example, when M>1, the first terminal device determines the at least two conflict threshold ranges based on the CBR and/or the priority information. Then, the first terminal device determines that a conflict threshold range within which the resource overlapping information and/or the signal strength fall/falls is the first conflict threshold range. In this case, the resource conflict information sent by the first terminal device to the second terminal device and/or the third terminal device may indicate only an index of the first conflict threshold range, and the second terminal device and/or the third terminal device determine/determines a threshold of the first conflict threshold range by measuring the CBR and/or the priority information, to determine the first resource conflict degree corresponding to the first conflict threshold range.

In some embodiments, the first terminal device obtains first configuration information, where the first configuration information indicates a resource conflict threshold, the resource conflict threshold is associated with channel busy information and/or the priority information, and the resource conflict threshold includes the signal strength threshold and/or a resource overlapping information threshold.

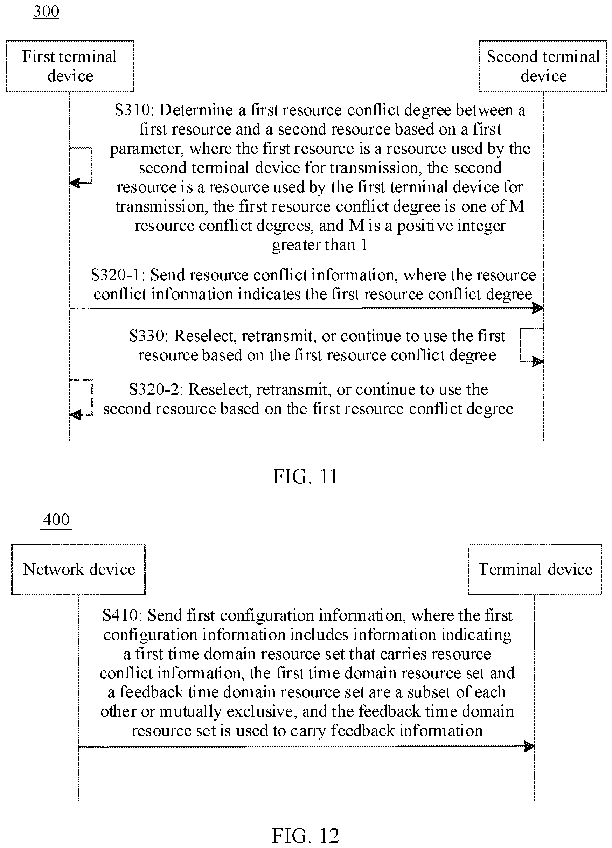

In some embodiments, in the embodiment shown in FIG. 9, the second resource may alternatively be a resource used by the first terminal device for transmission. In this case, in an example, the first terminal device may send the resource conflict information to the second terminal device, to indicate the first resource conflict degree to the second terminal device; and the second terminal device receives the resource conflict information, and reselects, retransmits, or continues to use the first resource based on the first resource conflict degree in the resource conflict information, for example, S220 and S230 in FIG. 9. In another example, the first terminal device may reselect, retransmit, or continue to use the second resource based on the first resource conflict degree, for example, S320-2 in FIG. 11 below.

In this embodiment, the first terminal device and the second terminal device each may determine the corresponding first conflict threshold range based on the channel busy information and/or the priority information, and then determine the first resource conflict degree. In this case, the resource conflict information only needs to indicate whether there is the resource conflict between the first resource and the second resource. This reduces resources occupied by the resource conflict information.

The foregoing embodiment is merely an example, and should not constitute any limitation on this application. For example, the resource conflict information in this embodiment of this application may further directly indicate the first resource conflict degree (for example, a recommendation degree, a slight recommendation degree, a slight disrecommendation degree, and a disrecommendation degree) by using a plurality of bits.

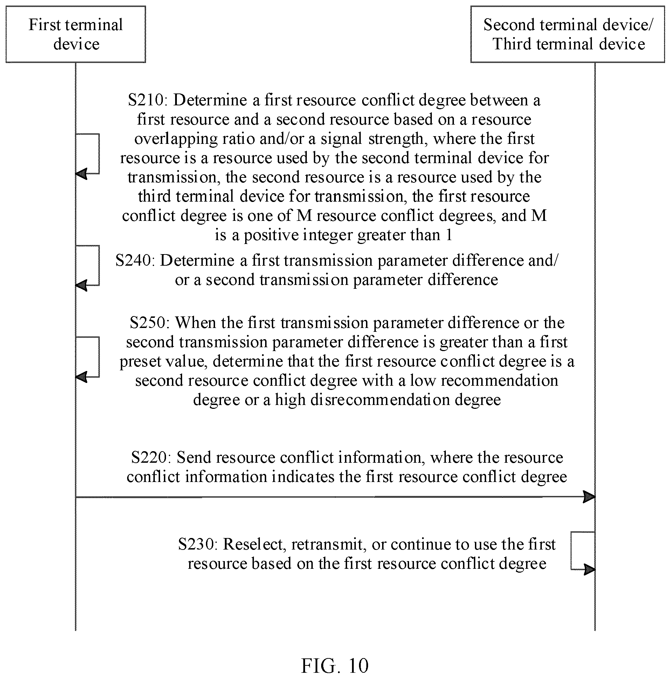

FIG. 10 is a schematic flowchart of a sidelink transmission method according to an embodiment of this application. S240 and S250 in FIG. 10 may be performed based on any one of the foregoing embodiments in FIG. 6 to FIG. 9. This embodiment is described based on only S240 and S250 with reference with the embodiment shown in FIG. 6. The sidelink transmission method specifically includes the following steps.

S240: The first terminal device determines a first transmission parameter difference and/or a second transmission parameter difference. The first transmission parameter difference is a transmission parameter difference between a first reserved resource and a first sending resource, and the second transmission parameter difference is a transmission parameter difference between a second reserved resource and a second sending resource.

S250: When the first transmission parameter difference and/or the second transmission parameter difference are/is greater than a first preset value, the first terminal device determines that the first resource conflict degree is a second resource conflict degree with a low recommendation degree or a high disrecommendation degree.

It should be noted that there is a difference between a transmission parameter of the first reserved resource and a transmission parameter of the first sending resource used by the second terminal device for transmission. For example, an MCS changes, and when an MCS of the first reserved resource is greater than that of the first sending resource, it is more difficult to decode data transmitted by the second terminal device. For another example, compared with the first sending resource, in the first reserved resource, a number of time domain resources (a number of symbols) for carrying the data is reduced, a bit rate is increased, or rate matching is increased, and consequently the data transmitted by the second terminal device is more difficult to be decoded. The second transmission parameter difference is similar to the first transmission parameter difference, and details are not described herein again.

Therefore, when the first transmission parameter difference and/or the second transmission parameter difference are/is greater than the first preset value, the first terminal device determines that the first resource conflict degree is the second resource conflict degree with the low recommendation degree or the high disrecommendation degree. In other words, updates the first resource conflict degree to a second resource conflict degree with a lower recommendation degree or a higher disrecommendation degree.

In this embodiment, the first resource conflict degree is further adjusted in time based on a transmission parameter difference between a reserved resource and a sending resource, so that the resource conflict information can indicate a more accurate resource conflict degree, and the second terminal device accurately determines whether to perform retransmission or reselection.

FIG. 11 is a schematic flowchart of a sidelink transmission method 300 according to an embodiment of this application.

In the embodiment shown in FIG. 11, there is a resource conflict between resources that are respectively used by a second terminal device and a first terminal device for transmission.

S310: The first terminal device determines a first resource conflict degree between a first resource and a second resource based on a first parameter, where the first resource is the resource used by the second terminal device for transmission, the second resource is the resource used by the first terminal device for transmission, the first resource conflict degree is one of M resource conflict degrees, and M is a positive integer greater than 1.

S320-1: The first terminal device sends resource conflict information to the second terminal device, where the resource conflict information indicates the first resource conflict degree.

66

S330: The second terminal device reselects, retransmits, or continues to use the first resource based on the first resource conflict degree.

S320-2: The first terminal device reselects, retransmits, or continues to use the second resource based on the first resource conflict degree.

It should be noted that S310, S320-1, and S330 in the embodiment shown in FIG. 11 are respectively similar to S210 to S230 in the embodiment shown in FIG. 6. A related implementation in any one of the foregoing embodiments may be used to explain corresponding content in S310, S320-1, and S330. A difference lies only in that in this embodiment, a terminal device that has a resource conflict with the second terminal device is the first terminal device instead of a third terminal device, and the second resource that has a resource conflict with the first resource is the resource used by the first terminal device for transmission. Therefore, in this embodiment, the first terminal device does not need to send the resource conflict information to the third terminal device, and only needs to send the resource conflict information to the second terminal device and/or determine whether to reselect, retransmit, or continue to use the second resource.

It should be noted that this embodiment includes at least three parallel solutions. The first solution includes S310, S320-1, and S330, the second solution includes S310 and S320-2, and the third solution includes S310, S320-1, S330, and S320-2.

In this embodiment, the first resource includes a first sending resource on which the second terminal device sends first control information, and/or a first reserved resource indicated by the first control information; and/or the second resource includes a third sending resource that is determined by the first terminal device and that is used for transmission.

The third sending resource is a resource that is determined by the first terminal device and that is used for sidelink transmission; or the third sending resource is a resource that is determined by the first terminal device and that is used for uplink transmission. Optionally, the third sending resource is not actually used for sidelink transmission or uplink transmission.

The first terminal device determines a strength of a signal transmitted on the second resource. Optionally, the strength of the signal transmitted on the second resource may be a transmit power of the first terminal device, or may be determined based on a transmit power of the first terminal device.

In this embodiment, for S310, refer to the description of the related implementation of S210 in any one of the foregoing embodiments. For S320-1, refer to the description of the related implementation of S220 in any one of the foregoing embodiments. For S330 or S320-2, refer to the description of the related implementation of S230 in any one of the foregoing embodiments.

In any one of the foregoing embodiments, the second terminal device or the third terminal device may receive a plurality of pieces of resource conflict information. The plurality of pieces of resource conflict information may indicate that there is a resource conflict on a same resource or different resources, and the resource conflict information indicates that resource conflict degrees of a same resource may be the same or different.

For example, the second terminal device receives N pieces of resource conflict information, where N is a positive integer. When a number of $i^{th}$ disrecommendation levels in resource conflict degrees indicated by the N pieces of resource conflict information is the largest, the second terminal device determines that a resource conflict degree of the first resource is the $i^{th}$ disrecommendation level; or when a number of $i^{th}$ recommendation levels in resource conflict degrees indicated by the N pieces of resource conflict information is the largest, the second terminal device determines that a resource conflict degree of the first resource is the $i^{th}$ recommendation level.

For example, if 10 pieces of resource conflict information indicate, for the first resource conflict degree between the first resource and the second resource, that there are two strong disrecommendation degrees, five disrecommendation degrees, and three slight disrecommendation degrees, the second terminal device determines that the first resource conflict degree is the disrecommendation degree.

For example, when the number of $i^{th}$ disrecommendation levels in the resource conflict degrees indicated by the N pieces of resource conflict information is the largest, and a ratio of the number N1 of $i^{th}$ disrecommendation levels to N is greater than or equal to a second preset value, the second terminal device determines that the first resource is at the $i^{th}$ disrecommendation level. Alternatively, when the number of $i^{th}$ recommendation levels in the resource conflict degrees indicated by the N pieces of resource conflict information is the largest, and a ratio of the number N1 of $i^{th}$ recommendation levels to N is greater than or equal to a third preset value, the second terminal device determines that the first resource is at the $i^{th}$ recommendation level.

For example, the second terminal device receives N=5 pieces of resource conflict information, and two first disrecommendation levels (strong disrecommendation degrees) and three second disrecommendation levels (slight disrecommendation degrees). A number of second disrecommendation levels is the largest, and a ratio of the number N1 of second disrecommendation levels to N is 3/5 and is greater than the second preset value 0.5. Therefore, the second terminal device determines that the first resource is at the second disrecommendation level.

The following describes this embodiment by using an example in which the M resource conflict degrees include different types of conflict degrees.

Scenario 1: The M resource conflict degrees include M disrecommendation levels of different disrecommendation degrees.

Method 1-1: If the second terminal device determines that a number of disrecommendation degrees/slight disrecommendation degrees/$i^{th}$ disrecommendation levels in the N pieces of resource conflict information is the largest, the second terminal device determines whether the number of disrecommendation degrees/slight disrecommendation degrees/$i^{th}$ disrecommendation levels is greater than a corresponding threshold, and when the number of disrecommendation degrees/slight disrecommendation degrees/$i^{th}$ disrecommendation levels is greater than the corresponding threshold, performs data retransmission, changes a location of the first resource, or reselects the first resource.

Method 1-2: If the second terminal device determines that a number of disrecommendation degrees in the N pieces of resource conflict information is the largest, and the number of disrecommendation degrees is less than a corresponding threshold, the second terminal device may not perform retransmission or reselection, and may continue to use the first resource. Similarly, if the second terminal device determines that a number of slight disrecommendation degrees in the N pieces of resource conflict information is the largest, and the number of slight disrecommendation degrees is less than a corresponding threshold, the second terminal device may not perform retransmission or reselection, and may continue to use the first resource. Similarly, if the second terminal device determines that a number of $i^{th}$ disrecommendation levels in the N pieces of resource conflict information is the largest, and the number of $i^{th}$ disrecommendation levels is less than a threshold corresponding to the $i^{th}$ disrecommendation level, the second terminal device may not perform retransmission or reselection, and may continue to use the first resource.

Method 1-3: If the second terminal device determines that a number of disrecommendation degrees is the largest, and a ratio of the number of disrecommendation degrees to N is greater than the corresponding second preset value, the second terminal device performs retransmission or reselection. If the second terminal device determines that a number of slight disrecommendation degrees is the largest, and a ratio of the number of slight disrecommendation degrees to N is greater than the corresponding second preset value, the second terminal device performs retransmission or reselection. If the second terminal device determines that a number of $i^{th}$ disrecommendation levels is the largest, and a ratio of the number of $i^{th}$ disrecommendation levels to N is greater than the corresponding second preset value, the second terminal device performs retransmission or reselection.

Method 1-4: If the second terminal device determines that a number of disrecommendation degrees is the largest, and a ratio of the number of disrecommendation degrees to N is less than the second preset value, the second terminal device does not perform retransmission or reselection, and may continue to use the first resource. If the second terminal device determines that a number of $i^{th}$ disrecommendation degrees is the largest, and a ratio of the number of $i^{th}$ disrecommendation degrees to N is less than the corresponding second preset value, the second terminal device does not perform retransmission or reselection, and may continue to use the first resource. If the second terminal device determines that a number of slight disrecommendation degrees is the largest, and a ratio of the number of slight disrecommendation degrees to N is less than a corresponding second preset value, the second terminal device does not perform retransmission or reselection, and may continue to use the first resource.

Method 1-5: If the second terminal device receives a resource that is indicated as a disrecommended resource, the second terminal device performs retransmission or reselection.

Method 1-6: If the second terminal device does not receive a resource that is indicated as a disrecommended resource, the second terminal device may not perform retransmission or reselection, and may continue to use the first resource.

Scenario 2: The M resource conflict degrees include M recommendation levels of different recommendation degrees.

Method 2-1: If the second terminal device determines that a number of recommendation degrees in the N pieces of resource conflict information is the largest, the second terminal device determines whether the number of recommendation degrees is greater than a corresponding threshold. When the number of recommendation degrees is greater than the corresponding threshold, the second terminal device may not perform retransmission or reselection, and may continue to use the first resource. If the second terminal device determines that a number of slight recommendation degrees in the N pieces of resource conflict information is the largest, the second terminal device determines whether the number of slight recommendation degrees is greater than a corresponding threshold. When the number of slight recommendation degrees is greater than the corresponding threshold, the second terminal device may not perform retransmission or reselection, and may continue to use the first resource. If the second terminal device determines that a number of $i^{th}$ recommendation levels in the N pieces of resource conflict information is the largest, the second terminal device determines whether the number of $i^{th}$ recommendation levels is greater than a corresponding threshold. When the number of $i^{th}$ recommendation levels is greater than the corresponding threshold, the second terminal device may not perform retransmission or reselection, and may continue to use the first resource.

Method 2-2: If the second terminal device determines that a number of recommendation degrees in the N pieces of resource conflict information is the largest, and the number of recommendation degrees is less than a corresponding threshold, the second terminal device performs retransmission or reselection. If the second terminal device determines that a number of slight recommendation degrees in the N pieces of resource conflict information is the largest, and the number of slight recommendation degrees is less than a corresponding threshold, the second terminal device performs retransmission or reselection. If the second terminal device determines that a number of $i^{th}$ recommendation levels in the N pieces of resource conflict information is the largest, and the number of $i^{th}$ recommendation levels is less than a corresponding threshold, the second terminal device performs retransmission or reselection.

Method 2-3: If the second terminal device determines that a number of recommendation degrees is the largest, and a ratio of the number of recommendation degrees to N is greater than the second preset value, the second terminal device may not perform retransmission or reselection, and may continue to use the first resource. If the second terminal device determines that a number of slight recommendation degrees is the largest, and a ratio of the number of slight recommendation degrees to N is greater than the second preset value, the second terminal device may not perform retransmission or reselection, and may continue to use the first resource. If the second terminal device determines that a number of $i^{th}$ recommendation levels is the largest, and a ratio of the number of $i^{th}$ recommendation levels to N is greater than the second preset value, the second terminal device may not perform retransmission or reselection, and may continue to use the first resource.

Method 2-4: If the second terminal device determines that a number of recommendation degrees is the largest, and a ratio of the number of recommendation degrees to N is less than the second preset value, the second terminal device performs retransmission or reselection. If the second terminal device determines that a number of slight recommendation degrees is the largest, and a ratio of the number of slight recommendation degrees to N is less than the second preset value, the second terminal device performs retransmission or reselection. If the second terminal device determines that a number of $i^{th}$ recommendation levels is the largest, and a ratio of the number of $i^{th}$ recommendation levels to N is less than the second preset value, the second terminal device performs retransmission or reselection.

Method 2-5: If the second terminal device receives a resource that is indicated at the recommendation degree, the second terminal device may not perform retransmission or reselection, and may continue to use the first resource.

Method 2-6: If the second terminal device does not receive a resource that is indicated at the recommendation degree, the second terminal device performs retransmission or reselection.

Scenario 3: The M resource conflict degrees include P disrecommendation levels of different disrecommendation degrees and Q recommendation levels of different recommendation degrees.

The methods 1-1, 1-2, 1-3, 1-4, and 1-5 in the foregoing scenario 1 and the methods 2-1, 2-2, 2-3, 2-4, and 2-5 in the foregoing scenario 2 are applicable to the scenario 3. In addition, because the first terminal device indicates a recommended resource and a disrecommended resource, there is still a case in which a first terminal device does not detect a resource indicated by SCI of the second terminal device, or the second terminal device does not receive resource conflict information of a first terminal device. Therefore, several methods on a second terminal device side are added.

The second terminal device determines a number of assisting UEs (for example, the first terminal devices), for example, a number of receiving UEs of UE B and a number of members at a destination of the UE B. The second terminal device determines a number N of pieces of received resource conflict information for a same resource. Alternatively, the second terminal device determines a number of resource conflict indications that are not received, where the number is a number of assisting UEs for a specific resource minus a number of resource conflict indications received by the second terminal device.

Method 3-1: If the second terminal device determines that a ratio of a third parameter to a fourth parameter is greater than a corresponding threshold, reselection or retransmission is performed. The third parameter is at least one of a number of disrecommendation degrees, a number of slight disrecommendation degrees, a number of $i^{th}$ disrecommendation levels, and a number of pieces of resource conflict information that are not received. The fourth parameter is a number of assisting UEs and/or a number of pieces of resource conflict information received by the second terminal device.

Method 3-2: If the second terminal device determines that a ratio of a third parameter to a fourth parameter is less than a corresponding threshold, the second terminal device continues to use the first resource.

Method 3-3: If the second terminal device determines that a ratio of a fifth parameter to a sixth parameter is greater than a corresponding threshold, the second terminal device continues to use the first resource. The fifth parameter is at least one of a number of recommendation degrees, a number of slight recommendation degrees, a number of $i^{th}$ recommendation levels, and a number of pieces of resource conflict information that are not received. The sixth parameter is a number of assisting UEs and/or a number of pieces of resource conflict information received by the second terminal device.

Method 3-4: If the second terminal device determines that a ratio of a fifth parameter to a sixth parameter is less than a corresponding threshold, the second terminal device performs retransmission or reselection.

Optionally, the N pieces of resource conflict information may come from N different first terminal devices.

In this embodiment, in different scenarios, when receiving the N pieces of resource conflict information, the second terminal device determines the first resource conflict degree based on a number of conflict degrees of a same type indicated in the N pieces of resource conflict information, to accurately determine whether to perform data retransmission or transmission resource reselection, or continue to use the first resource.

FIG. 12 is a schematic flowchart of a sidelink transmission method 400 according to an embodiment of this application. S410 in the embodiment shown in FIG. 4 is used to configure, for at least one terminal device, a transmission resource used to transmit resource conflict information, so that the resource conflict information can be transmitted between a first terminal device and a second terminal device or between a first terminal device and a third terminal device. It should be noted that the at least one terminal device may include the first terminal device and/or the second terminal device in any one of the foregoing embodiments.

S410: The terminal device receives second configuration information from a network device.

The second configuration information includes information indicating a first time domain resource set that carries the resource conflict information, the first time domain resource set and a feedback time domain resource set are a subset of each other or mutually exclusive, and the feedback time domain resource set is used to carry feedback information.

For example, the terminal device may receive or send the resource conflict information based on the second configuration information.

It should be noted that all first time domain resources in the first time domain resource set for carrying the resource conflict information may be included in the feedback time domain resource set. To be specific, each first time domain resource is the same as all or some feedback time domain resources in the feedback time domain resource set. Alternatively, all time domain resources in the feedback time domain resource set for carrying the feedback information may be included in the first time domain resource set. To be specific, each feedback time domain resource is the same as all or some first time domain resources in the first time domain resource set, or each feedback time domain resource in the feedback time domain resource set is different from each first time domain resource in the first time domain resource set.

Optionally, the first time domain resource set is a subset of the feedback time domain resource set. It may be understood that a period of the first time domain resource is greater than a period of the feedback time domain resource.

Optionally, that the first time domain resource set and the feedback time domain resource set are mutually exclusive is that the first time domain resource and the feedback time domain resource are located in different symbols in a same slot, or the first time domain resource and the feedback time domain resource are located in different slots.

Optionally, the second configuration information may be configured by the network device or preconfigured.

It should be understood that PSFCH time domain locations for carrying the feedback information are periodically distributed, and a period value is $N_{\text{PSSCH}}^{\text{PSFCH}} = \{0,1,2,4\}$ slots. Currently, HARQ information is sent on a PSFCH resource. In this embodiment, the resource conflict information is transmitted on the PSFCH, or is transmitted on a channel PSXCH for transmitting the resource conflict information. It should be noted that the PSXCH indicates a channel for carrying the resource conflict information. The PSXCH is merely a description of this type of channel, and should not constitute any limitation on this application. Other names for describing the channel for carrying the resource conflict information also fall within the protection scope of this application.

Optionally, the PSXCH may also be a PSFCH.

In this embodiment, the HARQ information is used as an example of feedback information, and this does not constitute any limitation on this application.

When the resource conflict information is transmitted on the PSFCH, a new PSFCH format may be used to carry conflict indication information to distinguish the PSFCH from a PSFCH that carries only the HARQ information. For example, a PSFCH-A is used to carry the HARQ information, and a PSFCH-B is used to carry the conflict indication information.

Alternatively, the resource conflict information is transmitted on the channel PSXCH for sending the resource conflict information. X indicates that the channel is used to carry the resource conflict information. The PSXCH is a physical channel for sending the resource conflict information. For example, the PSFCH is used to carry the HARQ information, and the PSXCH is used to carry the conflict indication information.

Further, different types of resource conflict information received by the second terminal device correspond to different actions. Therefore, the different types of resource conflict information may be carried by first time domain resources at different time domain locations. The resource conflict information used for a before-collision indication is carried by a first conflict indication resource, the resource conflict information used for a half-duplex indication is carried by a second conflict indication resource, and/or the resource conflict information used for an after-collision indication is carried by a third conflict indication resource. The first conflict indication resource and the second conflict indication resource and/or the third conflict indication resource are at a same time domain location or different time domain locations. The first conflict indication resource, the second conflict indication resource, and/or the third conflict indication resource are in a same period or different periods. If a same time domain location and/or period are/is configured, a period of each type of conflict indication resources is short, and a corresponding delay is short, so that the second terminal device can be indicated to retransmit and/or reselect an indicated resource as early as possible. However, different types of conflict indications need to be distinguished by using a frequency domain resource and/or a code domain resource. When the frequency domain resource and/or the code domain resource are/is limited, configurations of different resource pool parameters may not necessarily support indicating all types of conflicts. In another method, different time domain locations and/or periods are configured for different types of resource conflict information, and different types of conflicts are distinguished based on the different time domain locations. A disadvantage of this configuration is that a period of each type of conflict indication resource is long, and a corresponding delay is long. In some resource pool parameter configurations, it may be too late to indicate the second terminal device to retransmit and/or reselect a resource.

For ease of description, the before-collision indication is used as an example to describe determining a time domain resource for the conflict indication. In a case of a plurality of conflict indication types, it is equivalent to configuring one or more of $\{ N_{PSSCH}^{RCI-A}, N_{PSSCH}^{RCI-B}, N_{PSSCH}^{RCI-C} \cdots \}$. For example, $N_{PSSCH}^{RCI-A}$ indicates a conflict indication resource period of the resource conflict information for the before-collision indication. $N_{PSSCH}^{RCI-B}$ indicates a conflict indication resource period of the resource conflict information for the after-collision indication. $N_{PSSCH}^{RCI-C}$ indicates a conflict indication resource period of the resource conflict information for the half-duplex indication. A configuration method of $N_{PSSCH}^{RCI-i}$ is the same as a configuration method of $N_{PSSCH}^{RCI}$. Alternatively, in a case of a plurality of conflict indication types, it is equivalent to configuring one or more of $\{ N_{PSSCH}^{PSXCH-A}, N_{PSSCH}^{PSXCH-B}, N_{PSSCH}^{PSXCH-C} \cdots \}$. For example, $N_{PSSCH}^{PSXCH-A}$ indicates a conflict indication resource period of the resource conflict information for the before-collision indication. $N_{PSSCH}^{PSXCH-B}$ indicates a conflict indication resource period of the resource conflict information for the after-collision indication. $N_{PSSCH}^{PSXCH-C}$ indicates a conflict indication resource period of the resource conflict information for the half-duplex indication. A configuration method of $N_{PSSCH}^{PSXCH-i}$ is the same as a configuration method of $N_{PSSCH}^{PSXCH}$.

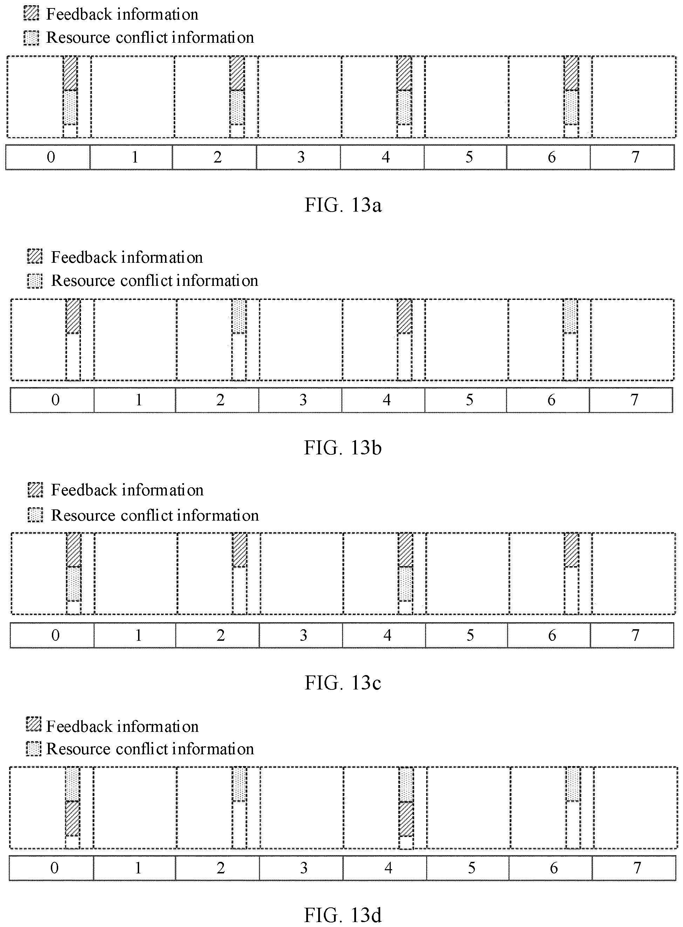

In this embodiment, the first time domain resource and the feedback time domain resource are configured in several possible manners shown in FIG. 13a to FIG. 13e.

Manner A: Refer to FIG. 13a. The first time domain resource set is the same as the feedback time domain resource set.

For example, as shown in FIG. 13a, the resource conflict information and the HARQ information are transmitted on the PSFCH. There are PSFCH transmission occasions in slots 0, 2, 4, and 6. A period $N_{PSSCH}^{RCI}$ of a resource (namely, the first time domain resource) of the resource conflict information, a period $N_{PSSCH}^{HARQ}$ of a HARQ information resource (namely, the feedback time domain resource), and a period $N_{PSSCH}^{PSFCH}$ of the PSFCH resource are the same. In this case, $N_{PSSCH}^{RCI} = 2$, $N_{PSSCH}^{HARQ} = 2$, and $N_{PSSCH}^{PSFCH} = 2$.

Alternatively, as shown in FIG. 13a, the resource conflict information is transmitted on the channel PSXCH for sending the resource conflict information. There are PSFCH transmission occasions and PSXCH transmission occasions in slots 0, 2, 4, and 6. A period $N_{PSSCH}^{RCI}$ of the first time domain resource, a period $N_{PSSCH}^{PSXCH}$ of a PSXCH resource, a period $N_{PSSCH}^{HARQ}$ of a HARQ information resource, and a period $N_{PSSCH}^{PSFCH}$ of the PSFCH resource are the same. In this case, $N_{PSSCH}^{RCI} = 2$, $N_{PSSCH}^{HARQ} = 2$, and $N_{PSSCH}^{PSFCH} = 2$.

Manner B: Refer to FIG. 13b. The first time domain resource set and the feedback time domain resource set are mutually exclusive.

For example, as shown in FIG. 13b, the resource conflict information is transmitted on the PSFCH. There are PSFCH transmission occasions in slots 0, 2, 4, and 6. A period $N_{PSSCH}^{RCI}$ of the first time domain resource is the same as a period $N_{PSSCH}^{HARQ}$ of the feedback time domain resource. A period $N_{PSSCH}^{RCI}$ of the first time domain resource is different from a period $N_{PSSCH}^{PSFCH}$ of the PSFCH resource. In this case, $N_{PSSCH}^{RCI} = 4$, $N_{PSSCH}^{HARQ} = 4$, and $N_{PSSCH}^{PSFCH} = 2$.

Alternatively, as shown in FIG. 13b, the resource conflict information is transmitted on the channel PSXCH for sending the conflict indication. There are PSFCH transmission occasions in slots 0 and 4. There are PSXCH transmission occasions in slots 2 and 6. A period $N_{PSSCH}^{RCI}$ of the first time domain resource is the same as a period $N_{PSSCH}^{HARQ}$ of the feedback time domain resource. A period $N_{PSSCH}^{RCI}$ of the first time domain resource is the same as a period $N_{PSSCH}^{PSFCH}$ of the PSFCH resource. In this case, $N_{PSSCH}^{RCI} = 4$, $N_{PSSCH}^{PSXCH} = 4$, $N_{PSSCH}^{HARQ} = 4$, and $N_{PSSCH}^{PSFCH} = 4$.

Manner C: Refer to FIG. 13c. The first time domain resource set is included in the feedback time domain resource set.

For example, as shown in FIG. 13c, the resource conflict information is transmitted on the PSFCH. There are PSFCH transmission occasions in slots 0, 2, 4, and 6. A period $N_{PSSCH}^{RCI}$ of the first time domain resource is different from a period $N_{PSSCH}^{HARQ}$ of the feedback time domain resource. A period $N_{PSSCH}^{RCI}$ of the first time domain resource is different from a period $N_{PSSCH}^{PSFCH}$ of the PSFCH resource. In this case, $N_{PSSCH}^{RCI} = 4$, $N_{PSSCH}^{HARQ} = 2$, and $N_{PSSCH}^{PSFCH} = 2$.

Alternatively, as shown in FIG. 13c, the resource conflict information is transmitted on the channel PSXCH for sending the resource conflict information. There are PSFCH transmission occasions in slots 0, 2, 4, and 6. There are PSXCH transmission occasions in slots 0 and 4. A period $N_{PSSCH}^{RCI}$ of the first time domain resource is different from a period $N_{PSSCH}^{HARQ}$ of the feedback time domain resource. A period $N_{PSSCH}^{RCI}$ of the first time domain resource is different from a period $N_{PSSCH}^{PSFCH}$ of the PSFCH resource. In this case, $N_{PSSCH}^{RCI} = 4$, $N_{PSSCH}^{PSXCH} = 4$, $N_{PSSCH}^{HARQ} = 2$, and $N_{PSSCH}^{PSFCH} = 2$.

Manner D: Refer to FIG. 13d. The feedback time domain resource set is included in the first time domain resource set.

For example, as shown in FIG. 13d, the resource conflict information is transmitted on the PSFCH. There are PSFCH transmission occasions in slots 0, 2, 4, and 6. A period $N_{PSSCH}^{RCI}$ of the first time domain resource is different from a period $N_{PSSCH}^{HARQ}$ of the feedback time domain resource. A period $N_{PSSCH}^{RCI}$ of the first time domain resource is the same as a period $N_{PSSCH}^{PSFCH}$ of the PSFCH resource. In this case, $N_{PSSCH}^{RCI} = 2$, $N_{PSSCH}^{HARQ} = 4$, and $N_{PSSCH}^{PSFCH} = 2$.

Alternatively, as shown in FIG. 13d, the resource conflict information is transmitted on the channel PSXCH for sending the resource conflict information. There are PSFCH transmission occasions in slots 0 and 4. There are PSXCH transmission occasions in slots 0, 2, 4, and 6. A period $N_{PSSCH}^{RCI}$ of the first time domain resource is different from a period $N_{PSSCH}^{HARQ}$ of the feedback time domain resource. A period $N_{PSSCH}^{RCI}$ of the first time domain resource is different from a period $N_{PSSCH}^{PSFCH}$ of the PSFCH resource. In this case, $N_{PSSCH}^{RCI} = 2$, $N_{PSSCH}^{PSXCH} = 2$, $N_{PSSCH}^{HARQ} = 4$, and $N_{PSSCH}^{PSFCH} = 4$.

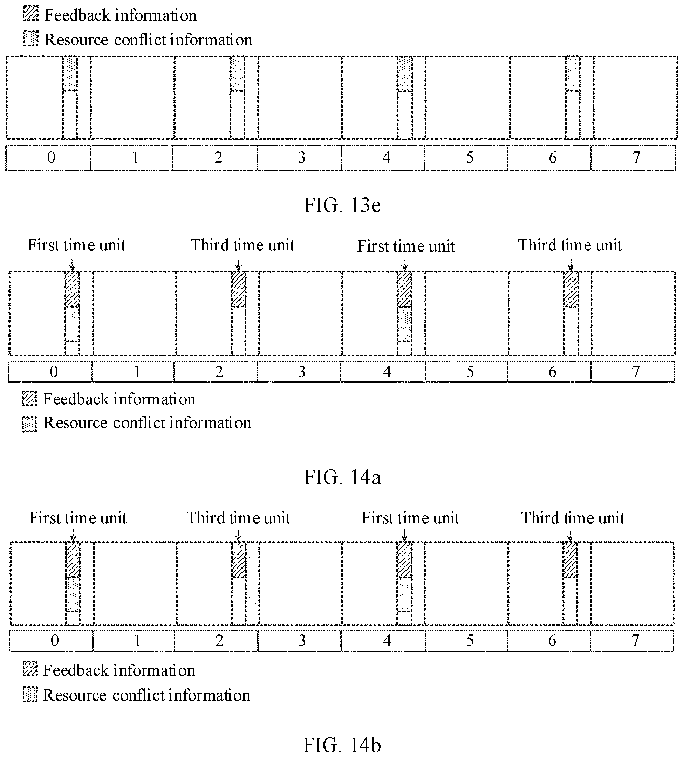

Manner E: Refer to FIG. 13e. Only the first time domain resource set is configured, and no feedback time domain resource set is configured. This manner may be understood as a possible manner in which the first time domain resource set and the feedback time domain resource set are mutually exclusive.

For example, as shown in FIG. 13e, the resource conflict information is transmitted on the PSFCH. A resource pool is not configured with the PSFCH resource for carrying the HARQ information. There are PSFCH transmission occasions in slots 0, 2, 4, and 6. A period $N_{PSSCH}^{RCI}$ of the first time domain resource is the same as a period $N_{PSSCH}^{PSFCH}$ of the PSFCH resource. In this case, $N_{PSSCH}^{RCI} = 2$, and $N_{PSSCH}^{PSFCH} = 2$.

Alternatively, as shown in FIG. 13e, the resource conflict information is transmitted on the channel PSXCH for sending the conflict indication. The resource pool is not configured with the PSFCH resource. There are PSXCH transmission occasions in slots 0, 2, 4, and 6. In this case, $N_{PSSCH}^{RCI} = 2$, and $N_{PSSCH}^{PSXCH} = 2$.

It should be noted that in this embodiment, the feedback time domain resource and the PSFCH resource have two different meanings. The feedback time domain resource carries feedback information, and the PSFCH resource may carry the feedback information, the PSFCH may carry the feedback information and the resource conflict information, or the PSFCH may carry only the resource conflict information. The PSFCH resource usually carries the feedback information such as the HARQ information, and $N_{PSSCH}^{HARQ} \neq N_{PSSCH}^{PSFCH}$ is avoided. Because conventional UE (for example, UE on R16) considers that all PSFCH occasions can be used to carry the HARQ information, if the protocol is modified, the UE on R16 cannot correctly calculate the PSFCH resource for carrying the HARQ information. If there is only UE on R17 in the resource pool, the UE may determine a resource for carrying the HARQ information and the resource conflict information, and a case of $N_{PSSCH}^{HARQ} \neq N_{PSSCH}^{PSFCH}$ may occur.

In the possible implementations shown in FIG. 13a to FIG. 13e, frequency domain locations of the first time domain resource and the feedback time domain resource may be consecutive or discrete. In the figure, a time-frequency resource location of one consecutive first time domain resource is represented only by using an example in which the one consecutive first time domain resource is carried.

In some embodiments, in the second configuration information sent by the network device, the information indicating the first time domain resource set that carries the resource conflict information may include the period of the first time domain resource, or may include a multiple relationship between the period of the first time domain resource and the period of the feedback time domain resource.

For example, the period of the feedback time domain resource is an integer multiple of the period of the first time domain resource; the period of the feedback time domain resource is greater than or equal to the period of the first time domain resource; the period of the first time domain resource is an integer multiple of the period of the feedback time domain resource; and the period of the first time domain resource is greater than or equal to the period of the feedback time domain resource. The feedback time domain resource belongs to the feedback time domain resource set, and the first time domain resource belongs to the first time domain resource set.

In some embodiments, the second configuration information may be used to configure the period $N_{PSSCH}^{RCI}$ of the first time domain resource to be the same as the period $N_{PSSCH}^{PSFCH}$ of the PSFCH resource.

The resource conflict information and the HARQ information are transmitted on the PSFCH. As shown in FIG. 13a. Because the periods of the time domain resources of the resource conflict information and the HARQ information are the same, the period $N_{PSSCH}^{RCI}$ of the first time domain resource may not be configured by using a separate field. In other words, sl-PSFCH-Period further indicates the period $N_{PSSCH}^{RCI}$ of the first time domain resource.

The resource conflict information is transmitted on the PSXCH, and the HARQ information is transmitted on the PSFCH. As shown in FIG. 13a or FIG. 12b, Because the periods of the time domain resources of the resource conflict information and the HARQ information are the same, the period $N_{\mathrm{PSSCH}}^{\mathrm{PSXCH}}$ of the PSXCH resource may not be configured by using a separate field. In other words, sl-PSFCH-Period further indicates the period $N_{\mathrm{PSSCH}}^{\mathrm{PSXCH}}$ of the PSXCH resource.

In some embodiments, the second configuration information may be used to configure the period $N_{\mathrm{PSSCH}}^{RCI}$ of the first time domain resource to be the same as the period $N_{\mathrm{PSSCH}}^{HARQ}$ of the feedback time domain resource.

The resource conflict information and the HARQ information are transmitted on the PSFCH. As shown in FIG. 13a or FIG. 13b, Because the period of the first time domain resource is the same as the period of the feedback time domain resource, the period $N_{\mathrm{PSSCH}}^{RCI}$ of the conflict indication resource may not be configured by using a separate field. In other words, sl-PSFCH-Period further indicates the period $N_{\mathrm{PSSCH}}^{RCI}$ of the first time domain resource.

The resource conflict information is transmitted on the PSXCH, and the HARQ information is transmitted on the PSFCH. As shown in FIG. 13a or FIG. 13b, Because the period of the first time domain resource is the same as the period of the feedback time domain resource, the period $N_{\mathrm{PSSCH}}^{\mathrm{PSXCH}}$ of the PSXCH resource may not be configured by using a separate field. In other words, sl-PSFCH-Period further indicates the period $N_{\mathrm{PSSCH}}^{\mathrm{PSXCH}}$ of the PSXCH resource.

In some embodiments, the period $N_{\mathrm{PSSCH}}^{RCI}$ of the first time domain resource is different from the period $N_{\mathrm{PSSCH}}^{\mathrm{PSFCH}}$ of the PSFCH resource.

The resource conflict information and the HARQ information are transmitted on the PSFCH. As shown in FIG. 13b, FIG. 13c, or FIG. 13e, the period $N_{\mathrm{PSSCH}}^{RCI}$ of the first time domain resource and the period $N_{\mathrm{PSSCH}}^{\mathrm{PSFCH}}$ of the PSFCH resource are separately configured. The period $N_{\mathrm{PSSCH}}^{RCI}$ of the first time domain resource may be directly configured, or may be configured based on a ratio relationship between the period of the first time domain resource and the period $N_{\mathrm{PSSCH}}^{\mathrm{PSFCH}}$ of the PSFCH resource.

The configuration method includes any one of the following methods 1-1 to 1-3:

1-1: The period $N_{\mathrm{PSSCH}}^{RCI}$ of the first time domain resource and the period $N_{\mathrm{PSSCH}}^{\mathrm{PSFCH}}$ of the PSFCH resource are separately configured.

Optionally, the network device ensures $N_{\mathrm{PSSCH}}^{RCI} = M_1 \times N_{\mathrm{PSSCH}}^{\mathrm{PSFCH}}$, where $M_1$ is a positive integer; or the network device ensures $N_{\mathrm{PSSCH}}^{RCI} = N_{\mathrm{PSSCH}}^{\mathrm{PSFCH}} \div M_2$, where $M_2$ is a positive integer.

Optionally, the network device ensures $N_{\mathrm{PSSCH}}^{RCI} \geq N_{\mathrm{PSSCH}}^{\mathrm{PSFCH}}$; or the network device ensures $N_{\mathrm{PSSCH}}^{RCI} \leq N_{\mathrm{PSSCH}}^{\mathrm{PSFCH}}$.

Optionally, the network device ensures $N_{\mathrm{PSSCH}}^{RCI} > N_{\mathrm{PSSCH}}^{\mathrm{PSFCH}}$; or the network device ensures $N_{\mathrm{PSSCH}}^{RCI} < N_{\mathrm{PSSCH}}^{\mathrm{PSFCH}}$.

1-2: $N_{\mathrm{PSSCH}}^{\mathrm{PSFCH}}$ and $M_1$ ($M_1$ is a positive integer) are separately configured, and $N_{\mathrm{PSSCH}}^{RCI} = M_1 \times N_{\mathrm{PSSCH}}^{\mathrm{PSFCH}}$ is determined. For example, $M_1=1$, $M_1=2$, $M_1=3$, or $M_1=4$. $N_{\mathrm{PSSCH}}^{RCI} = 0$ indicates that no conflict indication resource is configured. For details about determining $N_{\mathrm{PSSCH}}^{RCI}$, refer to Table 2.

Table 2

| $N_{PSSCH}^{RCI}$ | $M_1 = 1$ | $M_1 = 2$ | $M_1 = 3$ | $M_1 = 4$ |
|---|---|---|---|---|
| $N_{PSSCH}^{PSFCH} = 0$ | 0 | 0 | 0 | 0 |
| $N_{PSSCH}^{PSFCH} = 1$ | 1 | 2 | 3 | 4 |
| $N_{PSSCH}^{PSFCH} = 2$ | 2 | 4 | 6 | 8 |
| $N_{PSSCH}^{PSFCH} = 4$ | 4 | 8 | 12 | 16 |

1-3: $N_{\text{PSSCH}}^{\text{PSFCH}}$ and $M_2$ ($M_2$ is a positive integer) are separately configured, and $N_{\text{PSSCH}}^{RCI} = \lceil N_{\text{PSSCH}}^{\text{PSFCH}} \div M_2 \rceil$ or $N_{\text{PSSCH}}^{RCI} = \lfloor N_{\text{PSSCH}}^{\text{PSFCH}} \div M_2 \rfloor$ is determined. For example, $M_2 =1$, $M_2=2$, $M_2=3$, or $M_2=4$. Alternatively, $N_{\text{PSSCH}}^{\text{PSFCH}}$ and $M_2$ ($M_2$ is a positive integer) are separately configured, and $N_{\text{PSSCH}}^{RCI} = N_{\text{PSSCH}}^{\text{PSFCH}} \div M_2$ is determined. The network device ensures that configured $N_{\text{PSSCH}}^{\text{PSXCH}}$ is an integer. For example, $M_2=1$, $M_2=2$, $M_2=3$, or $M_2=4$. For details about determining $N_{\text{PSSCH}}^{RCI}$, refer to Table 3 or Table 4.

**Table 3**

| $N_{\text{PSSCH}}^{RCI}$ | $M_2 = 1$ | $M_2 = 2$ | $M_2 = 3$ | $M_2 = 4$ |
|---|---|---|---|---|
| $N_{\text{PSSCH}}^{\text{PSFCH}} = 0$ | 0 | 0 | 0 | 0 |
| $N_{\text{PSSCH}}^{\text{PSFCH}} = 1$ | 1 | 1 | 1 | 1 |
| $N_{\text{PSSCH}}^{\text{PSFCH}} = 2$ | 2 | 1 | 1 | 1 |
| $N_{\text{PSSCH}}^{\text{PSFCH}} = 4$ | 4 | 2 | 1 | 1 |

**Table 4**

| $N_{\text{PSSCH}}^{RCI}$ | $M_2 = 1$ | $M_2 = 2$ | $M_2 = 3$ | $M_2 = 4$ |
|---|---|---|---|---|
| $N_{\text{PSSCH}}^{\text{PSFCH}} = 0$ | 0 | 0 | 0 | 0 |
| $N_{\text{PSSCH}}^{\text{PSFCH}} = 1$ | 1 | 0 | 0 | 0 |
| $N_{\text{PSSCH}}^{\text{PSFCH}} = 2$ | 2 | 1 | 0 | 0 |
| $N_{\text{PSSCH}}^{\text{PSFCH}} = 4$ | 4 | 2 | 1 | 1 |

In some embodiments, the resource conflict information is transmitted on the PSXCH, and the HARQ information is transmitted on the PSFCH. As shown in FIG. 13b, FIG. 13c, FIG. 13d, or FIG. 13e, the period $N_{\mathrm{PSSCH}}^{\mathrm{PSXCH}}$ of the PSXCH resource and the period $N_{\mathrm{PSSCH}}^{\mathrm{PSFCH}}$ of the PSFCH resource are separately configured. The period $N_{\mathrm{PSSCH}}^{\mathrm{PSXCH}}$ of the PSXCH resource may be directly configured, or may be configured based on a ratio relationship between the period of the PSXCH resource and the period $N_{\mathrm{PSSCH}}^{\mathrm{PSFCH}}$ of the PSFCH resource.

The configuration method includes any one of the following methods 2-1 to 2-3:

2-1: The period $N_{\mathrm{PSSCH}}^{\mathrm{PSXCH}}$ of the PSXCH resource and the period $N_{\mathrm{PSSCH}}^{\mathrm{PSFCH}}$ of the PSFCH resource are separately configured. Alternatively, the period $N_{\mathrm{PSSCH}}^{\mathrm{PSXCH}}$ of the PSXCH resource and the period $N_{\mathrm{PSSCH}}^{\mathrm{PSFCH}}$ of the PSFCH resource are separately configured.

Optionally, the network device ensures $N_{\mathrm{PSSCH}}^{\mathrm{PSXCH}} = M_1 \times N_{\mathrm{PSSCH}}^{\mathrm{PSFCH}}$, where $M_1$ is a positive integer; or the network device ensures $N_{\mathrm{PSSCH}}^{\mathrm{PSXCH}} = N_{\mathrm{PSSCH}}^{\mathrm{PSFCH}} \div M_2$, where $M_2$ is a positive integer.

Optionally, the network device ensures $N_{\mathrm{PSSCH}}^{\mathrm{PSXCH}} \geq N_{\mathrm{PSSCH}}^{\mathrm{PSFCH}}$; or the network device ensures $N_{\mathrm{PSSCH}}^{\mathrm{PSXCH}} \leq N_{\mathrm{PSSCH}}^{\mathrm{PSFCH}}$.

Optionally, the network device ensures $N_{\mathrm{PSSCH}}^{\mathrm{PSXCH}} > N_{\mathrm{PSSCH}}^{\mathrm{PSFCH}}$; or the network device ensures $N_{\mathrm{PSSCH}}^{\mathrm{PSXCH}} < N_{\mathrm{PSSCH}}^{\mathrm{PSFCH}}$.

2-2: $N_{\mathrm{PSSCH}}^{\mathrm{PSXCH}}$ and $M_1$ ($M_1$ is a positive integer) are separately configured, and $N_{\mathrm{PSSCH}}^{\mathrm{PSXCH}} = M_1 \times N_{\mathrm{PSSCH}}^{\mathrm{PSFCH}}$ is determined. For example, $M_1$=1, $M_1$=2, $M_1$=3, or $M_1$=4. $N_{\mathrm{PSSCH}}^{\mathrm{PSXCH}} = 0$ indicates that no conflict indication resource is configured. For details about determining $N_{\mathrm{PSSCH}}^{RCI}$, refer to Table 5.

Table 5

| $N_{\mathrm{PSSCH}}^{\mathrm{PSXCH}}$ | $M_1$=1 | $M_1$=2 | $M_1$=3 | $M_1$=4 |
|---|---|---|---|---|
| $N_{\mathrm{PSSCH}}^{\mathrm{PSFCH}} = 0$ | 0 | 0 | 0 | 0 |
| $N_{\mathrm{PSSCH}}^{\mathrm{PSFCH}} = 1$ | 1 | 2 | 3 | 4 |
| $N_{\mathrm{PSSCH}}^{\mathrm{PSFCH}} = 2$ | 2 | 4 | 6 | 8 |
| $N_{\mathrm{PSSCH}}^{\mathrm{PSFCH}} = 4$ | 4 | 8 | 12 | 16 |

2-3: $N_{\mathrm{PSSCH}}^{\mathrm{PSFCH}}$ and $M_2$ ($M_2$ is a positive integer) are separately configured, and $N_{\mathrm{PSSCH}}^{\mathrm{PSXCH}} = \left\lceil N_{\mathrm{PSSCH}}^{\mathrm{PSFCH}} \div M_2 \right\rceil$ or $N_{\mathrm{PSSCH}}^{\mathrm{PSXCH}} = \left\lfloor N_{\mathrm{PSSCH}}^{\mathrm{PSFCH}} \div M_2 \right\rfloor$ is determined. For example, $M_2$=1, or $M_2$=2, $M_2$=3, or $M_2$=4. For details about

determining $N_{\mathrm{PSSCH}}^{\mathrm{PSXCH}}$, refer to Table 6 or Table 7.

**Table 6**

| $N_{\mathrm{PSSCH}}^{\mathrm{PSXCH}}$ | $M_2 = 1$ | $M_2 = 2$ | $M_2 = 3$ | $M_2 = 4$ |
|---|---|---|---|---|
| $N_{\mathrm{PSSCH}}^{\mathrm{PSFCH}} = 0$ | 0 | 0 | 0 | 0 |
| $N_{\mathrm{PSSCH}}^{\mathrm{PSFCH}} = 1$ | 1 | 1 | 1 | 1 |
| $N_{\mathrm{PSSCH}}^{\mathrm{PSFCH}} = 2$ | 2 | 1 | 1 | 1 |
| $N_{\mathrm{PSSCH}}^{\mathrm{PSFCH}} = 4$ | 4 | 2 | 1 | 1 |

**Table 7**

| $N_{\mathrm{PSSCH}}^{\mathrm{PSXCH}}$ | $M_2 = 1$ | $M_2 = 2$ | $M_2 = 3$ | $M_2 = 4$ |
|---|---|---|---|---|
| $N_{\mathrm{PSSCH}}^{\mathrm{PSFCH}} = 0$ | 0 | 0 | 0 | 0 |
| $N_{\mathrm{PSSCH}}^{\mathrm{PSFCH}} = 1$ | 1 | 0 | 0 | 0 |
| $N_{\mathrm{PSSCH}}^{\mathrm{PSFCH}} = 2$ | 2 | 1 | 0 | 0 |
| $N_{\mathrm{PSSCH}}^{\mathrm{PSFCH}} = 4$ | 4 | 2 | 1 | 1 |

In another implementation, the period $N_{\mathrm{PSSCH}}^{RCI}$ of the first time domain resource is the same as the period $N_{\mathrm{PSSCH}}^{\mathrm{PSFCH}}$ of the PSFCH resource by default (that is, $N_{\mathrm{PSSCH}}^{RCI}$ is not independently configured). If the period of the first time domain resource is configured, the period of the first time domain resource is $N_{\mathrm{PSSCH}}^{RCI}$ .

In some embodiments, the period $N_{\mathrm{PSSCH}}^{RCI}$ of the first time domain resource is different from the period $N_{\mathrm{PSSCH}}^{HARQ}$ of the HARQ information resource.

The resource conflict information and the HARQ information are transmitted on the PSFCH. As shown in FIG. 13c, FIG. 13d, or FIG. 13e, the period $N_{\mathrm{PSSCH}}^{RCI}$ of the first time domain resource and the period $N_{\mathrm{PSSCH}}^{HARQ}$ of the HARQ information resource are separately configured. The period $N_{\mathrm{PSSCH}}^{RCI}$ of the first time domain resource may be directly configured, or may be configured based on a ratio relationship between the period of the first time domain resource and the period $N_{\mathrm{PSSCH}}^{HARQ}$ of the HARQ information resource.

The configuration method includes any one of the following methods 3-1 to 3-3:

3-1: The period $N_{\mathrm{PSSCH}}^{RCI}$ of the first time domain resource and the period $N_{\mathrm{PSSCH}}^{HARQ}$ of the HARQ information resource are separately configured. Alternatively, the period $N_{\mathrm{PSSCH}}^{RCI}$ of the first time domain resource and the period $N_{\mathrm{PSSCH}}^{HARQ}$ of the HARQ information resource are separately configured.

Optionally, the network device ensures $N_{\mathrm{PSSCH}}^{RCI} = M_1 \times N_{\mathrm{PSSCH}}^{HARQ}$ , where $M_1$ is a positive integer; or the network device ensures $N_{\mathrm{PSSCH}}^{RCI} = N_{\mathrm{PSSCH}}^{HARQ} \div M_2$ , where $M_2$ is a positive integer.

Optionally, the network device ensures $N_{\mathrm{PSSCH}}^{RCI} \geq N_{\mathrm{PSSCH}}^{HARQ}$ ; or the network device ensures $N_{\mathrm{PSSCH}}^{RCI} \leq N_{\mathrm{PSSCH}}^{HARQ}$ .

Optionally, the network device ensures $N_{\mathrm{PSSCH}}^{RCI} < N_{\mathrm{PSSCH}}^{HARQ}$ ; or the network device ensures $N_{\mathrm{PSSCH}}^{RCI} < N_{\mathrm{PSSCH}}^{HARQ}$ .

3-2: $N_{\mathrm{PSSCH}}^{HARQ}$ and M ($M_1$ is a positive integer) are separately configured, and $N_{\mathrm{PSSCH}}^{RCI} = M_1 \times N_{\mathrm{PSSCH}}^{HARQ}$ is determined. For example, $M_1$=1, $M_1$=2, $M_1$=3, or $M_1$=4. $N_{\mathrm{PSSCH}}^{RCI} = $ 0 indicates that no conflict indication resource is configured. For details about determining $N_{\mathrm{PSSCH}}^{RCI}$ , refer to Table 8.

**Table 8**

| $N_{\mathrm{PSSCH}}^{RCI}$ | $M_1 = 1$ | $M_1 = 2$ | $M_1 = 3$ | $M_1 = 4$ |
|---|---|---|---|---|
| $N_{\mathrm{PSSCH}}^{HARQ} = 0$ | 0 | 0 | 0 | 0 |
| $N_{\mathrm{PSSCH}}^{HARQ} = 1$ | 1 | 2 | 3 | 4 |
| $N_{\mathrm{PSSCH}}^{HARQ} = 2$ | 2 | 4 | 6 | 8 |
| $N_{\mathrm{PSSCH}}^{HARQ} = 4$ | 4 | 8 | 12 | 16 |

3-3: $N_{\mathrm{PSSCH}}^{HARQ}$ and $M_2$ ($M_2$ is a positive integer) are separately configured, and $N_{\mathrm{PSSCH}}^{RCI} = \left\lceil N_{\mathrm{PSSCH}}^{HARQ} \div M_2 \right\rceil$ or $N_{\mathrm{PSSCH}}^{RCI} = \left\lfloor N_{\mathrm{PSSCH}}^{HARQ} \div M_2 \right\rfloor$ is determined. For example, $M_2$=1, or $M_2$=2, $M_2$=3, or $M_2$=4. Alternatively, $N_{\mathrm{PSSCH}}^{HARQ}$ and $M_2$ ($M_2$ is a positive integer) are separately configured, and $N_{\mathrm{PSSCH}}^{RCI} = N_{\mathrm{PSSCH}}^{HARQ} \div M_2$ is determined. A base station ensures that configured $N_{\mathrm{PSSCH}}^{RCI}$ is an integer. For example, $M_2$ =1, or $M_2$ =2, $M_2$ =3, or $M_2$ =4. For details about determining $N_{\mathrm{PSSCH}}^{RCI}$ , refer to Table 9 or Table 10.

**Table 9**

| $N_{\mathrm{PSSCH}}^{RCI}$ | $M_2 = 1$ | $M_2 = 2$ | $M_2 = 3$ | $M_2 = 4$ |
|---|---|---|---|---|
| $N_{\mathrm{PSSCH}}^{HARQ} = 0$ | 0 | 0 | 0 | 0 |

(continued)

| $N_{\text{PSSCH}}^{RCI}$ | $M_2 = 1$ | $M_2 = 2$ | $M_2 = 3$ | $M_2 = 4$ |
|---|---|---|---|---|
| $N_{\text{PSSCH}}^{HARQ} = 1$ | 1 | 1 | 1 | 1 |
| $N_{\text{PSSCH}}^{HARQ} = 2$ | 2 | 1 | 1 | 1 |
| $N_{\text{PSSCH}}^{HARQ} = 4$ | 4 | 2 | 1 | 1 |

**Table 10**

| $N_{\text{PSSCH}}^{RCI}$ | $M_2 = 1$ | $M_2 = 2$ | $M_2 = 3$ | $M_2 = 4$ |
|---|---|---|---|---|
| $N_{\text{PSSCH}}^{HARQ} = 0$ | 0 | 0 | 0 | 0 |
| $N_{\text{PSSCH}}^{HARQ} = 1$ | 1 | 0 | 0 | 0 |
| $N_{\text{PSSCH}}^{HARQ} = 2$ | 2 | 1 | 0 | 0 |
| $N_{\text{PSSCH}}^{HARQ} = 4$ | 4 | 2 | 1 | 1 |

In some embodiments, the resource conflict information is transmitted on the PSXCH, and the HARQ information is transmitted on the PSFCH. As shown in FIG. 13c, FIG. 13d, or FIG. 13e, the period $N_{\text{PSSCH}}^{\text{PSXCH}}$ of the PSXCH resource and the period $N_{\text{PSSCH}}^{HARQ}$ of the HARQ information resource are separately configured. The period $N_{\text{PSSCH}}^{\text{PSXCH}}$ of the PSXCH resource may be directly configured, or may be configured based on a ratio relationship between the period of the PSXCH resource and the period $N_{\text{PSSCH}}^{HARQ}$ of the HARQ information resource.

The configuration method includes any one of the following methods 4-1 to 4-3:

4-1: The period $N_{\text{PSSCH}}^{\text{PSXCH}}$ of the PSXCH resource and the period $N_{\text{PSSCH}}^{HARQ}$ of the HARQ information resource are separately configured. Alternatively, the period $N_{\text{PSSCH}}^{\text{PSXCH}}$ of the PSXCH resource and the period $N_{\text{PSSCH}}^{HARQ}$ of the HARQ information resource are separately configured.

Optionally, the network device ensures $N_{\text{PSSCH}}^{\text{PSXCH}} = M_1 \times N_{\text{PSSCH}}^{HARQ}$, where $M_1$ is a positive integer; or the network device ensures $N_{\text{PSSCH}}^{\text{PSXCH}} = N_{\text{PSSCH}}^{HARQ} \div M_2$, where $M_2$ is a positive integer.

Optionally, the network device ensures $N_{\text{PSSCH}}^{\text{PSXCH}} \geq N_{\text{PSSCH}}^{HARQ}$, where $M_1$ is a positive integer; or the network device ensures $N_{\text{PSSCH}}^{\text{PSXCH}} \leq N_{\text{PSSCH}}^{HARQ}$.

Optionally, the network device ensures $N_{\text{PSSCH}}^{\text{PSXCH}} > N_{\text{PSSCH}}^{HARQ}$, where $M_1$ is a positive integer; or the network device ensures $N_{\text{PSSCH}}^{\text{PSXCH}} < N_{\text{PSSCH}}^{HARQ}$.

4-2: $N_{\text{PSSCH}}^{HARQ}$ and M ($M_1$ is a positive integer) are separately configured, and $\text{N}_{\text{PSSCH}}^{\text{PSXCH}} = M_1 \times N_{\text{PSSCH}}^{HARQ}$ is determined. For example, $M_1$=1, $M_1$=2, $M_1$=3, or $M_1$=4. $\text{N}_{\text{PSSCH}}^{\text{PSXCH}} = 0$ indicates that no conflict indication resource is configured. For details about determining $N_{\text{PSSCH}}^{RCI}$, refer to Table 11.

**Table 11**

| $\text{N}_{\text{PSSCH}}^{\text{PSXCH}}$ | $M_1 = 1$ | $M_1 = 2$ | $M_1 = 3$ | $M_1 = 4$ |
|---|---|---|---|---|
| $N_{\text{PSSCH}}^{HARQ} = 0$ | 0 | 0 | 0 | 0 |
| $N_{\text{PSSCH}}^{HARQ} = 1$ | 1 | 2 | 3 | 4 |
| $N_{\text{PSSCH}}^{HARQ} = 2$ | 2 | 4 | 6 | 8 |
| $N_{\text{PSSCH}}^{HARQ} = 4$ | 4 | 8 | 12 | 16 |

4-3: $N_{\text{PSSCH}}^{HARQ}$ and $M_2$ ($M_2$ is a positive integer) are separately configured, and $\text{N}_{\text{PSSCH}}^{\text{PSXCH}} = \lceil N_{\text{PSSCH}}^{HARQ} \div M_2 \rceil$ or $\text{N}_{\text{PSSCH}}^{\text{PSXCH}} = \lfloor N_{\text{PSSCH}}^{HARQ} \div M_2 \rfloor$ is determined. For example, $M_2$=1, or $M_2$=2, $M_2$=3, or $M_2$=4. Alternatively, $N_{\text{PSSCH}}^{HARQ}$ and $M_2$ ($M_2$ is a positive integer) are separately configured, and $\text{N}_{\text{PSSCH}}^{\text{PSXCH}} = N_{\text{PSSCH}}^{HARQ} \div M_2$ is determined. The network device ensures that configured $\text{N}_{\text{PSSCH}}^{\text{PSXCH}}$ is an integer. For example, $M_2$=1, $M_2$=2, $M_2$=3, or $M_2$=4. For details about determining $\text{N}_{\text{PSSCH}}^{\text{PSXCH}}$, refer to Table 12 or Table 13.

**Table 12**

| $\text{N}_{\text{PSSCH}}^{\text{PSXCH}}$ | $M_2 = 1$ | $M_2 = 2$ | $M_2 = 3$ | $M_2 = 4$ |
|---|---|---|---|---|
| $N_{\text{PSSCH}}^{HARQ} = 0$ | 0 | 0 | 0 | 0 |
| $N_{\text{PSSCH}}^{HARQ} = 1$ | 1 | 1 | 1 | 1 |
| $N_{\text{PSSCH}}^{HARQ} = 2$ | 2 | 1 | 1 | 1 |
| $N_{\text{PSSCH}}^{HARQ} = 4$ | 4 | 2 | 1 | 1 |

**Table 13**

| $\text{N}_{\text{PSSCH}}^{\text{PSXCH}}$ | $M_2 = 1$ | $M_2 = 2$ | $M_2 = 3$ | $M_2 = 4$ |
|---|---|---|---|---|
| $N_{\text{PSSCH}}^{\text{PSFCH}} = 0$ | 0 | 0 | 0 | 0 |

(continued)

| $N_{\text{PSSCH}}^{\text{PSXCH}}$ | $M_2 = 1$ | $M_2 = 2$ | $M_2 = 3$ | $M_2 = 4$ |
|---|---|---|---|---|
| $N_{\text{PSSCH}}^{\text{PSFCH}} = 1$ | 1 | 0 | 0 | 0 |
| $N_{\text{PSSCH}}^{\text{PSFCH}} = 2$ | 2 | 1 | 0 | 0 |
| $N_{\text{PSSCH}}^{\text{PSFCH}} = 4$ | 4 | 2 | 1 | 1 |

In another implementation, the period $N_{\text{PSSCH}}^{RCI}$ of the first time domain resource is the same as the period $N_{\text{PSSCH}}^{HARQ}$ of the HARQ information resource by default (that is, $N_{\text{PSSCH}}^{RCI}$ is not independently configured). If the period of the first time domain resource is configured, the period of the first time domain resource is $N_{\text{PSSCH}}^{RCI}$.

In this embodiment, the network device configures the first time domain resource set and the feedback time domain resource set for the terminal device, and separately configures the first time domain resource and the feedback time domain resource. This reduces system overheads, and avoids a receiving and sending conflict, a sending and sending conflict, and a receiving and receiving conflict of the feedback information and a plurality of resource conflict degrees.

In some embodiments, the first time domain resource occupies two symbols in one slot, and the two symbols are adjacent. A first symbol is a copy of a second symbol and is used for automatic gain control (automatic gain control, AGC). *l''* is defined as a second symbol location of the first time domain resource in the slot.

Optionally, the second symbol location " of the first time domain resource in the slot is "= sl-StartSymbol+ sl-LengthSymbols-XRCI. $X_{RCI}$ is a positive integer. sl-StartSymbol indicates a start symbol for sidelink in a slot without an SL-SSB. sl-LengthSymbols indicates a number of symbols for sidelink in the slot without the SL-SSB. sl-StartSymbol and sl-LengthSymbols are configured by the network device. A single value may be (pre)configured for each sidelink bandwidth part (bandwidth part, BWP). For example, $X_{RCI}=2$ indicates a penultimate symbol of the second symbol of the first time domain resource in the slot, or $X_{RCI}=2$ indicates a penultimate symbol and an antepenultimate symbol of the first time domain resource in the slot.

Optionally, the symbol is an ODFM symbol.

In some embodiments, the second configuration information sent by the network device includes/indicates period information and/or offset information of the first time domain resource. The terminal device determines, based on the period information and/or the offset information of the first time domain resource, the time domain location for sending the resource conflict information. The offset information is an offset between a time domain start location of the feedback time domain resource and a time domain start location of the first time domain resource, or the offset information is an offset between a time domain end location of the feedback time domain resource and an end location of the first time domain resource.

The offset may be represented by offset, delta, or the like, and a name of the offset is not limited. In the present invention, the offset is used as an example for description. The offset means the offset between the time domain start location of the feedback time domain resource and the time domain start location of the first time domain resource, or the offset information is the offset between the time domain end location of the feedback time domain resource and the end location of the first time domain resource. The feedback time domain resource belongs to the feedback time domain resource set, and the first time domain resource belongs to the first time domain resource set.

In a specific implementation, an offset (offset) between the first time domain resource and the PSFCH resource is configured. A value of the offset is an integer, for example, any one or more of {-4, -3, -2, -1, 0, 1, 2, 3, 4}. The unit of the offset (offset) is a slot.

Optionally, offset=0 indicates that the first time domain resource and the feedback time domain resource are located on a same symbol in a same slot, or the first time domain resource and the feedback time domain resource are location on different symbols in a same slot.

The resource conflict information and the HARQ information are transmitted on the PSFCH. Offset=0 indicates that the resource conflict information and the HARQ information may be transmitted on the same PSFCH.

The resource conflict information is transmitted on the PSXCH, and the HARQ information is transmitted on the PSFCH. Offset=0 indicates that the PSXCH and PSFCH overlap in time domain and are in a same symbol in a same slot. Alternatively, the first time domain resource and the feedback time domain resource are in different symbols in a same slot.

A start location of the first time domain resource in the resource pool is the same as a start location of the HARQ information resource in the resource pool (that is, the offset is not independently configured). If the offset (offset) between the first time domain resource and the PSFCH resource is configured, the start location of the first time domain resource in the resource pool is the start location of the HARQ information resource in the resource pool plus the offset.

In another specific implementation, the period $N_{\text{PSSCH}}^{RCI}$ and an offset (offset) of the first time domain resource are configured. The first time domain resource and the HARQ information resource may have a same period value and different offsets (offset), have different period values and a same offset (offset), or have different period values and different offsets (offset). Frequency domain resources in a same slot are limited. Therefore, the foregoing two types of resources are distinguished in time domain, so that the resources can be properly used.

In still another specific implementation, the first time domain resource and the HARQ information resource are configured, and the conflict indication is sent conditionally. As shown in FIG. 13c and FIG. 13d, the first time domain resource and a time domain resource of the HARQ information resource partially overlap or do not partially overlap. If the first time domain resource and the time domain resource of the HARQ information resource overlap, a receiving and sending conflict and a sending and sending conflict of the resource conflict information and the HARQ information are aggravated. Therefore, this embodiment avoids the receiving and sending conflict and a sending and sending conflict.

In some embodiments, the first time domain resource belongs to a first time unit set, and the first time unit set includes at least one of the following types of time units:

a first time unit in which the first time domain resource and the feedback time domain resource are configured;
a second time unit in which the first time domain resource is configured;
a third time unit in which the feedback time domain resource is configured; and
a fourth time unit in which the first time domain resource or the feedback time domain resource is not configured.

It should be noted that the first time unit set includes the first time domain resource set and/or the feedback time domain resource set.

With reference to FIG. 14a and FIG. 14b, slots 0 and 4 in FIG. 14a are respectively first time units, and slots 2 and 6 in FIG. 14a are respectively third time units; and slots 0 and 4 in FIG. 14b are respectively first time units, and slots 2 and 6 in FIG. 14b are respectively second time units.

In some embodiments, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit. The reception and transmission parameter includes at least two of the following:

H1 pieces of to-be-sent feedback information,
H2 pieces of to-be-received feedback information,
R1 pieces of to-be-sent resource conflict information,
R2 pieces of to-be-received resource conflict information,
a maximum number C1 of pieces of resource conflict information and/or feedback information that can be sent; and
a maximum number C2 of pieces of resource conflict information and/or feedback information that can be received.

In some embodiments, that the terminal device determines, based on the type of the time unit and the reception and transmission parameter, to receive the resource conflict information and/or the feedback information in the time unit, or to send the resource conflict information and/or the feedback information in the time unit includes at least one of the following methods:

When the type of the time unit is the first time unit, the terminal device determines, based on priority values of the H1 pieces of to-be-sent feedback information and priority values of the R1 pieces of to-be-sent resource conflict information, to send C1 pieces of feedback information and/or resource conflict information with a smallest priority value;

when the type of the time unit is the first time unit, the terminal device determines, based on priority values of the H2 pieces of to-be-received feedback information and priority values of the R2 pieces of to-be-received resource conflict information, to receive C2 pieces of feedback information and/or resource conflict information with a smallest priority value;
when the type of the time unit is the second time unit, the terminal device determines, based on priority values of the R1 pieces of to-be-sent resource conflict information, to send max{0, C1-H1} or max{0, min{C1-H1, R1}} pieces of resource conflict information with a smallest priority value;

when the type of the time unit is the second time unit, the terminal device determines, based on priority values of the R2 pieces of to-be-received resource conflict information, to receive max{0, C2-H2} or max{0, min{C2-H2, R2}} pieces of resource conflict information with a smallest priority value;

when the type of the time unit is the third time unit, the terminal device determines, based on priority values of the R1 pieces of to-be-sent resource conflict information, to send min{R1, C1} pieces of resource conflict information with a smallest priority value; and/or

when the type of the time unit is the third time unit, the terminal device determines, based on priority values of the R2 pieces of to-be-received resource conflict information, to receive min{R2, C2} pieces of resource conflict information with a smallest priority value.

It should be noted that, when the type of the time unit is the second time unit, that the terminal device determines, based on the priority values of the R1 pieces of to-be-sent resource conflict information, to send the max{0, C1-H1} or max{0, min{C1-H1, R1}} pieces of resource conflict information with the smallest priority value includes one of the following: The terminal device determines, based on the priority values of the R1 pieces of to-be-sent resource conflict information, to send the max{0, C1-H1} pieces of resource conflict information with the smallest priority value; or the terminal device determines, based on the priority values of the to-be-sent resource conflict information, to send the max{0, min{ C 1-H1, R1}} pieces of resource conflict information with the smallest priority value.

Similarly, when the type of the time unit is the second time unit, that the terminal device determines, based on the priority values of the H1 pieces of to-be-received resource conflict information, to receive the max{0, C2-H2} or max{0, min{C2-H2, R2}} pieces of resource conflict information with the smallest priority value includes one of the following: The terminal device determines, based on the priority values of the R2 pieces of to-be-sent resource conflict information, to send the max{0, C2-H2} pieces of resource conflict information with the smallest priority value; or the terminal device determines, based on the priority values of the to-be-sent resource conflict information, to send the max{0, min{C2-H2, R2}} pieces of resource conflict information with the smallest priority value.

For example, when the type of the time unit is the first time unit. The terminal device determines to receive or send the resource conflict information and/or the feedback information. To be specific, the terminal device determines, based on a smallest priority value in the priority values of the H1 pieces of to-be-sent HARQ information, the priority values of the R1 pieces of to-be-sent resource conflict information, the priority values of the H2 pieces of to-be-received HARQ information, and the priority values of the R2 pieces of to-be-received resource conflict information, to send or receive the resource conflict information and/or the feedback information. If the smallest priority value belongs to to-be-sent priority values of the H1 pieces of to-be-sent HARQ information and/or the priority values of the R1 pieces of to-be-sent resource conflict information, the terminal device sends the HARQ information and/or the resource conflict information; or if the smallest priority value belongs to to-be-received priority values of the H2 pieces of to-be-sent HARQ information and/or the priority values of the R2 pieces of to-be-received resource conflict information, the terminal device receives the HARQ information and/or the resource conflict information.

When determining to send the HARQ information and/or the resource conflict information, the terminal device determines to-be-sent information. To be specific, the terminal device determines, based on the priority values of the H1 pieces of to-be-sent HARQ information and the priority values of the R1 to-be-sent conflict indications, to send the C1 pieces of HARQ information and/or conflict indications with the smallest priority value.

When determining to receive the HARQ information and/or the resource conflict information, the terminal device determines to-be-received information. To be specific, the terminal device determines, based on the priority values of the H2 pieces of to-be-received HARQ information and the priority values of the R2 pieces of to-be-received resource conflict information, to receive the C2 pieces of HARQ information and/or conflict indications with the smallest priority value.

For another example, when the type of the time unit is the second time unit. The terminal device determines to receive or send the HARQ information and/or the resource conflict information. The terminal device determines, based on a smallest priority value in the priority values of the H1 pieces of to-be-sent HARQ information and the priority values of the H2 pieces of to-be-received HARQ information, to send or receive the HARQ information and/or the resource conflict information. If the smallest priority value belongs to to-be-sent priority values of the H1 pieces of to-be-sent HARQ information, the terminal device sends the HARQ information and/or the resource conflict information; or if the smallest priority value belongs to to-be-received priority values of the H2 pieces of to-be-received HARQ information, the terminal device receives the HARQ information and/or the resource conflict information.

When determining to send the HARQ information and/or the resource conflict information, the terminal device determines to-be-sent information. To be specific, if H1 is greater than or equal to C1, the terminal device determines, based on the priority values of the H1 pieces of to-be-sent HARQ information, to send the C1 pieces of HARQ information with the smallest priority value. If H1 is less than C1, the terminal device sends the H1 pieces of to-be-sent HARQ information, and determines, based on the priority values of the R1 pieces of to-be-sent resource conflict information, to send C1-H1 or min{C1-H1, R1} conflict indications with a smallest priority value; or the terminal device determines, based on the priority values of the H1 pieces of to-be-sent HARQ information, to send min{H1, C1} pieces of HARQ information with a smallest priority value, and the terminal device determines, based on the priority values of the R1 to-be-sent conflict indications, to send max{0, C1-H1} or max{0, min{C1-H1, R1}} conflict indications with a smallest priority value.

When determining to receive the HARQ information and/or the resource conflict information, the terminal device determines to-be-received information. To be specific, if H2 is greater than or equal to C2, UE determines, based on the priority values of the H2 pieces of to-be-received HARQ information, to receive the C2 pieces of HARQ information with a smallest priority value. If H2 is less than C2, the terminal device receives the H2 pieces of to-be-received HARQ information, and determines, based on the priority values of R2 pieces of to-be-received resource conflict information, to receive C2-H2 or min{C2-H2, R2} pieces of resource conflict information with a smallest priority value; or the terminal device determines, based on the priority values of H2 pieces of to-be-received HARQ information, to receive min {C2, H2} pieces of HARQ information with a smallest priority value, and the terminal device determines, based on the priority values of the R2 pieces of to-be-received resource conflict information, to receive max{0, C2-H2} or max{0, min { C2-H2, R2}} conflict indications with a smallest priority value.

For another example, when the type of the time unit is the third time unit. The terminal device determines to receive or send the HARQ information and/or the resource conflict information. The terminal device determines, based on a smallest priority value in the priority values of the R1 pieces of to-be-sent resource conflict information and the priority values of the R2 pieces of to-be-received resource conflict information. If the smallest priority value belongs to to-be-sent priority values of the R1 pieces of to-be-sent resource conflict information, the terminal device sends the HARQ information and/or the resource conflict information; or if the smallest priority value belongs to the priority values of the R2 pieces of to-be-received resource conflict information, the terminal device receives the HARQ information and/or the resource conflict information.

When determining to send the HARQ information and/or the resource conflict information, the terminal device determines to-be-sent information. To be specific, if R1 is greater than or equal to C1, the terminal device determines, based on the priority values of the R1 pieces of to-be-sent the resource conflict information, to send the C1 pieces of the resource conflict information with the smallest priority value. If R1 is less than C1, the terminal device sends the R1 pieces of to-be-sent resource conflict information, and determines, based on the priority values of the H1 pieces of to-be-sent HARQ information, to send C1-R1 pieces of HARQ information with a smallest priority value; or the terminal device determines, based on the priority values of the R1 to-be-sent conflict indications, to send min{R1, C1} conflict indications with a smallest priority value, and the terminal device determines, based on the priority values of the H1 pieces of to-be-sent HARQ information, to send max{0, C1-R1} or max{0, min{C1-R1, H1}} pieces of HARQ information with a smallest priority value.

When determining to receive the HARQ information and/or the resource conflict information, the terminal device determines to-be-received information. To be specific, if R2 is greater than or equal to C2, the terminal device determines, based on the priority values of the R2 pieces of to-be-received the resource conflict information, to receive C2 pieces of conflict indication with a smallest priority value. If R2 is less than C2, the terminal device receives the R2 pieces of to-be-received resource conflict information, and determines, based on the priority values of the H2 pieces of to-be-received HARQ information, to receive C2-R2 pieces of HARQ information with a smallest priority value; or the terminal device determines, based on the priority values of the R2 pieces of to-be-received resource conflict information, to receive min{R2, C2} pieces of resource conflict information with a smallest priority value, and the terminal device determines, based on the priority values of the H2 pieces of to-be-received HARQ information, to receive max{0, C2-R2} or max{0, min{C2-R2, H2}} pieces of HARQ information with a smallest priority value.

It should be understood that, in the foregoing embodiment, a smaller priority value indicates a higher priority level. However, this is merely an example, and does not constitute a limitation on this application. For example, a larger priority value may also indicate a higher priority level. When the larger priority value indicates the higher priority level, the foregoing embodiment may include at least one of the following:

When the type of the time unit is the first time unit, the terminal device determines, based on the priority values of the H1 pieces of to-be-sent feedback information and the priority values of the R1 pieces of to-be-sent resource conflict information, to send C1 pieces of feedback information and/or resource conflict information with a largest priority value;

when the type of the time unit is the first time unit, the terminal device determines, based on the priority values of the H2 pieces of to-be-received feedback information and the priority values of the R2 pieces of to-be-received resource conflict information, to receive C2 pieces of feedback information and/or resource conflict information with a largest priority value;

when the type of the time unit is the second time unit, the terminal device determines, based on the priority values of the R1 pieces of to-be-sent resource conflict information, to send max{0, C1-H1} or max{0, min{C1-H1, R1}} pieces of resource conflict information with a largest priority value;

when the type of the time unit is the second time unit, the terminal device determines, based on the priority values of the R2 pieces of to-be-received resource conflict information, to receive max{0, C2-H2} or max{0, min{ C2-H2, R2} } pieces of resource conflict information with a largest priority value;

when the type of the time unit is the third time unit, the terminal device determines, based on the priority values of the R1 pieces of to-be-sent resource conflict information, to send min{R1, C1} pieces of resource conflict information with a largest priority value; and/or

when the type of the time unit is the third time unit, the terminal device determines, based on the priority values of the R2 pieces of to-be-received resource conflict information, to receive min{R2, C2} pieces of resource conflict information with a largest priority value.

In some embodiments, the resource conflict information is transmitted on the PSFCH. A resource for transmitting the resource conflict information belongs to a conflict resource set, and a resource for transmitting the HARQ information belongs to a feedback resource set. The conflict resource set and the feedback resource set do not overlap in frequency domain, or are orthogonal in frequency domain. Alternatively, the resource conflict information is transmitted on the PSXCH, and the HARQ information is transmitted on the PSFCH. A resource for transmitting the conflict information is a PSXCH resource, and a resource for transmitting the HARQ information is a PSFCH resource. The PSXCH resource and the PSFCH resource do not overlap in frequency domain, or are orthogonal in frequency domain.

In general, the preceding design can be classified into the following two types of solutions:

Type 1: A first time domain resource is configured in a time domain subset of the PSFCH. Beneficial effect is that complete backward compatibility is achieved and transmission of legacy UE is not affected at all.

Type 2: A first time domain resource is configured on a resource (for example, the PSXCH) other than the PSFCH. Beneficial effect is that the first time domain resource is flexibly configured, and a receiving and sending conflict of the resource and the PSFCH is reduced.

Optionally, a frequency domain resource that carries the resource conflict information may be a PRB set, a PRB index, or even a combination of a frequency domain resource and a CS sequence.

The conflict information is transmitted on the PSXCH. The resource for transmitting the conflict information belongs to a conflict information resource set, and the resource for transmitting the HARQ information belongs to a HARQ information resource set. The conflict information resource set and the HARQ information resource set do not overlap in frequency domain, or the resource sets are orthogonal in frequency domain.

The conflict information is transmitted on the PSXCH, and the HARQ information is transmitted on the PSFCH. The resource for transmitting the conflict information is the PSXCH resource, and the resource for transmitting the HARQ information is the PSFCH resource. The PSXCH resource and the PSFCH resource do not overlap in frequency domain, or resource sets are orthogonal in frequency domain.

The network configures the conflict information resource set and/or a frequency domain resource of the PSXCH resource. Specifically, the frequency domain resource may be a PRB set, a PRB index, or even a combination of a frequency domain resource and a CS sequence.

In some embodiments, the first time domain resource occupies two symbols in one slot, and the two symbols are adjacent. A first symbol is a copy of a second symbol and is used for automatic gain control (automatic gain control, AGC). $l''$ is defined as a second symbol location of the first time domain resource in the slot.

Optionally, the second symbol location $l''$ of the first time domain resource in the slot is $l''$=sl-StartSymbol+sl-LengthSymbols-$X_{RCI}$. $X_{RCI}$ is a positive integer. sl-StartSymbol indicates a start symbol for sidelink in a slot without an SL-SSB. sl-LengthSymbols indicates a number of symbols for sidelink in the slot without the SL-SSB. sl-StartSymbol and sl-LengthSymbols are configured by the network device. A single value may be (pre)configured for each sidelink bandwidth part (bandwidth part, BWP). For example, $X_{RCI}$=2 indicates a penultimate symbol of the second symbol of the first time domain resource in the slot, or $X_{RCI}$=2 indicates a penultimate symbol and an antepenultimate symbol of the first time domain resource in the slot.

Optionally, the symbol is an ODFM symbol.

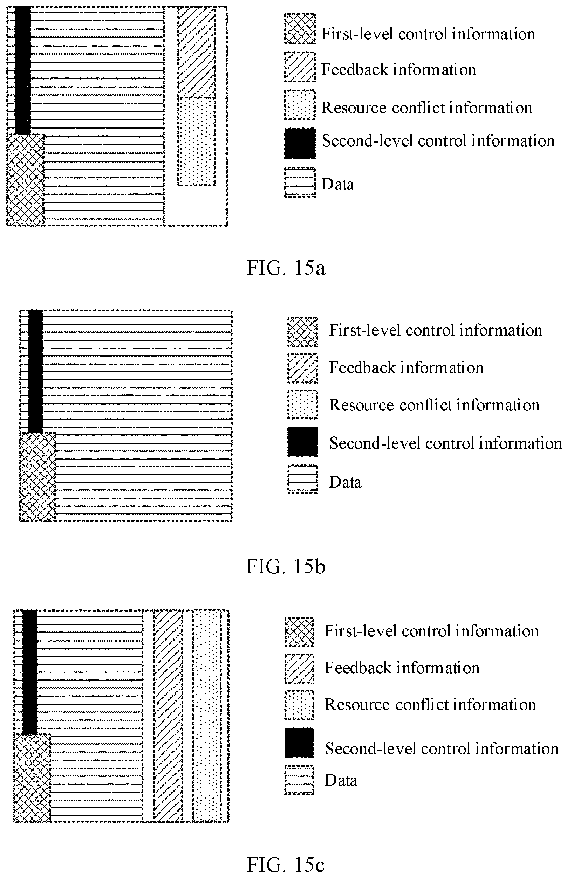

With reference to FIG. 15a, FIG. 15b, and FIG. 14c, in FIG. 15a, the first time domain resource and the feedback time domain resource are located in a same symbol. In FIG. 15c, the first time domain resource and the feedback time domain resource are located on different symbols in a same slot. The resource conflict information is carried in the time unit shown in FIG. 15a or FIG. 14c. When determining a transport block size TBS, for carrying data, in the time unit, the terminal device needs to exclude a symbol, occupied by the resource conflict information, in the time unit. Alternatively, when performing rate matching, the terminal device needs to exclude a resource, occupied by the resource conflict information, in the time unit. It should be understood that, when first-level control information, second-level control information, and/or feedback information shown in FIG. 15a or FIG. 14c are carried in the time unit, when determining the TBS, for carrying the data, in the time unit, the terminal device further needs to exclude symbols occupied by the first-level control information, the second-level control information, and the feedback information. It should be understood that the time unit shown in FIG. 15a may be a first time unit or a second time unit.

No resource conflict information is carried in the time unit shown in FIG. 15b. When determining the TBS, for carrying the data, in the time unit, the terminal device does not need to consider a number of symbols occupied by the resource conflict information. It may be understood that when the first-level control information, the second-level control information, and/or the feedback information shown in FIG. 15b are also carried in the time unit, when determining the TBS, for carrying the data, in the time unit, the terminal device further needs to exclude the symbols occupied by the first-level control information, the second-level control information, and the feedback information. It should be understood that the time unit shown in FIG. 15b may be a third time unit or a fourth time unit.

The network device may configure the first time domain resource in a time domain resource of the PSFCH or outside a time domain resource of the PSFCH.

If the first time domain resource is configured in the time domain resource of the PSFCH, a symbol occupied by the PSFCH in a slot needs to be subtracted for rate matching of the terminal device. An advantage lies in that complete backward compatibility is achieved, and transmission of the conventional terminal device (for example, a Rel-16 terminal device) is not affected at all. If the first time domain resource is configured outside the time domain resource of the PSFCH, a symbol occupied by the first time domain resource in a slot needs to be considered for rate matching of the terminal device. Optionally, this configuration may be performed only on a Rel-17 resource pool, and the first time domain resource is considered during rate matching of a Rel-17 terminal device.

Optionally, a frequency domain resource and/or a code domain resource for sending the resource conflict information are/is different from a frequency domain resource and/or a code domain resource for sending the feedback information.

In some embodiments, the terminal device, for example, the first terminal device, needs to perform rate matching based on a time domain location of a resource of the resource conflict information/feedback information.

For example, in the resource pool configuration, the resource conflict information may be enabled (enable) or disabled (disable), and the feedback information may be enabled or disabled. Because a time domain resource of the resource conflict information may be different from a time domain resource of the feedback information, the first terminal device and the second terminal device need to perform rate matching based on resources of the resource conflict information and the feedback information. Specifically, the following four cases are used as examples for description:

Case 1: The resource conflict information may be enabled, and the feedback information may be enabled.

When calculating the TBS, the first terminal device and the second terminal device need to subtract a symbol occupied by the resource conflict information resource and the feedback information resource in the slot. Alternatively, the first terminal device and the second terminal device calculate a symbol, that needs to be subtracted, occupied by the resource conflict information resource and the feedback information resource in the slot to perform rate matching.

Under different period values of the resource conflict information, there may be a resource conflict information resource or no resource conflict information resource in a slot. Therefore, it needs to be determined, based on the period value of the resource conflict information resource and/or an overhead indication in the control information, whether to subtract a symbol occupied by the resource conflict information resource in the slot.

Case 2: The resource conflict information may be enabled, and the feedback information may be disabled.

When calculating the TBS, the first terminal device and the second terminal device need to subtract a symbol occupied by the resource conflict information resource in the slot. Alternatively, the first terminal device and the second terminal device calculate a symbol, that needs to be subtracted, occupied by the resource conflict information resource in the slot to perform rate matching.

Under different period values of the resource conflict information, there may be a resource conflict information resource or no resource conflict information resource in a slot. Therefore, it needs to be determined, based on the period value of the resource conflict information resource and/or an overhead indication in the control information, whether to subtract a symbol occupied by the resource conflict information resource in the slot.

Case 3: The resource conflict information may be disabled, and the feedback information may be enabled.

When calculating the TBS, the first terminal device and the second terminal device need to subtract a symbol occupied by the feedback information resource in the slot. Alternatively, the first terminal device and the second terminal device calculate a symbol, that needs to be subtracted, occupied by the feedback information resource in the slot to perform rate matching.

Case 4: The resource conflict information may be disabled, and the feedback information may be disabled.

When calculating the TBS, the first terminal device and the second terminal device do not consider a symbol occupied by the resource conflict information resource and the feedback information resource in the slot. Alternatively, the first terminal device and the second terminal device do not need to subtract a symbol, that is not considered, occupied by the resource conflict information resource and the feedback information resource in the slot to perform rate matching.

In the cases 1 to 4, the symbol occupied by the resource conflict information resource in the slot includes one or more of a symbol occupied by the resource conflict information, an extended symbol used by the resource conflict information for AGC, or a GAP symbol caused by a switching between receiving and sending of the resource conflict information. The resource conflict information resource may also be expressed as the PSXCH resource. The feedback information resource may also be expressed as the PSFCH resource.

In this embodiment, the first time domain resource and the feedback time domain resource may be configured in a same time unit, or may be configured in different time units. When the first time domain resource and the feedback time domain resource are configured in the same time unit, compatibility of a communication system is higher, and an original data transmission mode is not affected. When the first time domain resource and the feedback time domain resource are configured in the different time units, a receiving and sending conflict of the resource conflict information and the feedback information can be reduced.

In an existing protocol, the HARQ information indicates whether a receive end successfully decodes data, and the HARQ information is carried on the PSFCH resource. In coordination between the terminal devices, assisting UE can indicate whether a resource conflict occurs. In the present invention, the resource conflict information may further indicate M conflict degrees of the conflict resource. Therefore, even if the HARQ information and the resource conflict information are carried on the PSFCH resource, the HARQ information and the resource conflict information have different requirements for a delay and a number of resources. Therefore, periodic resource location configurations of the HARQ information and the resource conflict information may be decoupled. In addition, different types of conflict indications may also have different requirements on a delay and a number of resources. Therefore, time domain locations of different types of resources for transmitting the resource conflict information may be separately configured, which is more flexible.

In addition, if a same time domain location and/or period are/is configured, a period of each type of resource for transmitting the resource conflict information is short, and a corresponding delay is short, so that the second terminal device and/or the third terminal device can be indicated to retransmit and/or reselect an indicated resource as early as possible. However, different types of resource conflict information need to be distinguished by using a frequency domain resource and/or a code domain resource. When the frequency domain resource and/or the code domain resource are/is limited, configurations of different resource pool parameters may not necessarily support indicating all types of conflicts. In another method, different time domain locations and/or periods are configured, and different types of conflicts are distinguished based on the different time domain locations. A disadvantage of this configuration is that a period of each type of conflict indication resource is long, and a corresponding delay is long. In some resource pool parameter configurations, it may be too late to indicate the second terminal device and/or the third terminal device to retransmit and/or reselect a resource.

As described above, the network device configures resource pools for the terminal devices, so that at least one of control information, data information, feedback information, and conflict indication information can be transmitted between the terminal devices by using resources in the resource pools. For example, the first terminal device may send the resource conflict information to the second terminal device and/or the third terminal device by using the resource in the resource pool. For example, the second terminal device may send the data/control information to another terminal device by using the resource in the resource pool. The resource pool configured by the network device may include a receiving resource pool and a sending resource pool in the foregoing content, and the receiving resource pool and the sending resource pool may not completely overlap. If the first terminal device determines a first time-frequency resource location of the resource conflict information based on a sending resource pool of the first terminal device, the second terminal device and/or the third terminal device determine/determines a second time-frequency resource location of the resource conflict information based on a sending resource pool of the second terminal device and/or a sending resource pool of the third terminal device. In this case, the first time-frequency resource location may be misaligned with the second time-frequency resource location, and the second terminal device and/or the third terminal device cannot receive and decode the resource conflict information at a correct location. That the receiving resource pool and the sending resource pool may not completely overlap may alternatively be expressed as that resource pool indexes of the receiving resource pool and the sending resource pool are inconsistent. Different receiving resource pools or sending resource pools are distinguished based on resource pool indexes. Resource pools with a same resource pool index have a same resource pool configuration, and resource pools with different resource pool indexes have a same resource pool configuration or different resource pool configurations.

In addition, if the resource pool indexes of the receiving resource pool and the sending resource pool are inconsistent, the second terminal device and/or the third terminal device determine/determines an incorrect time-frequency resource location of the resource conflict information, and another incorrect resource location related to the resource pool configuration, for example, determining a PSFCH time domain resource location, determining a retransmission time domain location, and determining a periodic reserved time domain location.

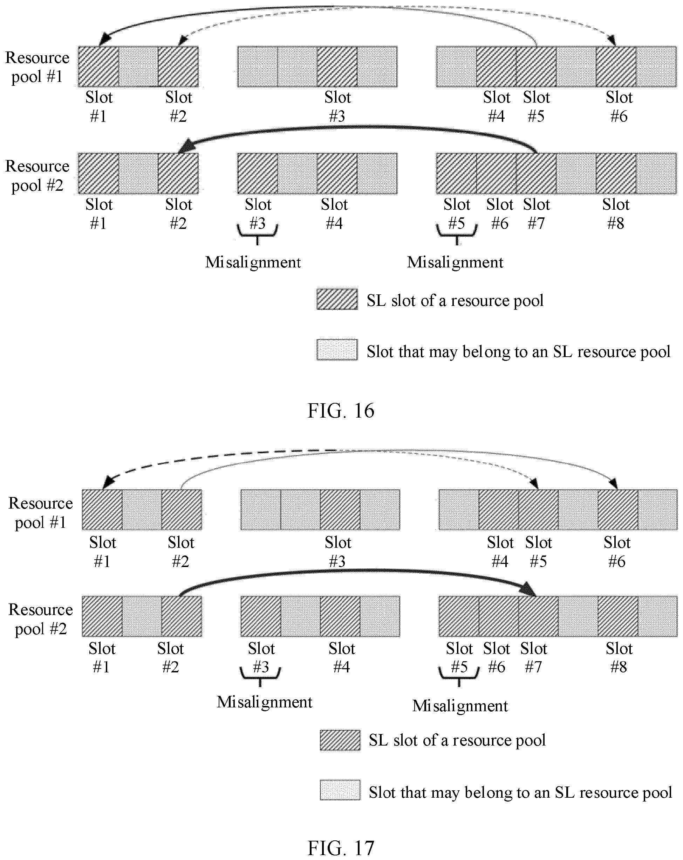

FIG. 16 is a schematic diagram of misalignment between the sending resource pool and the receiving resource pool. FIG. 17 is another schematic diagram of misalignment between the sending resource pool and the receiving resource pool.

As shown in FIG. 16 and FIG. 17, an index of the sending resource pool of the second terminal device is 1, and an index of the receiving resource pool of the first terminal device is 2. A second terminal device 1 sends a PSCCH/PSSCH in a resource pool 1, and the PSCCH/PSSCH sent by the second terminal device 1 is denoted as data 1. The first terminal device senses, in a resource pool 2, a PSCCH/PSSCH sent by {the second terminal device 1, a second terminal device 2...}, to detect whether there is a resource conflict. Further, the first terminal device detects whether a resource indicated by SCI of another transmit end device, for example, a third terminal device, conflicts with a resource indicated by SCI of the second terminal device 1.

As shown in FIG. 16, in the before-collision indication scenario and the half-duplex scenario, a time domain location of a conflict indication is before a time domain location of a conflict resource. A slot 5 of the resource pool 1 is a time domain location of a reserved resource for retransmission or a periodic reserved resource on which the second terminal device 1 sends the data 1. The slot 5 of the resource pool 1 and a slot 7 of the resource pool 2 have a same physical slot number or a same DFN (direct frame number). The first terminal device detects a resource conflict in the slot 7 of the resource pool 2, and determines that the conflict resource is the reserved resource for retransmission or the periodic reserved resource on which the second terminal device 1 sends the data 1, and a reserved resource for retransmission or a periodic reserved resource on which the second terminal device 2 sends data 2. It is assumed that the first terminal device determines, based on a mapping relationship (a thick solid line) between a conflict resource and a conflict indication, that the conflict indication should be sent on a resource in a fifth logical slot before the conflict resource. Because the first terminal device does not know a sending resource pool (resource pool 1) of the second terminal device 1, if the first terminal device determines, based on a configuration of a receiving resource pool (resource pool 2) of the first terminal device, a location for sending the conflict indication, the conflict indication is sent in the slot 2 of the resource pool 2. The following error may occur based on a mapping relationship between a conflict indication and a conflict resource (dashed line):

Error 1: A missed alarm is reported. To be specific, resource reselection of the second terminal device 1 is not triggered, resulting in resource collision.

The second terminal device 1 detects a conflict indication in a slot 1 of the resource pool 1 based on a mapping relationship (a thin solid line) between a conflict resource and a conflict indication. Because the second terminal device 1 fails to detect the conflict indication at a conflict indication time domain location (the slot 1 of the resource pool 1) corresponding to the time domain location of the reserved resource for retransmission or the periodic reserved resource for sending the data 1, it is not considered that a resource conflict occurs, and resource reselection is not triggered. Therefore, reserved resources of the second terminal device 1 and the second terminal device 2 overlap.

Error 2: A false alarm is reported. To be specific, resource reselection of the second terminal device 3 is triggered, resulting in an unnecessary resource waste.

A slot 6 of the resource pool 1 is a time domain location of a reserved resource for retransmission or a periodic reserved resource on which the second terminal device 3 sends data 3. The second terminal device 3 detects, based on a mapping relationship (a dashed line) between a conflict resource and a conflict indication, a conflict indication at the time domain location of the reserved resource for retransmission or the periodic reserved resource for sending the data 3, it is considered that a resource conflict occurs, and resource reselection is triggered. This causes unnecessary resource reselection. Even, because the second terminal device 3 fails to perform transmission at a location indicated by the SCI, chain reservation of the second terminal device 3 is broken, and receiving UE of the second terminal device 3 may fail to receive the data 3.

Therefore, the first terminal device should determine, based on the sending resource pool index of the second terminal device, the time domain location (a thin solid line) for sending the conflict indication.

As shown in FIG. 17, in the after-collision indication scenario and the half-duplex scenario, a time domain location of a conflict indication is after a time domain location of a conflict resource. A slot 2 of the resource pool 1 is a time domain location of a reserved resource for retransmission or a periodic reserved resource on which the second terminal device 1 sends the data 1. The slot 2 of the resource pool 1 and a slot 2 of the resource pool 2 have a same physical slot number or a same DFN (direct frame number). The first terminal device detects a resource conflict in the slot 2 of the resource pool 2, and determines that a conflict resource is a resource on which the second terminal device 1 sends the data 1, and a resource on which the second terminal device 2 sends the data 2. It is assumed that the first terminal device determines, based on a mapping relationship (a thick solid line) between a conflict resource and a conflict indication, that the conflict indication should be sent on a resource in a fifth logical slot after the conflict resource. Because the first terminal device does not know a sending resource pool (resource pool 1) of the second terminal device 1, if the first terminal device determines, based on a configuration of a receiving resource pool (resource pool 2) of the first terminal device, a location for sending the conflict indication, the conflict indication is sent in a slot 7 of the resource pool 2. The following error may occur based on a mapping relationship between a conflict indication and a conflict resource (dashed line):

Error 1: A missed alarm is reported. To be specific, resource retransmission of the second terminal device 1 is not triggered, resulting in a decoding failure of receiving UE of the second terminal device 1.

The second terminal device 1 detects a conflict indication in a slot 6 of the resource pool 1 based on a mapping relationship (a thin solid line) between a conflict resource and a conflict indication. Because the second terminal device 1 fails to detect the conflict indication at a conflict indication time domain location (the slot 6 of the resource pool 1) corresponding to the time domain location of the resource for sending the data 1, it is not considered that a resource conflict occurs, and resource retransmission is not triggered. Consequently, the receiving UE of the second terminal device 1 cannot decode the data 1.

Error 2: A false alarm is reported. To be specific, retransmission of the second terminal device 3 is triggered, resulting in an unnecessary resource waste.

A slot 2 of the resource pool 1 is a time domain location of a resource on which the second terminal device 3 sends data 3. The second terminal device 3 detects, based on a mapping relationship (a dashed line) between a conflict resource and a conflict indication, a conflict indication at the time domain location of the resource for sending the data 3, it is considered that a resource conflict occurs, and resource retransmission is triggered. This causes unnecessary resource retransmission, wastes resources, and increases system load.

Therefore, the first terminal device should determine, based on the sending resource pool index of the second terminal device, the time domain location (a thin solid line) for sending the conflict indication.

Further, principles for the PSFCH time domain location, the retransmission time domain location of the second terminal device, and the periodic reserved time domain location of the second terminal device are similar to those in the after-collision scenario shown in FIG. 17. Different time domain configurations of the receiving resource pool and the sending resource pool may cause a missed alarm and/or a false alarm of HARQ information, and further cause a decoding failure or unnecessary retransmission. The different time domain configurations of the receiving resource pool and the sending resource pool may cause incorrect calculation of time domain locations of retransmission and periodic transmission. As a result, the receiving UE can only perform blind detection for receiving. Different resource pools have different DMRS time domain mode lists. Receiving/sensing UE performs decoding based on an incorrect DMRS time domain location, and cannot correctly determine a second-order SCI time domain location, decode data, or measure a power.

For the foregoing problem, in this embodiment, the first terminal device determines a first resource pool that is consistent with the second terminal device, and sends resource conflict information to the second terminal device by using a resource in the first resource pool; and/or the first terminal device determines a first resource pool that is consistent with the third terminal device, and sends resource conflict information to the third terminal device by using a resource in the first resource pool.

Optionally, the first terminal device determines that the sending resource pool of the second terminal device is the first resource pool, and the first terminal device sends the resource conflict information to the second terminal device by using the resource in the first resource pool; and/or optionally, the first terminal device determines that the sending resource pool of the third terminal device is the first resource pool, and the first terminal device sends the resource conflict information to the third terminal device by using the resource in the first resource pool.

Optionally, the first terminal device determines that the sending resource pool of the second terminal device is the first resource pool, and the first terminal device calculates at least one of the PSXCH time domain location, the PSFCH time domain location, the retransmission time domain location of the second terminal device, the periodic reserved time domain location of the second terminal device, the DMRS time domain mode list (DMRS-TimePatternList), a PSFCH candidate resource type, and a CS pair index based on the sending resource pool index of the second terminal device. The sending resource pool index is an index of a resource pool used by the second terminal device to send the PSCCH/PSSCH. The PSXCH time domain location may also be represented as a time unit for sending the PSXCH or a time unit for sending the conflict indication. The PSFCH time domain location may also be represented as a time unit for sending the PSFCH.

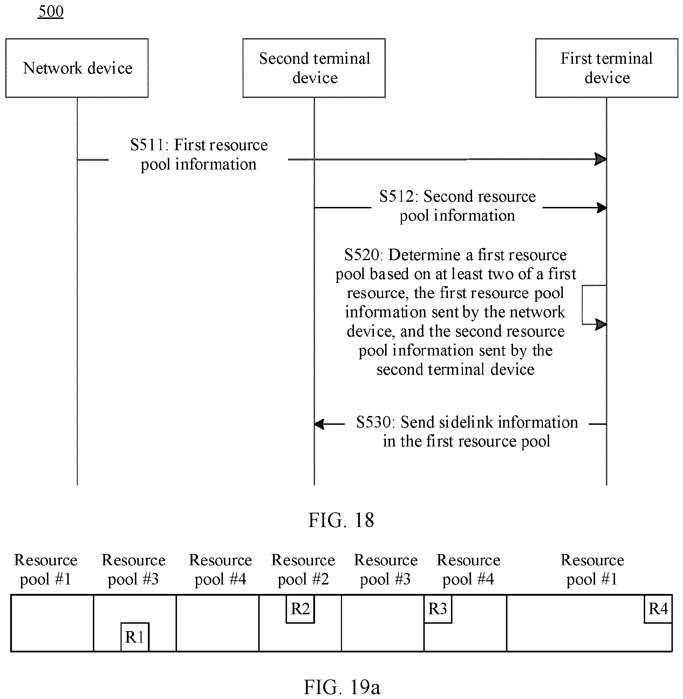

The second terminal device and the third terminal device play a same role and perform a same operation or similar operations in this application. In this embodiment, only the second terminal device is used as an example for description. The following provides descriptions with reference to FIG. 18.

FIG. 18 is a schematic flowchart of a sidelink transmission method 500 according to an embodiment of this application. The embodiment shown in FIG. 18 includes some or all of the following steps S511 to S520.

S511: A network device sends first resource pool information to a first terminal device.

S512: A second terminal device sends first resource pool information to the first terminal device.

S520: The first terminal device determines a first resource pool based on at least two of a first resource, the first resource pool information sent by the network device, and the second resource pool information sent by the second terminal device, where the first resource is a resource used by the second terminal device for transmission, the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other.

S530: The first terminal device sends sidelink information in the first resource pool.

It should be noted that, that resource pools in the resource pool set indicated by the first resource pool information do not overlap each other includes that any two resource pools do not overlap each other, and optionally, time domain resources or frequency domain resources of any two resource pools do not overlap each other.

That resource pool subsets indicated by the first resource pool information do not overlap each other includes: The first resource pool information indicates that any two of at least two resource pool subsets do not overlap each other, optionally, resources in any two resource pool subsets do not overlap each other in time domain and frequency domain, and optionally, resource pools in a same resource pool subset may overlap in time domain or frequency domain.

That resource pools in the resource pool subset indicated by the first resource pool information do not overlap each other includes: The first resource pool information indicates at least two resource pool subsets, and resource pools in each of the at least two resource pool subsets do not overlap each other; or the resource pool subset indicated by the first resource pool information includes at least two resource pools and the at least two resource pools do not overlap each other; and optionally, resources of any two resource pools do not overlap each other in time domain and frequency domain. Optionally, resource pools in different subsets may overlap in time domain or frequency domain.

It should be noted that, that the first terminal device determines the first resource pool based on at least two of the first resource, the first resource pool information, and the second resource pool information includes: 1. The first terminal device determines the first resource pool based on the first resource and the first resource pool information. 2. The first terminal device determines the first resource pool based on the first resource and the second resource pool information. 3. The first terminal device determines the first resource pool based on the first resource pool information and the second resource pool information. 4. The first terminal device determines the first resource pool based on the first resource, the first resource pool information, and the second resource pool information.

In some embodiments, the first resource pool may alternatively be preconfigured.

Further, numbers of resource pools in all resource pool subsets may be unequal. When the resource pool subsets support different service types, more resource pools can be divided for some services.

Optionally, at least one resource pool subset indicated by the first resource pool information, the resource pool set, or the resource pool subset set may alternatively be preconfigured.

Optionally, the first resource pool information may indicate the resource pool set, and the first resource pool information may further indicate a resource pool index set.

It should be noted that the sidelink information may include at least one of data, control information, feedback information, and resource conflict information.

In some embodiments, the first terminal device determines the first resource pool based on the first resource and the first resource pool information. The first resource pool information indicates the resource pool set, and resource pools in the resource pool set do not overlap each other. The first terminal device determines the first resource pool based on a resource pool index, where the resource pool index is an index of a resource pool in which the first resource is located.

For example, the first terminal device may determine a resource pool index of the first resource in the resource pool set.

For example, the first terminal device may determine a sending resource pool of the second terminal device based on a location of a resource location indicated by SCI of the second terminal device. Therefore, a time domain location for sending the resource conflict information is determined based on configuration information of the sending resource pool of the second terminal device. Optionally, at least one of a PSXCH time domain location, a PSFCH time domain location, a retransmission time domain location of the second terminal device, a periodic reserved time domain location of the second terminal device, a DMRS time domain mode list (DMRS-TimePatternList), a PSFCH candidate resource type, and a CS pair index is determined based on the configuration information of the sending resource pool of the second terminal device. With reference to FIG. 19a, for example, the network device configures four resource pools based on first control information, and resource pool indexes are respectively {1, 2, 3, 4}. If the first terminal device detects a resource conflict on R1, the implicitly associated sending resource pool of the second terminal device is a resource pool 3. If the first terminal device detects a resource conflict on R2, the implicitly associated sending resource pool of the second terminal device is a resource pool 2. If the first terminal device detects a resource conflict on R3, the implicitly associated sending resource pool of the second terminal device is a resource pool 4. If the first terminal device detects a resource conflict on R4, the implicitly associated sending resource pool of the second terminal device as a resource pool 1.

With reference to FIG. 19a, for example, the network device configures four resource pools based on the first resource pool information, and resource pool indexes are respectively {1, 2, 3, 4}. If the first terminal device detects the first resource on R1, the implicitly associated sending resource pool of the second terminal device is a resource pool 3. If the first terminal device detects the first resource on R2, the implicitly associated sending resource pool of the second terminal device is a resource pool 2. If the first terminal device detects the first resource on R3, the implicitly associated sending resource pool of the second terminal device is a resource pool 4. If the first terminal device detects the first resource on R4, the implicitly associated sending resource pool of the second terminal device is a resource pool 1.

In this implementation, the second terminal device does not need to send the second resource pool information, thereby further reducing signaling overheads of the second terminal device.

In some embodiments, the first terminal device determines the first resource pool based on the first resource, the first resource pool information, and the second resource pool information. The first resource pool information indicates the resource pool subset set, the first resource pool subsets in the resource pool subset set do not overlap each other, and the second resource pool information indicates a resource pool index in the resource pool subset, so that the first terminal device determines the first resource pool based on the resource pool index in the resource pool subset and a resource pool subset index corresponding to the first resource. It should be noted that the resource pool subset index corresponding to the first resource is an index of the first resource pool subset in which the first resource is located in the resource pool subset set.

The network device configures a sending resource pool subset, the second terminal device indicates the resource pool index in the resource pool subset, and the first terminal device is implicitly associated with a sending resource pool of the second terminal device based on a location of the first resource.

The network device may configure a plurality of resource pool subsets based on the first resource pool information, and time-frequency resources in the resource pool subset do not overlap each other. The second resource pool information of the second terminal device indicates the resource pool index in the resource pool subset. The first terminal device determines the sending resource pool index of the second terminal device based on the resource pool subset index and the first resource of the second terminal device.

Each resource pool subset configured by the network based on the first resource pool information includes Z4 resource pools, for example, Z4=4. $\lceil log_2 Z4 \rceil$ bits in the second resource pool information are needed to indicate a resource pool index in the sending resource pool subset, for example, $\lceil log_2 4 \rceil = 2$ bits. $\lceil log_2 Z4 \rceil$ bits in the second resource pool information need to be occupied to indicate a sending resource pool set index, and a value of this field is in a one-to-one correspondence with the resource pool index in the sending resource pool subset. The second resource pool information may be carried in any one or more of SCI, first-order SCI, second-order SCI, a new second-order SCI, third-order SCI, a MAC CE, RRC, and PC5-RRC. The first resource pool information may be carried in any one or more of the RRC and the PC5-RRC.

Further, resource pools in the resource pool subsets may be different. For example, a list of a resource pool subset 1 is {1, 2, 3, 4}, and a list of a resource pool subset 2 is {5, 6, 7, 8}. Alternatively, resource pools in the resource pool subsets may be partially the same. For example, a list of a resource pool subset 1 is {1, 2, 3, 4}, and a list of a resource pool subset 2 is {3, 5, 6, 7}.

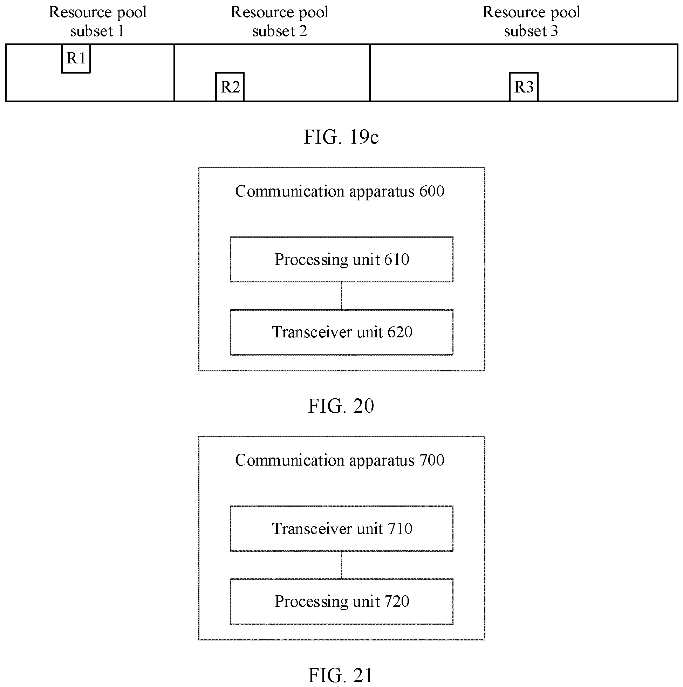

In FIG. 19c, the network device configures the resource pool subset, and resource pools in the resource pool subset do not overlap each other.

For example, the network device configures 12 resource pools, and a list of resource pool indexes is {1, 2, 3, 4, 5, 6, 7, 8, 9, 10, 11, 12}. The network configures three resource pool subsets based on the first resource pool information. A list of a resource pool subset 1 is {1, 2, 3, 4}, and resource pools {1, 2, 3, 4} are respectively represented by indexes 0, 1, 2, and 3. A list of a resource pool subset 2 is {5, 6, 7, 8}, and resource pools {5, 6, 7, 8} are respectively represented by indexes 0, 1, 2, and 3. A list of a resource pool subset 3 is {9, 10, 11, 12}, and resource pools {9, 10, 11, 12} are respectively represented by indexes 0, 1, 2, and 3. Time-frequency resources in the resource pool subsets do not overlap each other. 2 bits in the second resource pool information may indicate the resource pool index in the resource pool subset, and a value of this field is in a one-to-one correspondence with the resource pool subset index, as shown in Table 23.

The first terminal device detects a conflict on a resource R2 indicated by the second resource pool information of the second terminal device, and the implicitly associated sending resource pool of the second terminal device belongs to the resource pool subset 2. The list of the resource pool subset 2 is {5, 6, 7, 8}, and the resource pools {5, 6, 7, 8} are respectively represented by indexes 0, 1, 2, and 3. If the field, indicating a sending resource pool subset index, in the second resource pool information is 00, it is determined that the resource pool index in the sending resource pool subset is 0, and the sending resource pool of the second terminal device is the resource pool 5. If the field, indicating a sending resource pool subset index, in the second resource pool information is 01, it is determined that the resource pool index in the sending resource pool subset is 1, and the sending resource pool of the second terminal device is the resource pool 6. If the field, indicating a sending resource pool subset index, in the second resource pool information is 10, it is determined that the resource pool index in the sending resource pool subset is 2, and the sending resource pool of the second terminal device is the resource pool 7. If the field, indicating a sending resource pool subset index, in the second resource pool information is 11, it is determined that the resource pool index in the sending resource pool subset is 3, and the sending resource pool of the second terminal device is the resource pool 8.

The first terminal device detects the first resource R2 indicated by the second resource pool information of the second terminal device, and the implicitly associated sending resource pool of the second terminal device belongs to the resource pool subset 2. The list of the resource pool subset 2 is {5, 6, 7, 8}, and the resource pools {5, 6, 7, 8} are respectively represented by indexes 0, 1, 2, and 3. If the field, indicating a sending resource pool subset index, in the second resource pool information is 00, it is determined that the resource pool index in the sending resource pool subset is 0, and the sending resource pool of the second terminal device is the resource pool 5. If the field, indicating a sending resource pool subset index, in the second resource pool information is 01, it is determined that the resource pool index in the sending resource pool subset is 1, and the sending resource pool of the second terminal device is the resource pool 6. If the field, indicating a sending resource pool subset index, in the second resource pool information is 10, it is determined that the resource pool index in the sending resource pool subset is 2, and the sending resource pool of the second terminal device is the resource pool 7. If the field, indicating a sending resource pool subset index, in the second resource pool information is 11, it is determined that the resource pool index in the sending resource pool subset is 3, and the sending resource pool of the second terminal device is the resource pool 8.

**Table 15**

| Field, indicating the resource pool index in the sending resource pool subset, in the second resource pool information | Resource pool index in the sending resource pool subset |
|---|---|
| 00 | 0 |
| 01 | 1 |
| 10 | 2 |
| 11 | 3 |

A number of first resource pool subsets is not limited in this embodiment, and generally there may be at least two first resource pool subsets.

Optionally, at least one of a PSXCH time domain location, a PSFCH time domain location, a retransmission time domain location of the second terminal device, a periodic reserved time domain location of the second terminal device, a DMRS time domain mode list (DMRS-TimePatternList), a PSFCH candidate resource type, and a CS pair index is determined based on the configuration information of the sending resource pool of the second terminal device.

In some embodiments, the first terminal device determines the first resource pool based on the first resource, the first resource pool information, and the second resource pool information. When the first resource pool information indicates the resource pool subset set, the resource pool subset set includes a second resource pool subset, resource pools in the second resource pool subset do not overlap each other, and the second resource pool information indicates a resource pool subset index, the first terminal device determines the first resource pool based on the resource pool subset index and a first index corresponding to the first resource.

It may be understood that the first terminal device may determine, based on the resource pool subset index indicated by the second resource pool information, the corresponding second resource pool subset from the resource pool subset set indicated by the first resource pool information. Then, the first terminal device may determine the first resource pool from the corresponding second resource pool subset based on the first index. It should be noted that the first index is an index of a resource pool in which the first resource is located in the resource pool subset indicated by the second resource pool information.

A number of second resource pool subsets is not limited in this embodiment, and generally there may be at least two second resource pool subsets.

For example, the network device configures Z3 resource pool subsets based on the first resource pool information, for example, Z3=2. $\lceil \log_2 Z3 \rceil$ bits in the second resource pool information are needed to indicate a sending resource pool set index, for example, $\lceil \log_2 2 \rceil = 1$ bit. $\lceil \log_2 Z3 \rceil$ bits in the second resource pool information need to be occupied to indicate a sending resource pool set index, and a value of this field is in a one-to-one correspondence with the sending resource pool subset. The second resource pool information may be carried in any one or more of the second resource pool information, first-order second resource pool information, second-order second resource pool information, a new second-order second resource pool information, third-order second resource pool information, a MAC CE, RRC, or PC5-RRC. The first resource pool information may be carried in any one or more of the RRC and the PC5-RRC.

Further, resource pools in the resource pool subsets may be the same or may be different. For example, a list of a resource pool subset 1 is {1, 2, 3, 4}, and a list of a resource pool subset 2 is {5, 6, 7, 8}. For example, a list of a resource pool subset 1 is {1, 2, 3, 4}, and a list of a resource pool subset 2 is {3, 5, 6, 7}.

Optionally, at least one of a PSXCH time domain location, a PSFCH time domain location, a retransmission time domain location of the second terminal device, a periodic reserved time domain location of the second terminal device, a DMRS time domain mode list (DMRS-TimePatternList), a PSFCH candidate resource type, and a CS pair index is determined based on the configuration information of the sending resource pool of the second terminal device.

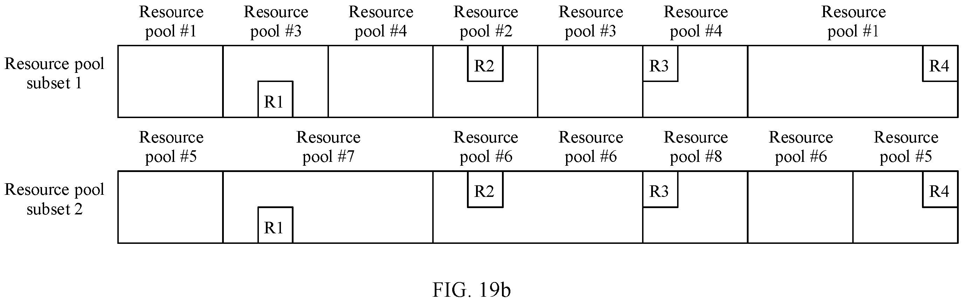

With reference to FIG. 19b, it is assumed that the network configures eight resource pools. A list of resource pool indexes is {1, 2, 3, 4, 5, 6, 7, 8}. The network device configures two resource pool subsets based on the first resource pool information. A list of a resource pool subset 1 is {1, 2, 3, 4}, and a list of a resource pool subset 2 is {5, 6, 7, 8}. All resource pools in the resource subsets do not overlap each other. 1 bit in the second resource pool information may indicate the resource pool subset index, and a value of this field is in a one-to-one correspondence with the resource pool subset index, as shown in Table 14. The first terminal device detects a conflict on a resource R1 indicated by the second resource pool information of the second terminal device, where R1 is a first resource. An implicitly associated sending resource pool of the second terminal device is a resource pool 3 or a resource pool 7. If the field, indicating a sending resource pool subset index, in the second resource pool information is 0, it is determined that the sending resource pool of the second terminal device belongs to the resource pool subset 1, and the sending resource pool of the second terminal device is the resource pool 3. If the field, indicating a sending resource pool subset index, in the second resource pool information is 1, it is determined that the sending resource pool of the second terminal device belongs to the resource pool subset 2, and the sending resource pool of the second terminal device is the resource pool 7. The first terminal device detects a conflict on a resource R2 indicated by the second resource pool information of the second terminal device, where R2 is a first resource. An implicitly associated sending resource pool of the second terminal device is a resource pool 2 or a resource pool 6. If the field, indicating a sending resource pool subset index, in the second resource pool information is 0, it is determined that the sending resource pool of the second terminal device belongs to the resource pool subset 1, and the sending resource pool of the second terminal device is the resource pool 2. If the field, indicating a sending resource pool subset index, in the second resource pool information is 1, it is determined that the sending resource pool of the second terminal device belongs to the resource pool subset 2, and the sending resource pool of the second terminal device is the resource pool 6.

With reference to FIG. 19b, it is assumed that the network configures eight resource pools. A list of resource pool indexes is {1, 2, 3, 4, 5, 6, 7, 8}. The network device configures two resource pool subsets based on the first resource pool information. A list of a resource pool subset 1 is {1, 2, 3, 4}, and a list of a resource pool subset 2 is {5, 6, 7, 8}. All resource pools in the resource subsets do not overlap each other. 1 bit in the second resource pool information may indicate the resource pool subset index, and a value of this field is in a one-to-one correspondence with the resource pool subset index, as shown in Table 14. The first terminal device detects a first resource R1 of the second terminal device. An implicitly associated sending resource pool of the second terminal device is a resource pool 3 or a resource pool 7. If the field, indicating a sending resource pool subset index, in the second resource pool information is 0, it is determined that the sending resource pool of the second terminal device belongs to the resource pool subset 1, and the sending resource pool of the second terminal device is the resource pool 3. If the field, indicating a sending resource pool subset index, in the second resource pool information is 1, it is determined that the sending resource pool of the second terminal device belongs to the resource pool subset 2, and the sending resource pool of the second terminal device is the resource pool 7. The first terminal device detects a first resource R2 of the second terminal device. An implicitly associated sending resource pool of the second terminal device is a resource pool 2 or a resource pool 6. If the field, indicating a sending resource pool subset index, in the second resource pool information is 0, it is determined that the sending resource pool of the second terminal device belongs to the resource pool subset 1, and the sending resource pool of the second terminal device is the resource pool 2. If the field, indicating a sending resource pool subset index, in the second resource pool information is 1, it is determined that the sending resource pool of the second terminal device belongs to the resource pool subset 2, and the sending resource pool of the second terminal device is the resource pool 6.

**Table 14**

| Field, indicating the sending resource pool subset index, in the second resource pool information | Sending resource pool subset |
| --- | --- |
| 0 | 1 |
| 1 | 2 |
| 0 | 1 |
| 1 | 2 |

In this implementation, the network device configures a plurality of resource pool subsets, and time-frequency resources in resource pools in the resource pool subsets do not overlap each other. The second terminal device indicates the resource pool subset index, so that the first terminal device determines a sending resource pool index of the second terminal device based on the resource pool subset index and a resource of a resource indicated by the second terminal device. This avoids a large transmission delay caused by a large physical interval between slots in a specific resource pool in a large number of resource pools that do not overlap each other. In some scenarios, resource pools whose time-frequency resources partially overlap need to be configured. In addition, different services have different requirements, and the network side may configure two resource pools whose time-frequency resources completely overlap but whose resource pool parameters are different.

In some embodiments, the first terminal device determines the first resource pool based on the first resource pool information and the second resource pool information. The first resource pool information indicates the resource pool subset, and the second resource pool information indicates the resource pool index in the resource pool subset, so that the first terminal device determines the first resource pool based on the resource pool subset and the resource pool index in the resource pool subset.

If the network device configures 16 resource pool indexes, 4 bits in the second resource pool information are needed to indicate the resource pool index, but only 2 to 4 reserved bits are left in existing first-order second resource pool information. If all the left bits are occupied to indicate the resource pool index, other information cannot be carried. Therefore, a solution design is needed to reduce signaling overheads in the second resource pool information.

The network configures one resource pool subset, and the second resource pool information of the second terminal device indicates that a sending resource pool index of the second terminal device is a subindex in the subset. The network configures Z2 resource pool subsets based on the first resource pool information, for example, Z2=8. $\lceil log_2 Z2 \rceil$ bits in the second resource pool information are needed to indicate the sending resource pool index and/or a receiving resource pool index, for example, $\lceil log_2 8 \rceil = 3$ bits. $\lceil log_2 Z2 \rceil$ bits in the second resource pool information need to be occupied to indicate the sending resource pool index, and a value of this field is in a one-to-one correspondence with the sending resource pool index. The second resource pool information may be carried in any one or more of the second resource pool information, first-order second resource pool information, second-order second resource pool information, a new second-order second resource pool information, third-order second resource pool information, a MAC CE, RRC, or PC5-RRC. The first resource pool information may be carried in any one or more of the RRC and the PC5-RRC.

For example, the network configures 16 resource pools through the RRC, and a list of resource pool indexes is {1, 2, 3, 4, 5, 6, 7, 8, 9, 10, 11, 12, 13, 14, 15, 16}. The network configures one resource pool subset, and a sublist of resource pool indexes is {1, 4, 6, 8, 10, 11, 14, 15}. In this case, 3 bits in the second resource pool information may be used for an indication, and a value of this field is in a one-to-one correspondence with the sending resource pool index, as shown in Table 21.

Table 16

| Field, indicating the sending resource pool index, in the second resource pool information | Sending resource pool index |
|---|---|
| 000 | 1 |
| 001 | 4 |
| 010 | 6 |
| 011 | 8 |
| 100 | 10 |
| 101 | 11 |
| 110 | 14 |
| 111 | 15 |

For example, each resource pool subset configured by the network device based on the first resource pool information includes Z4 resource pools, for example, Z4=4. $\lceil log_2 Z4 \rceil$ bits in the second resource pool information are needed to indicate a resource pool index in the sending resource pool subset, for example, $\lceil log_2 4 \rceil = 2$ bits.

$\lceil \log_2 Z4 \rceil$ bits in the second resource pool information need to be occupied to indicate a sending resource pool set index, and a value of this field is in a one-to-one correspondence with the resource pool index in the sending resource pool subset. The second resource pool information may be carried in any one or more of SCI, first-order SCI, second-order SCI, a new second-order SCI, third-order SCI, a MAC CE, RRC, and PC5-RRC. The first resource pool information may be carried in any one or more of the RRC and the PC5-RRC.

Further, resource pools in the resource pool subsets may be different. For example, a list of a resource pool subset 1 is {1, 2, 3, 4}, and a list of a resource pool subset 2 is {5, 6, 7, 8}. Alternatively, resource pools in the resource pool subsets may be partially the same. For example, a list of a resource pool subset 1 is {1, 2, 3, 4}, and a list of a resource pool subset 2 is {3, 5, 6, 7}.

Optionally, at least one of a PSXCH time domain location, a PSFCH time domain location, a retransmission time domain location of the second terminal device, a periodic reserved time domain location of the second terminal device, a DMRS time domain mode list (DMRS-TimePatternList), a PSFCH candidate resource type, and a CS pair index is determined based on the configuration information of the sending resource pool of the second terminal device.

With reference to FIG. 19c, the network device configures 12 resource pools, and a list of resource pool indexes is {1, 2, 3, 4, 5, 6, 7, 8, 9, 10, 11, 12}. The network configures three resource pool subsets based on the first resource pool information. A list of a resource pool subset 1 is {1, 2, 3, 4}, and resource pools {1, 2, 3, 4} are respectively represented by indexes 0, 1, 2, and 3. A list of a resource pool subset 2 is {5, 6, 7, 8}, and resource pools {5, 6, 7, 8} are respectively represented by indexes 0, 1, 2, and 3. A list of a resource pool subset 3 is {9, 10, 11, 12}, and resource pools {9, 10, 11, 12} are respectively represented by indexes 0, 1, 2, and 3. Time-frequency resources in the resource pool subsets do not overlap each other. 2 bits in the second resource pool information may indicate the resource pool index in the resource pool subset, and a value of this field is in a one-to-one correspondence with the resource pool subset index, as shown in Table 15.

The first terminal device detects a conflict on a resource R2 indicated by the second resource pool information of the second terminal device, and the implicitly associated sending resource pool of the second terminal device belongs to the resource pool subset 2. The list of the resource pool subset 2 is {5, 6, 7, 8}, and the resource pools {5, 6, 7, 8} are respectively represented by indexes 0, 1, 2, and 3. If the field, indicating a sending resource pool subset index, in the second resource pool information is 00, it is determined that the resource pool index in the sending resource pool subset is 0, and the sending resource pool of the second terminal device is the resource pool 5. If the field, indicating a sending resource pool subset index, in the second resource pool information is 01, it is determined that the resource pool index in the sending resource pool subset is 1, and the sending resource pool of the second terminal device is the resource pool 6. If the field, indicating a sending resource pool subset index, in the second resource pool information is 10, it is determined that the resource pool index in the sending resource pool subset is 2, and the sending resource pool of the second terminal device is the resource pool 7. If the field, indicating a sending resource pool subset index, in the second resource pool information is 11, it is determined that the resource pool index in the sending resource pool subset is 3, and the sending resource pool of the second terminal device is the resource pool 8.

A field, indicating the resource pool index in the sending resource pool subset, in the second resource pool information indicates the resource pool index in the sending resource pool subset.

In this implementation, the network device configures the resource pool subset, and the second terminal device indicates the resource pool index in the resource pool subset. This reduces signaling overheads of the second terminal device, and reduces signaling overheads of the second resource pool information.

In some embodiments, the first terminal device determines the first resource pool based on the first resource and the second resource pool information. When the second resource pool information indicates a resource pool index in a third resource pool subset, the third resource pool subset belongs to the preconfigured resource pool subset set, and resource pool subsets in the resource pool subset set do not overlap each other, the first terminal device determines the first resource pool based on the resource pool index in the third resource pool subset and a resource pool subset index corresponding to the first resource.

In some embodiments, the first terminal device determines the first resource pool based on the first resource and the second resource pool information. When the second resource pool information indicates a resource pool subset index in the resource pool subset set, the resource pool subset set includes a fourth resource pool subset, and resource pools in the fourth resource pool subset do not overlap each other, the first terminal device determines the first resource pool based on the resource pool subset index and a first index corresponding to the first resource.

In this embodiment, the first terminal device determines the first resource pool that is consistent with the second terminal device, and sends the resource conflict information to the second terminal device by using a resource in the first resource pool, to ensure that the second terminal device can correctly receive and decode the resource conflict information.

The second terminal device indicates the sending resource pool index of the first terminal device in the second resource pool information, and the first terminal device calculates a logical slot location based on the sending resource pool index. If the first terminal device determines the PSXCH time domain location based on a resource pool configuration of the first terminal device, the time domain location may not belong to the sending resource pool of the second terminal device, or the time domain location belongs to the sending resource pool of the second terminal device but is associated with an incorrect PSCCH/PSSCH location. This avoids an incorrect indication of a resource conflict location, and avoids unnecessary retransmission and reselection.

Further, if the network configures 16 resource pool indexes, 4 bits in the second resource pool information are needed to indicate the resource pool index, but only 2 to 4 reserved bits are left in existing first-order SCI. If all the left bits are occupied to indicate the resource pool index, other information cannot be carried. Therefore, in the foregoing solution in this embodiment, the resource pool index is indicated, and signaling overheads in the SCI are reduced.

The following describes apparatuses provided in embodiments of this application in detail with reference to FIG. 20 to FIG. 23.

FIG. 20 is a schematic diagram of a structure of a communication apparatus 600 according to an embodiment of this application. As shown in FIG. 20, the communication apparatus 600 may include a processing unit 610 and a transceiver unit 620. The communication apparatus 600 may be the first terminal device in any one of the foregoing embodiments.

The processing unit 610 is configured to determine a first resource conflict degree between a first resource and a second resource based on a first parameter, where the first parameter includes resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1.

The transceiver unit 620 is configured to send resource conflict information to the second terminal device and/or the third terminal device, where the resource conflict information indicates the first resource conflict degree.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

In a possible implementation, the processing unit 610 is further configured to:

determine, based on a strength of a signal transmitted on the first sending resource, a strength of a signal transmitted on the first resource, where the first sending resource is a resource on which the second terminal device sends the first control information;

determine, based on a strength of a signal transmitted on the second sending resource, a strength of a signal transmitted on the second resource, where the second sending resource is a resource on which the second terminal device sends the second control information; and/or

determine resource overlapping information of the first resource and the second resource based on the first reserved resource and the second reserved resource.

In a possible implementation, the resource overlapping information includes:

a first overlapping ratio,
a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, where
the first overlapping ratio is a ratio of an overlapping part of the first resource and the second resource to the first resource, and the second overlapping ratio is a ratio of the overlapping part of the first resource and the second resource to the second resource.

In a possible implementation, the signal strength includes:

a first signal strength,
a second signal strength,
a ratio of a first signal strength to a second signal strength,
a ratio of a second signal strength to a first signal strength,
a ratio of a first signal strength to a sum of the first signal strength and a second signal strength, or
a ratio of a second signal strength to a sum of a first signal strength and the second signal strength, where

the first signal strength is the strength of the signal transmitted on the first resource, and the second signal strength is the strength of the signal transmitted on the second resource.

In a possible implementation, the first parameter includes:

the first signal strength and/or the second signal strength,
the first overlapping ratio and/or the second overlapping ratio,
a converted value, calculated based on the first overlapping ratio or the second overlapping ratio, of the first signal strength,
a converted value, calculated based on the first overlapping ratio or the second overlapping ratio, of the second signal strength,
a subchannel location and/or a number of subchannels of the first frequency domain information,
a subchannel location and/or a number of subchannels of the second frequency domain information,
a subchannel location and/or a number of subchannels of the third frequency domain information, and/or
a combination value of the resource overlapping information and the signal strength, where
the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

In a possible implementation, the processing unit 610 is specifically configured to:
determine, by using the first terminal device, the first resource conflict degree based on the first parameter and M conflict threshold ranges.
In a possible implementation,

the conflict threshold range is an overlapping information threshold range, and the overlapping information threshold range is associated with one of the M resource conflict degrees;
the conflict threshold range is a signal strength threshold range, and the signal strength threshold range is associated with one of the M resource conflict degrees;
the conflict threshold range is the signal strength threshold range, the signal strength threshold range is determined based on the resource overlapping information, and the signal strength threshold range is associated with the M resource conflict degrees;
the conflict threshold range is the overlapping information threshold range, the resource overlapping information threshold range is determined based on the signal strength, and the overlapping information threshold range is associated with the M resource conflict degrees; and/or
the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.
In a possible implementation, at least one of a time domain resource, a frequency domain resource, or a code domain resource that is used by the transceiver unit 620 to send the resource conflict information indicates the first resource conflict degree.
In a possible implementation, the M resource conflict degrees include:

M recommendation levels of different recommendation degrees,
M disrecommendation levels of different disrecommendation degrees, or
P recommendation levels of different recommendation degrees and Q disrecommendation levels of different disrecommendation degrees, where P+Q=M.

In a possible implementation, the processing unit 610 is further configured to:

determine a first transmission parameter difference and/or a second transmission parameter difference, where the first transmission parameter difference is a transmission parameter difference between the first reserved resource and the first sending resource, and the second transmission parameter difference is a transmission parameter difference between the second reserved resource and the second sending resource; and
when the first transmission parameter difference or the second transmission parameter difference is greater than a first preset value, determine, by using the first terminal device, that the first resource conflict degree is a second resource conflict degree with a low recommendation degree or a high disrecommendation degree.

In a possible implementation,

the processing unit 610 is further configured to determine a first resource conflict degree between a first resource and a second resource based on a first parameter, where the first parameter is resource overlapping information and/or a signal strength, or the first parameter is determined based on resource overlapping information and/or a signal strength, the first resource is a resource used by a second terminal device for transmission, the second resource is a resource used by the first terminal device for transmission, the first resource conflict degree is one of M resource conflict degrees, and M is a positive integer greater than 1; and
the transceiver unit 620 is further configured to: send resource conflict information to the second terminal device, where the resource conflict information indicates the first resource conflict degree; and/or reselect, retransmit, or continue to use the second resource based on the first resource conflict degree.

In a possible implementation,

the first resource includes a first sending resource on which the second terminal device sends first control information, and/or a first reserved resource indicated by the first control information; and/or
the second resource includes a third sending resource that is determined by the first terminal device and that is used for transmission.

In a possible implementation, the processing unit 610 is further configured to determine M conflict threshold ranges based on channel busy information and/or priority information, where the M conflict threshold ranges are in a one-to-one correspondence with M conflict degrees;

the processing unit 610 is further configured to determine a first resource conflict degree between a first resource and a second resource based on a first parameter, where the first parameter is resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer; and
the transceiver unit 620 is further configured to send resource conflict information to the second terminal device and/or the third terminal device, where the resource conflict information indicates the first resource conflict degree.

In a possible implementation,
the transceiver unit 620 is further configured to obtain first configuration information, where the first configuration information indicates a resource conflict threshold, the resource conflict threshold is associated with the channel busy information and/or the priority information, and the resource conflict threshold includes a signal strength threshold and/or a resource overlapping information threshold.

In a possible implementation, the transceiver unit 620 is further configured to obtain second configuration information, where

the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and
the terminal device receives or sends the resource conflict information based on the second configuration information.

In a possible implementation,

a period of a feedback time domain resource is an integer multiple of a period of a first time domain resource,
a period of a feedback time domain resource is greater than or equal to a period of a first time domain resource,
a period of a first time domain resource is an integer multiple of a period of a feedback time domain resource, or
a period of a first time domain resource is greater than or equal to a period of a feedback time domain resource; and
the feedback time domain resource belongs to the feedback time domain resource set, and the first time domain resource belongs to the first time domain resource set.

In a possible implementation, the second configuration information includes/indicates period information and/or offset information of the first time domain resource; and

the processing unit 610 is further configured to determine, based on the period information and/or the offset information of the first time domain resource, a time domain location for sending the resource conflict information, where the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the method further includes:
the processing unit 610 is further configured to determine a transport block size and/or rate matching based on a type of the time unit and a symbol occupied by the resource conflict information.
In a possible implementation,

the processing unit 610 is further configured to determine a first resource pool based on at least two of a first resource, first resource pool information sent by a network device, and second resource pool information sent by a second terminal device, where the first resource is a resource used by the second terminal device for transmission, the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other; and
the transceiver unit 620 is further configured to send sidelink information in the first resource pool.

In a possible implementation, when the first resource pool information indicates the resource pool set,
the processing unit 610 is specifically configured to determine the first resource pool based on a resource pool index, where the resource pool index is an index of a resource pool in which the first resource is located.
In a possible implementation, when the first resource pool information indicates the resource pool subset set, the first resource pool subsets in the resource pool subset set do not overlap each other, and the second resource pool information indicates a resource pool index in the resource pool subset,
the processing unit 610 is specifically configured to determine the first resource pool based on the resource pool index in the resource pool subset and a resource pool subset index corresponding to the first resource.
In a possible implementation, when the first resource pool information indicates the resource pool subset set, the resource pool subset set includes the second resource pool subset, the resource pools in the second resource pool subset do not overlap each other, and the second resource pool information indicates a resource pool subset index, the processing unit 610 is specifically configured to determine the first resource pool based on the resource pool subset index and a first index corresponding to the first resource.
In a possible implementation, when the first resource pool information indicates the resource pool subset, and the second resource pool information indicates a resource pool index in the resource pool subset,
the processing unit 610 is specifically configured to determine the first resource pool based on the resource pool subset and the resource pool index in the resource pool subset.
It should be understood that a specific process in which the units perform the foregoing corresponding steps is described in detail in the foregoing method embodiments, and for brevity, details are not described herein.
FIG. 21 is a schematic diagram of a structure of a communication apparatus 700 according to an embodiment of this application. As shown in FIG. 21, the communication apparatus 700 may include a transceiver unit 710 and a processing unit 720. The communication apparatus 700 may be the second terminal device in any one of the foregoing embodiments.
The transceiver unit is configured to receive first resource conflict information, where the first resource conflict information indicates a first resource conflict degree between a first resource and a second resource, the first resource is a resource used by the second terminal device for transmission, the second resource is a resource used by a first terminal device or a third terminal device for transmission, the first resource conflict degree is one of M resource conflict degrees, M is an integer greater than 1, and the resource conflict degree is associated with resource overlapping information and/or a signal strength; and
the processing unit is configured to reselect, retransmit, or continue to use the first resource based on the first resource conflict degree.
In a possible implementation, the transceiver unit receives N pieces of first resource conflict information, and N is a positive integer.
When a number of $i^{th}$ disrecommendation levels in resource conflict degrees indicated by the N pieces of first resource conflict information is the largest, the second terminal device determines that the first resource is at the $i^{th}$ disrecommendation level, or

when a number of $i^{th}$ recommendation levels in resource conflict degrees indicated by the N pieces of first resource conflict information is the largest, the second terminal device determines that the first resource is at the $i^{th}$ recommendation level.

In a possible implementation,

when a number of $i^{th}$ disrecommendation levels in resource conflict degrees indicated by N pieces of first resource conflict information is the largest, and a ratio of the number N1 of $i^{th}$ disrecommendation levels to N is greater than or equal to a second preset value, the processing unit determines that the first resource is at the $i^{th}$ disrecommendation level; or

when a number of $i^{th}$ recommendation levels in resource conflict degrees indicated by N pieces of first resource conflict information is the largest, and a ratio of the number N1 of $i^{th}$ recommendation levels to N is greater than or equal to a third preset value, the processing unit determines that the first resource is at the $i^{th}$ recommendation level.

In a possible implementation, the first resource includes a first sending resource on which the second terminal device sends first control information, and/or a first reserved resource indicated by the first control information; and/or the second resource includes a second sending resource on which the third terminal device sends second control information, and/or a second reserved resource indicated by the second control information.

According to the communication method provided in this implementation, when the first resource includes the first sending resource and the second resource includes the second sending resource, the first terminal device may indicate, in an after-collision scenario, whether there is a conflict between the first resource and the second resource, and indicate a degree of the conflict. When the first resource includes the first reserved resource and the second resource includes the second reserved resource, the first terminal device may indicate, in a before-collision scenario, whether there is a conflict between the first resource and the second resource, and indicate a degree of the conflict. When the first resource includes the first sending resource and the second sending resource, and the second resource includes the second sending resource and the second reserved resource, the first terminal device may indicate, in a before-collision scenario and an after-collision scenario, whether there is a conflict between the first resource and the second resource, and indicate a degree of the conflict. Therefore, the first terminal device can perform a conflict indication in a plurality of collision scenarios.

In a possible implementation, the method further includes: The first terminal device determines, based on a strength of a signal transmitted on the first sending resource, a strength of a signal transmitted on the first resource, where the first sending resource is a resource on which the second terminal device sends the first control information; the first terminal device determines, based on a strength of a signal transmitted on the second sending resource, a strength of a signal transmitted on the second resource, where the second sending resource is a resource on which the second terminal device sends the second control information; and/or the first terminal device determines resource overlapping information of the first resource and the second resource based on the first reserved resource and the second reserved resource.

Optionally, the resource overlapping information includes:

a first overlapping ratio,
a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, where
the first overlapping ratio is a ratio of an overlapping part of the first resource and the second resource to the first resource, and the second overlapping ratio is a ratio of the overlapping part of the first resource and the second resource to the second resource.

Optionally, the signal strength includes:

a first signal strength,
a second signal strength,
a ratio of a first signal strength to a second signal strength,
a ratio of a second signal strength to a first signal strength,
a ratio of a first signal strength to a sum of the first signal strength and a second signal strength, or
a ratio of a second signal strength to a sum of a first signal strength and the second signal strength, where

the first signal strength is the strength of the signal transmitted on the first resource, and the second signal strength is the strength of the signal transmitted on the second resource.

Optionally, the first parameter includes:

the first signal strength and/or the second signal strength,
the first overlapping ratio and/or the second overlapping ratio,
a converted value, calculated based on the first overlapping ratio or the second overlapping ratio, of the first signal strength,
a converted value, calculated based on the first overlapping ratio or the second overlapping ratio, of the second signal strength,
a subchannel location and/or a number of subchannels of the first frequency domain information,
a subchannel location and/or a number of subchannels of the second frequency domain information,
a subchannel location and/or a number of subchannels of the third frequency domain information, and/or
a combination value of the resource overlapping information and the signal strength, where
the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

Optionally,

the conflict threshold range is an overlapping information threshold range, and the overlapping information threshold range is associated with one of the M resource conflict degrees;
the conflict threshold range is a signal strength threshold range, and the signal strength threshold range is associated with one of the M resource conflict degrees;
the conflict threshold range is the signal strength threshold range, the signal strength threshold range is determined based on the resource overlapping information, and the signal strength threshold range is associated with the M resource conflict degrees;
the conflict threshold range is the overlapping information threshold range, the resource overlapping information threshold range is determined based on the signal strength, and the overlapping information threshold range is associated with the M resource conflict degrees; and/or
the conflict threshold range is a combination of a resource overlapping information threshold and a signal strength threshold, and the combination of the resource overlapping information threshold and the signal strength threshold is associated with the M resource conflict degrees.

The conflict threshold range is obtained through division based on at least one resource conflict threshold.
It should be understood that a specific process in which the units perform the foregoing corresponding steps is described in detail in the foregoing method embodiments, and for brevity, details are not described herein.

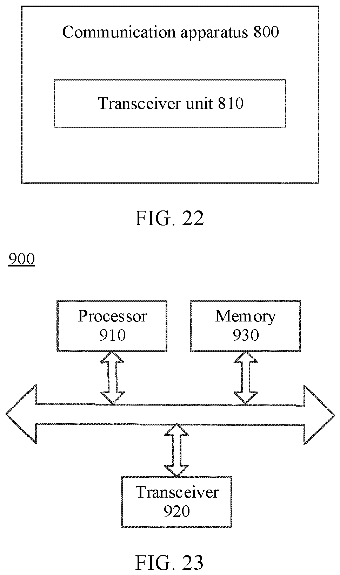

FIG. 22 is a schematic diagram of a structure of a communication apparatus 800 according to an embodiment of this application. As shown in FIG. 22, the communication apparatus 800 may include a transceiver unit 810. The communication apparatus 800 may be the network device in any one of the foregoing embodiments.
The transceiver unit 810 is configured to send first resource pool information to a first terminal device, where the first resource pool information indicates a resource pool set, a resource pool subset set, or a resource pool subset, resource pools in the resource pool set do not overlap each other, first resource pool subsets in the resource pool subset set do not overlap each other and/or the resource pool subset set includes a second resource pool subset, and resource pools in the second resource pool subset do not overlap each other.
In a possible implementation, the transceiver unit 810 is further configured to send second configuration information to a terminal device, where the second configuration information includes information indicating a first time domain resource set that carries resource conflict information, the first time domain resource set is a subset of a feedback time domain resource set or is mutually exclusive with the feedback time domain resource set, and the feedback time domain resource set is used to carry feedback information; and the terminal device receives or sends the resource conflict information based on the second configuration information.
In a possible implementation,

a period of a feedback time domain resource is an integer multiple of a period of a first time domain resource,
a period of a feedback time domain resource is greater than or equal to a period of a first time domain resource,
a period of a first time domain resource is an integer multiple of a period of a feedback time domain resource, or

a period of a first time domain resource is greater than or equal to a period of a feedback time domain resource, where the feedback time domain resource belongs to the feedback time domain resource set, and the first time domain resource belongs to the first time domain resource set.

In a possible implementation, the second configuration information includes/indicates period information and/or offset information of the first time domain resource; the terminal device determines, based on the period information and/or the offset information of the first time domain resource, a time domain location for sending the resource conflict information; and the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

In a possible implementation, the first time domain resource belongs to a first time unit set, and the first time unit set includes at least one of the following types of time units:

a first time unit in which the first time domain resource and the feedback time domain resource are configured;
a second time unit in which the first time domain resource is configured;
a third time unit in which the feedback time domain resource is configured; and
a fourth time unit in which the first time domain resource or the feedback time domain resource is not configured.

In a possible implementation, for each time unit in the first time unit set, the terminal device determines, based on a type of the time unit and a reception and transmission parameter, to receive the resource conflict information and/or the feedback information in the time unit, or to send the resource conflict information and/or the feedback information in the time unit.

The reception and transmission parameter includes at least two of the following:

H1 pieces of to-be-sent feedback information,
H2 pieces of to-be-received feedback information,
R1 pieces of to-be-sent resource conflict information,
R2 pieces of to-be-received resource conflict information,
a maximum number C1 of pieces of resource conflict information and/or feedback information that can be sent; and
a maximum number C2 of pieces of resource conflict information and/or feedback information that can be received.

It should be understood that a specific process in which the units perform the foregoing corresponding steps is described in detail in the foregoing method embodiments, and for brevity, details are not described herein.

FIG. 23 is a schematic block diagram of a communication apparatus 900 according to an embodiment of this application. As shown in FIG. 23, the apparatus 900 may include a processor 910, a transceiver 920, and a memory 930. The processor 910, the transceiver 920, and the memory 930 communicate with each other via an internal connection path. The memory 930 is configured to store instructions. The processor 910 is configured to execute the instructions stored in the memory 930, to control the transceiver 920 to send a signal and/or to receive a signal.

It should be understood that the communication apparatus 900 may correspond to any terminal device or network device in the foregoing method embodiments, and may be configured to perform steps and/or procedures performed by any terminal device or network device in the foregoing method embodiments. Optionally, the memory 930 may include a read-only memory and a random access memory, and provide the instructions and data for the processor. Apart of the memory may further include a nonvolatile random access memory. The memory 930 may be an independent component, or may be integrated into the processor 910. The processor 910 may be configured to execute the instructions stored in the memory 930. When the processor 910 executes the instructions stored in the memory, the processor 910 is configured to perform the steps and/or procedures corresponding to any terminal device or network device in the foregoing method embodiments.

Optionally, the communication apparatus 900 is the first terminal device in the foregoing embodiments.

Optionally, the communication apparatus 900 is the second terminal device in the foregoing embodiments.

Optionally, the communication apparatus 900 is the network device in the foregoing embodiments.

The transceiver 920 may include a transmitter and a receiver. The transceiver 920 may further include an antenna. There may be one or more antennas. The processor 910, the memory 930, and the transceiver 920 may be components integrated into different chips. For example, the processor 910 and the memory 930 may be integrated into a baseband chip, and the transceiver 920 may be integrated into a radio frequency chip. The processor 910, the memory 930, and the transceiver 920 may alternatively be components integrated into a same chip. This is not limited in this application.

Optionally, the communication apparatus 900 is a component, for example, a chip or a chip system, disposed in the first terminal device.

Optionally, the communication apparatus 900 is a component, for example, a chip or a chip system, disposed in the second terminal device.

Optionally, the communication apparatus 900 is a component, for example, a chip or a chip system, disposed in the network device.

The transceiver 920 may alternatively be a communication interface, for example, an input/output interface or a circuit. The transceiver 920, the processor 910, and the memory 920 all may be integrated into a same chip, for example, integrated into a baseband chip.

This application further provides a processing apparatus, including at least one processor. The at least one processor is configured to execute a computer program stored in a memory, so that the processing apparatus performs the method performed by the first terminal device, the method performed by the second terminal device, or the method performed by the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first terminal device, the method performed by the second terminal device, or the method performed by the network device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the method performed by the first terminal device, the method performed by the second terminal device, or the method performed by the network device in the foregoing method embodiments.

It should be understood that the processing apparatus may be one or more chips. For example, the processing apparatus may be a field-programmable gate array (field-programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, the steps in the foregoing methods may be completed by using a hardware integrated logical circuit in the processor, or by using instructions in a form of software. The steps of the methods disclosed with reference to embodiments of this application may be directly performed and completed by a hardware processor, or may be performed and completed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these memories and any memory of another proper type.

According to the method provided in embodiments of this application, this application further provides a computer program product. The computer program product includes computer program code. When the computer program code is run on a computer, the computer is enabled to perform the method performed by the first terminal device in the foregoing method embodiments, the method performed by the second terminal device in the foregoing method embodiments, or the method performed by the network device in the foregoing method embodiments.

According to the method provided in embodiments of this application, this application further provides a computer-readable storage medium. The computer-readable storage medium stores program code. When the program code is run on a computer, the computer is enabled to perform the method performed by the first terminal device in the foregoing method embodiments, the method performed by the second terminal device in the foregoing method embodiments, or the method performed by the network device in the foregoing method embodiments.

According to the method provided in embodiments of this application, this application further provides a communication system. The communication system may include the foregoing first terminal device, second terminal device, and network device.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A sidelink transmission method, comprising:

   determining, by a first terminal device, a first resource conflict degree between a first resource and a second resource based on a first parameter, wherein the first parameter comprises resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1; and
   sending, by the first terminal device, resource conflict information to the second terminal device and/or the third terminal device, wherein the resource conflict information indicates the first resource conflict degree.

2. The method according to claim 1, wherein

   the first resource comprises a first sending resource on which the second terminal device sends first control information, and/or a first reserved resource indicated by the first control information; and/or
   the second resource comprises a second sending resource on which the third terminal device sends second control information, and/or a second reserved resource indicated by the second control information.

3. The method according to claim 1 or 2, wherein the method further comprises:

   determining, by the first terminal device based on a strength of a signal transmitted on the first sending resource, a strength of a signal transmitted on the first resource, wherein the first sending resource is a resource on which the second terminal device sends the first control information;
   determining, by the first terminal device based on a strength of a signal transmitted on the second sending resource, a strength of a signal transmitted on the second resource, wherein the second sending resource is a resource on which the second terminal device sends the second control information; and/or
   determining, by the first terminal device, resource overlapping information of the first resource and the second resource based on the first reserved resource and the second reserved resource.

4. The method according to any one of claims 1 to 3, wherein the resource overlapping information comprises:

   a first overlapping ratio,

a second overlapping ratio,
a larger value of a first overlapping ratio and a second overlapping ratio,
first frequency domain information of an overlapping resource of the first resource and the second resource,
second frequency domain information of a non-overlapping resource in the first resource, or
third frequency domain information of a non-overlapping resource in the second resource, wherein
the first overlapping ratio is a ratio of an overlapping part of the first resource and the second resource to the first resource, and the second overlapping ratio is a ratio of the overlapping part of the first resource and the second resource to the second resource.

5. The method according to any one of claims 1 to 4, wherein the signal strength comprises:

   a first signal strength,
   a second signal strength,
   a ratio of a first signal strength to a second signal strength,
   a ratio of a second signal strength to a first signal strength,
   a ratio of a first signal strength to a sum of the first signal strength and a second signal strength, or
   a ratio of a second signal strength to a sum of a first signal strength and the second signal strength, wherein
   the first signal strength is the strength of the signal transmitted on the first resource, and the second signal strength is the strength of the signal transmitted on the second resource.

6. The method according to any one of claims 1 to 5, wherein the first parameter comprises:

   the first signal strength and/or the second signal strength,
   the first overlapping ratio and/or the second overlapping ratio,
   a converted value, calculated based on the first overlapping ratio or the second overlapping ratio, of the first signal strength,
   a converted value, calculated based on the first overlapping ratio or the second overlapping ratio, of the second signal strength,
   a subchannel location and/or a number of subchannels of the first frequency domain information,
   a subchannel location and/or a number of subchannels of the second frequency domain information,
   a subchannel location and/or a number of subchannels of the third frequency domain information, and/or
   a combination value of the resource overlapping information and the signal strength, wherein
   the first signal strength is the strength of the signal transmitted on the first resource, the second signal strength is the strength of the signal transmitted on the second resource, the first overlapping ratio is the ratio of the overlapping part of the first resource and the second resource to the first resource, and the second overlapping ratio is the ratio of the overlapping part of the first resource and the second resource to the second resource.

7. The method according to any one of claims 1 to 6, wherein the determining, by a first terminal device, a first resource conflict degree between a first resource and a second resource based on a first parameter comprises:
   determining, by the first terminal device, the first resource conflict degree based on the first parameter and M conflict threshold ranges.

8. The method according to any one of claims 1 to 7, wherein

   the conflict threshold range is an overlapping information threshold range, and the overlapping information threshold range is associated with one of the M resource conflict degrees;
   the conflict threshold range is a signal strength threshold range, and the signal strength threshold range is associated with one of the M resource conflict degrees;
   the conflict threshold range is the signal strength threshold range, the signal strength threshold range is determined based on the resource overlapping information, and the signal strength threshold range is associated with the M resource conflict degrees;
   the conflict threshold range is the overlapping information threshold range, the resource overlapping information threshold range is determined based on the signal strength, and the overlapping information threshold range is associated with the M resource conflict degrees; and/or
   the conflict threshold range is a combination of a resource overlapping information threshold and a signal strength threshold, and the combination of the resource overlapping information threshold and the signal strength threshold is associated with the M resource conflict degrees, wherein
   the conflict threshold range is obtained through division based on at least one resource conflict threshold.

9. The method according to any one of claims 1 to 8, wherein at least one of a time domain resource, a frequency domain resource, or a code domain resource that is used by the first terminal device to send the resource conflict information indicates the first resource conflict degree.

10. The method according to any one of claims 1 to 9, wherein the M resource conflict degrees comprise:

M recommendation levels of different recommendation degrees,
M disrecommendation levels of different disrecommendation degrees, or
P recommendation levels of different recommendation degrees and Q disrecommendation levels of different disrecommendation degrees, wherein P+Q=M.

11. The method according to any one of claims 1 to 10, wherein the method further comprises:

determining, by the first terminal device, a first transmission parameter difference and/or a second transmission parameter difference, wherein the first transmission parameter difference is a transmission parameter difference between the first reserved resource and the first sending resource, and the second transmission parameter difference is a transmission parameter difference between the second reserved resource and the second sending resource; and
when the first transmission parameter difference or the second transmission parameter difference is greater than a first preset value, determining, by the first terminal device, that the first resource conflict degree is a second resource conflict degree with a low recommendation degree or a high disrecommendation degree.

12. A sidelink transmission method, comprising:

determining, by a first terminal device, a first resource conflict degree between a first resource and a second resource based on a first parameter, wherein the first parameter is resource overlapping information and/or a signal strength, or the first parameter is determined based on resource overlapping information and/or a signal strength, the first resource is a resource used by a second terminal device for transmission, the second resource is a resource used by the first terminal device for transmission, the first resource conflict degree is one of M resource conflict degrees, and M is a positive integer greater than 1;
sending, by the first terminal device, resource conflict information to the second terminal device, wherein the resource conflict information indicates the first resource conflict degree; and/or
reselecting, retransmitting, or continuing to use, by the first terminal device, the second resource based on the first resource conflict degree.

13. The method according to claim 12, wherein

the first resource comprises a first sending resource on which the second terminal device sends first control information, and/or a first reserved resource indicated by the first control information; and/or
the second resource comprises a third sending resource that is determined by the first terminal device and that is used for transmission.

14. A sidelink transmission method, comprising:

receiving, by a second terminal device, first resource conflict information, wherein the first resource conflict information indicates a first resource conflict degree between a first resource and a second resource, the first resource is a resource used by the second terminal device for transmission, the second resource is a resource used by a first terminal device or a third terminal device for transmission, the first resource conflict degree is one of M resource conflict degrees, M is an integer greater than 1, and the resource conflict degree is associated with resource overlapping information and/or a signal strength; and
reselecting, retransmitting, or continuing to use, by the second terminal device, the first resource based on the first resource conflict degree.

15. The method according to claim 14, wherein the second terminal device receives N pieces of first resource conflict information and N is a positive integer; and the method further comprises:

when a number of $i^{th}$ disrecommendation levels in resource conflict degrees indicated by the N pieces of first resource conflict information is the largest, determining, by the second terminal device, that the first resource is at the $i^{th}$ disrecommendation level, or

when a number of $i^{th}$ recommendation levels in resource conflict degrees indicated by the N pieces of first resource conflict information is the largest, determining, by the second terminal device, that the first resource is at the $i^{th}$ recommendation level.

16. The method according to claim 14, further comprising:

when a number of $i^{th}$ disrecommendation levels in resource conflict degrees indicated by N pieces of first resource conflict information is the largest, and a ratio of the number N1 of $i^{th}$ disrecommendation levels to N is greater than or equal to a second preset value, determining, by the second terminal device, that the first resource is at the $i^{th}$ disrecommendation level; or

when a number of $i^{th}$ recommendation levels in resource conflict degrees indicated by N pieces of first resource conflict information is the largest, and a ratio of the number N1 of $i^{th}$ recommendation levels to N is greater than or equal to a third preset value, determining, by the second terminal device, that the first resource is at the $i^{th}$ recommendation level.

17. A sidelink transmission method, comprising:

determining, by a first terminal device, M conflict threshold ranges based on channel busy information and/or priority information, wherein the M conflict threshold ranges are in a one-to-one correspondence with M conflict degrees;

determining, by the first terminal device, a first resource conflict degree between a first resource and a second resource based on a first parameter, wherein the first parameter is resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of the M resource conflict degrees, and M is a positive integer; and

sending, by the first terminal device, resource conflict information to the second terminal device and/or the third terminal device, wherein the resource conflict information indicates the first resource conflict degree.

18. The method according to claim 17, wherein the method further comprises:
obtaining, by the first terminal device, first configuration information, wherein the first configuration information indicates a resource conflict threshold, the resource conflict threshold is associated with the channel busy information and/or the priority information, and the resource conflict threshold comprises a signal strength threshold and/or a resource overlapping information threshold.

19. A sidelink transmission method, comprising:

obtaining, by a terminal device, second configuration information, wherein

the second configuration information comprises information indicating a first time domain resource set that carries resource conflict information, the first time domain resource set is a subset of a feedback time domain resource set or is mutually exclusive with the feedback time domain resource set, and the feedback time domain resource set is used to carry feedback information; and

receiving or sending, by the terminal device, the resource conflict information based on the second configuration information.

20. The method according to claim 19, wherein

a period of a feedback time domain resource is an integer multiple of a period of a first time domain resource, a period of a feedback time domain resource is greater than or equal to a period of a first time domain resource, a period of a first time domain resource is an integer multiple of a period of a feedback time domain resource, or a period of a first time domain resource is greater than or equal to a period of a feedback time domain resource; and the feedback time domain resource belongs to the feedback time domain resource set, and the first time domain resource belongs to the first time domain resource set.

21. The method according to claim 19 or 20, wherein the second configuration information comprises/indicates period information and/or offset information of the first time domain resource;

the terminal device determines, based on the period information and/or the offset information of the first time domain resource, a time domain location for sending the resource conflict information; and

the offset information is an offset between a time domain start location of the feedback time domain resource and a time domain start location of the first time domain resource, or the offset information is an offset between a time domain end location of the feedback time domain resource and an end location of the first time domain resource, the feedback time domain resource belongs to the feedback time domain resource set, and the first time domain resource belongs to the first time domain resource set.

22. The method according to any one of claims 19 to 21, wherein the method further comprises:
determining, by the terminal device, a transport block size and/or rate matching based on a type of a time unit and a symbol occupied by the resource conflict information.

23. A sidelink transmission method, comprising:

determining, by a first terminal device, a first resource pool based on at least two of a first resource, first resource pool information sent by a network device, and second resource pool information sent by a second terminal device, wherein the first resource is a resource used by the second terminal device for transmission, the first resource pool information indicates a resource pool set, a resource pool subset set, or a resource pool subset, resource pools in the resource pool set do not overlap each other, first resource pool subsets in the resource pool subset set do not overlap each other and/or the resource pool subset set comprises a second resource pool subset, and resource pools in the second resource pool subset do not overlap each other; and

sending, by the first terminal device, sidelink information in the first resource pool.

24. The method according to claim 23, wherein the determining, by a first terminal device, a first resource pool based on a first resource and first resource pool information comprises:

when the first resource pool information indicates the resource pool set,
determining, by the first terminal device, the first resource pool based on a resource pool index, wherein the resource pool index is an index of a resource pool in which the first resource is located.

25. The method according to claim 23, wherein the determining, by a first terminal device, a first resource pool based on a first resource, first resource pool information, and second resource pool information comprises:

when the first resource pool information indicates the resource pool subset set, the first resource pool subsets in the resource pool subset set do not overlap each other, and the second resource pool information indicates a resource pool index in the resource pool subset,
determining, by the first terminal device, the first resource pool based on the resource pool index in the resource pool subset and a resource pool subset index corresponding to the first resource.

26. The method according to claim 23, wherein the determining, by a first terminal device, a first resource pool based on a first resource, first resource pool information, and second resource pool information comprises:

when the first resource pool information indicates the resource pool subset set, the resource pool subset set comprises the second resource pool subset, the resource pools in the second resource pool subset do not overlap each other, and
the second resource pool information indicates a resource pool subset index,
determining, by the first terminal device, the first resource pool based on the resource pool subset index and a first index corresponding to the first resource.

27. The method according to claim 23, wherein the determining, by a first terminal device, a first resource pool based on first resource pool information and second resource pool information comprises:

when the first resource pool information indicates the resource pool subset, and
the second resource pool information indicates a resource pool index in the resource pool subset,
determining, by the first terminal device, the first resource pool based on the resource pool subset and the resource pool index in the resource pool subset.

28. A terminal device, comprising:

a processing unit, configured to determine a first resource conflict degree between a first resource and a second resource based on a first parameter, wherein the first parameter comprises resource overlapping information and/or a signal strength, or the first parameter is determined based on resource overlapping information and/or a signal strength, the first resource is a resource used by a second terminal device for transmission, the second resource is a resource used by a third terminal device for transmission, the first resource conflict degree is one of M resource conflict degrees, and M is a positive integer greater than 1; and

a transceiver unit, configured to send resource conflict information to the second terminal device and/or the third terminal device, wherein the resource conflict information indicates the first resource conflict degree.

29. A terminal device, comprising:

a transceiver unit, configured to receive first resource conflict information, wherein the first resource conflict information indicates a first resource conflict degree between a first resource and a second resource, the first resource is a resource used by a second terminal device for transmission, the second resource is a resource used by a first terminal device or a third terminal device for transmission, the first resource conflict degree is one of M resource conflict degrees, M is an integer greater than 1, and the resource conflict degree is associated with resource overlapping information and/or a signal strength; and

a processing unit, configured to reselect, retransmit, or continue to use the first resource based on the first resource conflict degree.

30. A communication apparatus, comprising a processor and a memory, wherein the memory is configured to store a computer program, and the processor is configured to invoke and run the computer program stored in the memory, to perform the method according to any one of claims 1 to 27.

FIG. 1

FIG. 2a

Frequency
domain

Resource pool 3

Resource
pool 1

Resource
pool 2

Time
domain

FIG. 2b

UE B

UE C   UE D

UE A

FIG. 3

R1

R2

R3

R4

R5

R6

Period

FIG. 4

FIG. 5a

FIG. 5b

R31 UE B1      R33 UE B1

R32 UE B2      R34 UE B2

FIG. 5c

200

| First terminal device | | Second terminal device/ Third terminal device |

S210: Determine a first resource conflict degree between a first resource and a second resource based on a first parameter, where the first resource is a resource used by the second terminal device for transmission, the second resource is a resource used by the third terminal device for transmission, the first resource conflict degree is one of M resource conflict degrees, and M is a positive integer greater than 1

S220: Send resource conflict information, where the resource conflict information indicates the first resource conflict degree

S230: Reselect, retransmit, or continue to use the first resource based on the first resource conflict degree

FIG. 6

First terminal
device

Second terminal device/
Third terminal device

S211: Determine a first resource conflict degree based
on M conflict threshold ranges and a resource
overlapping ratio and/or a signal strength

S220: Send resource conflict information, where the resource
conflict information indicates the first resource conflict degree

S230: Reselect, retransmit, or continue
to use a first resource based on the first
resource conflict degree

FIG. 7

First resource

Second resource

c subchannels

b subchannels

a subchannels

FIG. 8

| First terminal device | | Second terminal device/Third terminal device |
|---|---|---|

S212: The first terminal device determines M conflict threshold ranges based on channel busy information and/or priority information, where the M conflict threshold ranges are in a one-to-one correspondence with M conflict degrees

S220: Send resource conflict information, where the resource conflict information indicates a first resource conflict degree

S230: Reselect, retransmit, or continue to use a first resource based on the first resource conflict degree

FIG. 9

First terminal
device

Second terminal device/
Third terminal device

S210: Determine a first resource conflict degree between a
first resource and a second resource based on a resource
overlapping ratio and/or a signal strength, where the first
resource is a resource used by the second terminal device for
transmission, the second resource is a resource used by the
third terminal device for transmission, the first resource
conflict degree is one of M resource conflict degrees, and M
is a positive integer greater than 1

S240: Determine a first transmission parameter difference and/
or a second transmission parameter difference

S250: When the first transmission parameter difference or the
second transmission parameter difference is greater than a first
preset value, determine that the first resource conflict degree is a
second resource conflict degree with a low recommendation
degree or a high disrecommendation degree

S220: Send resource conflict information, where the resource
conflict information indicates the first resource conflict degree

S230: Reselect, retransmit, or continue to use the first
resource based on the first resource conflict degree

FIG. 10

300

| First terminal device | | Second terminal device |
|---|---|---|

S310: Determine a first resource conflict degree between a first resource and a second resource based on a first parameter, where the first resource is a resource used by the second terminal device for transmission, the second resource is a resource used by the first terminal device for transmission, the first resource conflict degree is one of M resource conflict degrees, and M is a positive integer greater than 1

S320-1: Send resource conflict information, where the resource conflict information indicates the first resource conflict degree

S330: Reselect, retransmit, or continue to use the first resource based on the first resource conflict degree

S320-2: Reselect, retransmit, or continue to use the second resource based on the first resource conflict degree

FIG. 11

400

| Network device | | Terminal device |
|---|---|---|

S410: Send first configuration information, where the first configuration information includes information indicating a first time domain resource set that carries resource conflict information, the first time domain resource set and a feedback time domain resource set are a subset of each other or mutually exclusive, and the feedback time domain resource set is used to carry feedback information

FIG. 12

🏴 Feedback information
🏴 Resource conflict information

FIG. 13a

🏴 Feedback information
🏴 Resource conflict information

FIG. 13b

🏴 Feedback information
🏴 Resource conflict information

FIG. 13c

🏴 Feedback information
🏴 Resource conflict information

FIG. 13d

▨ Feedback information
▦ Resource conflict information

| 0 | 1 | 2 | 3 | 4 | 5 | 6 | 7 |

FIG. 13e

First time unit  Third time unit  First time unit  Third time unit

| 0 | 1 | 2 | 3 | 4 | 5 | 6 | 7 |

▨ Feedback information
▦ Resource conflict information

FIG. 14a

First time unit  Third time unit  First time unit  Third time unit

| 0 | 1 | 2 | 3 | 4 | 5 | 6 | 7 |

▨ Feedback information
▦ Resource conflict information

FIG. 14b

First-level control information

Feedback information

Resource conflict information

Second-level control information

Data

FIG. 15a

First-level control information

Feedback information

Resource conflict information

Second-level control information

Data

FIG. 15b

First-level control information

Feedback information

Resource conflict information

Second-level control information

Data

FIG. 15c

Resource
pool #1

Slot #1   Slot #2   Slot #3   Slot #4   Slot #5   Slot #6

Resource
pool #2

Slot #1   Slot #2   Slot #3   Slot #4   Slot #5   Slot #6   Slot #7   Slot #8

Misalignment                    Misalignment

SL slot of a resource pool

Slot that may belong to an SL resource pool

FIG. 16

Resource
pool #1

Slot #1   Slot #2   Slot #3   Slot #4   Slot #5   Slot #6

Resource
pool #2

Slot #1   Slot #2   Slot #3   Slot #4   Slot #5   Slot #6   Slot #7   Slot #8

Misalignment                    Misalignment

SL slot of a resource pool

Slot that may belong to an SL resource pool

FIG. 17

500

| Network device | | Second terminal device | | First terminal device |

S511: First resource pool information →

S512: Second resource pool information →

S520: Determine a first resource pool based on at least two of a first resource, the first resource pool information sent by the network device, and the second resource pool information sent by the second terminal device

← S530: Send sidelink information in the first resource pool —

FIG. 18

| Resource pool #1 | Resource pool #3 | Resource pool #4 | Resource pool #2 | Resource pool #3 | Resource pool #4 | Resource pool #1 |
| --- | --- | --- | --- | --- | --- | --- |
| | R1 | | R2 | | R3 | R4 |

FIG. 19a

FIG. 19b

| Resource pool subset 1 | Resource pool subset 2 | Resource pool subset 3 |
|---|---|---|
| R1 | R2 | R3 |

FIG. 19c

Communication apparatus 600

Processing unit 610

Transceiver unit 620

FIG. 20

Communication apparatus 700

Transceiver unit 710

Processing unit 720

FIG. 21

Communication apparatus 800

Transceiver unit 810

FIG. 22

900

Processor
910

Memory
930

Transceiver
920

FIG. 23

## INTERNATIONAL SEARCH REPORT

| International application No. |
|---|
| **PCT/CN2022/109251** |

**A. CLASSIFICATION OF SUBJECT MATTER**

H04W 72/08(2009.01)i; H04W 72/04(2009.01)i

According to International Patent Classification (IPC) or to both national classification and IPC

**B. FIELDS SEARCHED**

Minimum documentation searched (classification system followed by classification symbols)

H04W72/-

Documentation searched other than minimum documentation to the extent that such documents are included in the fields searched

Electronic data base consulted during the international search (name of data base and, where practicable, search terms used)

CNABS; CNTXT; CNKI; BAIDU: 侧行, 资源, 资源池, 子集, 第一, 第二, 冲突, 重叠, 信号强度, 参考信号接收功率, 干扰, 指示 , 比例, 门限, 预留, 重选, 反馈 VEN; USTXT; EPTXT; WOTXT; IEEE; 3GPP: sidelink, SL, V2X, D2D, resource, pool, subset, first, second, conflict, overlap, RSRP, interference, indicat+, ratio, threshold, reserved, reselect+, feedback

**C. DOCUMENTS CONSIDERED TO BE RELEVANT**

| Category* | Citation of document, with indication, where appropriate, of the relevant passages | Relevant to claim No. |
|---|---|---|
| X | CN 107040960 A (ZTE CORP.) 11 August 2017 (2017-08-11) <br> description, paragraphs [0051]-[0068] | 1-30 |
| A | CN 108886769 B (HUAWEI TECHNOLOGIES CO., LTD.) 18 May 2021 (2021-05-18) <br> entire document | 1-30 |
| A | CN 112087733 A (INDUSTRIAL TECHNOLOGY RESEARCH INSTITUTE) 15 December 2020 (2020-12-15) <br> entire document | 1-30 |
| A | CN 104640145 A (POTEVIO INFORMATION TECHNOLOGY CO., LTD.) 20 May 2015 (2015-05-20) <br> entire document | 1-30 |
| A | CN 113039853 A (SAMSUNG ELECTRONICS CO., LTD.) 25 June 2021 (2021-06-25) <br> entire document | 1-30 |
| A | WO 2021096960 A1 (QUALCOMM INC.) 20 May 2021 (2021-05-20) <br> entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2022** | **26 October 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/109251**

| Patent document cited in search report | | | Publication date (day/month/year) | Patent family member(s) | | | Publication date (day/month/year) |
|---|---|---|---|---|---|---|---|
| CN | 107040960 | A | 11 August 2017 | WO | 2017133446 | A1 | 10 August 2017 |
| CN | 108886769 | B | 18 May 2021 | WO | 2017173665 | A1 | 12 October 2017 |
| | | | | CN | 108886769 | A | 23 November 2018 |
| CN | 112087733 | A | 15 December 2020 | EP | 3751948 | A2 | 16 December 2020 |
| | | | | US | 2020396719 | A1 | 17 December 2020 |
| | | | | EP | 3751948 | A3 | 06 January 2021 |
| | | | | TW | 202103507 | A | 16 January 2021 |
| CN | 104640145 | A | 20 May 2015 | CN | 104640145 | B | 23 February 2018 |
| CN | 113039853 | A | 25 June 2021 | US | 2020314814 | A1 | 01 October 2020 |
| | | | | WO | 2020197313 | A1 | 01 October 2020 |
| | | | | KR | 20200115002 | A | 07 October 2020 |
| | | | | EP | 3858045 | A1 | 04 August 2021 |
| | | | | EP | 3858045 | A4 | 22 December 2021 |
| | | | | IN | 202137021310 | A | 01 October 2021 |
| WO | 2021096960 | A1 | 20 May 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110904552